(19) Europäisches Patentamt
European Patent Office
Office européen des brevets

(11) **EP 2 689 320 B1**

(12) **EUROPEAN PATENT SPECIFICATION**

(45) Date of publication and mention of the grant of the patent:
**03.02.2016 Bulletin 2016/05**

(51) Int Cl.:
**G06F 3/042** *(2006.01)* **G06F 3/041** *(2006.01)*
**G06F 3/0488** *(2013.01)*

(21) Application number: **13761987.0**

(86) International application number:
**PCT/US2013/025721**

(22) Date of filing: **12.02.2013**

(87) International publication number:
**WO 2013/138003 (19.09.2013 Gazette 2013/38)**

(54) **OPTICAL TOUCH SCREEN USING TOTAL INTERNAL REFLECTION**

OPTISCHER TOUCHSCREEN MIT INNERER TOTALREFLEXION

ÉCRAN TACTILE OPTIQUE UTILISANT UNE RÉFLEXION INTERNE TOTALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2012 US 201261609325 P**

(43) Date of publication of application:
**29.01.2014 Bulletin 2014/05**

(73) Proprietor: **Neonode Inc.**
**San Jose CA 95134 (US)**

(72) Inventors:
• **HOLMGREN, Stefan**
  **S-192 72 Sollentuna (SE)**
• **SPARF, Lars**
  **S-162 45 Vällingby (SE)**
• **BEHDASHT, Remo**
  **New South Wales 2006 (AU)**
• **ERIKSSON, Thomas**
  **S-182 74 Stocksund (SE)**
• **ELYAN, Michael, Lawrence**
  **Drummoyne 2047 (AU)**
• **SHAIN, Joseph**
  **76308 Rehovot (IL)**
• **JANSSON, Anders**
  **S-138 34 Älta (SE)**
• **PETTERSSON, Robert**
  **S-126 39 Hägersten (SE)**
• **KARLSSON, John**
  **S-195 32 Märsta (SE)**

(74) Representative: **Tischner, Oliver**
**Lavoix Munich**
**Bayerstrasse 83**
**80335 München (DE)**

(56) References cited:
WO-A1-2010/134865      US-A- 3 673 327
US-A1- 2005 212 717    US-A1- 2008 060 856
US-A1- 2010 238 139    US-A1- 2010 321 339
US-A1- 2011 089 857    US-A1- 2011 126 968
US-A1- 2011 163 997    US-A1- 2011 175 852
US-A1- 2011 175 852    US-A1- 2011 227 874
US-B1- 7 006 077

EP 2 689 320 B1

**Description**

<u>FIELD OF THE INVENTION</u>

The field of the present invention is light-based touch screens.

<u>BACKGROUND OF THE INVENTION</u>

Many consumer electronic devices are now being built with touch sensitive screens, for use with finger or stylus touch user inputs. These devices range from small screen devices such as mobile phones and car entertainment systems, to mid-size screen devices such as notebook computers, to large screen devices such as check-in stations at airports.

Most conventional touch screen systems are based on resistive or capacitive layers. Such systems are not versatile enough to offer an all-encompassing solution, as they are not easily scalable.

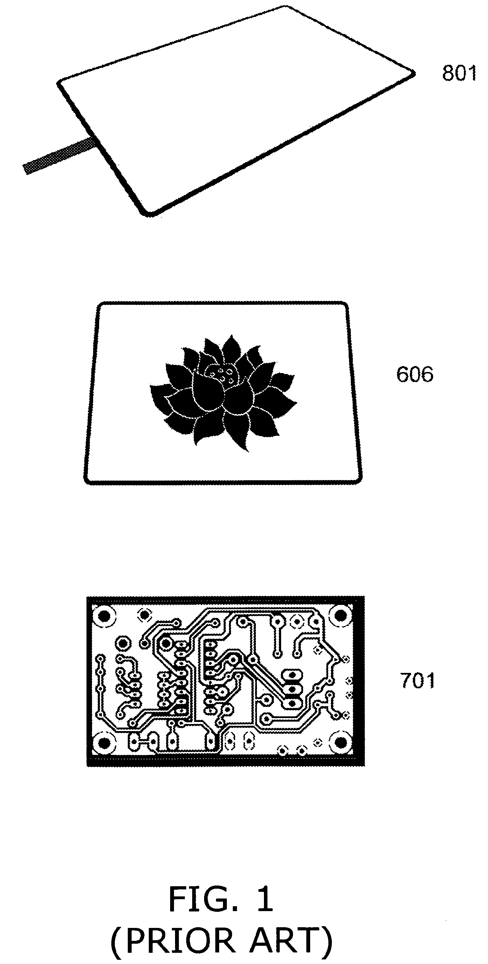

Reference is made to **FIG. 1,** which is a prior art illustration of a conventional touch screen system. Such systems include an LCD display surface **606,** a resistive or capacitive overlay 801 that is placed over the LCD surface, and a controller integrated circuit (IC) **701** that connects to the overlay and converts inputs from the overlay to meaningful signals. A host device (not shown), such as a computer, receives the signals from controller IC **701,** and a device driver or such other program interprets the signals to detect a touch-based input such as a key press or scroll movement.

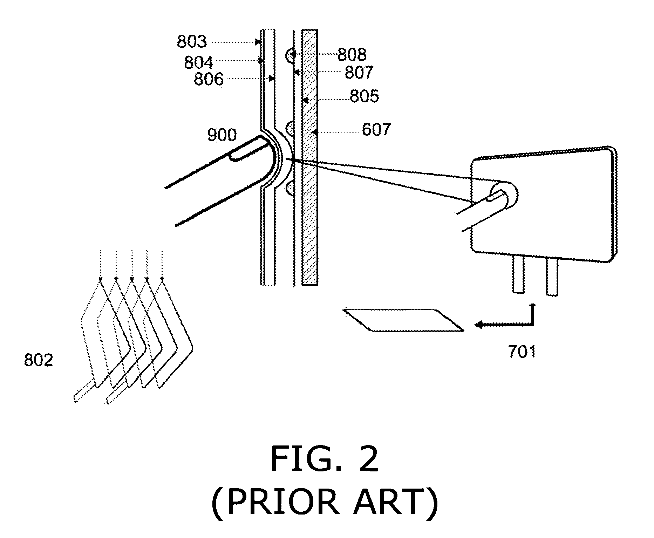

Reference is made to **FIG. 2,** which is a prior art illustration of a conventional <u>resistive</u> touch screen. Shown in **FIG. 2** are conductive and resistive layers **802** separated by thin spaces. A PET film **803** overlays a top circuit layer **804,** which overlays a conductive coating **806.** Similarly, a conductive coating **807** with spacer dots **808** overlays a bottom circuit layer **805,** which overlays a glass layer **607.** When a pointer **900,** such as a finger or a stylus, touches the screen, a contact is created between resistive layers, closing a switch. A controller **701** determines the current between layers to derive the position of the touch point.

Advantages of resistive touch screens are their low cost, low power consumption and stylus support.

A disadvantage of resistive touch screens is that as a result of the overlay, the screens are not fully transparent. Another disadvantage is that pressure is required for touch detection; i.e., a pointer that touches the screen without sufficient pressure goes undetected. As a consequence, resistive touch screens do not detect finger touches well. Another disadvantage is that resistive touch screens are generally unreadable in direct sunlight. Another disadvantage is that resistive touch screens are sensitive to scratches. Yet another disadvantage is that resistive touch screens are unable to discern that two or more pointers are touching the screen simultaneously, referred to as "multi-touch".

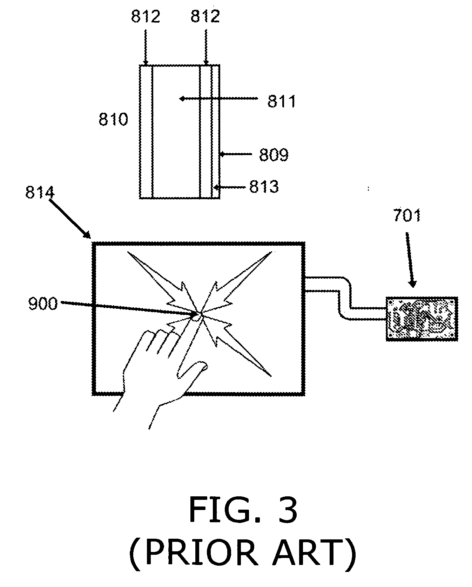

Reference is made to **FIG. 3,** which is a prior art illustration of a conventional <u>surface capacitive</u> touch screen. Shown in **FIG. 3** is a touch surface **809** overlaying a coated glass substrate **810.** Two sides of a glass **811** are coated with a uniform conductive indium tin oxide (ITO) coating **812.** In addition, a silicon dioxide hard coating **813** is coated on the front side of one of the ITO coating layers **812.** Electrodes **814** are attached at the four corners of the glass, for generating an electric current. A pointer **900,** such as a finger or a stylus, touches the screen, and draws a small amount of current to the point of contact. A controller **701** then determines the location of the touch point based on the proportions of current passing through the four electrodes.

Advantages of surface capacitive touch screens are finger touch support and a durable surface.

A disadvantage of surface capacitive touch screens is that as a result of the overlay, the screens are not fully transparent. Another disadvantage is a limited temperature range for operation. Another disadvantage is a limited capture speed of pointer movements, due to the capacitive nature of the touch screens. Another disadvantage is that surface capacitive touch screens are susceptible to radio frequency (RF) interference and electromagnetic (EM) interference. Another disadvantage is that the accuracy of touch location determination depends on the capacitance. Another disadvantage is that surface capacitive touch screens cannot be used with gloves. Another disadvantage is that surface capacitive touch screens require a large screen border. As a consequence, surface capacitive touch screens cannot be used with small screen devices. Yet another disadvantage is that surface capacitive touch screens are unable to discern a multi-touch.

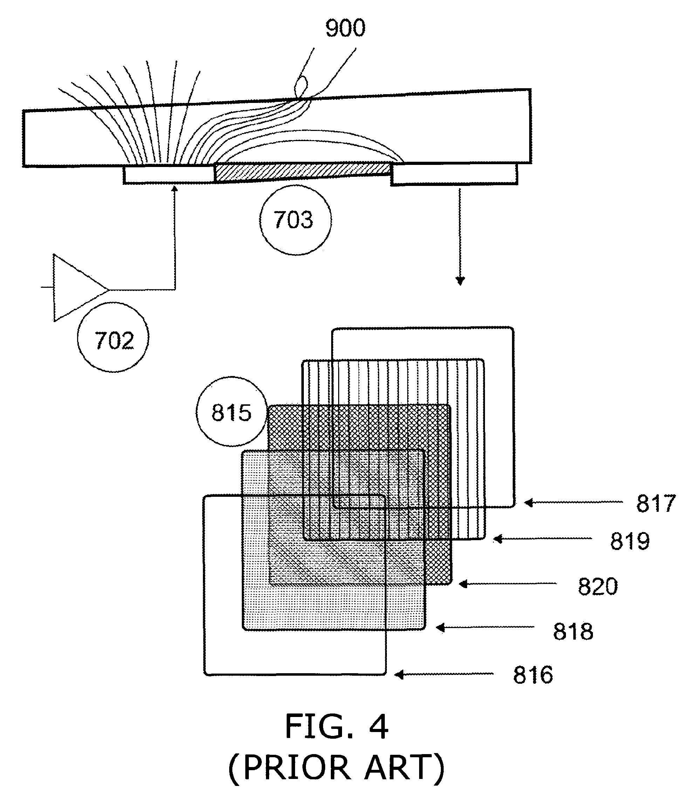

Reference is made to **FIG. 4**, which is a prior art illustration of a conventional <u>projected capacitive</u> touch screen. Shown in **FIG. 4** are etched ITO layers **815** that form multiple horizontal (x-axis) and vertical (y-axis) electrodes. Etched layers **815** include outer hard coat layers **816** and **817,** an x-axis electrode pattern **818,** a y-axis electrode pattern **819,** and an ITO glass **820** in the middle. AC signals **702** drive the electrodes on one axis, and the response through the screen loops back via the electrodes on the other axis. Location of a pointer **900** touching the screen is determined based on the signal level changes **703** between the horizontal and vertical electrodes.

Advantages of projective capacitive touch screens are finger multi-touch detection and a durable surface.

A disadvantage of projected capacitive touch screens is that as a result of the overlay, the screens are not fully transparent. Another disadvantage is their high cost. Another disadvantage is a limited temperature range for operation. Another disadvantage is a limited capture speed, due to the capacitive nature of the touch screens. Another disadvantage is a limited screen size, typically less than 5". Another disadvantage is that surface capacitive touch screens are susceptible to RF interference and EM interference. Yet another disadvantage is that the accuracy of touch location determination depends on the capacitance.

Conventional <u>optical</u> touch screens project light beams from one edge of the screen, over and across the screen surface to where photo detectors detect the uninterrupted beams. Touches are detected when an object placed on the screen blocks one or more of the projected light beams, and some of the photo detectors do not detect the expected light.

A disadvantage of conventional optical touch screens is that they require a raised bezel around the screen in order to project the light beams across the screen. This requirement is incompatible with some product designs that require a completely flat upper surface with the edges of the device being flush with the screen surface.

Another disadvantage of conventional optical touch screens is an artifact known as "ghosting". Ghosting is manifested when a pointer such as a finger completely blocks a light beam, and a second pointer situated inside the shadow of the blocked beam goes undetected, since the second pointer does not affect the amount of light that reaches the detector.

It would thus be beneficial to provide touch screens that overcome the disadvantages of conventional resistive and capacitive touch screens described above, while enabling flush device designs and detecting multiple objects in a single beam's path.

US 2011/227874 A1 describes an optical touch screen capable of disambiguating multi-touch gestures by virtue of a many-to-many relationship between emitters and receivers surrounding a touch surface. Light propagates inside a screen cover by total internal reflection (TIR). By frustrating the total internal reflection of a propagating beam, contact with the touch surface attenuates the beam's detection at a detector situated at the end of the beam, thereby allowing to determine the location of a touching object. Moreover, it is suggested to combine the detection of attenuation with the detection of light that is scattered by the touching object, and to use the scattered light to improve the precision of the determined location of the touching object.

WO 2010/134865 A1 describes a touch panel using frustrated total internal reflection for detecting touches thereon. A panel features multiple light sources along a focal plane fin of an elongated collimating element placed along a first panel edge. Each light source projects a fan beam that is confined inside the panel by total internal reflection producing a collimated light sheet, skewed at a specific angle, across the width of the panel. Each light sheet is out-coupled from the panel at the opposite side of the panel onto an array of detection points. A reduced signal at one of the detection points indicates the presence of a touch object along a corresponding collimated beam path terminating at the detection point. The differently skewed light sheets provide intersecting beam paths that enable identifying the touch location by triangulation.

US 3,673,327 describes a touch panel to be placed above a screen, featuring two groups of transmitters arranged along two adjacent edges of the panel, and two groups of detectors along the remaining two edges, whereby light beams from the transmitters are coupled into the panel where they propagate by total internal reflection and are decoupled therefrom onto the detectors. When a finger touches the panel the internal reflectivity of the light is attenuated and this attenuation is detected by a detector. When two intersecting attenuated beams are detected, a signal is sent to the controlling computer to activate a function corresponding to the intersection.

US 3,673,327 also describes a compressible panel of partially hardened silicone rubber through which the light beams are collimated. An opaque object compressing the panel causes the light beams to be blocked.

US 2011/175852 A1 describes a light-based touch screen featuring a plurality of light emitters along an edge of the screen and a plurality of light receivers along an opposite edge of the screen in which the light emitters are shift-aligned with the light receivers.

## SUMMARY OF THE DESCRIPTION

Aspects of the present invention provide light-based touch screens with light beams directed over and across a display though a solid or liquid layer covering the display, for which locations of two or more pointers touching the screen simultaneously may be unambiguously inferred.

There is thus provided in accordance with a preferred embodiment of the present invention a touch screen according to claim 1. The dependent claims set out particular embodiments of the invention.

## BRIEF DESCRIPTION OF THE DRAWINGS

The present invention will be more fully understood and appreciated from the following detailed description, taken in conjunction with the drawings in which:

  **FIG. 1** is a prior art illustration of a conventional touch screen system;
  **FIG. 2** is a prior art illustration of a conventional resistive touch screen;

**FIG. 3** is a prior art illustration of a conventional surface capacitive touch screen;

**FIG. 4** is a prior art illustration of a conventional projected capacitive touch screen;

**FIG. 5** is a simplified illustration of a touch screen detection channel, in accordance with an embodiment of the present invention;

**FIG. 6** a simplified illustration of light beams orientated along a screen axis in a touch screen system, in accordance with an embodiment of the present invention;

**FIG. 7** is a simplified illustration of light beams spread across a screen like a fan in a touch screen system, in accordance with an example;

**FIG. 8** is a simplified illustration of combined transmitter-receiver elements distributed along a screen edge that create circular, or arc-shaped detection zones, in accordance with an example;

**FIG. 9** is an illustration of a portion of a touch screen including a plurality of emitters that are positioned close together, wherein light is guided by fiber optic light guides to locations along a first screen edge, in accordance with an embodiment of the present invention;

**FIG. 10** is a diagram of a touch screen having 16 emitters and 16 receivers, in accordance with an embodiment of the present invention;

**FIGS. 11 - 13** are diagrams of the touch screen of **FIG. 10**, showing detection of two pointers that touch the screen simultaneously, in accordance with an embodiment of the present invention;

**FIGS. 14** and **15** are diagrams of a touch screen that detects a two finger glide movement, in accordance with an embodiment of the present invention;

**FIG. 16** is a circuit diagram of the touch screen from **FIG. 10**, in accordance with an embodiment of the present invention;

**FIG. 17** is a simplified diagram of a light-based touch screen system, in accordance with an embodiment of the present invention;

**FIG. 18** is a simplified cross-sectional diagram of the touch screen system of **FIG. 17**, in accordance with an embodiment of the present invention;

**FIG. 19** is a simplified illustration of an arrangement of emitters, receivers and optical elements that enable a touch screen system to determine a precise location of a fingertip touching the screen, in accordance with an embodiment of the present invention;

**FIG. 20** is a simplified illustration of an arrangement of emitters, receivers and optical elements that enable a touch screen system to detect a pointer that is smaller than the sensor elements, including inter alia a stylus, in accordance with an embodiment of the present invention;

**FIG. 21** is a simplified diagram of a touch screen with wide light beams covering the screen, in accordance with an embodiment of the present invention;

**FIG. 22** is a simplified illustration of a collimating lens, in accordance with an embodiment of the present invention;

**FIG. 23** is a simplified illustration of a collimating lens in cooperation with a light receiver, in accordance with an embodiment of the present invention;

**FIG. 24** is a simplified illustration of a collimating lens having a surface of micro-lenses facing an emitter, in accordance with an embodiment of the present invention;

**FIG. 25** is a simplified illustration of a collimating lens having a surface of micro-lenses facing a receiver, in accordance with an embodiment of the present invention;

**FIG. 26** is a simplified diagram of an electronic device with a wide-beam touch screen, in accordance with an embodiment of the present invention;

**FIG. 27** is a diagram of the electronic device of **FIG. 26,** depicting overlapping light beams from one emitter detected by two receivers, in accordance with an embodiment of the present invention;

**FIG. 28** is a diagram of the electronic device of **FIG. 26,** depicting overlapping light beams from two emitters detected by one receiver, in accordance with an embodiment of the present invention;

**FIG. 29** is a diagram of the electronic device of **FIG. 26,** showing that points on the screen are detected by at least two emitter-receiver pairs, in accordance with an embodiment of the present invention;

**FIG. 30** is a simplified diagram of a wide-beam touch screen, showing an intensity distribution of a light signal, in accordance with an embodiment of the present invention;

**FIG. 31** is a simplified diagram of a wide-beam touch screen, showing intensity distributions of overlapping light signals from two emitters, in accordance with an embodiment of the present invention;

**FIG. 32** is a simplified diagram of a wide-beam touch screen, showing intensity distributions of two sets of overlapping light signals from one emitter, in accordance with an embodiment of the present invention;

**FIG. 33** is a simplified diagram of a wide beam touch screen with emitter and receiver lenses that do not have micro-lens patterns, in accordance with an embodiment of the present invention;

**FIGS. 34** and **35** are simplified diagrams of a wide-beam touch screen with emitter and receiver lenses that have micro-lens patterns, in accordance with an embodiment of the present invention;

**FIG. 36** is a simplified diagram of a wide-beam touch screen with emitter and receiver lenses that do not have micro-lens patterns, in accordance with an embodiment of the present invention;

**FIG. 37** is a simplified diagram of a wide beam touch screen, with emitter and receiver lenses that have micro-lens patterns, in accordance with an embodiment of the present invention;

**FIG. 38** is a simplified diagram of two emitters with lenses that have micro-lens patterns integrated therein, in accordance with an embodiment of the present invention;

**FIG. 39** is a simplified diagram of two receivers with lenses that have micro-lens patterns integrated therein, in accordance with an embodiment of the present invention;

**FIG. 40** is a simplified diagram of a side view of a single-unit light guide, in the context of an electronic device with a display and an outer casing, in accordance with an embodiment of the present invention;

**FIG. 41** is a simplified diagram of side views, from two different angles, of a lens with applied feather patterns on a surface, in accordance with an embodiment of the present invention;

**FIG. 42** is a simplified diagram of a portion of a wide-beam touch screen, in accordance with an embodiment of the present invention;

**FIG. 43** is a top view of a simplified diagram of light beams entering and exiting micro-lenses etched on a lens, in accordance with an embodiment of the present invention;

**FIG. 44** is a simplified diagram of a side view of a dual-unit light guide, in the context of a device having a display and an outer casing, in accordance with an embodiment of the present invention;

**FIG. 45** is a picture of light guide units, within the context of a device having a PCB and an outer casing, in accordance with an embodiment of the present invention;

**FIG. 46** is a top view of the light guide units of **FIG. 45**, in accordance with an embodiment of the present invention;

**FIG. 47** is a simplified diagram of shift-aligned emitters and detectors for a light-based touch screen, for detecting finger touches, in accordance with an embodiment of the present invention;

**FIG. 48** is a simplified illustration of finger touch detection on the screen of **FIG. 47**, in accordance with an embodiment of the present invention;

**FIG. 49** is a simplified diagram of a side view cutaway of a light guide within an electronic device, in accordance with an embodiment of the present invention;

**FIG. 50** is a simplified diagram of a side view cutaway of a portion of an electronic device and an upper portion of a light guide with at least two active surfaces for folding light beams, in accordance with an embodiment of the present invention;

**FIG. 51** is a simplified drawing of a section of a transparent optical touch light guide, formed as an integral part of a protective glass covering a display, in accordance with an embodiment of the present invention;

**FIG. 52** is a simplified illustration of the electronic device and light guide of **FIG. 50,** adapted to conceal the edge of the screen, in accordance with an embodiment of the present invention;

**FIG. 53** is a simplified diagram of a light guide that is a single unit extending from opposite an emitter to above a display, in accordance with an embodiment of the present invention;

**FIG. 54** is a simplified diagram of a dual-unit light guide, in accordance with an embodiment of the present invention;

**FIG. 55** is a simplified diagram of a touch screen device held by a user, in accordance with an embodiment of the present invention;

**FIG. 56** is a simplified diagram of a touch screen with wide light beams covering the screen, in accordance with an embodiment of the present invention;

**FIGS. 57 - 59** are respective simplified side, top and bottom views of a light guide in the context of a device, in accordance with an embodiment of the present invention;

**FIG. 60** is a simplified illustration of a touch screen surrounded by emitters and receivers, in accordance with an embodiment of the present invention;

**FIG. 61** is a simplified illustration of an optical element with an undulating angular pattern of reflective facets, shown from three angles, in accordance with an embodiment of the present invention;

**FIG. 62** is a simplified illustration of an optical element reflecting, collimating and interleaving light from two neighboring emitters, in accordance with an embodiment of the present invention;

**FIG. 63** is a simplified diagram of a multi-faceted optical element, in accordance with an embodiment of the present invention;

**FIG. 64** is a simplified graph showing the effect of various reflective facet parameters on light distribution for nine facets, in accordance with an embodiment of the present invention;

**FIG. 65** is a simplified illustration of a touch screen with a wide light beam crossing the screen, in accordance with an embodiment of the present invention;

**FIG. 66** is a simplified illustration of a touch screen with two wide light beams crossing the screen, in accordance with an embodiment of the present invention;

**FIG. 67** is a simplified illustration of a touch screen with three wide light beams crossing the screen, in accordance with an embodiment of the present invention;

**FIGS. 68** is a simplified graph of light distribution of a wide beam in a touch screen, in accordance with an embodiment of the present invention;

**FIG. 69** is a simplified illustration of detection signals from three wide beams as a fingertip moves across a screen, in accordance with an embodiment of the present invention;

**FIGS. 70 - 72** are simplified graphs of light distribution in overlapping wide beams in a touch screen, in accordance with an embodiment of the present invention;

**FIG. 73** is a simplified graph of detection signals from a wide beam as a fingertip moves across a screen at three different locations, in accordance with an embodiment of the present invention;

**FIG. 74** is a simplified diagram of four optical elements and four neighboring emitters, in accordance with an embodiment of the present invention;

**FIG. 75** is a simplified diagram of a diffractive surface that directs beams from two emitters along a common path, in accordance with an embodiment of the present invention;

**FIG. 76** is a simplified diagram of a touch screen surrounded with alternating emitters and receivers, in accordance with an embodiment of the present invention;

**FIG. 77** is a simplified illustration of a touch screen surrounded with alternating emitters and receivers, and a wide beam crossing the screen, in accordance with an embodiment of the present invention;

**FIG. 78** is a simplified illustration of a touch screen surrounded with alternating emitters and receivers and two wide beams crossing the screen, in accordance with an embodiment of the present invention;

**FIG. 79** is a simplified illustration of a touch screen surrounded with alternating emitters and receivers and three wide beams crossing the screen, in accordance with an embodiment of the present invention;

**FIG. 80** is a simplified illustration of a collimating optical element reflecting and interleaving light for an emitter and a neighboring receiver, in accordance with an embodiment of the present invention;

**FIGS. 81 - 84** are illustrations of multi-touch locations that are ambiguous vis-à-vis a first orientation of light emitters, in accordance with an embodiment of the present invention;

**FIGS. 85 - 87** are illustrations of the multi-touch locations of **FIGS. 81 - 83** that are unambiguous vis-à-vis a second orientation of light emitters, in accordance with an example;

**FIG. 88** is a simplified illustration of a touch screen with light beams directed along four axes, in accordance with an example;

**FIG. 89** is a simplified illustration of an alternate configuration of light emitters and light receivers with two grid orientations, in accordance with an example;

**FIG. 90** is a simplified illustration of a configuration of alternating light emitters and light receivers, in accordance with an example;

**FIG. 91** is a simplified illustration of two wide light beams from an emitter being detected by two receivers, in accordance with an example;

**FIG. 92** is a simplified illustration of two wide beams and an area of overlap between them, in accordance with an example;

**FIG. 93** is a simplified illustration of a touch point situated at the edges of detecting light beams, in accordance with an example;

**FIG. 94** is a simplified illustration of a finger-sized touch point in a screen designed for finger touch detection, in accordance with an embodiment of the present invention;

**FIG. 95** is a simplified illustration of an emitter along one edge of a display screen that directs light to receivers along two edges of the display screen, in accordance with an example;

**FIGS. 96** and **97** are simplified illustrations of a lens for refracting light in three directions, having a lens surface with a repetitive pattern of substantially planar two-sided and three-sided recessed cavities, respectively, in accordance with examples;

**FIGS. 98** - **100** are simplified illustrations of a touch screen surrounded with alternating emitters and receivers and diagonal wide beams crossing the screen, in accordance with an example;

**FIG. 101** is a simplified graph of light distribution across a diagonal wide beam in a touch screen, in accordance with an example;

**FIG. 102** is a simplified graph of light distribution across three overlapping diagonal wide beams in a touch screen, in accordance with an example;

**FIG. 103** is a simplified graph of touch detection as a finger glides across three overlapping diagonal wide beams in a touch screen, in accordance with an example;

**FIG. 104** is a simplified graph of detection signals from a diagonal wide beam as a fingertip moves across the screen at three different locations, in accordance with an example;

**FIG. 105** is a simplified illustration of a first embodiment for a touch screen surrounded with alternating emitters and receivers, whereby diagonal and orthogonal wide beams crossing the screen are detected by one receiver, in accordance with an example;

FIG. 106 is a simplified illustration of a second embodiment for a touch screen surrounded with alternating emitters and reciters, whereby diagonal and orthogonal wide beams crossing the screen are detected by one receiver, in accordance with an example;

FIG. 107 is a simplified illustration of a user writing on a prior art touch screen with a stylus;

FIG. 108 is a simplified illustration of light beams detecting location of a stylus when a user's palm rests on a touch screen, in accordance with an example;

FIG. 109 is a simplified illustration of a frame surrounding a touch screen, in accordance with an embodiment of the present invention;

FIG. 110 is a simplified illustration of a first embodiment of emitters, receivers and optical elements for a corner of a touch screen, in accordance with an embodiment of the present invention;

FIG. 111 is a simplified illustration of a second embodiment of emitters, receivers and optical elements for a corner of a touch screen, in accordance with an embodiment of the present invention;

FIG. 112 is an illustration of optical components made of plastic material that is transparent to infrared light, in accordance with an embodiment of the present invention;

FIG. 113 is a simplified diagram of a side view of a touch screen with light guides, in accordance with an embodiment of the present invention;

FIG. 114 is an illustration of a touch screen with a block of three optical components on each side, in accordance with an embodiment of the present invention;

FIG. 115 is a magnified illustration of one of the emitter blocks of FIG. 114, in accordance with an embodiment of the present invention;

FIG. 116 is a simplified illustration of a touch screen assembly having a cover glass, in accordance with an embodiment of the present invention;

FIG. 117 is a simplified illustration of a touch scattering internally reflected light in a screen assembly having a cover glass, in accordance with an embodiment of the present invention;

FIG. 118 is a simplified illustration of a touch object absorbing internally reflected light in a screen assembly having a cover glass, in accordance with an embodiment of the present invention;

FIG. 119 is a simplified illustration of a touch screen assembly having a cover glass, in accordance with an embodiment of the present invention;

FIG. 120 is a simplified illustration of a light beam path in the touch screen assembly of FIG. 119, in accordance with an embodiment of the present invention;

FIG. 121 is a simplified illustration of a touch screen assembly having a cover glass, in accordance with an embodiment of the present invention;

FIG. 122 is a simplified illustration of emitters and receivers detecting two diagonal touch points, in accordance with an embodiment of the present invention;

FIG. 123 is a simplified illustration of emitters and receivers detecting three touch points, in accordance with an embodiment of the present invention;

FIG. 124 is a simplified illustration of a touch screen assembly having a cover glass, in accordance with an embodiment of the present invention;

FIG. 125 is a flowchart of a method for disambiguating multiple touch detection signals in accordance with an embodiment of the present invention;

FIG. 126 is a simplified illustration of a touch screen assembly having a cover glass, in accordance with an embodiment of the present invention;

FIG. 127 is an illustration of a touch screen having a long thin light guide along a first edge of the screen, for directing light over the screen, and having an array of light receivers arranged along an opposite edge of the screen for detecting the directed light, and for communicating detected light values to a calculating unit, in accordance with an embodiment of the present invention;

FIG. 128 is an illustration of a touch screen having an array of light emitters along a first edge of the screen for directing light beams over the screen, and having a long thin light guide for receiving the directed light beams and for further directing them to light receivers situated at both ends of the light guide, in accordance with an embodiment of the present invention;

FIG. 129 is an illustration of two light emitters, each emitter coupled to each end of a long thin light guide, in accordance with an embodiment of the present invention;

FIGS. 130 - 133 are illustrations of a touch screen that detects occurrence of a hard press, in accordance with an embodiment of the present invention;

FIGS. 134 and 135 are bar charts showing increase in light detected, when pressure is applied to a rigidly mounted 7-inch LCD screen, in accordance with an embodiment of the present invention;

FIGS. 136 and 137 are illustrations of opposing rows of emitter and receiver lenses in a touch screen system, in accordance with an embodiment of the present invention;

**FIG. 138** is a simplified illustration of a technique for determining a touch location, by a plurality of emitter-receiver pairs in a touch screen system, in accordance with an embodiment of the present invention;

**FIG. 139** is an illustration of a light guide frame for the configuration of **FIGS. 136** and **137**, in accordance with an embodiment of the present invention;

**FIG. 140** is a simplified flowchart of a method for touch detection for a light-based touch screen, in accordance with an embodiment of the present invention;

**FIGS. 141 - 143** are illustrations of a rotation gesture, whereby a user places two fingers on the screen and rotates them around an axis;

**FIGS. 144 - 147** are illustrations of touch events at various locations on a touch screen, in accordance with an example;

**FIGS. 148 - 151** are respective bar charts of light saturation during the touch events illustrated in **FIGS. 144 - 147**, in accordance with an example;

**FIG. 152** is a simplified flowchart of a method for determining the locations of simultaneous, diagonally opposed touches, in accordance with an example;

**FIG. 153** is a simplified flowchart of a method for discriminating between clockwise and counter-clockwise gestures, in accordance with an example;

**FIG. 154** is a simplified flowchart of a method of calibration and touch detection for a light-based touch screen, in accordance with an embodiment of the present invention;

**FIG. 155** is a picture showing the difference between signals generated by a touch, and signals generated by a mechanical effect, in accordance with an embodiment of the present invention;

**FIG. 156** is a simplified diagram of a control circuit for setting pulse strength when calibrating a light-based touch screen, in accordance with an embodiment of the present invention;

**FIG. 157** is a plot of calibration pulses for pulse strengths ranging from a minimum current to a maximum current, for calibrating a light-based touch screen in accordance with an embodiment of the present invention;

**FIG. 158** is a simplified pulse diagram and a corresponding output signal graph, for calibrating a light-based touch screen, in accordance with an embodiment of the present invention;

**FIG. 159** is an illustration showing how a capillary effect is used to increase accuracy of positioning a component, such as an emitter or a receiver, on a printed circuit board, in accordance with an embodiment of the present invention;

**FIG. 160** is an illustration showing the printed circuit board of **FIG. 159**, after having passed through a heat oven, in accordance with an embodiment of the present invention;

**FIG. 161** is a simplified illustration of a light-based touch screen and an ASIC controller therefor, in accordance with an embodiment of the present invention;

**FIG. 162** is a circuit diagram of a chip package for a controller of a light-based touch screen, in accordance with an embodiment of the present invention;

**FIG. 163** is a circuit diagram for six rows of photo emitters with 4 or 5 photo emitters in each row, for connection to the chip package of **FIG. 162**, in accordance with an embodiment of the present invention;

**FIG. 164** is a simplified illustration of a touch screen surrounded by emitters and receivers, in accordance with an embodiment of the present invention;

**FIG. 165** is a simplified application diagram illustrating a touch screen configured with two controllers, in accordance with an embodiment of the present invention;

**FIG. 166** is a graph comparing scan sequence performance using a conventional chip vs. a dedicated controller of the present invention;

**FIG. 167** is a simplified illustration of a touch screen having a shift-aligned arrangement of emitters and receivers, in accordance with an embodiment of the present invention;

**FIG. 168** is a simplified diagram of a touch screen having alternating emitters and receivers along each screen edge, in accordance with an example;

**FIG. 169** is a simplified illustration of a touch surface with a flexible compressible layer on top of the surface, in accordance with an embodiment of the present invention;

**FIG. 170** is a magnified view of the touch surface of **FIG. 169**, in accordance with an embodiment of the present invention;

**FIG. 171** is a simplified illustration of an object pressing down on the flexible compressible layer of the touch surface of **FIG. 169**, and creating an impression thereon, in accordance with an embodiment of the present invention;

**FIG. 172** is a simplified illustration of an alternative touch surface with a flexible compressible layer on top of the surface, in accordance with an embodiment of the present invention;

**FIG. 173** is a simplified illustration of an object pressing down on the flexible compressible layer of the touch surface of **FIG. 17**2, and creating an impression thereon, in accordance with an embodiment of the present invention; and

**FIG. 174** is a simplified illustration of another alternative touch surface with a flexible compressible layer on top of the surface, in accordance with an embodiment of the present invention.

For reference to the figures, the following index of elements and their numerals is provided. Elements numbered in the **100**'s generally relate to light beams, elements numbered in the **200**'s generally relate to light sources, elements numbered in the **300**'s generally relate to light receivers, elements numbered in the **400**'s and **500**'s generally relate to light guides, elements numbered in the **600**'s generally relate to displays, elements numbered in the **700**'s generally relate to circuit elements, elements numbered in the **800**'s generally relate to electronic devices, and elements numbered in the **900**'s generally relate to user interfaces. Elements numbered in the **1000**'s are operations of flow charts.

Similarly numbered elements represent elements of the same type, but they need not be identical elements.

| Elements generally related to light beams | | | |
|---|---|---|---|
| | | | |
| **Element** | **Description** | **Element** | **Description** |
| **100** - **102** | Light beams | **167** - **169** | Wide light beam |
| **105, 106** | Reflected light beam | **170** - **172** | Signals received by light receivers |
| **107** - **109** | Arc of light output from light source | **173** | Beam from 1 emitter to 2 receivers |
| **110** | Dist between centers of two beams | **174** | Beam from 1 emitter to 1st receiver |
| **111** | Dist from emitter/rcvr to opt element | **175** | Beam from 1 emitter to 2nd receiver |
| **112** | Refracted beam | **176** | Beam from emitter to 1st receiver |
| **113** - **117** | Blocked light beams | **177** | Beam from emitter to 2nd receiver |
| **120** | Light beams (full intensity) | **178** | Beam from 1 emitter to 1st receiver |
| **121** | Light beams (partial intensity) | **179** | Beam from 1 emitter to 2nd receiver |
| **122** | Scattered light beams | **182** | Beam from 1 emitter to 2 receivers |
| **123** | Absorbed light beams | **183** - **187** | Middle of arc of light |
| **142** | Arc of light output from light source | **190** | Light beams output from light source |
| **143** | Arc of light input to light receiver | **191** | Light beams input to light receiver |
| **144** | Wide light beams | **192** | Arcs of light |
| **145** - **148** | Edge of wide light beam | **193** | Wide light beam from two sources |
| **151** - **154** | Light beams | **194** - **196** | Arcs of light |
| **158** | Wide light beam | **197** | Reflected light beam |

| Elements generally related to light sources | | | |
|---|---|---|---|
| | | | |
| **Element** | **Description** | **Element** | **Description** |
| **200** - **213** | Light emitters | **231** - **233** | Combined emitter-receiver elements |
| **220** | LED cavity | **235** - **241** | Light emitters |
| **230** | Combined emitter-receiver elements | | |

| Elements generally related to light receivers | | | |
|---|---|---|---|
| | | | |
| **Element** | **Description** | **Element** | **Description** |
| **300** - **319** | Light receivers | **398** | Light receiver / light emitter |
| **394** | Light receiver | | |

| Elements generally related to light guides | | | |
|---|---|---|---|
| | | | |
| **Element** | **Description** | **Element** | **Description** |
| 400 | Lens | 486 | Lower portion of light guide |
| 401, 402 | Fiber optic light guides | 487 | Surface with parallel row micro-lenses |
| 407 | Raised reflector bezel | 488, 489 | Optical component |
| 408 | Cutout | 490 - 492 | Surface of optical component |
| 437, 438 | Reflector & lens | 493 | Multi-faceted reflective surface |
| 439 - 443 | Lens | 494 - 497 | Optical component |
| 444 | Micro-lenses | 498, 499 | Light guide |
| 445 | Surface with fan of micro-lenses | 500 - 501 | Emitter optical component block |
| 450 | Light guide | 502 - 503 | Receiver optical component block |
| 451, 452 | Internally reflective surface | 504 | Emitter lenses |
| 453, 454 | Light guide surface | 505 | Receiver lenses |
| 455 | Light guide | 506, 507 | Emitter optical component |
| 456 | Internally reflective surface | 508 - 510 | Receiver optical component |
| 457 | Collimating lens & reflective surface | 511 | Emitter optical components |
| 458 | Micro-lenses | 512 | Receiver optical components |
| 459 | Light guide surface | 513 | Optical component / temporary guide |
| 460 | Surface with fan of micro-lenses | 514 | Long thin light guide |
| 461 | Lens | 515 | Light guide reflector |
| 462 | Micro-lenses | 516 | Micro-lenses |
| 463 | Upper portion of light guide | 517 | Light scatterer strip |
| 464 | Lower portion of light guide | 518, 519 | Light guides |
| 465 | Light guide surface | 520, 521 | Protruding lips on light guides |
| 466 | Surface with parallel row micro-lenses | 522, 523 | Relative position of light guide element |
| 467 | Parallel row pattern of micro-lenses | 524 | Clear, flat glass |
| 468 | Light guide | 525 | Collimating lens |
| 469, 470 | Internally reflective surface | 526 | Clear flat glass with micro-lens surface |
| 471 | Light guide surface | 527 | Lens with pattern of refracting surfaces |
| 472 | Light guide | 528 | Micro-lens pattern |
| 473 | Internally reflective surface | 530 - 534 | Opt element with multi-faceted surface |
| 474 | Light guide surface | 541 | Optical element surface |
| 475 | Focal line of a lens | 542 | Multi-faceted reflective surface |
| 476 | Light guide | 545 - 549 | Reflective facets |
| 477 | Internally reflective surface | 550 - 552 | Lens section in multi-lens assembly |
| 478 | Light guide surface | 555, 556 | Air gap |
| 479 | Light guide | 559 | Connector joining lens section |
| 480 | Internally reflective surface | 560 | Diffractive surface |

(continued)

| Elements generally related to light guides | | | |
|---|---|---|---|
| | | | |
| Element | Description | Element | Description |
| 481 | Light guide surface | 561 | Optically clear transfer tape |
| 482 | Black plastic transmissive element | 562 | Reflective facet |
| 483 | Light guide | 563 | Air gap |
| 484 | Surface with fan of micro-lenses | 564, 565 | Light guide |
| 485 | Upper portion of light guide | | |

| Elements generally related to displays | | | |
|---|---|---|---|
| | | | |
| Element | Description | Element | Description |
| 600 | Screen glass | 640 | Protective glass |
| 606 | LCD display (prior art) | 641 | Daylight filter sheet |
| 607 | Screen glass (prior art) | 642, 643 | Display |
| 635 - 637 | Display | 645 | Cover glass |
| 638 | Protective glass | 650 | Resilient flexible layer |
| 639 | Daylight filter sheet | | |

| Elements generally related to circuit elements | | | |
|---|---|---|---|
| | | | |
| Element | Description | Element | Description |
| 700 | Printed circuit board | 755 | Detector current filter |
| 701 | Controller integrated circuit (pr. art) | 756 | Analog-to-digital convertor |
| 702 | AC input signal (prior art) | 759 | Controller circuitry |
| 703 | Output signal (prior art) | 760, 761 | Electrical pad |
| 720 | Shift register for column activation | 762, 763 | Printed circuit board |
| 730 | Shift register for column activation | 764 | Guide pin |
| 731 | Chip package | 765 | Solder pad |
| 732, 733 | Signal conducting pins | 766 | Component solder pad |
| 736 | Input/output pins | 767 | Solder pads after heat oven |
| 737 | Chip select pin | 768, 769 | Notch in optical component / guide |
| 740 | Emitter driver circuitry | 770 | Calculating unit |
| 742 | Emitter pulse control circuitry | 772 | Host processor |
| 750 | Detector driver circuitry | 774 | Touch screen controller |
| 753 | Detector signal processing circuitry | 775 | Serial Peripheral Interface (SPI) |

| Elements generally related to touch-based electronic devices | | | |
|---|---|---|---|
| | | | |
| Element | Description | Element | Description |
| 800 | Touch screen | 814 | Electrode (prior art) |
| 801 | Touch overlay (prior art) | 815 | Etched ITO layers (prior art) |
| 802 | Conductive & resistive layers (pr. art) | 816, 817 | Hard coat layer (prior art) |
| 803 | PET film (prior art) | 818 | x-axis electrode pattern (prior art) |
| 804 | Top circuit layer (prior art) | 819 | y-axis electrode pattern (prior art) |
| 805 | Bottom circuit layer (prior art) | 820 | ITO glass (prior art) |
| 806, 807 | Conductive coating (prior art) | 826 | Electronic device |
| 808 | Spacer dot (prior art) | 827 - 832 | Device casing |
| 809 | Touch surface (prior art) | 841, 842 | Resilient members |
| 810 | Coated glass substrate (prior art) | 843 | Flex air gap |
| 811 | Glass substrate (prior art) | 844 - 847 | Image sensors |
| 812 | Conductive ITO coating (prior art) | 849 | Screen frame |
| 813 | Silicon dioxide hard coating (prior art) | | |

| Elements generally related to user interfaces | | | |
|---|---|---|---|
| | | | |
| Element | Description | Element | Description |
| 900 - 902 | Pointer / finger / thumb / stylus | 971, 972 | Touch points |
| 905 | Detected touch area | 973 - 976 | Light signal attenuation area |
| 910 - 912 | Light signal attenuation area | 977 | Point on lens |
| 920, 921 | Light signal attenuation gradient | 980 | Touch point |
| 925 - 927 | Path across a wide beam | 981, 982 | Point on lens |
| 930 | Hand | 989, 990 | Pin |
| 931 | Stylus | 991 - 993 | Active touch area |
| 932 | Drawn line | | |

## DETAILED DESCRIPTION

Aspects of the present invention relate to light-based touch screens.

For clarity of exposition, throughout the present specification the term "touch screen" is used as a generic term to refer to touch sensitive surfaces that may or may not include an electronic display. As such, the term "touch screen" as used herein includes inter alia a mouse touchpad as included in many laptop computers, and the cover of a handheld electronic device. The term "optical touch screen" is used as a generic term to refer to light-based touch screens, including inter alia screens that detect a touch based on the difference between an expected light intensity and a detected light intensity, where the detected light intensity may be greater than or less than the expected light intensity.

For clarity of exposition, throughout the present specification, the term "emitter" is used as a generic term to refer to a light emitting element, including inter alia a light-emitting diode (LED), and the output end of a fiber optic or tubular light guide that outputs light into a lens or reflector that directs the light over a display surface. The term "receiver" is used as a generic term to refer to a light detecting element, including inter alia a photo diode (PD), and the input end of a fiber optic or tubular light guide that receives light beams that traversed a display surface and directs them to a light detecting element or to an image sensor, the image sensor being inter alia a charge coupled device (CCD) or a complementary metal oxide semiconductor (CMOS) image sensor.

A general principle underlying touch detection is that an object such as a finger, when placed on a screen, changes the coupling of light between a transmitter and a receiver. The position of the finger is calculated by determining how a signal changed and which transmitters and receivers are affected. By pulsing transmitters one at a time, it is determined which transmitter sent light to a given receiver. The information necessary for touch detection is a signal indicating whether a finger is touching the screen, and a signal indicating where the touch is located.

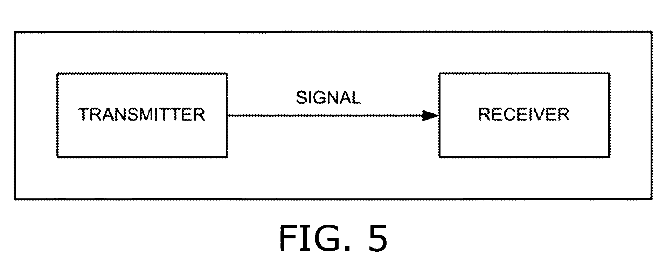

Reference is made to **FIG. 5**, which is a simplified illustration of a touch screen detection channel, in accordance with an embodiment of the present invention. As shown in **FIG. 5**, between each transmitter and each receiver there is a channel for conducting signals. A channel signal indicates if there is a touch or not going through the channel. As explained below, when multiple touches occur at the same time, the signal also encodes the number of touches in the channel. This case is commonly referred to as "multi-touch". There are two types of channels; namely,

A. channels for which a finger activates a signal between the transmitter and the receiver; and
B. channels for which a finger blocks a signal between the transmitter and the receiver.

For channel A, a low signal, near 0, indicates no touch, and a high signal indicates a touch. Channel A extends to a channel A', which detects more than one touch per channel. For channel A', high signal values occur at different levels corresponding to the number of touches, where each touch added to the channel increases the signal by one step.

For channel B, a high signal indicates no touch, and a low signal, near 0, indicates a touch. Channel B extends to a channel B', which divides the signal value into multiple ranges or steps. Each additional touch in the channel decreases the signal by one step.

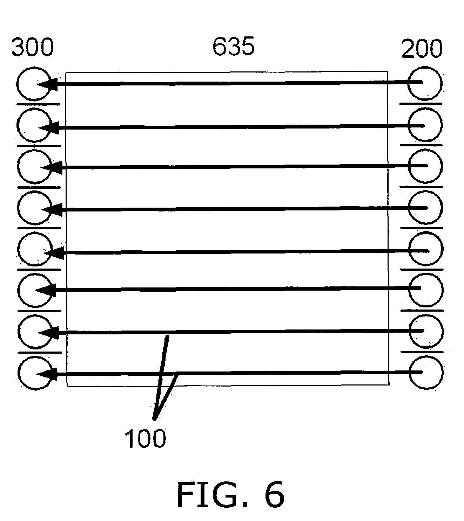

**FIGS. 6 - 8** illustrate different orientations of detection channels covering a screen. Reference is made to **FIG. 6,** which is a simplified illustration of light beams orientated along a screen axis in a touch screen system, in accordance with an embodiment of the present invention.

**FIG. 6** shows detection channels **100** along the width of screen **635.** Each channel begins at an emitter **200** at one edge of screen **635**, and ends at a respective receiver **300** at the opposite edge of screen **635.**

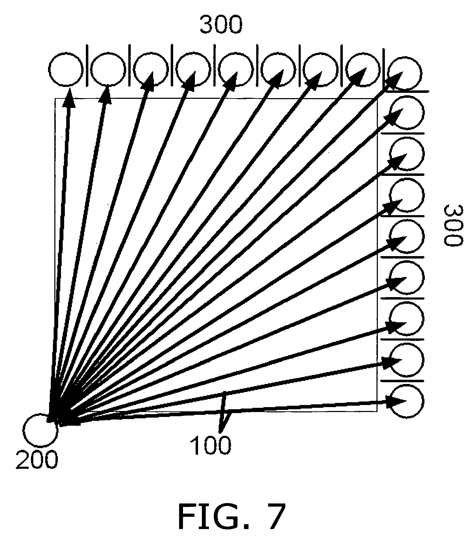

Reference is made to **FIG. 7,** which is a simplified illustration of light beams spread across a screen like a fan in a touch screen system, in accordance with an example. **FIG. 7** shows detection channels **100** spread out like a fan across a screen. All of the channels begin at a single emitter **200** in one corner of the screen, and each channel ends at a respective receiver **300** at an opposite edge of the screen.

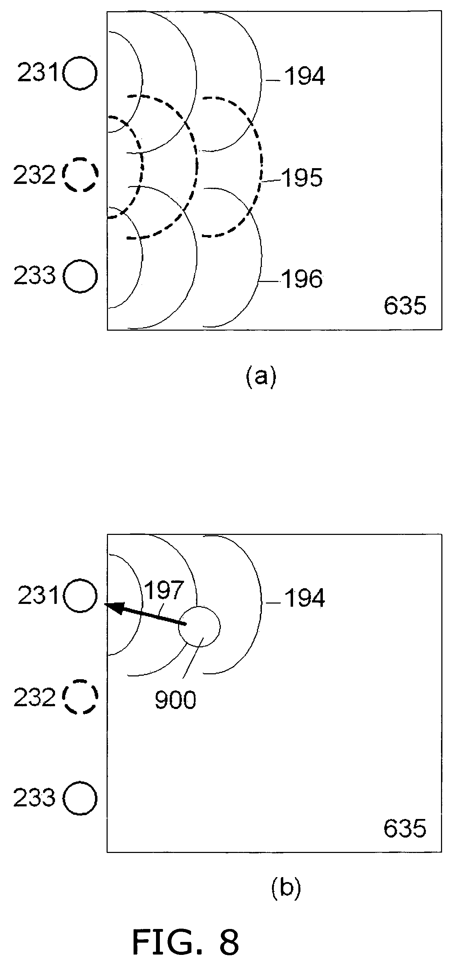

Reference is made to **FIG. 8,** which is a simplified illustration of combined transmitter-receiver elements distributed along a screen edge that create circular, or arc-shaped detection zones, in accordance with an example. **FIG. 8(a)** shows detection channels as circular zones **194 - 196** on screen **635.** Each detection channel is created by an emitter-receiver element **231 - 233** that emits an arc of light **194 - 196** and detects the reflection of an object inserted into the arc of light. The detection is shown in **FIG 8(b),** where an object **900** inserted into arc **194** reflects light beam **197** back onto emitter-receiver element **231.**

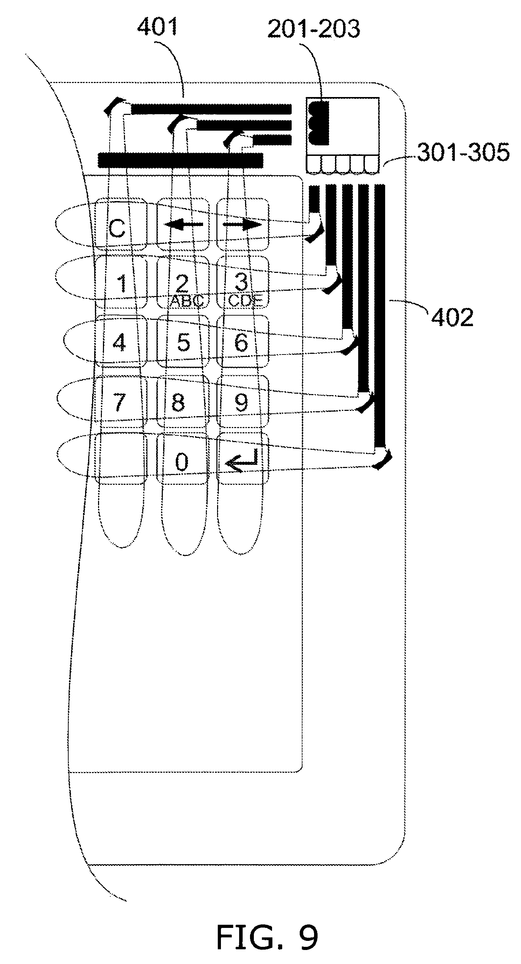

Reference is made to **FIG. 9,** which is an illustration of a portion of a touch screen including a plurality of emitters **201 - 203** that are positioned close together, wherein light is guided by fiber optic light guides **401** to locations along a first screen edge, in accordance with an embodiment of the present invention. The portion of the touch screen also includes a plurality of receivers **301 - 305** that are positioned close together, wherein light is guided thereto by fiber optic light guides **402** from locations along a second screen edge.

According to embodiments of the present invention, a light-based touch screen includes one or more emitters, including inter alia infra-red or near infra-red light-emitting diodes (LEDs), and a plurality of receivers, including inter alia photo diodes (PDs), arranged along the perimeter surrounding the touch screen or touch surface. The emitters project light substantially parallel to the screen surface, and this light is detected by the receivers.

In some embodiments, the projected light is transmitted through air above the screen surface. A pointer, such as a finger or a stylus, placed over a portion of the screen blocks some of the light beams, and correspondingly some of the receivers detect less light intensity. In other embodiments, the projected light is transmitted through an optically transmissive layer above the screen surface. The projected light traverses the screen without exiting this layer due to total internal reflection. A pointer, such as a finger or a stylus, that touches this layer, absorbs and/or scatters some of the light beams and, correspondingly, some of the receivers detect less light intensity.

In each of these embodiments, the geometry of the locations of the emitters and receivers, and the detected light intensities, determine the screen coordinates of the pointer. The emitters and receivers are controlled for selective activation and de-activation by a controller. Generally, each emitter and receiver has I/O connectors, and signals are transmitted to specify which emitters and which receivers are activated.

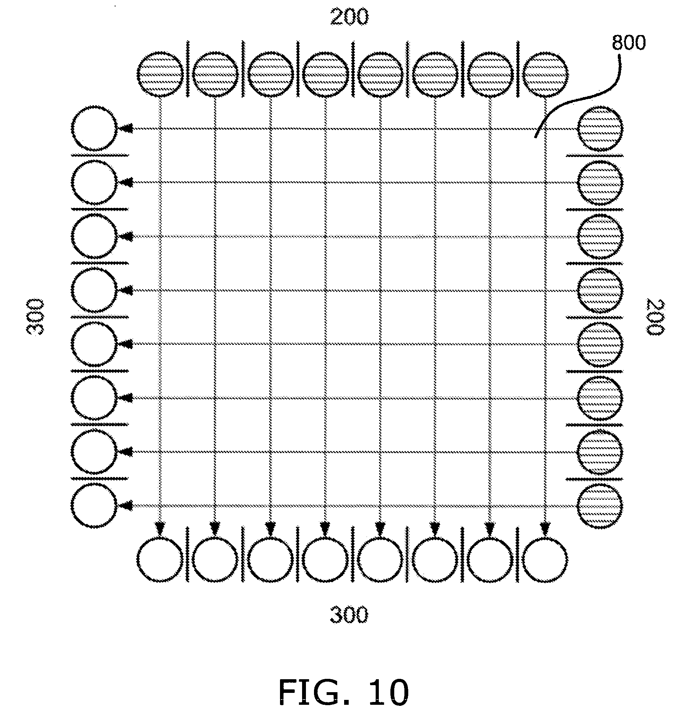

In an embodiment of the present invention, plural emitters are arranged along two adjacent sides of a rectangular screen, and plural receivers are arranged along the other two adjacent sides. In this regard, reference is now made to **FIG. 10**, which is a diagram of a touch screen **800** having 16 emitters **200** and 16 receivers **300**, in accordance with an embodiment of the present invention. Emitters **200** emit infra-red or near infra-red light beams across the top of the touch screen, which are detected by corresponding receivers **300** that are directly opposite respective emitters **200**. When a pointer touches touch screen **800**, it diminishes the amount of light that reaches some of receivers **300,** either by obstructing a portion of the beam, or by absorbing and/or scattering a portion of the beam as described above. By identifying, from the receiver outputs, which light beams have been blocked or reduced by the pointer, the pointer's location can be determined.

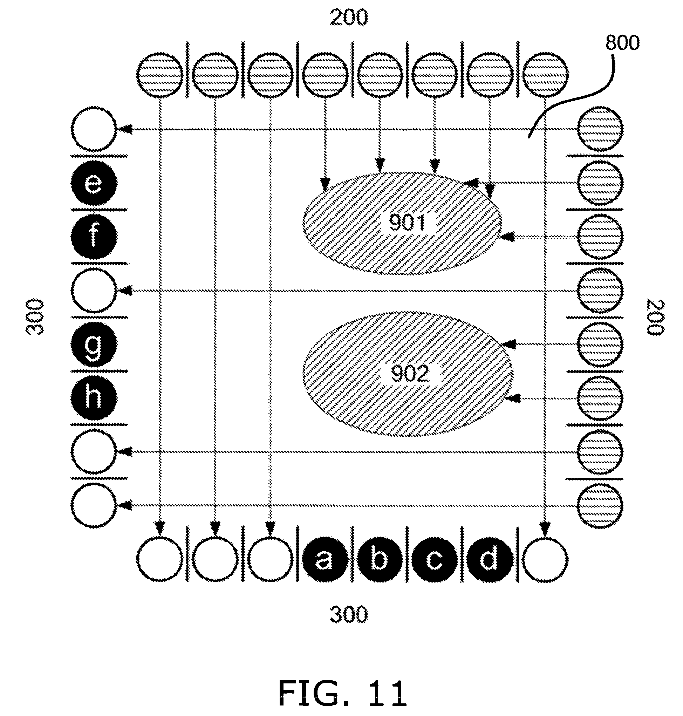

Reference is now made to **FIGS. 11 - 13**, which are diagrams of touch screen **800** of **FIG. 10**, showing detection of two pointers, **901** and **902,** that touch the screen simultaneously, in accordance with an embodiment of the present invention. When two or more pointers touch the screen simultaneously, this is referred to as a "multi-touch." Pointers **901** and **902,** which are touching the screen, block light from reaching some of receivers **300**. In accordance with an embodiment of the present invention, the locations of pointers **901** and **902** are determined from the crossed lines of the infra-red beams that the pointers block. In distinction, prior art resistance-based and capacitance-based touch screens are generally unable to detect a multi-touch.

When two or more pointers touch screen **800** simultaneously along a common horizontal or vertical axis, the positions of the pointers are determined by the receivers **300** that are blocked. Pointers **901** and **902** in **FIG. 11** are aligned along a common vertical axis and block substantially the same receivers **300** along the bottom edge of touch screen **800;** namely the receivers marked **a, b, c** and **d.** Along the left edge of touch screen **800,** two different sets of receivers **300** are blocked. Pointer **901** blocks the receivers marked **e** and **f,** and pointer **902** blocks the receivers marked **g** and **h.** The two pointers are thus determined to be situated at two locations. Pointer **901** has screen coordinates located at the intersection of the light beams blocked from receivers **a - d** and receivers **e** and **f**; and pointer **902** has screen coordinates located at the intersection of the light beams blocked from receivers **a - d** and receivers **g** and **h.**

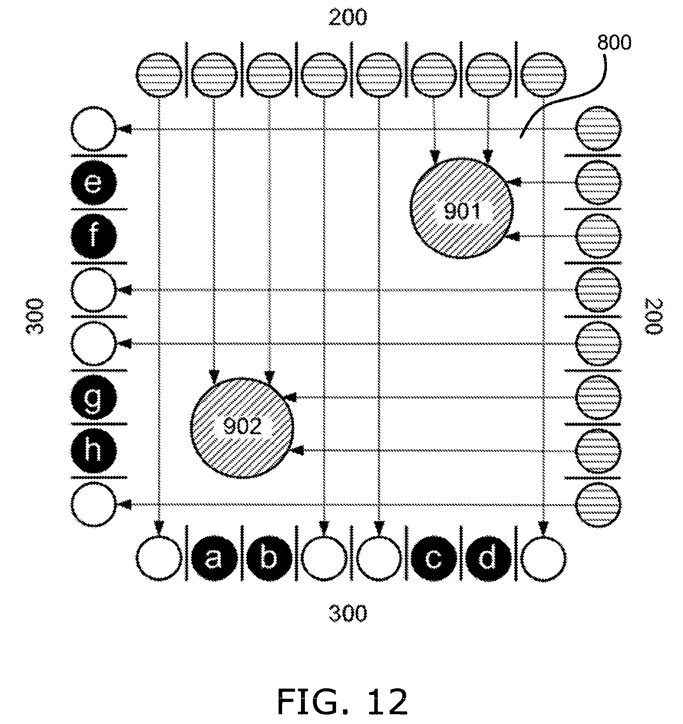

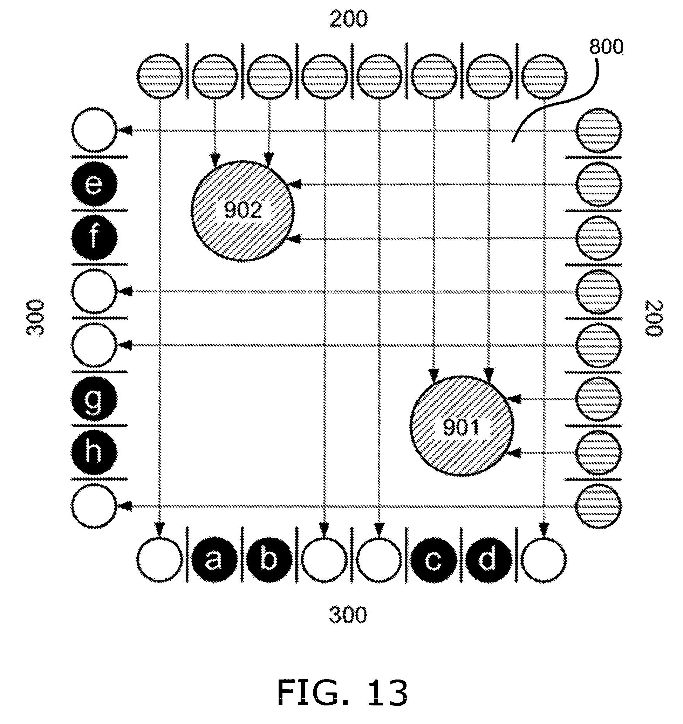

Pointers **901** and **902** shown in **FIGS. 12** and **13** are not aligned along a common horizontal or vertical axis, and they have different horizontal locations and different vertical locations. From the blocked receivers **a - h**, it is determined that pointers **901** and **902** are diagonally opposite one another. They are either respectively touching the top right and bottom left of touch screen **800**, as illustrated in **FIG. 12**; or else respectively touching the bottom right and top left of touch screen **800**, as illustrated in **FIG. 13**.

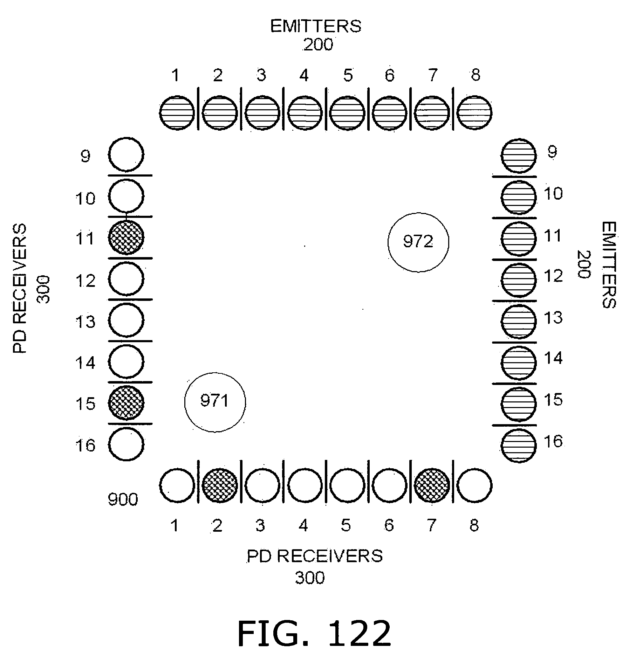

For light-based touch screens that use total internal reflection, discriminating between **FIG. 12** and **FIG. 13** is resolved by analyzing increases in light detection due to scattered light. This analysis is described in detail below with reference to **FIG. 122**.

Determining locations of a diagonally oriented multi-touch is further discussed below with reference to shift-aligned arrangements of emitters and receivers, and with reference to light beams directed along four axes. An additional method of resolving ambiguous multi-touches is described with reference to fast scan frequencies enabled by the ASIC controller discussed hereinbelow.

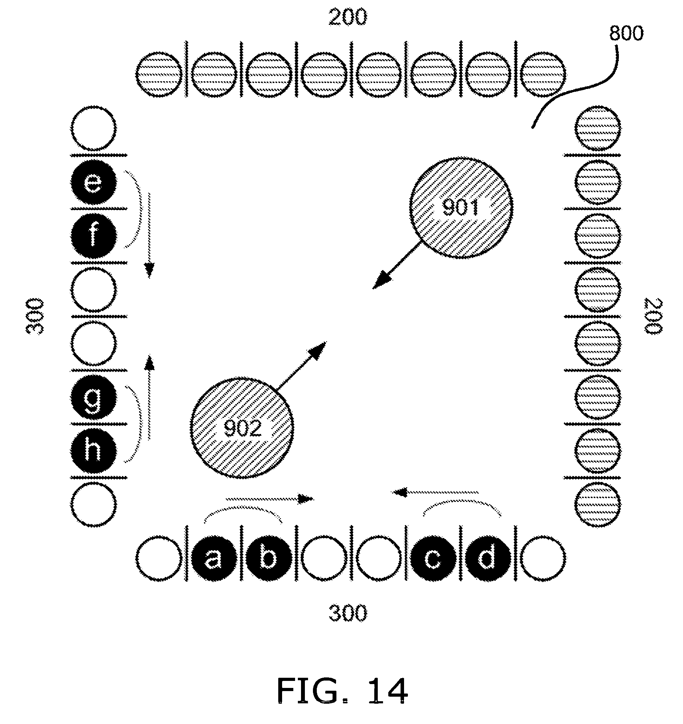

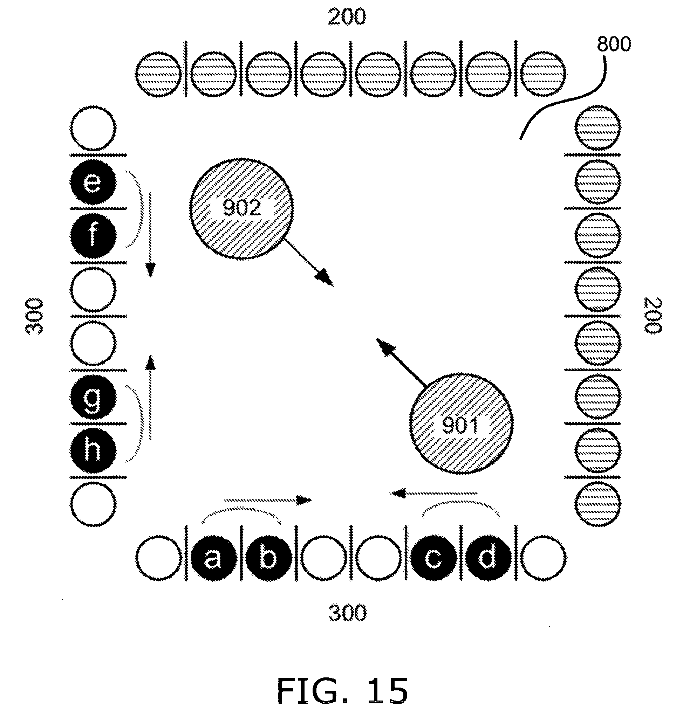

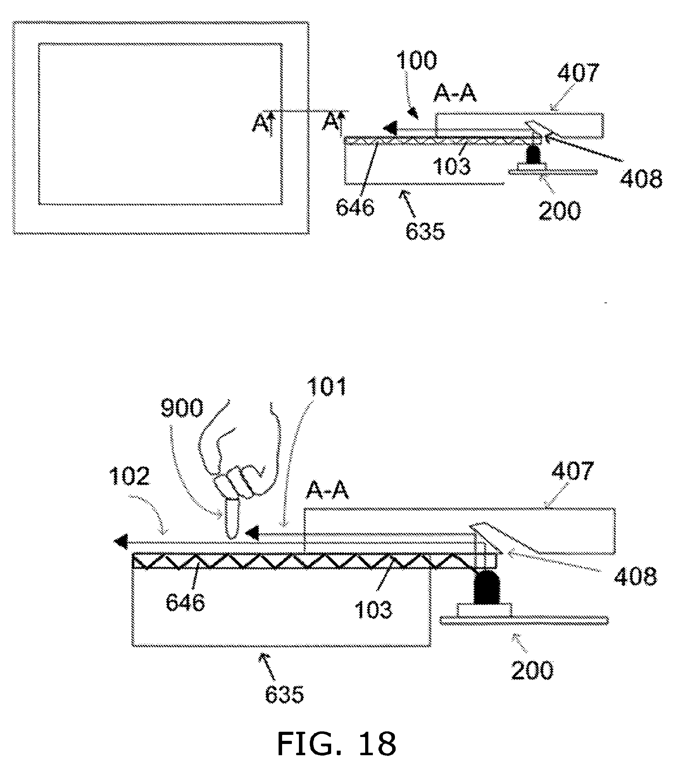

Reference is now made to **FIGS. 14** and **15**, which are diagrams of a touch screen **800** that detects a two-finger glide movement, in accordance with an embodiment of the present invention. The two-finger glide movement illustrated in **FIGS. 14** and **15** is a diagonal pinch gesture that brings pointers **901** and **902** closer together. The direction of the glide is determined from changes in which receivers **300** are blocked. As shown in **FIGS. 14** and **18,** blocked receivers are changing from **a** and **b** to receivers **300** more to the right, and from **c** and **d** to receivers **300** more to the left. Similarly, blocked receivers are changing from **e** and **f** to receivers **300** more to the bottom, and from **g** and **h** to receivers **300** more to the top. For a two-finger glide in the opposite direction, i.e., a spread, or reverse-pinch, gesture, that moves pointers **901** and **902** farther apart, the blocked receivers change in the opposite directions.

When pointers **901** and **902** are aligned along a common vertical or horizontal axis, there is no ambiguity in identifying two-finger glide patterns. When pointers **901** and **902** are not aligned in a common vertical or horizontal axis, there may be ambiguity in identifying glide patterns, as illustrated in **FIGS. 14** and **15**. In case of such ambiguity, and as described hereinabove with reference to **FIGS. 12** and **13**, discriminating between **FIG. 14** and **FIG. 15** is resolved by analyzing increases in light detection due to scattered light, as described in detail below with reference to **FIG. 122**.

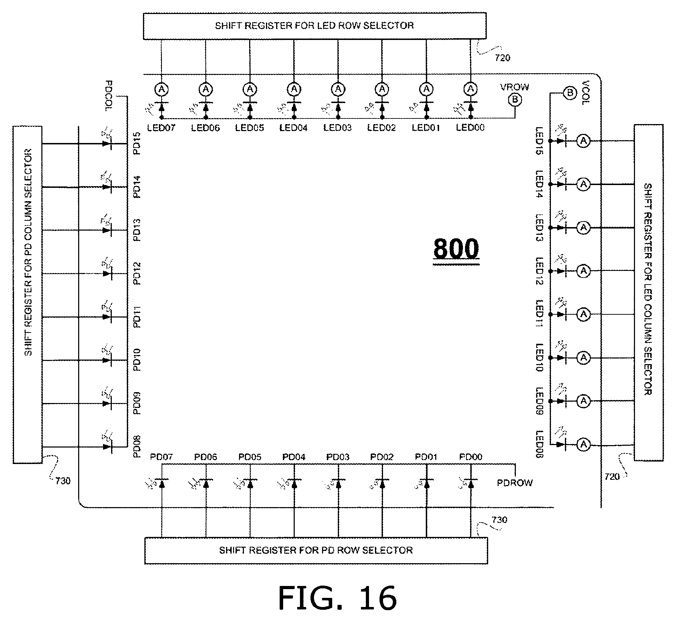

Reference is made to **FIG. 16,** which is a circuit diagram of touch screen **800** from **FIG. 10**, in accordance with an embodiment of the present invention. The emitters and receivers are controlled by a controller (not shown). The emitters receive respective signals *LED00 - LED15* from switches **A**, and receive current from *VROW* and *VCOL* through current limiters **B**. The receivers receive respective signals *PD00 - PD15* from shift register **730**. Receiver output is sent to the controller via signals *PDROW* and *PDCOL.* Operation of the controller, of switches **A** and of current limiters **B** is described in applicant's co-pending application, U.S. Application Serial No. 12/371,609 filed on February 15, 2009, now US Patent No. 8,339,379, and entitled LIGHT-BASED TOUCH SCREEN.

According to an embodiment of the present invention, the emitters are controlled via a first serial interface, which transmits a binary string to a shift register **720**. Each bit of the binary string corresponds to one of the emitters, and indicates whether to activate or deactivate the corresponding emitter, where a bit value "1" indicates activation and a bit value "0" indicates deactivation. Successive emitters are activated and deactivated by shifting the bit string within shift register **720.**

Similarly, the receivers are controlled by a second serial interface, which transmits a binary string to a shift register **730.** Successive receivers are activated and deactivated by shifting the bit string in shift register **730.** Operation of shift registers **720** and **730** is described in U.S. Application Serial No. 12/371,609 referenced above.

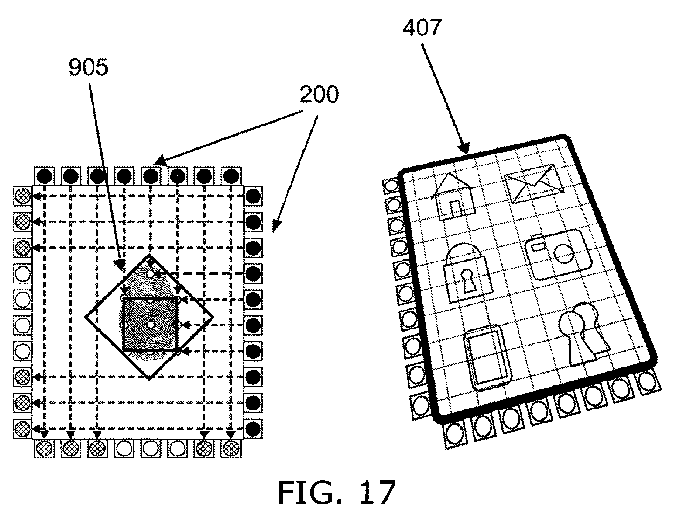

Reference is made to **FIG. 17,** which is a simplified diagram of a light-based touch screen system, in accordance with an embodiment of the present invention. A first portion of the light emitted by emitter **200** is directed through air above a cover glass that covers the display. A second portion of the light emitted by emitter **200** is directed into the cover glass. The second portion of the light is guided by total internal reflection. A small infrared transparent frame **407** surrounds the display to reflect the first portion of light beams between emitters **200** and receivers positioned on opposite sides of the screen. When a pointer, such as a finger or a stylus, touches the cover glass at a specific area **905,** one or more light beams generated by emitters **200** are obstructed; specifically, the first portion of beams are blocked by the finger, and the second portion of beams are at least partially absorbed by the finger. The obstructed light beams are detected by corresponding decreases in light received by one or more of the receivers, which is used to determine the location of the pointer.

Reference is made to **FIG. 18,** which is a simplified cross-sectional diagram of the touch screen system of **FIG. 17,** in accordance with an embodiment of the present invention. Shown in **FIG. 18** is a cross-sectional view of a section **A-A** of an LCD display **635,** a cover glass **646,** and its surrounding infrared transparent frame **407.** The cross-sectional view shows an emitter **200** emitting light **100** that is reflected by a cut-out **408** in frame **407,** and directed substantially parallel over the display surface. The cross-sectional view also shows emitted light **103** that is internally reflected in cover glass **646,** across the display surface. As a finger **900** approaches cover glass **646,** some of the light, **101,** emitted by the emitters and directed over the location of the near touch is blocked by the finger, and some of the light, **102,** passes between the fingertip and the cover glass. The reduction in detected light is substantially linear as the finger draws closer to the cover glass. The internally reflected potion of the light **103** is unaffected by the approaching finger. When finger 900 touches the display surface, all of the light emitted by the emitters and directed through air above the touch location, e.g., beams **101** and **102,** is blocked by finger **900.** In addition, a significant portion of the internally reflected light **103** is absorbed and/or scattered by the finger, causing a sudden drop in the amount of detected light when the finger touches the cover glass. This provides an indication as to when contact was first made.

**Touch Screen System Configuration No. 1**

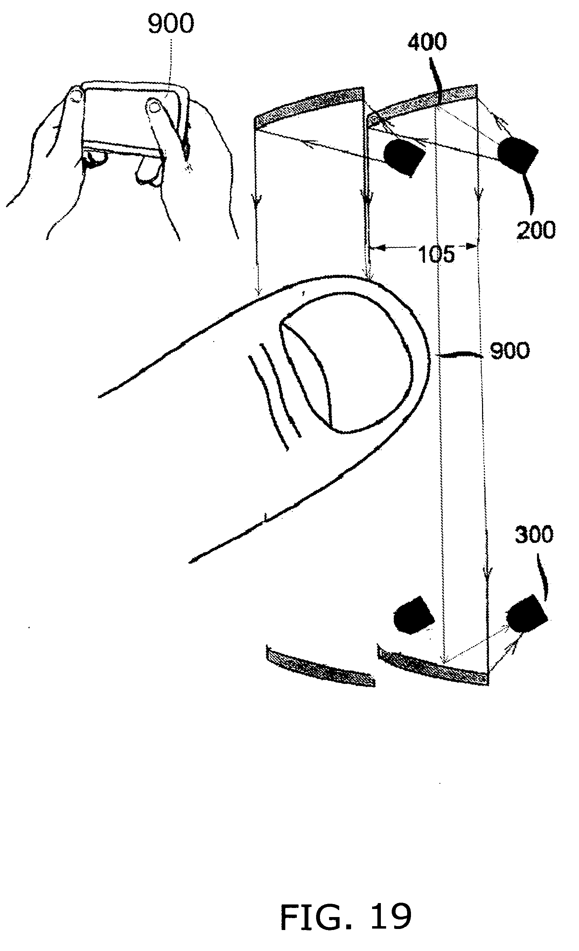

Reference is made to **FIG. 19**, which is a simplified illustration of an arrangement of emitters, receivers and optical elements that enable a touch screen system to determine a precise location of a fingertip touching the screen, in accordance with an embodiment of the present invention. Shown in **FIG. 19** are a mirror or optical lens **400,** an emitter **200,** a wide reflected light beam **105,** a pointer **900** and a receiver **300.** Mirror or optical lens **400** generates a wide light beam that is focused onto receiver **300** by a second mirror or optical lens. The wide beam makes it possible to sense an analog change in the amount of light detected at receiver **300** when a pointer blocks a portion of the wide beam. In some embodiments the mirror or optical lens **400** distributes light at approximately uniform intensity along the width of beam **105.** Thus, as a fingertip passes across wide beam **105,** it blocks increasing amounts of the beam, and the amount of light blocked is linearly proportional to the width of the blocked portion of the beam. The fingertip is slightly wider than each wide beam, such that the fingertip is detected by at least two adjacent wide beams. The precise location of the finger is determined by interpolating the detection signals in adjacent beams. In systems where wide beam **105** is directed through air over screen **800,** pointer **900** in **FIG. 19** blocks only a portion of wide beam **105.** In systems where beam **105** is directed by total internal reflection through a cover glass placed above screen **800,** when pointer **900** touches the cover glass it absorbs and/or scatters a portion of wide beam **105.** In addition to enabling precise detection of a fingertip, the wide beam also enables mounting the emitters far apart from one another, and mounting the receivers far apart from one another. Consequently, this reduces the bill of materials by requiring fewer emitters and fewer receivers.

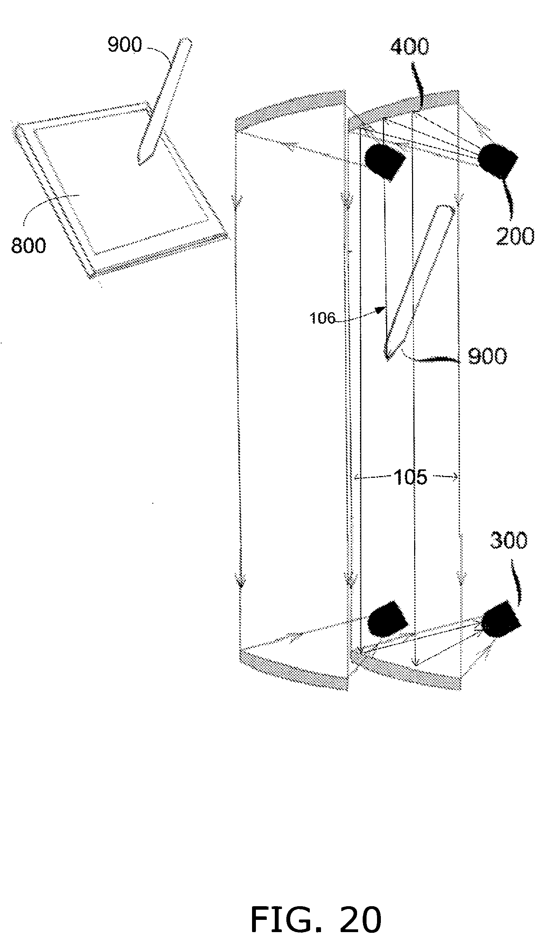

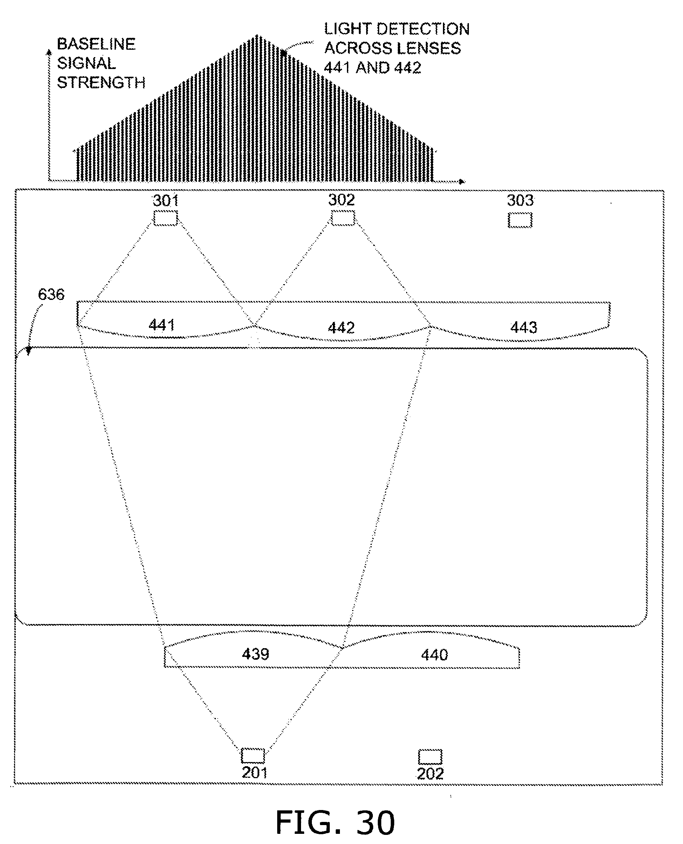

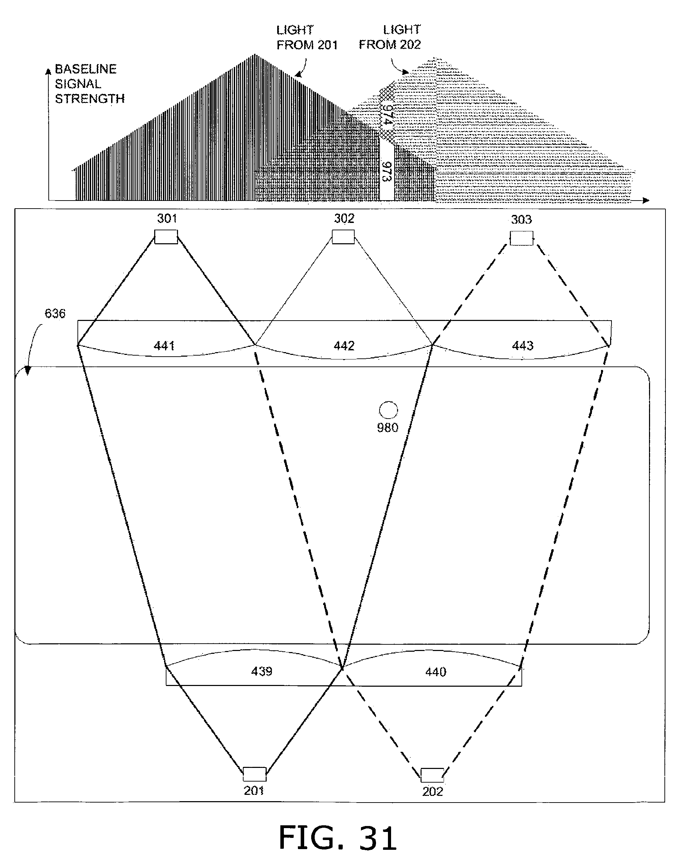

Reference is made to **FIG. 20,** which is a simplified illustration of an arrangement of emitters, receivers and optical elements that enable a touch screen system to detect a pointer that is smaller than the sensor elements, including inter alia a stylus, in accordance with an embodiment of the present invention. Shown in **FIG. 20** are a mirror or optical lens **400,** an emitter **200,** a wide reflected light beam, **105,** a pointer **900** and a receiver **300.** Mirror or optical lens **400** generates a wide light beam that is focused onto receiver **300** by a second mirror or optical lens. The wide beam enables sensing of an analog change in the amount of light detected at receiver **300** when a pointer **900** blocks a portion of the wide beam, either by directly blocking the beam path when the beam travels through air above the display, or by absorbing a portion of the beam when the beam is guided, by total internal reflection, through a cover glass. A detailed discussion of the absorption using a cover glass is provided below with reference to configuration no. 6. Pointer **900,** as shown in **FIG. 20,** blocks only a portion of wide beam **105,** indicated by beam **106** being blocked by the tip of pointer **900.** In some embodiments, the mirror or optical lens **400** distributes light at graduating intensities along the width of beam **105,** with a weak signal at the edges linearly increasing to a maximum intensity at the center. Thus, as a stylus passes across the wide beam it blocks different amounts of the beam, and the amount of blocked light depends on the location of the stylus within the width of the beam. Such embodiments are described below, with reference to **FIGS. 30** and **31,** in which beams from two emitter-receiver pairs along one axis overlap and provide two detection signals for the stylus. This enables determination of whether the stylus is in the right half or in the left half of the beam. The wide beam also enables mounting emitters far apart from one another, and mounting receivers far apart from one another. In turn, this reduces the bill of materials by requiring fewer emitters and fewer receivers.

Without the wide beam, there are generally spaces between beams that go undetected, making it impossible to distinguish between a user dragging a fine-point stylus across the beams, and the user tapping on different beams with a fine-point stylus. Moreover, with widely spaced narrow beams the pointer touch must be very precise in order to cross a narrow beam.

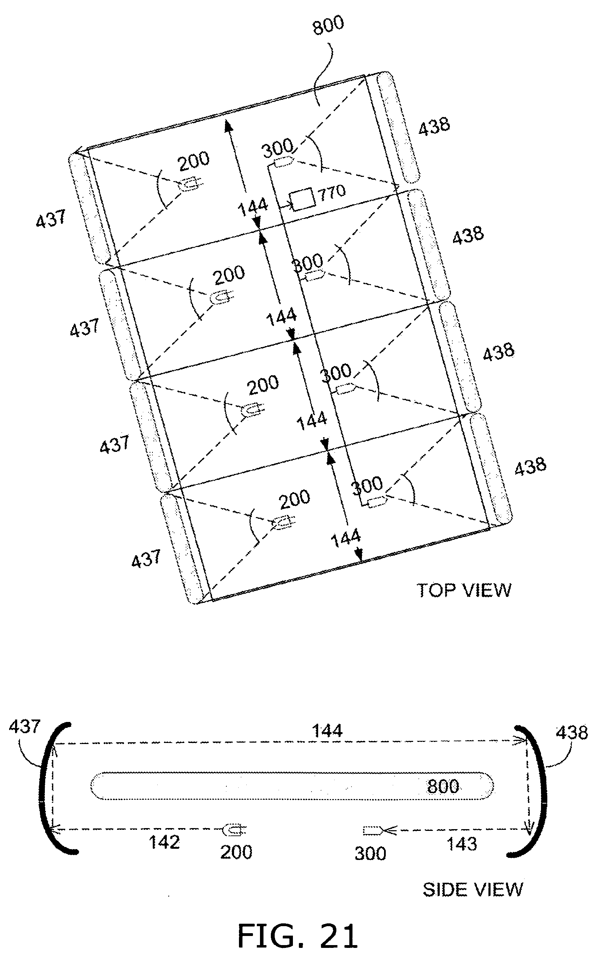

Reference is made to **FIG. 21**, which is a simplified diagram of a touch screen with wide light beams covering the screen, in accordance with an embodiment of the present invention. Touch screen systems using wide beams are described in applicant's provisional patent application, U.S. Application Serial No. 61/317,255 filed on March 24, 2010 and entitled OPTICAL TOUCH SCREEN WITH WIDE BEAM TRANSMITTERS AND RECEIVERS.

The emitters and receivers shown in **FIG. 21** are spaced relatively widely apart. Generally, the emitters are not activated simultaneously. Instead, they are activated one after another, and the coverage areas of their light beams are substantially connected.

**FIG. 21** shows a top view and a side view of a touch system having a touch screen or touch surface **800.** The touch system provides touch-sensitive functionality to a surface irrespective of whether or not the surface includes a display screen. Moreover, a physical surface is not required; the light beams may be projected though the air, and the location of a pointer in mid-air that breaks the light beams may be detected. In an alternative embodiment, a cover glass is used to guide the light by total internal reflection, and a touch absorbs a portion of the internally reflected light. Absorption using a cover glass is described in detail below with reference to configuration no. 6.

Also shown in **FIG. 21** are emitters **200,** reflectors **437** and **438,** and receivers **300** coupled with a calculating unit **770.** Emitters **200** and receivers **300** are positioned beneath screen **800.** Emitters **200** project arcs **142** of light under screen **800** onto reflectors **437.** The distance between emitters **200** and reflectors **437** is sufficient for an arc to spread into a wide beam at a reflector **437.** In various embodiments of the present invention, the distance between emitters **200** and reflectors **437** may be approximately 4 mm, 10 mm, 20 mm or greater, depending on factors including inter alia the widths of the wide beams, the required touch resolution, the emitter characteristics and the optical reflector characteristics.

Reflectors **437** collimate the light as wide beams **144** across a swath of screen surface. As explained above, in systems intended for finger touch, it is of advantage to distribute light uniformly across the width of the beam, whereas in systems intended for stylus touch it is of advantage to distribute light at different intensities across the width of the beam. Nevertheless, systems that distribute light at different intensities along the width of the beam may precisely determine the location of a finger touch based on the portion of the beam that is blocked, if the intensity distribution across the beam is known. A wide beam **144** reaches a reflector **438,** which (i) redirects the light beam below screen **800**, and (ii) narrows the wide beam **144** into an arc **143**. As such, wide beam **144** converges onto the surface of one of receivers **300** below the surface of screen **800.** The light intensity detected by each of receivers **300** is communicated to calculating unit **770.**

The configuration of **FIG. 21** is of advantage in that the wide light beams cover the entire screen surface, thereby enabling touch sensitive functionality anywhere on the screen. Additionally, the cost of materials for the touch screen is reduced, since relatively few emitter and receiver components are required.

**Touch Screen System Configuration No. 2**

Configurations 2 - 6 use multiple emitter-receiver pairs to precisely identify a touch position. In some of the configurations described hereinabove there are opposing rows of emitters and receivers, each emitter being opposite a respective receiver. In configurations 2 and 3 the emitters are shift-aligned with the receivers. For example, each emitter may be positioned opposite a midpoint between two opposing receivers. Alternatively, each emitter may be off-axis aligned with an opposite receiver, but not opposite the midpoint between two receivers.

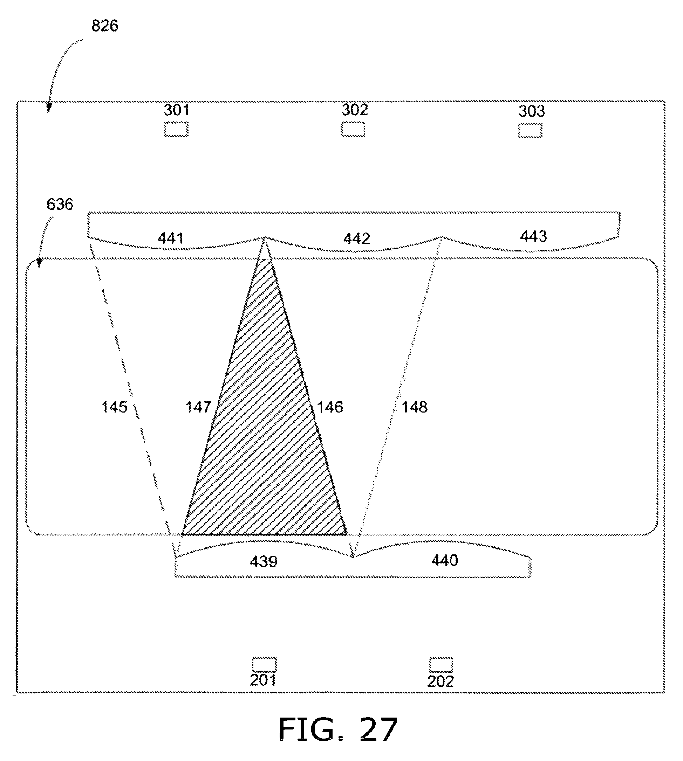

Embodiments of the present invention employ two types of collimating lenses; namely, (i) conventional collimating lenses, and (ii) collimating lenses coupled with a surface of micro-lenses that refract light to form multiple wide divergent beams. When a light source is positioned at the focus of a conventional collimating lens, the lens outputs light in substantially parallel beams, as illustrated inter alia in **FIGS. 19 - 21**. When a light source is positioned between a conventional collimating lens and its focus, the lens outputs a wide beam, the outer edges of which are not parallel to each other, as illustrated inter alia in **FIGS. 27 - 30**.

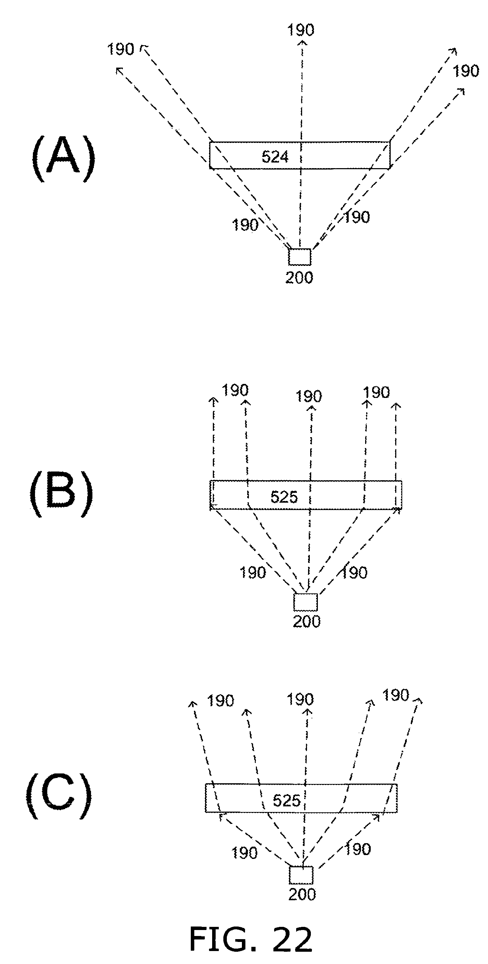

Reference is made to **FIG. 22**, which is a simplified illustration of a collimating lens in cooperation with a light emitter, in accordance with an embodiment of the present invention. Shown in **FIG. 22** is **(A)** a light emitter **200** transmitting light beams **190** through a flat clear glass **524**. Beams **190** are unaltered by the glass.

Also shown in **FIG. 22** is **(B)** an emitter positioned at the focus of a collimating lens **525**. Beams **190** are collimated by lens **525**.

Also shown in **FIG. 22** is **(C)** an emitter **200** positioned between collimating lens **525** and the lens' focus. Beams **190** are partially collimated by lens **525**; i.e., the output wide beams are not completely parallel.

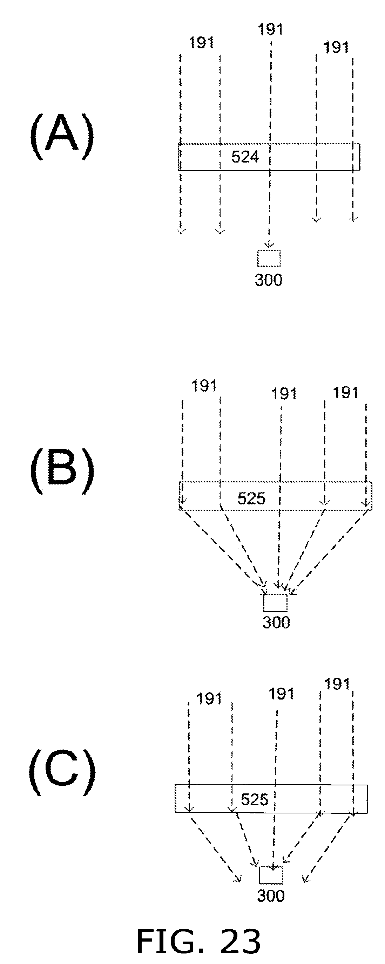

Reference is made to **FIG. 23**, which is a simplified illustration of a collimating lens in cooperation with a light receiver, in accordance with an embodiment of the present invention. Shown in **FIG. 23** is **(A)** substantially parallel light beams **191** transmitted through a flat clear glass **524**. Beams **191** are unaltered by the glass.

Also shown in **FIG. 23** is **(B)** a receiver **300** positioned at the focus of collimating lens **525**. Beams **191** are refracted onto receiver **300** by collimating lens **525**.

Also shown in **FIG. 23** is **(C)** a receiver **300** positioned between collimating lens **525** and the lens' focus. Beams **191** are collimated by lens **525**, but because receiver **300** is not at the lens focus, the beams do not converge thereon.

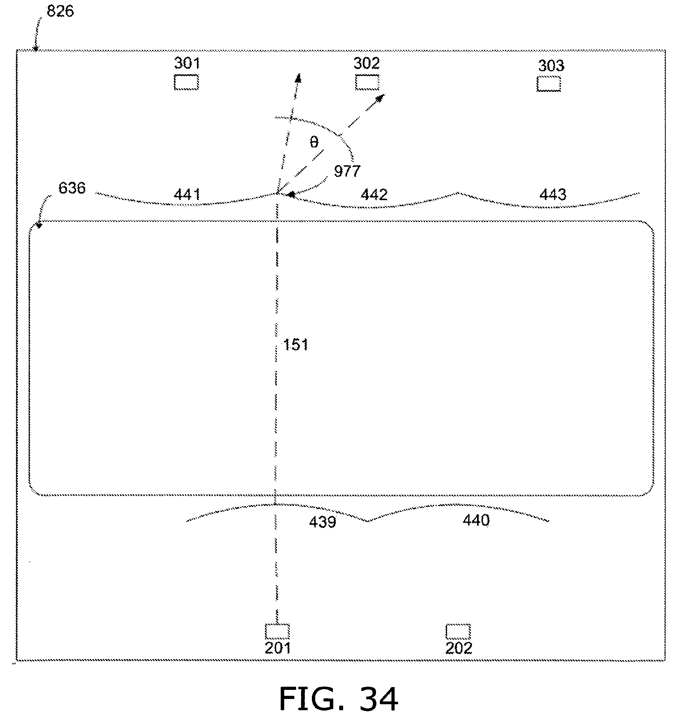

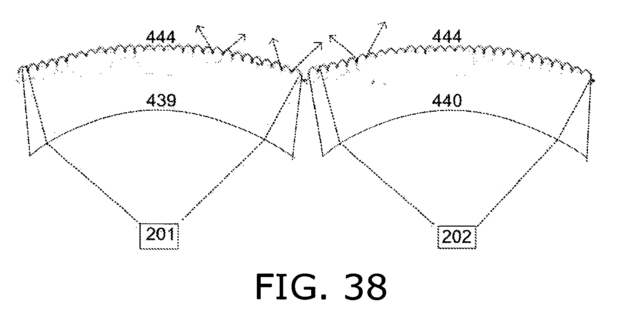

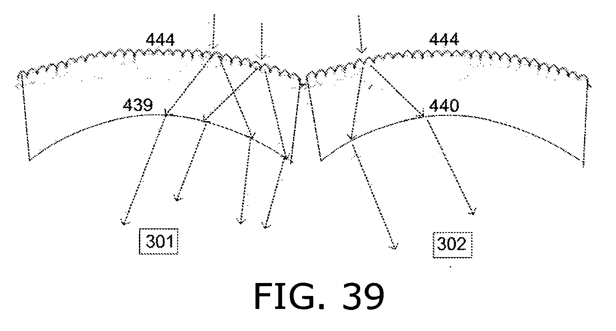

Collimating lenses coupled with an outer surface of micro-lenses, which face away from emitters or receivers, transmit light in two stages. As light passes through the bodies of the lenses, light beams are collimated as with conventional collimating lenses. However, as the light passes through the surface of micro-lenses, the light is refracted into multiple wide divergent beams, as illustrated inter alia in **FIGS. 34, 35** and **37 - 39**. In **FIGS. 38** and **39**, collimating lenses **439** and **440** are shown having micro-lens surfaces **444**. In **FIG. 38**, light emitters **201** and **202** are positioned within the focal distance of collimating lenses **439** and **440**, and wide light beams from the emitters are shown entering lenses **439** and **440**. Light is collimated as it passes through the lens, as with conventional collimating lenses. When the collimated light passes through micro-lens surface **444**, it is refracted into multiple wide divergent beams, three of which are illustrated in **FIG. 38**. In **FIG. 39**, light receivers **301** and **302** are positioned within the focal distance of the collimating lenses, and light beams are shown entering lenses **439** and **440** through micro-lens surface **444**. The incoming beams are refracted into wide divergent beams inside the lens bodies. The refracted beams are directed by the collimating portions of lenses **439** and **440**, which concentrate the beams onto light receivers **301** and **302**.

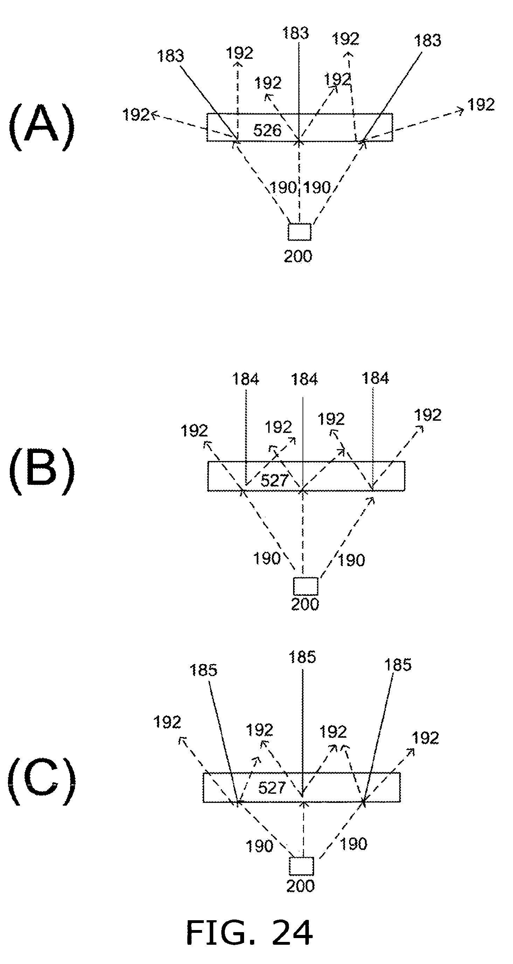

Reference is made to **FIG. 24**, which is a simplified illustration of a collimating lens having a surface of micro-lenses facing an emitter, in accordance with an embodiment of the present invention. **FIG. 24** shows **(A)** a flat glass **526** having micro-lenses etched on a surface facing an emitter **200**. Light beams **190** enter glass **526** at various angles. At each entry point, a micro-lens refracts an incoming beam into a wide arc **192**. Lines **183** show how the middle of each arc is oriented in a different direction, depending on the angle of approach of the beam into glass **526**.

**FIG. 24** also shows **(B)** a collimating lens **527** having micro-lenses etched on a surface facing an emitter **200**. A focus point of the lens, without the micro-lenses, is determined, and emitter **200** is positioned at that point. Light beams **190** enter collimating lens **527** at various angles. At each entry point, a micro-lens refracts the incoming beams into a wide arc **192**. Lines **184** show how the middle of each arc is oriented in the same direction, irrespective of the angle of approach of the beams into collimating lens **527**. This type of lens is referred to as a "multi-directional collimating lens", because it outputs arcs of light, not parallel beams, but all of the arcs are substantially uniformly directed.

**FIG. 24** also shows **(C)** the same collimating lens **527**, but with emitter **200** positioned between the lens and the focus point. The output arcs **192** are oriented in directions between those of the arcs of **(A)** and the arcs of **(B)**, indicated by lines **185**.

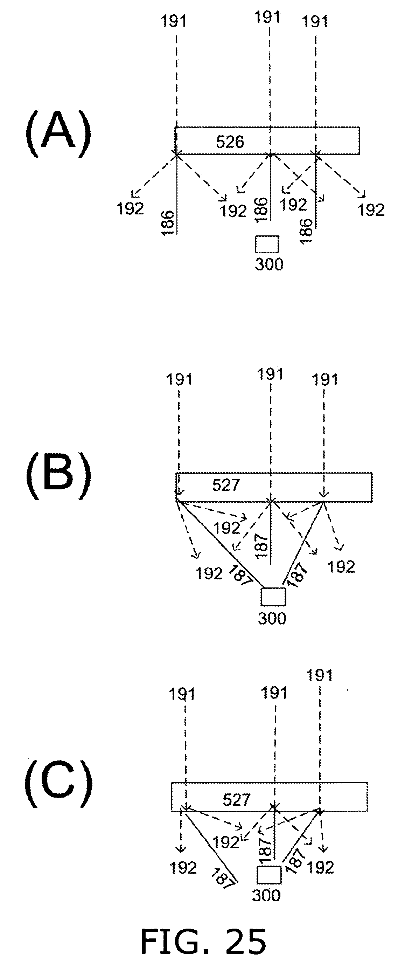

Reference is made to **FIG. 25**, which is a simplified illustration of a collimating lens having a surface of micro-lenses facing a receiver, in accordance with an embodiment of the present invention. **FIG. 25** shows **(A)** a flat glass **526** having micro-lenses etched on a surface facing a receiver **300**. Light beams **191** are shown entering glass **526** as parallel beams. At each exit point, a micro-lens refracts a beam into a wide arc **192**. Lines **186** show how the middle of each arc is oriented in the same direction. The arcs do not converge on receiver **300**.

**FIG. 25** also shows **(B)** a multi-directional collimating lens **527** having micro-lenses etched on a surface facing receiver **300**. A focus point of the lens, without the micro-lenses, is determined, and receiver **300** is positioned at that point. Light beams **191** enter lens **527** as substantially parallel beams. At each exit point, a micro-lens refracts an incoming beam into a wide arc **192**. Lines **187** show how the middle of each arc is oriented towards receiver **300**.

**FIG. 25** also shows **(C)** the same lens **527**, but with receiver **300** positioned between the lens and the focus point.

As used through the present specification, the term "collimating lens" includes a multi-directional collimating lens.

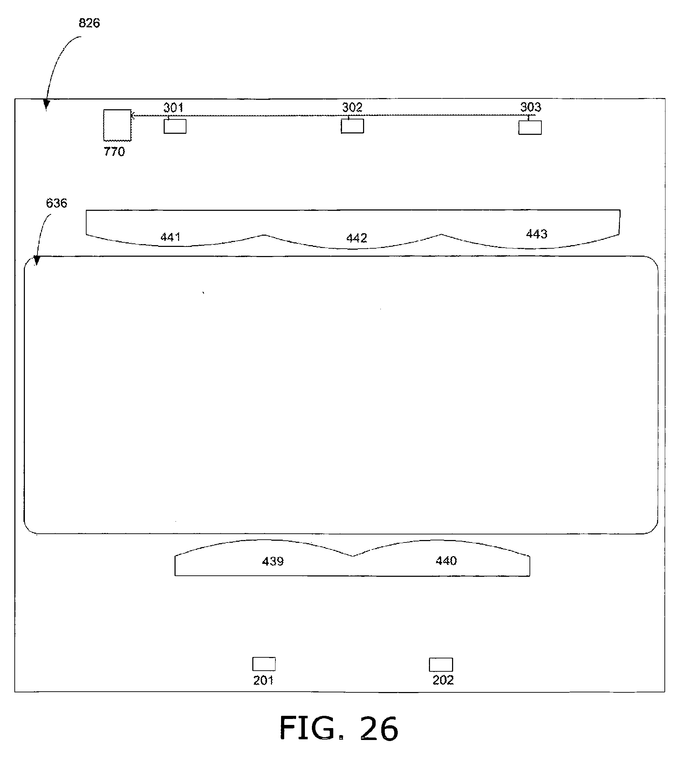

Reference is made to **FIG. 26**, which is a simplified diagram of an electronic device with a wide-beam touch screen, in accordance with an embodiment of the present invention. Shown in **FIG. 26** is an electronic device **826** with two emitters, **201** and **202**, and three receivers, **301, 302** and **303**, the emitters and receivers being placed along opposite edges of a display **636**. Light intensities detected at each of receivers **301, 302** and **303**, are communicated to a calculating unit **770**. Each emitter and receiver uses a respective primary lens, labeled respectively **441, 442, 443, 439** and **440**. Emitters and receivers use the same lens arrangement, to ensure that light emitted by an emitter and re-directed by an emitter lens, is reverse-directed by an opposing lens onto a receiver.

It is desirable that the light beam from each emitter covers its two opposite receiver lenses. Such a condition is achieved by positioning each emitter between its lens and its lens' focal point. As such, the emitter is not in focus and, as a result, its light is spread, instead of being collimated, by its lens. Each receiver is similarly positioned between its lens and its lens' focal point.

Reference is made to **FIG. 27**, which is a diagram of electronic device **826** of **FIG. 26,** depicting overlapping light beams from one emitter detected by two receivers, in accordance with an embodiment of the present invention. Shown in **FIG. 27** are two wide light beams from emitter **201,** one of which is detected at receiver **301** and another of which is detected at receiver **302,** respectively. The left and right sides of the one beam are marked **145** and **146,** respectively, and the left and right sides of the other beam are marked **147** and **148,** respectively. The shaded area in **FIG. 27** indicates the area on display **636** at which a touch blocks a portion of both wide beams. As such, a touch in this area is detected by two emitter-receiver pairs; namely, **201-301** and **201-302**. The touch blocks a portion of both wide beams, either by directly blocking the beam path when the beam travels through air above the display, or by absorbing a portion of the beam if guided by total internal reflection through a cover glass. Absorption using a cover glass is described in detail below with reference to configuration no. 7.

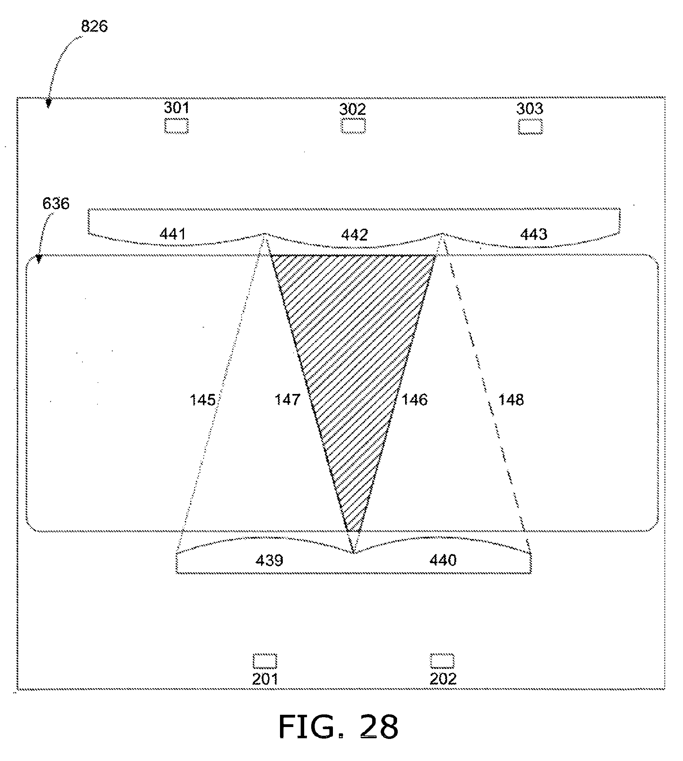

Reference is made to **FIG. 28**, which is a diagram of electronic device **826** of **FIG. 26,** depicting overlapping light beams from two emitters detected by one receiver, in accordance with an embodiment of the present invention. Shown in **FIG. 28** are wide beams, one from emitter **201** and another from emitter **202,** that are both detected at receiver **302**. The left and right sides of the one beam are marked **145** and **146,** respectively, and the left and right sides of the other beam are marked **147** and **148,** respectively. The shaded area in **FIG. 28** indicates the area on display **636** at which a touch blocks a portion of both wide beams. As such, a touch in this area is detected by two emitter-receiver pairs; namely, **201-302** and **202-302**.

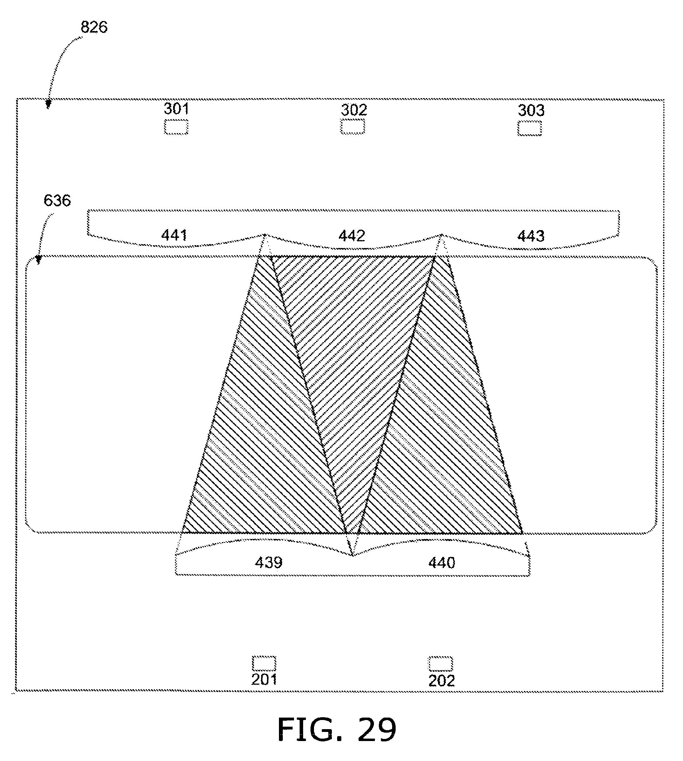

Reference is now made to **FIG. 2**9**,** which is a diagram of the electronic device **826** of **FIG. 26,** showing that points on the screen are detected by at least two emitter-receiver pairs, in accordance with an embodiment of the present invention. **FIG. 29** shows the wide beams of **FIGS. 27** and **28,** and illustrates that touches in the shaded wedges on display **636** are detected by at least two emitter-receiver pairs. The two emitter-receiver pairs are either one emitter with two receivers, as in **FIG. 27,** or two emitters with one receiver, as in **FIG. 28**. More specifically, touches that occur near the row of emitters are generally detected by the former, and touches that occur near the row of detectors are generally detected by the latter. By surrounding the screen with similarly arranged emitters, lenses and receivers, any point may be similarly detected by two emitter-receiver pairs.

Reference is made to **FIG. 30,** which is a simplified diagram of a wide-beam touch screen, showing an intensity distribution of a light signal, in accordance with an embodiment of the present invention. Shown in **FIG. 30** is a wide angle light beam emitted by emitter **201** into lens **439**. The light beam crosses over display **636** and substantially spans lenses **441** and **442**. The light is detected at receivers **301** and **302**.

Shown in **FIG. 30** is a graph of detected light intensity. Total detected light corresponds to a shaded area under the graph. An object touching the screen blocks a portion of this light. If the object touching the screen moves across the wide beam, from left to right, the amount of blocked light increases, and correspondingly the total detected light decreases, as the object progresses from the left edge of the beam to the center of the beam. Similarly, the amount of blocked light decreases, and correspondingly the total detected light increases, as the object progresses from the center of the beam to the right edge of the beam.

It is noted that the detected light intensities at the edges of the light beam are strictly positive, thus ensuring that a touch at these edges is detected.

Reference is made to **FIG. 31**, which is a simplified diagram of a wide-beam touch screen, showing intensity distributions of overlapping light signals from two emitters, in accordance with an embodiment of the present invention. **FIG.** 31 shows light detected from emitters **201** and **202**. A touch point **980** on display **636** blocks light from these emitters differently. Area **973** indicates attenuation of light from emitter **201** by touch point **980,** and the union of areas **973** and **974** corresponds to the attenuation of light from emitter **202** by point **980**. By comparing the light attenuation in the two emitter-receiver pairs, **201-302** and **202-302,** a precise touch coordinate is determined.

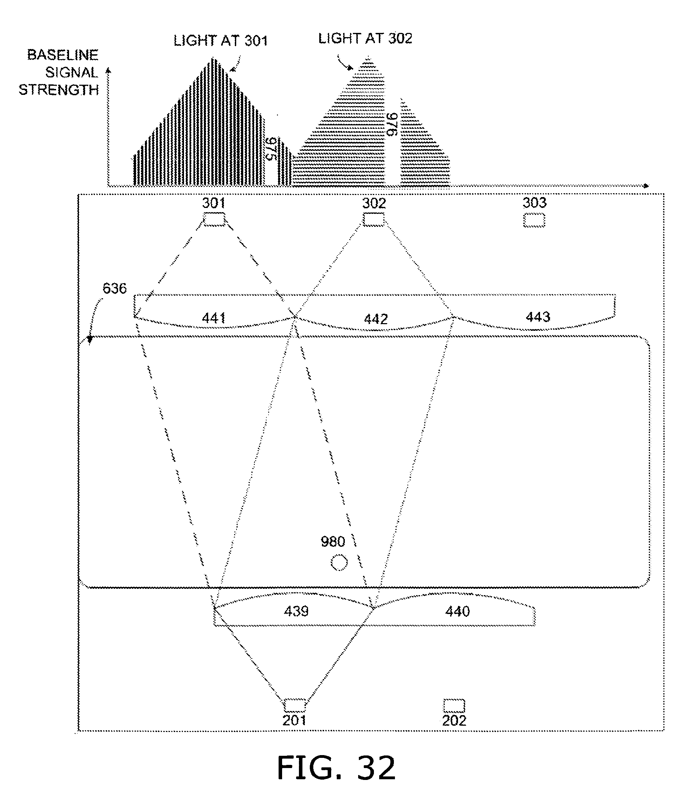

Reference is made to **FIG. 32,** which is a simplified diagram of a wide-beam touch screen, showing intensity distributions of two sets of overlapping light signals from one emitter, in accordance with an embodiment of the present invention. As shown in **FIG. 32,** touch point **980** is inside the area detected by emitter-receiver pair **201-301** and emitter-receiver pair **201-302**. The attenuation of the light signal at receiver **302,** depicted as area **976,** is greater than the attenuation at receiver **301,** depicted as area **975**. By comparing the light attenuation in the two emitter-receiver pairs, **201-301** and **201-302**, a precise touch coordinate is determined.

Determining the position of touch point **980** requires determining a position along an axis parallel to the edge along which the emitters are positioned, say, the x-axis, and along an axis perpendicular to the edge, say, the y-axis. In accordance with an embodiment of the present invention, an approximate y-coordinate is first determined and then, based on the expected attenuation values for a point having the thus determined y-coordinate and based on the actual attenuation values, a precise x-coordinate is determined. In turn, the x-coordinate thus determined is used to determine a precise y-coordinate. In cases where the touch point **980** is already touching the screen, either stationary or in motion, previous x and y coordinates of the touch point are used as approximations to subsequent x and y coordinates. Alternatively, only one previous coordinate is used to calculate a first subsequent coordinate, with the second subsequent coordinate being calculated based on the first subsequent coordinate. Alternatively, previous coordinates are not used.

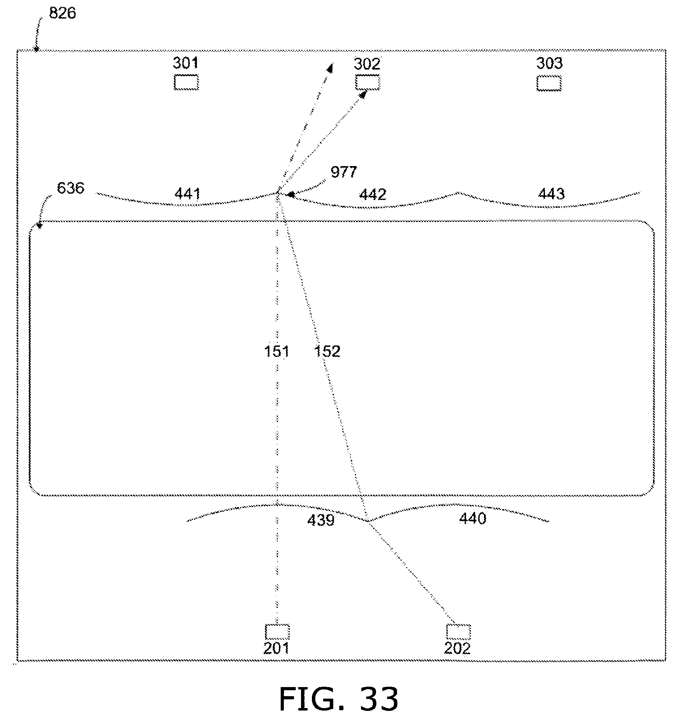

Reference is made to **FIG. 33,** which is a simplified diagram of a wide-beam touch screen with emitter and receiver lenses that do not have micro-lens patterns, in accordance with an embodiment of the present invention. Shown in **FIG. 33** is an electronic device **826** with a display **636,** emitters **201** and **202,** corresponding emitter lenses **439** and **440,** receivers **301, 302** and **303,** and corresponding receiver lenses **441, 442** and **443.** Two light beams, **151** and **152,** from respective emitters **201** and **202,** arrive at a point **977** that is located at an outer edge of lens **442.** Since beams **151** and **152** approach point **977** at different angles of incidence, they do not converge on receiver **302.** Specifically, light beam **152** arrives at receiver **302,** and light beam **151** does not arrive at receiver **302.**

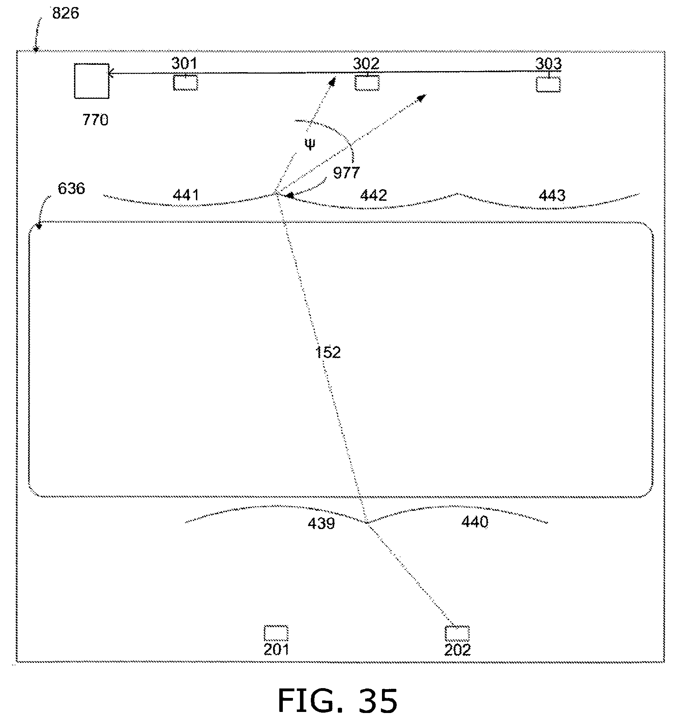

In order to remedy the non-convergence, a fine pattern of micro-lenses is integrated with the receiver lenses, at many points long the surfaces of the lenses. The micro-lenses distribute incoming light so that a portion of the light arriving at each micro-lens reaches the receivers. In this regard, reference is made to **FIGS. 34** and **35,** which are simplified diagrams of a wide-beam touch screen with emitter and detector lenses that have micro-lens patterns, in accordance with an embodiment of the present invention. **FIG. 34** shows incoming beam **151** being spread across an angle θ by a micro-lens at location **977,** thus ensuring that a portion of the beam reaches receiver **302.** **FIG. 35** shows incoming beam **152** being spread across an angle ψ by the same micro-lens at location **977,** thus ensuring that a portion of this beam, too, reaches receiver **302.** By arranging the micro-lenses at many locations along each receiver lens, light beams that enter the locations from different angles are all detected by the receiver. The detected light intensities are communicated to a calculating unit **770** coupled with the receivers.

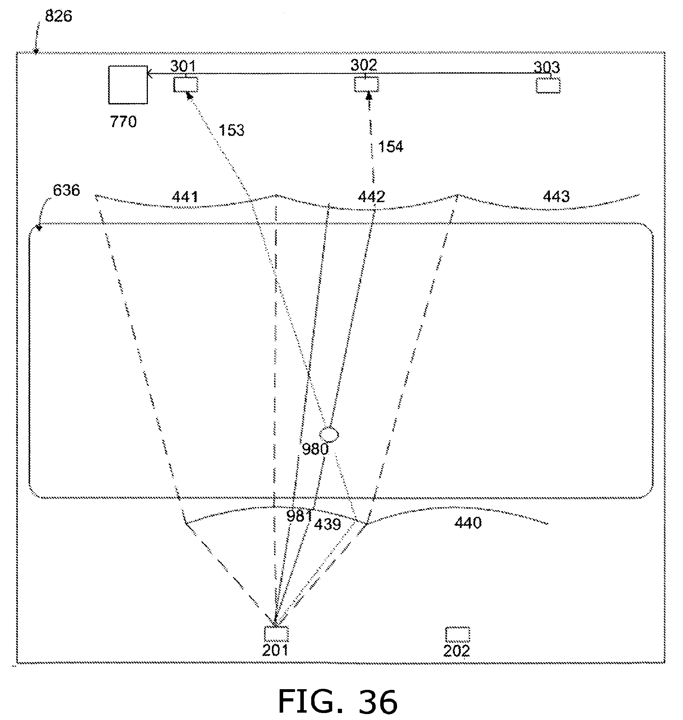

Reference is made to **FIG. 36,** which is a simplified diagram of a wide-beam touch screen with emitter and receiver lenses that do not have micro-lens patterns, in accordance with an embodiment of the present invention. Shown in **FIG. 36** is an electronic device **826** with a display **636**, emitters **201** and **202,** corresponding emitter lenses **439** and **440**, receivers **301**, **302** and **303,** and corresponding receiver lenses **441, 442** and **443.** Two light beams emitted by emitter **201** and detected by respective receivers **301** and **302,** are desired in order to determine a precise location of touch point **980.** However, lens **439,** without micro-lens patterns, cannot refract a beam crossing point **980** to receiver **301**. I.e., referring to **FIG. 36,** lens **439** cannot refract beam **153** as shown. Only the beam shown as **154,** crossing point **980,** is detected.

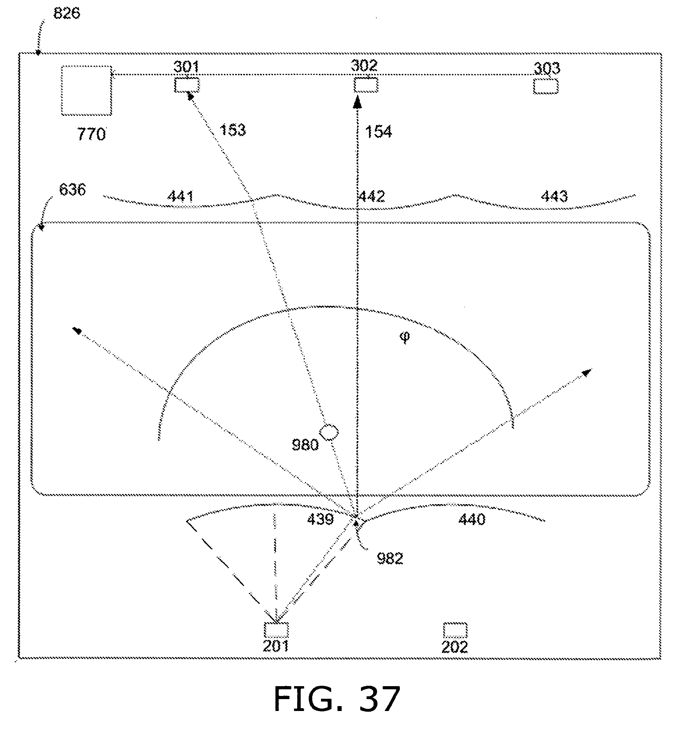

In order to remedy this detection problem, micro-lenses are integrated with the emitter lenses at many points along the surface of the lenses. The micro-lenses distribute outgoing light so that a portion of the light reaches the desired receivers. In this regard, reference is made to **FIG. 37**, which is a simplified diagram of a wide beam touch screen, with emitter and receiver lenses that have micro-lens patterns, in accordance with an embodiment of the present invention. **FIG. 37** shows that a portion of light exiting from micro-lens location **982** reaches multiple receivers. As such, a touch at point **980** is detected by receivers **301** and **302.** It will be noted from **FIGS. 36** and **37** that the beams passing through point **980** are generated by micro-lenses at different locations **981** and **982.** Light intensity values detected by the receivers of **FIGS. 36** and **37** are communicated to a calculating unit **770.**

Micro-lens patterns integrated with emitter and receiver lenses thus generate numerous overlapping light beams that are detected. Each point on the touch screen is traversed by multiple light beams from multiple micro-lenses, which may be on the same emitter lens. The micro-lenses ensure that the multiple light beams reach the desired receivers. Reference is made to **FIG. 38,** which is a simplified diagram of two emitters, **201** and **202,** with respective lenses, **439** and **440,** that have micro-lens patterns **444** integrated therein, in accordance with an embodiment of the present invention. Reference is also made to **FIG. 39,** which is a simplified diagram of two receivers, **301** and **302,** with respective lenses, **439** and **440,** that have micro-lens patterns **444** integrated therein, in accordance with an embodiment of the present invention.

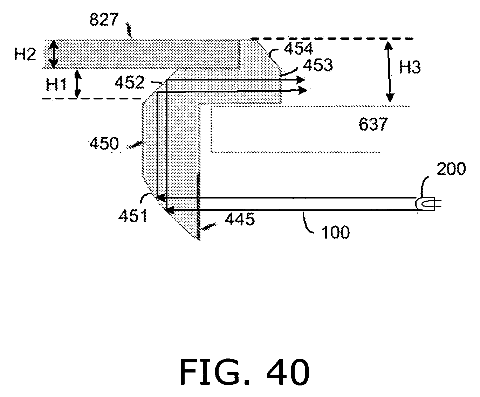

When the light beams are guided across the screen through a cover glass by total internal reflection, as described below with reference to configuration no. 7, the lenses are not exposed to the user. However, when the light beams are directed above the screen through air, the outermost surfaces of the lenses are visible to the user, and it may be less aesthetic to have the micro-lenses on these exposed surfaces, in order that the visible surfaces appear smooth. Moreover, outermost surfaces are susceptible to scratching and to accumulation of dust and dirt, which can degrade performance of the micro-lenses. As such, in embodiments of the present invention, the micro-lenses are integrated on surfaces that are not exposed to the user, as shown below in **FIGS. 40**, **41** and **44**. Although these lenses have particular advantages for through-air beams, the lenses described in **FIGS. 4**0, **41** and **44** may also be connected to a cover glass and used when light beams are guided across the screen through the cover glass by total internal reflection.

Reference is made to **FIG. 40**, which is a simplified diagram of a side view of a single-unit light guide, in the context of an electronic device having a display and an outer casing, in accordance with an embodiment of the present invention. Shown in **FIG. 40** is a cut-away of a portion of an electronic device with a display screen **637,** an outer casing **827** above screen **637,** and an emitter **200** below screen **637.** A light guide **450** receives light beams **100** and reflects them above screen **637** so that they travel across the surface of screen **637** for detection. Light guide **450** includes internal reflective surfaces **451** and **452** for projecting light beams **100** above the surface of screen **637.** A section **445** of light guide **450** serves as a primary lens to collimate light beams **100** when they are received. The surface of section **445** that faces emitter **200,** indicated in bold, has patterns of micro-lenses etched thereon. As such, the micro-lenses are not visible to a user, and are protected from damage and dirt.

The surface of section **445** has a feather pattern for scattering incoming light beams **100** from an emitter **200.** Reflective surfaces **451** and **452** reflect light beams **100.** Reflective surface **451** is concave, and reflective surface **452** is a flat reflector oriented at a 45° angle with respect to incoming light beams **100.**

Light beams **100** exit light guide **450** through flat surface **453.** Surface **454** serves to connect light guide **450** to outer casing **827.** Surface **454** is located above the plane of active light beams used by the touch system, and is angled for aesthetic purposes.

The reflective characteristics of surface **452** require that dust and dirt not accumulate on surface **452,** and require that outer casing **827,** which may be made inter alia of metal or plastic, not make contact with surface **452;** otherwise, reflectivity of surface **452** may be impaired. As such, outer casing **827** is placed above surface **452,** thereby protecting surface **452** from dust and dirt, and outer casing **827** is not flush with surface **452,** so that casing material does not touch surface **452.** Being a flat reflector at a 45° angle relative b incoming light beams, surface **452** is positioned above the upper surface of display **637.** As such, the device height, **H3,** above display **637** due to light guide **450,** comprises the height, **H1,** of surface **452** plus the thickness, **H2,** of outer casing **827.**

At the receiving side, a light guide similar to **450** is used to receive light beams **100** that are transmitted over screen **637,** and to direct them onto corresponding one or more receivers. Thus, light beams enter light guide **450** at surface **453,** are re-directed by surface **452** and then by surface **451,** and exit through the micro-lens patterned surface of section **445** to one or more receivers. At the receiving side, the surface of section **445** has a pattern that scatters the light beams as described hereinabove.

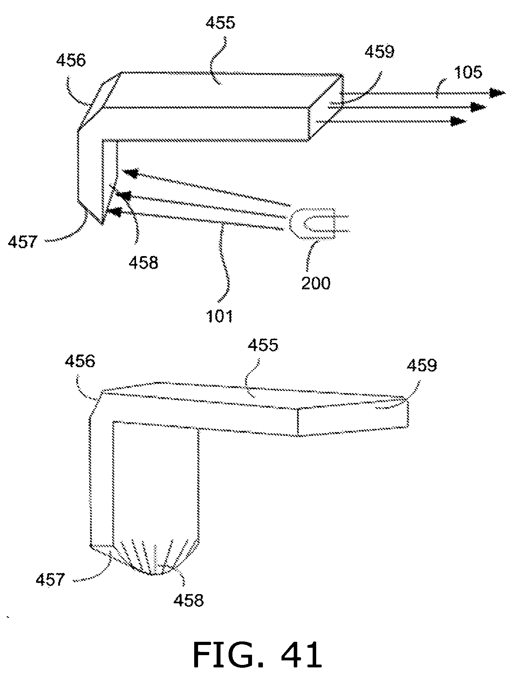

Reference is made to **FIG. 41,** which is a simplified diagram of side views, from two different angles, of a lens with applied feather patterns on a surface, in accordance with an embodiment of the present invention. Shown in **FIG. 41** is a light guide **455** having an internal reflective section **456,** an internal collimating lens **457,** and etched micro-lenses **458.** Light beams **101** entering light guide **455** at lens **457** exit the light guide through a surface **459** as light beams **105.**

Similar light guides are used for receiving beams that have traversed the screen, to focus them onto receivers. In this case, light beams enter at surface **459,** are reflected below the screen surface by internal reflective section **456,** are re-focused onto a receiver by collimating lens **457,** and re-distributed by micro-lenses **458.** In general, the same lens and micro-lenses are used with an emitter and a detector, in order that the light beam be directed at the receiving side in reverse to the way it is directed at the emitting side.

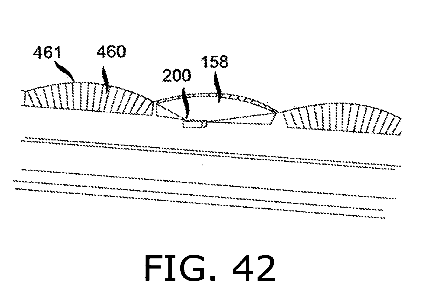

Collimating lens **457** has a rounded bottom edge, as shown at the bottom of **FIG. 41.** In order to properly refract incoming light on the emitter side, the micro-lenses **458** are formed in a feather pattern, spreading as a fan, as shown at the bottom of **FIG. 41** and in **FIG. 42.**

Reference is made to **FIG. 42,** which is a simplified diagram of a portion of a wide-beam touch screen, in accordance with an embodiment of the present invention. A feather pattern **460** is shown applied to the surface of a lens **461.** A similar neighboring lens is associated with an emitter **200** emitting a wide beam **158.**

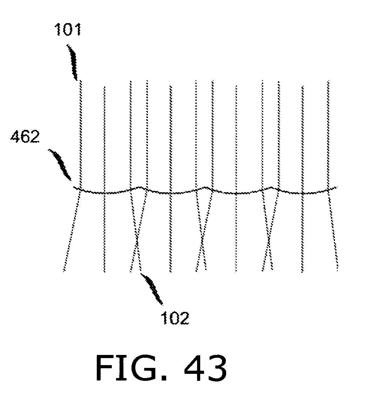

Reference is made to **FIG. 43,** which is a top view of light beams entering and exiting micro-lenses etched on a lens, in accordance with an embodiment of the present invention. Substantially collimated light beams **101** are shown in **FIG. 43** entering micro-lenses **462** and being refracted to light beams **102,** such that each micro-lens acts as a light source spreading a wide beam across a wide angle.

**Touch Screen System Configuration No. 3**

Several challenges arise in the manufacture of the micro-lenses in configuration no. 2. One challenge is the difficulty of accurately forming the fan-shaped feather pattern of micro-lenses. It is desirable instead to use micro-lenses arranged parallel to one another, instead of the fan/feather pattern.

A second challenge relates to the mold used to manufacture the light guide in configuration no. 2. Referring to **FIG. 40,** it is desirable that the outer surface of section **445,** facing emitter **200,** be vertical, so that the front surface of section **445** is parallel with the straight back surface portion of light guide **450.** However, it is difficult to manufacture exactly parallel surfaces. Moreover, if the light guide **450** were to be wider at its bottom, then it would not be easily removable from its mold. As such, the two surfaces generally form a wedge, and the surface of section **445** facing emitter **200** is not perfectly vertical. To compensate for this, the micro-lenses are arranged so as to be perpendicular to a plane of incoming light beams.

A third challenge is the constraint that, for optimal performance, the micro-lenses be positioned accurately relative to their corresponding emitter or receiver. The tolerance for such positioning is low. As such, it is desirable to separate section **445** of the light guide so that it may be positioned accurately, and to allow more tolerance for the remaining portions of the light guide as may be required during assembly or required for robustness to movement due to trauma of the electronic device.

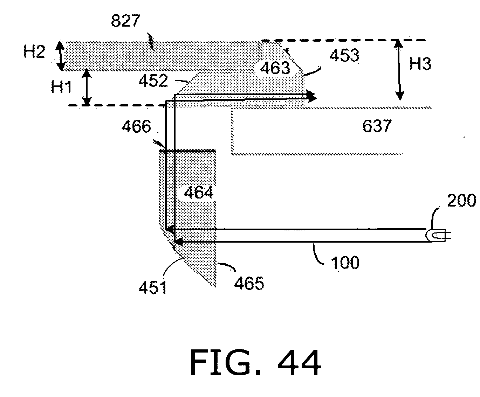

Configuration no. 3, as illustrated in **FIGS. 44 - 46** and **54,** serves to overcome these, and other, challenges.

Reference is made to **FIG. 44,** which is a simplified diagram of a side view of a dual-unit guide, in the context of an electronic device having a display **637** and an outer casing **827,** in accordance with an embodiment of the present invention. Shown in **FIG. 44** is an arrangement similar to that of **FIG. 40,** but with light guide **450** split into an upper portion **463** and a lower portion **464.** The micro-lenses are located at an upper surface **466** of lower portion **464.** As such, the micro-lenses are not embedded in the collimating lens portion of light guide **464.**

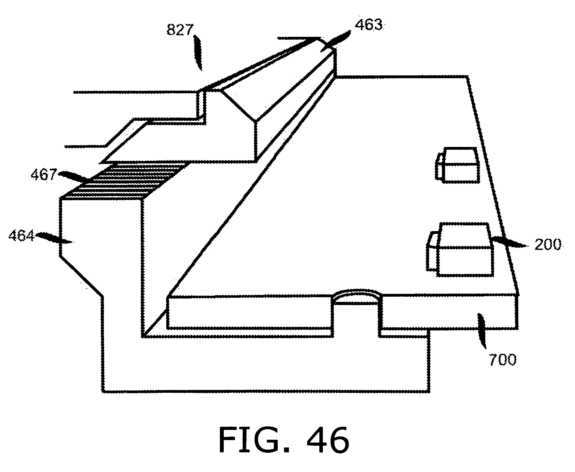

In configuration no. 2, the curved shape of the collimating lens necessitated a fan/feather pattern for the micro-lenses etched thereon. In distinction, in configuration no. 3 the micro-lenses are etched on rectangular surface **466,** and are arranged as parallel rows. Such a parallel arrangement, referred to herein as a "tubular arrangement", is shown in **FIG.** 46. Specifically, a parallel series of micro-lenses **467** are shown along an upper surface of light guide **464** in **FIG. 46.**

An advantage of configuration no. 3 is that the flat upper surface of the light guide may be molded as nearly parallel with the screen surface as possible, since the mold is one flat surface that lifts off the top of light guide **464.** Furthermore, in configuration no. 3, only portion **464** of the light guide has a low tolerance requirement for positioning. Portion **463** has a higher tolerance, since its surfaces are not placed at a focal point of an element.

As shown in **FIG. 44,** light beams **100** emitted by emitter **200** enter light guide unit **464** at surface **465,** are reflected by reflective surface **451** through surface **466,** and into light guide unit **463.** Inside light guide unit **463,** light beams **100** are reflected by surface **452,** and exit through surface **453** over display **637.**

**FIG. 44** indicates that the height, **H3,** added by the light guide over display **637** comprises the sum of the height, **H1,** of internal reflective surface **452,** and the height, **H2,** of the thickness of outer casing **827.**

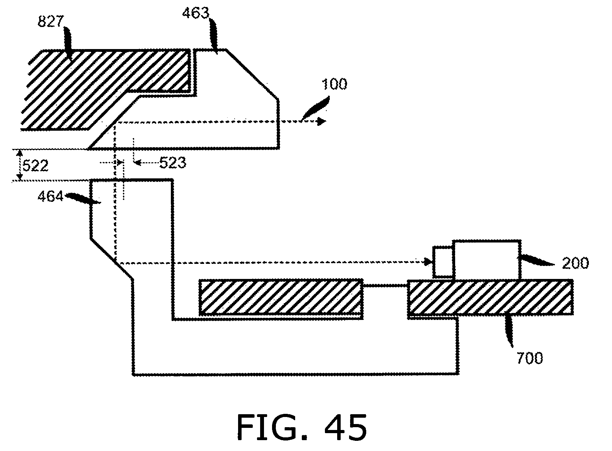

Reference is made to **FIG. 45,** which is a picture of light guide units **463** and **464,** within the context of a device having a PCB **700** and an outer casing **827,** in accordance with an embodiment of the present invention. The tubular pattern on the upper surface of light guide unit **464** is a fine pattern. In order for this pattern to distribute the light beams correctly, light guide **464** is placed precisely relative to its respective LED or PD. By contrast, light guide unit **463** has a flat reflective surface and, as such, does not require such precision placement. **FIG. 45** indicates the relative positioning of light guide units **463** and **464.** Their alignment is represented by a distance **523,** and has a tolerance of up to 1 mm. A distance **522** represents the height between the light guide units.

Reference is made to **FIG. 46,** which is a top view of light guide units **463** and **464** of **FIG. 45,** in accordance with an embodiment of the present invention. Tubular pattern **467** appears on the upper surface of light guide unit **464.**

**Touch Screen System Configuration No. 4**

Configuration nos. 2 and 3 relate to detection of a small touch area **980** in **FIGS. 31, 32, 36** and **37**. A typical use case for such touch area size is stylus input. However when the expected use generates a relatively large touch area, such as the area of a fingertip, a precise touch location may be determined without the micro-lenses used in configurations 2 and 3.

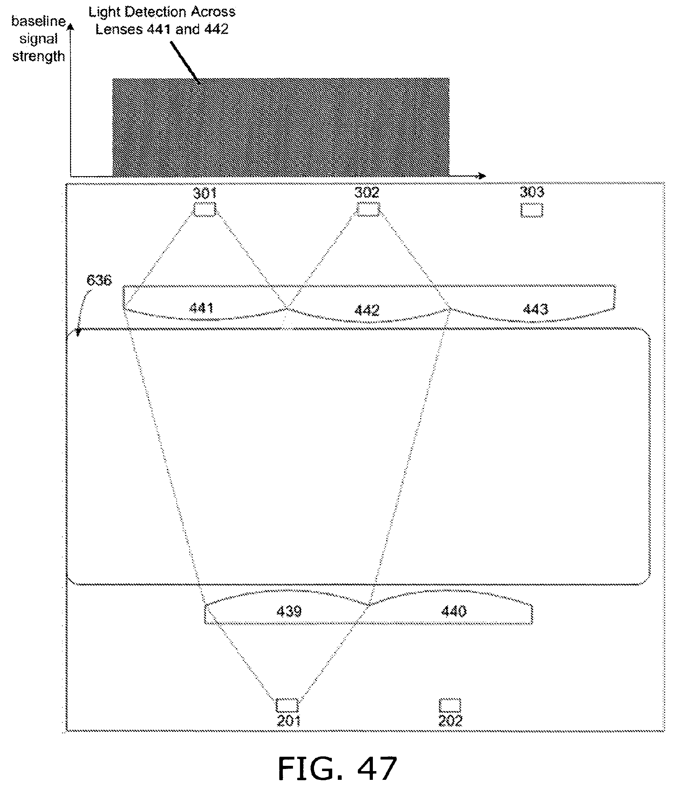

Reference is made to **FIG. 47,** which is a simplified diagram of shift-aligned emitters and detectors for a light-based touch screen, for detecting finger touches, in accordance with an embodiment of the present invention. **FIG. 47** shows a system intended for finger touch. Light from an emitter **210** is distributed uniformly across the wide beam that spans lenses **441** and **442.** Aside from the uniform distribution of light, the system of **FIG. 47** is the same as the system of **FIG. 30.**

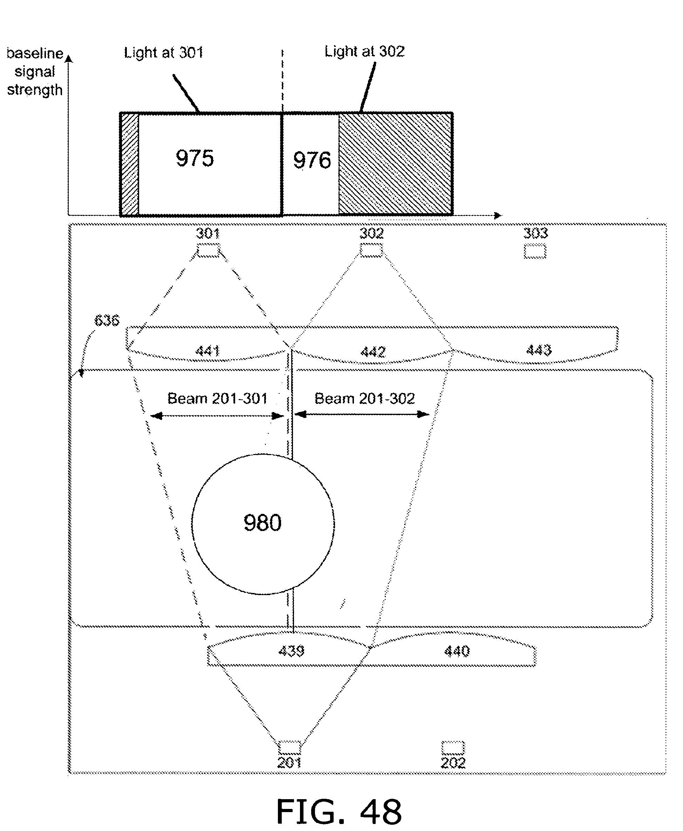

Reference is made to **FIG. 48,** which is a simplified illustration of finger touch detection on the screen of **FIG. 47,** in accordance with an embodiment of the present invention. **FIG. 48** shows a large touch object **980** detected by two detection channels, **201-301** and **201-302.** Light from emitter **201** is substantially collimated, such that the left half of the beam from emitter **201** reaches detector **301,** and the right half of the beam from emitter **201** reaches detector **302.** A significant portion of each channel is blocked by pointer **980.** The amount of light blocked from each detector is shown as portions **975** and **976.** The center of the blocking pointer **980** is determined by interpolating these two amounts. In addition, because neighboring light beams **201-301** and **201-302** detect the touch, pointer **980** lies on the border between these two beams. Thus, the leftmost edge of pointer **980** is determined based on the portion of beam **201-301** that is blocked. Similarly, the rightmost edge of pointer **980** is determined based on the portion of beam **201-302** that is blocked. As such, the segment, or in two dimensions - the area, covered by the pointer is determined.

**Touch Screen System Configuration No. 5**

Configuration no. 5 uses a reflective light guide and lens that reduce the height of a light guide above a display. The reflective light guide and lens of configuration no. 5 are suitable for use with the feather pattern lenses of configuration no. 2, with the tubular pattern lenses of configuration no. 3, with the collimating lenses of configuration no. 4, and also with the alternating reflective facets of configuration no. 6. Many electronic devices are designed with a display surface that is flush with the edges of the devices. This is often an aesthetic feature and, as such, when integrating light-based touch screens with electronic devices, it is desirable to minimize or eliminate the raised rims. Less visibly prominent rims result in sleeker, more flush outer surfaces of the devices.

Moreover, in light-based touch screens, the raised rim occupies a width around the display, beyond the edges of the display. Many electronic devices are designed with display surfaces that seamlessly extend to the edges of the devices. This is often an aesthetic feature and, as such, when integrating light-based touch screens with electronic devices, it is desirable to design the reflective raised rims in such a way that they appear as seamless extensions of the display.

Configuration no. 5 achieves these objectives when light beams are projected over air above the touch surface, by reducing bezel height and providing a seamless transition between a display edge and an outer border of a device, resulting in a more appealing aesthetic design. The light guide of configuration no. 5 integrates with an outer casing having an elongated rounded edge, thereby softening sharp angles and straight surfaces.

Configuration no. 5 employs two active mirror surfaces; namely, a parabolic reflective surface that folds and focuses incoming light to a focal location, and an elliptical refractive surface that collects light from the focal location and collimates the light into beams across the screen.

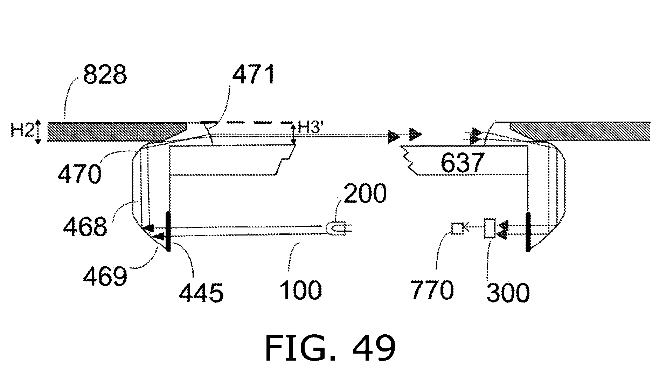

Reference is made to **FIG. 49,** which is a simplified diagram of a side view of a light guide within an electronic device, in accordance with an embodiment of the present invention. Shown in **FIG. 49** is a light guide **468** between an outer casing **828** and a display **637.** Light beams from an emitter **200** enter light guide **468** through a surface **445.** A feather pattern of micro-lenses is present on a lower portion of surface **445,** in order to scatter the light beams **100.** Light beams **100** are reflected by an internal concave reflective surface **469** and by a parabolic reflective surface **470,** and exit light guide **468** through an elliptical refractive surface **471.** Elliptical refractive surface **471** redirects at least a portion of light beams **100** in a plane parallel with the surface of display **637.** Light beams **100** are received at the other end of display **637,** by a similar light guide that directs the beams onto a light receiver **300.** The light intensity detected by light receiver **300** is communicated to a calculating unit **770.**

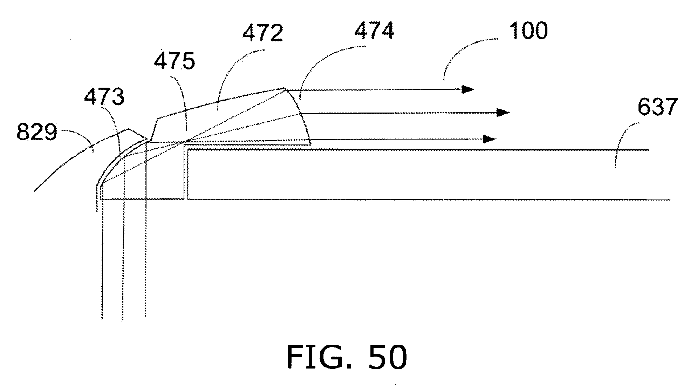

Reference is made to **FIG. 50,** which is a simplified diagram of a side view cutaway of a portion of an electronic device and an upper portion of a light guide with at least two active surfaces for folding light beams, in accordance with an embodiment of the present invention. Shown in **FIG. 50** is an upper portion of a light guide **472.** Surface **473** is part of a parabola, or quasi-parabola, or alternatively is a free form, having a focal line **475.** Focal line **475,** and surfaces **473** and **474** extend along the rim of display **637.** Surface **474** is part of an ellipse, or quasi-ellipse, or alternatively a free form, having focal line **475.**

On the emitter side, light beams enter the light guide, and parabolic mirror **473** reflects the beams to a focal point inside the light guide. Refracting elliptical lens **474** has the same focal point as parabolic mirror **473.** Elliptical lens **474** refracts the light from the focal point into collimated light beams over display **637.** On the receiver side, collimated light beams enter the light guide, and are refracted by elliptical lens **474** into a focal point. Parabolic mirror **473** reflects the beams from the focal point inside the light guide, to collimated output beams.

Surface **469** in **FIG. 49** folds light beams **100** upwards by 90°. Surface **469** is formed as part of a parabola. In one embodiment of the present invention, surface **469** is corrected for aberrations due to input surface **445** being slightly inclined rather than perfectly vertical, and also due to the light source being wider than a single point.

Surfaces **469** and **470** use internal reflections to fold light beams. Thus these surfaces need to be protected from dirt and scratches. In **FIG. 50,** surface **473** is protected by outer casing **829.** The lower portion (now shown) of light guide **472** is deep within the electronic device, and is thus protected.

Using configuration no. 5, substantially all of reflective surface **473** is located below the upper surface of display **637.** Thus, this configuration adds less height to an electronic device than does configuration no. 2, when projecting light beams through the air above the touch surface. Referring back to **FIG. 49,** the height, **H3',** added by the light guide in the present configuration is approximately the thickness, **H2,** of the outer casing, which is less than the corresponding height, **H3,** in configuration no. 2. Moreover, the convex shape of surface **471** of **FIG. 49** and surface **474** of **FIG. 50** is easier for a user to clean than is the perpendicular surface **453** of **FIG. 40.** Thus a user can easily wipe away dust and dirt that may accumulate on display **637** and on surface **471.** It is noted that configuration no. 5 eliminates the need for surface **454** of **FIG. 40,** since outer casing **828** is flush with the height of surface **471,** instead of being above it.

The convex shape of surface **471** of **FIG. 49** makes the bezel less visibly prominent than does the perpendicular surface **453** of **FIG. 40.**

Some electronic devices are covered with a flat sheet of glass that extends to the four edges of the device. The underside of the glass is painted black near the devices edges, and the display is viewed through a clear rectangular window in the middle of the glass. Examples of such devices include the IPHONE®, IPOD TOUCH® and IPAD®, manufactured by Apple Inc. of Cupertino, CA, and also various models of flat-panel computer monitors and televisions. In some cases, the light guides surrounding the various touch screens described herein may appear non-aesthetic, due to (a) the light guide being a separate unit from the screen glass and thus the border between them is noticeable, and (b) the light guide extending below the screen and thus, even if the underside of the light guide is also painted black, the difference in heights between the bottom of the light guide and the screen glass is noticeable. Embodiments of the present invention employ a two-unit light guide to overcome this problem.

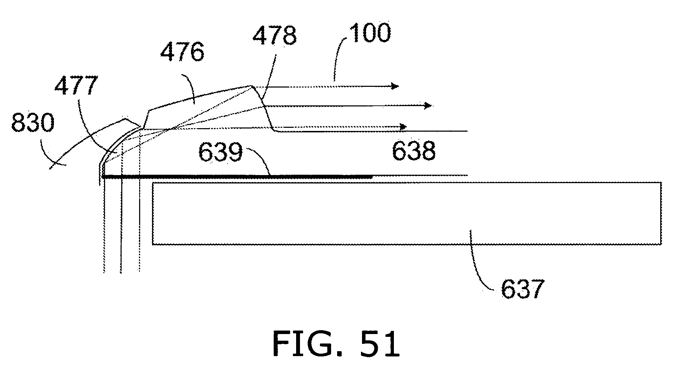

In one such embodiment, the upper unit of the light guide is merged with the screen glass. In this regard, reference is made to **FIG. 51,** which is a simplified drawing of a section of a transparent optical touch light guide **476,** formed as an integral part of a protective glass **638** covering a display **637,** in accordance with an embodiment of the present invention. A daylight filter sheet **639** on the underside of protective glass **638** serves, instead of black paint, to hide the edge of display **637,** without blocking light beams **100.** Light guide **476** has an outer elliptical surface **478** and an inner parabolic surface **477,** and merges smoothly with an outer casing **830.** Light beams **100** pass through light guide **476** as in **FIG. 50.**

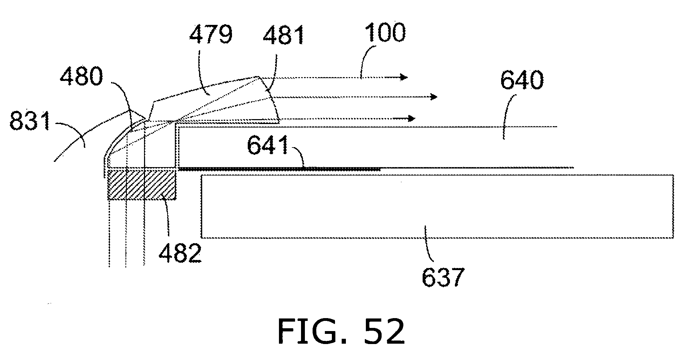

In some cases, the cost of manufacturing a protective glass cover with an integrated reflective lens may be expensive. As such, in an alternative embodiment of the present invention, a black object is placed between the upper and lower units of the light guide. The height of the black object is aligned, within the electronic device, with the height of the black paint on the underside of the protective glass. In this regard, reference is made to **FIG. 52,** which is a simplified illustration of the electronic device and light guide of **FIG. 50,** adapted to conceal the edge of the screen, in accordance with an embodiment of the present invention. Shown in **FIG. 52** is black paint, or alternatively a daylight filter sheet **641,** on the underside of protective glass **640,** covering display **637.** A black plastic element **482** is aligned with black paint/daylight filter sheet **641,** so that the edge of protective glass **640** is not discernable by a user. Black plastic element **482** transmits infra-red light to allow light beams **100** to pass through.

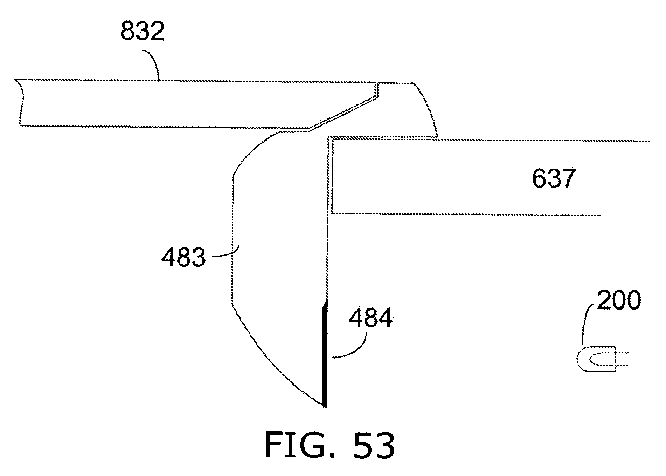

Reference is made to **FIG. 53,** which is a simplified diagram of a light guide **483** that is a single unit extending from opposite an emitter **200** to above a display **637,** in accordance with an embodiment of the present invention. A portion of an outer casing **832** is shown flush with the top of light guide **483.** The lower portion of light guide **483** has a feather pattern of micro-lenses **484** to scatter the light beams arriving from emitter **200.** At the receiving side, the light beams exit through the bottom of a light guide similar to light guide **483,** towards a receiver. The same feather pattern **484** breaks up the light beams en route to the receiver.

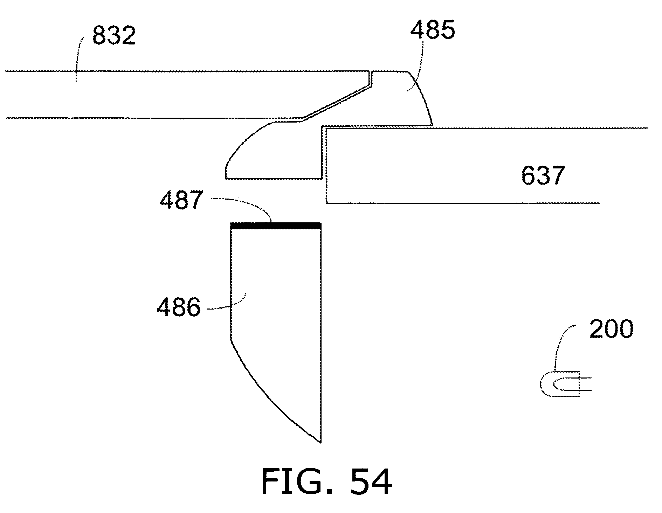

Reference is made to **FIG. 54,** which is a simplified diagram of a dual-unit light guide, in accordance with an embodiment of the present invention. Shown in **FIG. 54** is a light guide with an upper unit **485** and a lower unit **486.** A portion of an outer casing **832** is flush with the top of light guide unit **485.** A display **637** is shown to the right of light guide unit **485.** The top surface of light guide unit **486** has a tubular pattern of micro-lenses **487** to break up light beams arriving from an emitter **200.** At the receiving side, the light beams exit through the bottom of a light guide similar to the light guide shown in **FIG. 54,** towards a receiver. The same tubular pattern **487** breaks up the light beams en route to the receiver.

As explained hereinabove with reference to **FIGS. 40** and **49,** the positioning of light guide unit **486** with tubular pattern **487** requires high precision, whereas the positioning of light guide unit **485** does not require such precision. The effect of tubular pattern **487** on the light beams depends on its precise placement relative to its respective emitter or receiver. The active surfaces in light guide unit **485** are more tolerant, since they are largely self-contained; namely, they are both focused on an internal focal line, such as focal line **475** of **FIG. 50.**

It is noted that placement of emitters and receivers underneath a device screen, and placement of a collimating reflective element opposite each emitter or receiver, imposes restrictions on the thickness of the device. A first restriction is that the thickness of the device be at least the sum of the screen thickness and the emitter or receiver thickness. A second restriction is that in order to properly collimate light that is reflected upward above the screen, the reflective element opposite the emitter or receiver be curved into a convex "smile" shape, as shown inter alia in **FIGS. 41** and **42.** The convex shape adds to the total thickness of the device.

Designers of tablets and e-book readers strive to achieve as slim a form factor as possible. As such, according to an embodiment of the present invention, the receivers and collimating lenses are placed inside a border surrounding the screen, instead of being placed underneath the screen. This is particularly feasible for tablets and e-book readers that provide a non-screen border area for holding the device.

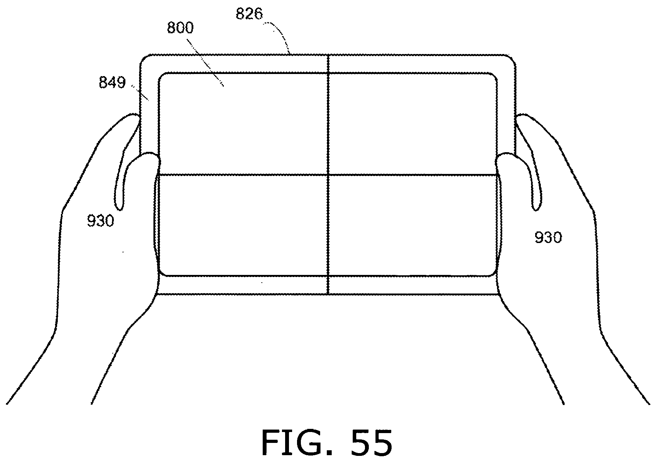

Reference is made to **FIG. 55,** which is a simplified diagram of a touch screen device held by a user, in accordance with an embodiment of the present invention. Shown in **FIG. 55** is a device **826** with a touch screen **800** surrounded by a frame **840** held by hands **930.**

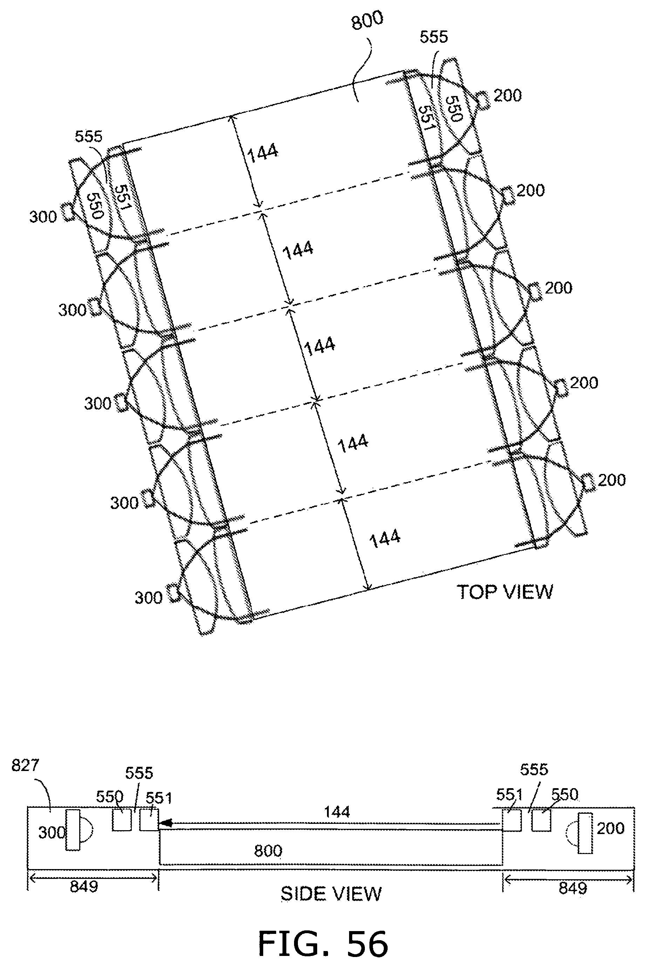

Reference is made to **FIG. 56,** which is a simplified diagram of a touch screen with wide light beams covering the screen, in accordance with an embodiment of the present invention. **FIG. 56** shows a top view and a side view of a touch system with a touch screen **800,** in the context of an electronic device such as a tablet or an e-book reader. **FIG. 56** also shows emitters **200** and receivers **300,** each coupled with a pair of lenses **550** and **551,** separated by an air gap **555,** for collimating light. The side view shows a device casing **827** and a frame **849** surrounding touch screen **800.** Frame **849** provides a grip for a user to hold the device, and is wide enough to encase elements **200, 300, 550** and **551.**

Light is more efficiently collimated over a short distance using multiple air-to-plastic interfaces than with a solid lens. The emitter, receiver and lenses are substantially coplanar with the surface of touch screen **800.** The flat non-curved profile of lenses **500** and **551** along the height of the device is lower than the profile of the lenses of **FIGS. 41** and **38,** due to the fact that in the case of lenses **500** and **551** light is projected only along the plane of the screen surface. The only height added to the device form factor is the height of the bezel, or lens **551,** above touch screen **800** for directing light across the screen. If micro-lens patterns are used, e.g., to create overlapping beams, then a third lens is added that includes the micro-lens patterns. Alternatively, the micro-lens patterns may be formed on one of the two lenses **500** and **551.**

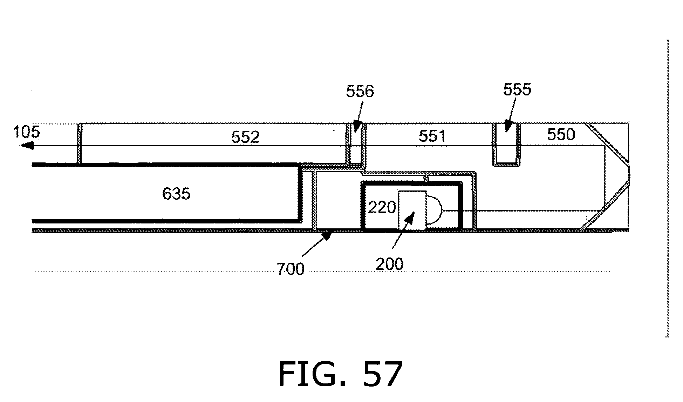

Reference is made to **FIGS. 57 - 59,** which are respective simplified side, top and bottom views of a light guide in the context of a device, in accordance with an embodiment of the present invention. **FIG. 57** is a side view showing a display **635** and a side-facing emitter **200** that is substantially coplanar with display **635.** A multi-lens assembly reflects light above display **635** and outputs a wide beam. **FIG. 57** shows the multi-lens assembly with three sections **550 - 552** separated by air gaps **555** and **556.** Sections **550** and **551** are connected beneath air gap **555** and form part of a rigid frame that surrounds display **635.** The frame includes a cavity **220** for accommodating side-facing emitter **200** or a similar shaped receiver. Lens sections **550** and **551** together produce a wide collimated beam as described hereinabove. Lens section **552** includes a tubular pattern of micro-lenses as described hereinabove with reference to **FIGS. 45** and **46. FIG. 57** shows rays of a beam **105** crossing above display **635.** A PCB **700** forms a substrate for supporting emitters **200,** display **635,** and the light guide frame.

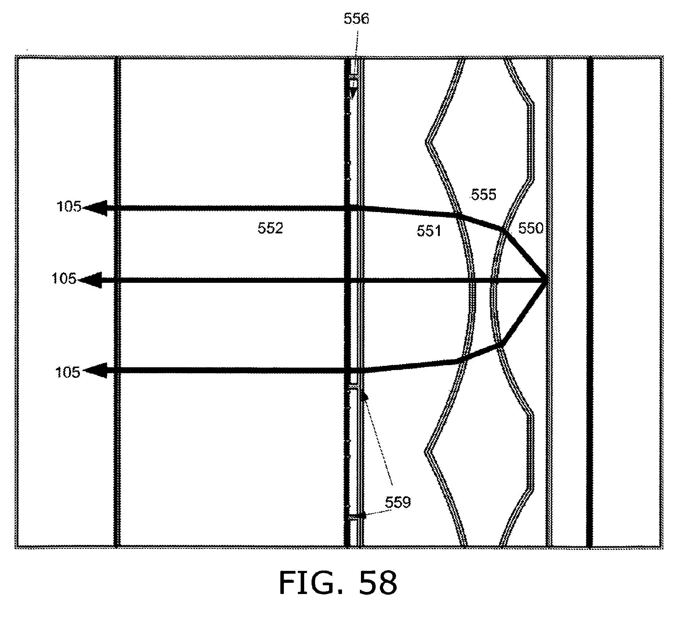

**FIG. 58** is a top view showing lens sections **550 - 552** separated by air gaps **555** and **556. FIG. 58** shows three collimated beams **105,** to illustrate how lens sections **550** and **551** collimate a wide light beam. **FIG. 58** also shows small connectors **559** that connect lens section **552** to the rigid frame formed by lens sections **550** and **551.** As such, all three sections **550 - 552** may be formed from a single piece of plastic.

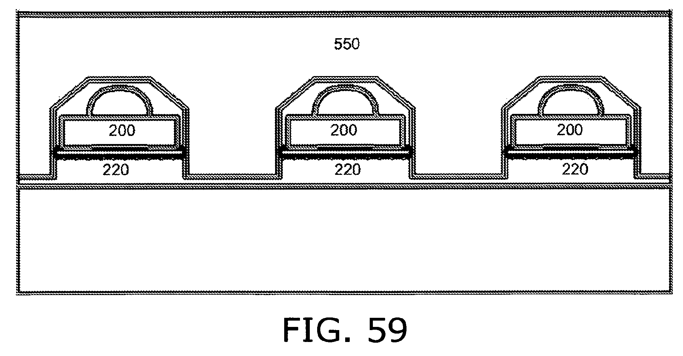

**FIG. 59** is a bottom view showing lens section **500** with emitter/receiver cavities **220** containing three emitters **200.**

**Touch Screen System Configuration No. 6**

In accordance with an embodiment of the present invention, high resolution touch sensitivity is achieved by combining two or more emitter-receiver pair signals that span a common area, as described hereinabove with reference to configurations nos. 2 and 3. Configuration no. 6 provides alternative optical elements and alternative arrangements of emitters and receivers for providing overlapping detection.

Various approaches may be used to provide overlapping detection beams. One approach is to provide two separate wide beams that are projected at slightly different heights across the screen. Both beams cover a common screen area, and thus provide multiple detection signals for touches in that area. Another approach is to provide optical elements that interleave rays of two wide beams when both beams are activated at once, which can be achieved using diffractive structures to interleave minute rays from two beams, or using slightly larger alternating facets to interleave beams on the order of 0.1 - 0.6 mm from two sources. Generally, the two beams are activated separately. As such, they cover a common screen area but are not actually interleaved. This latter alternative is described in what follows.

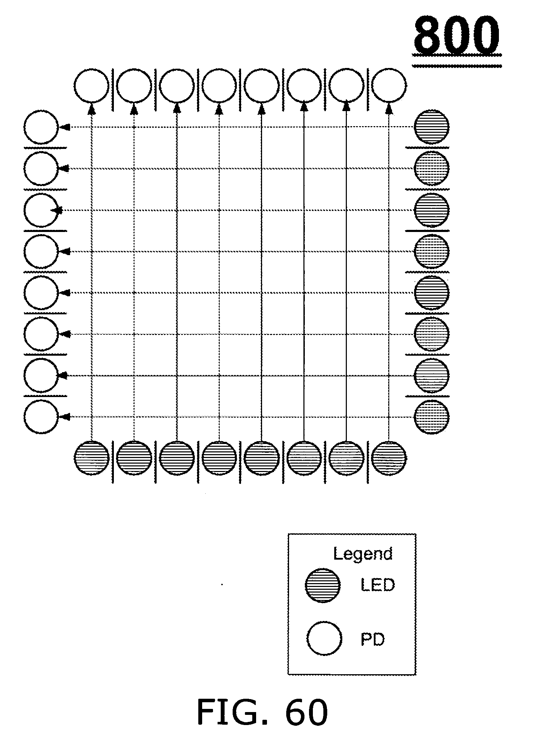

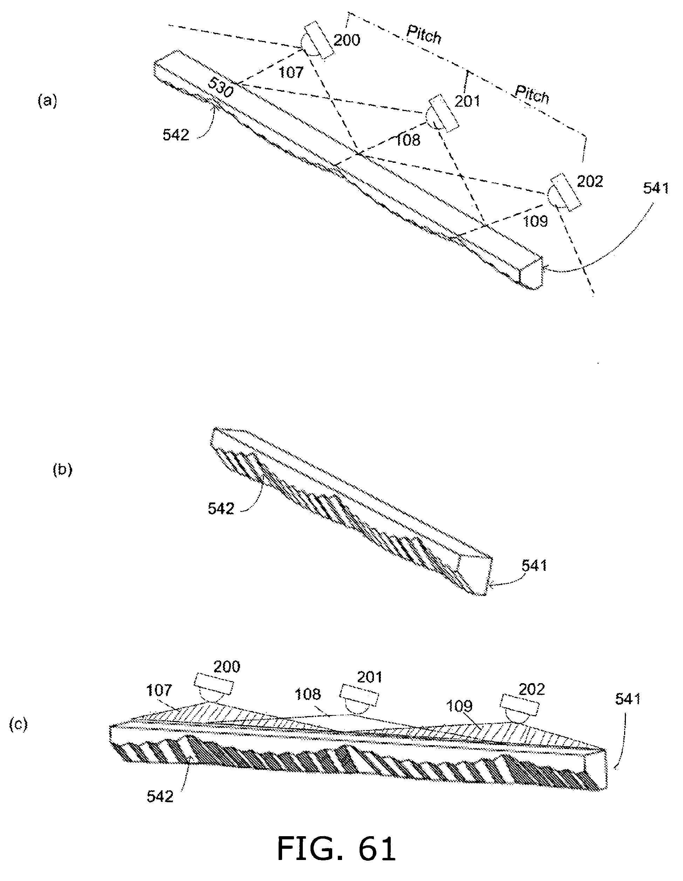

Reference is made to **FIG. 60,** which is a simplified illustration of a touch screen **800** surrounded by emitters and receivers, in accordance with an embodiment of the present invention. Reference is also made to **FIG. 61,** which is a simplified illustration of an optical element **530** with an undulating angular pattern of reflective facets, shown from three angles, in accordance with an embodiment of the present invention. Shown in **FIG. 61** are three views, (a), (b) and (c), of optical element **530.** Light from the emitters enters optical element **530** as wide angled overlapping beams. **FIG. 61** shows emitters **200 - 202** facing a surface **541** of element **530.** Wide beams **107 - 109** from respective emitters **200 - 202** enter element **530** through surface **541. FIG. 61** also shows the distance, or pitch, between neighboring emitter elements.

Each of wide beams **107 - 109** spans two pitches and, as such, the wide beams overlap in the area between neighboring emitters. A surface **542** of element **530** is formed as a wave-like pattern of facets, alternately directed at neighboring emitters. **FIG. 61(c)** shows alternating shaded and non-shaded facets on surface **542.** In element **530** between emitters **200** and **201,** shaded facets aimed at emitter **200** are interleaved with non-shaded facets aimed at emitter **201.** In element 530 between emitters **201** and **202,** shaded facets aimed at emitter **202** are interleaved with non-shaded facets aimed at emitter **201.**

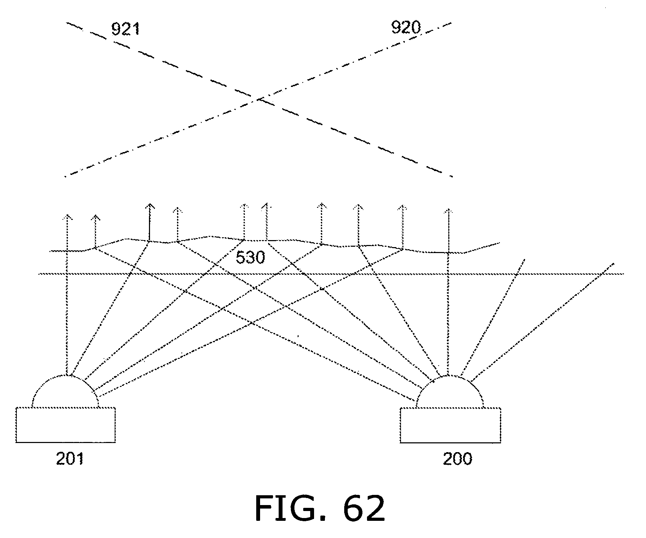

Reference is made to **FIG. 62,** which is a simplified illustration of an optical element reflecting, collimating and interleaving light from two neighboring emitters, in accordance with an embodiment of the present invention. As shown in **FIG. 62,** each reflective facet of element **530** collimates rays from its corresponding emitter, thereby interleaving collimated rays from two emitters. **FIG. 62** shows optical element **530** reflecting and collimating light from two neighboring emitters **200** and **201.** Alternating facets of element **530** focus on these two elements. By interleaving collimated rays, element **530** collimates light from two emitters across the screen in overlapping wide beams. Elements **530** at an opposite screen edge direct the wide beams onto respective receivers.

Each facet on surface **542** is precisely angled to focus on its element. The surface areas of each facet are also configured so that sufficient amounts of light are provided for detection.

Alternative embodiments of optical element **530** collimate and interleave incoming wide beams through refraction instead of reflection. In such case, the wave-like multi-faceted surface is situated at an input or output surface of optical element **530**. In the case of reflecting facets, the facets re-direct light inside the optical element.

At times, it is desirable to run a touch screen in a low frequency mode, e.g., in order to save power. Configuration no. 6 enables an accurate low-frequency scan mode. In accordance with an embodiment of the present invention, two detection signals along a screen axis are provided for each touch location. In low frequency mode, during a first scan every other emitter-receiver pair is activated, thus activating only half of the pairs along only one screen axis, but nevertheless covering the entire screen. During a second scan, the remaining emitter-receiver pairs along this axis are activated. As such, odd emitter-receive pairs are first activated, then even emitter-receiver pairs, thus providing two full screen scans and spreading usage evenly across all emitter and receiver elements. In order to keep power consumption at a minimum, only emitter-receiver pairs along the shorter edge of a rectangular screen are activated.

In an alternative embodiment of the present invention both axes of a screen are scanned, and each scanned axis provides initial touch information about the screen. As such, instead of sequentially activating multiple scans of a single axis, in the alternative embodiment sequential activation of scans of separate axes are activated. A sequence of four scans are activated at four sampling intervals; namely, (i) a first half of the emitter-receiver pairs along a first screen axis are scanned; (ii) a first half of the emitter-receiver pairs along a second screen axis are activated, (iii) the second half of the emitter-receiver pairs along the first screen axis are activated, and (iv) the second half of the emitter-receiver pairs along the second screen axis are activated.

### Design of Reflective Elements

A goal in designing alternating reflective or refractive facets of an optical element, is to generate a light distribution that provides good gradients as a basis for interpolation, by way of a linear signal gradient, S(x), from an emitter to a receiver. A number of parameters affect the light distribution.

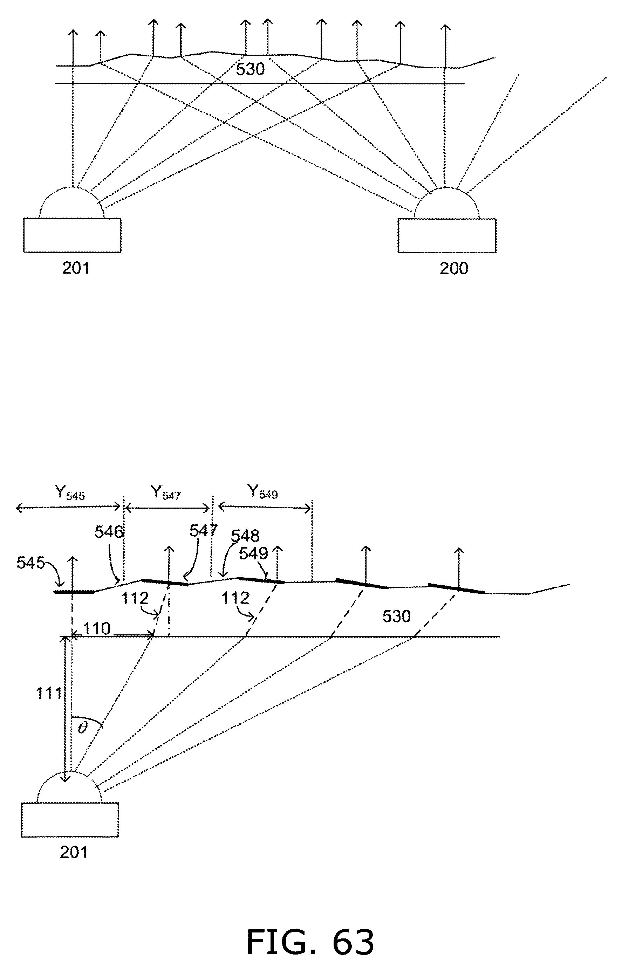

Reference is made to **FIG. 63**, which is a simplified diagram of a multi-faceted optical element 530, in accordance with an embodiment of the present invention. Shown in **FIG. 63** are parameters that control light from each facet of the optical element, as described in what follows.

The light intensity distribution depends on a polar angle, θ, in accordance with the third power, $\cos^3\theta$. The angle θ is a function of distance **110** between beams of a single emitter or receiver element that go to different facets, and of distance **111** between the emitter or receiver element and element **530.**

The facet width, **B,** is a readily adjustable parameter.

The Fresnel loss, **F,** is the amount of light lost due to reflection caused by the refractive index of element **530,** when a beam enters optical element **530**. Variation of Fresnel loss **F** between different angles θ under Brewster's angle is less than 1%, and is therefore negligible.

Facet beam width, **Y,** is the total width covered by a single facet beam. The alternating facets generate gaps in the light from emitter **201**, as neighboring facets are focused on neighboring emitter **202**. Light from each facet covers the gaps. Facet beam width, **Y**, depends on facet width **B** and on the widths of neighboring facets. **FIG. 63** shows facets **545**, **547** and **549** aimed at emitter **201** and respective facet-beam widths $Y_{545}$, $Y_{547}$ and $Y_{549}$ that together cover the neighboring facets **548** and **546** aimed at emitter **202.**

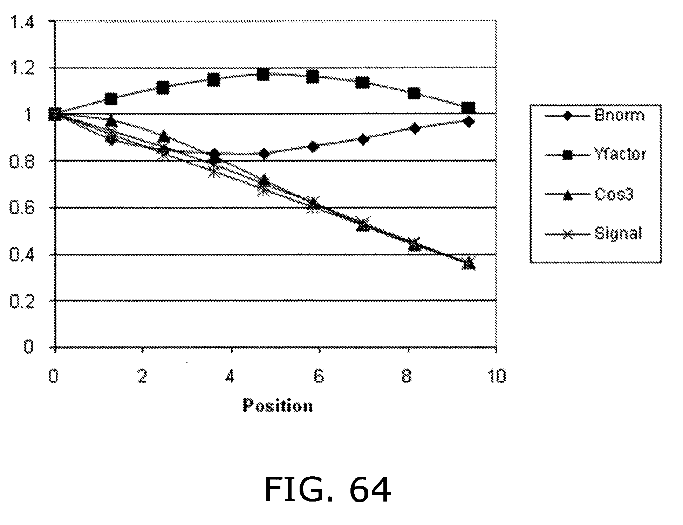

Reference is made to **FIG. 64,** which is a simplified graph showing the effect of reflective facet parameters θ, **Y** and **B** on light distribution for nine facets, in accordance with an embodiment of the present invention. The graph of **FIG. 64** also shows actual light distribution, and a reference linear function. As seen in **FIG. 64,** the actual light distribution signal is approximately linear. The data in the graph is normalized based on the central facet, located at location 0 on the x-axis, being assigned a value of 1 in all aspects. As such, the facet width **B** is labeled **Bnorm** in the graph, and facet widths are normalized relative to the width of the central facet. Generally, the angular parameter θ provides a sloped curve, which is flat for small values of θ, as seen in **FIG. 64** in the flat portion of the θ curve, labeled **cos3**, between positions 0 and 2 along the x-axis. The gradient for small θ is increased by adjusting parameter **B,** which in turn affects parameter **Y**, labeled **Yfactor.** The complete signal is labeled **signal** in the graph, and it is approximately linear.

Light intensity for facet *k*, as a function of parameters θ, **B**, **F** and **Y**, is described in accordance with

$$\frac{S_k}{S_1} = \frac{\cos^3(\theta_k)}{\cos^3(\theta_1)} \cdot \frac{B_k}{B_1} \cdot \frac{F_k}{F_1} \cdot \frac{Y_k}{Y_1} \, , \tag{1}$$

where the lighting of facet *k* is normalized based on θ = 0 for the central facet.

**TABLE I** lists parameters for each facet in a series of nine facets that are focused on one emitter or receiver element. In **TABLE I**, x-pos denotes the distance in millimeters from the central facet, B denotes the facet width in millimeters, B-norm denotes the normalized facet width, based on the central facet having a width of 1, Yfactor denotes the facet beam width, normalized to the width of the central facet beam, Signal denotes the normalized signal value for each facet, and Line denotes signal values for a reference straight line.

| TABLE I: Facet parameters for nine facets | | | | | | | |
|---|---|---|---|---|---|---|---|
| Facet no. | x-pos | B | B-norm | Yfactor | $\cos^3\theta$ | Signal | Line |
| 1 | 0 | 0.66 | 1 | 1 | 1 | 1 | 1 |
| 2 | 1.265 | 0.59 | 0.893939 | 1.065574 | 0.973981 | 0.927774 | 0.913516 |
| 3 | 2.46 | 0.56 | 0.848485 | 1.11588 | 0.907237 | 0.858978 | 0.831817 |
| 4 | 3.605 | 0.55 | 0.833333 | 1.150442 | 0.817261 | 0.78351 | 0.753537 |
| 5 | 4.725 | 0.55 | 0.833333 | 1.171171 | 0.717801 | 0.700557 | 0.676966 |
| 6 | 5.835 | 0.57 | 0.863636 | 1.160714 | 0.618698 | 0.620205 | 0.601079 |
| 7 | 6.965 | 0.59 | 0.893939 | 1.135371 | 0.524528 | 0.532371 | 0.523824 |
| 8 | 8.13 | 0.62 | 0.939394 | 1.087866 | 0.438568 | 0.448188 | 0.444177 |
| 9 | 9.35 | 0.64 | 0.969697 | 1.027668 | 0.362027 | 0.360769 | 0.360769 |
| | 10 | | | | | | |

**TABLE II** lists parameters for a series of alternating facets focused on two neighboring elements, such as an emitter and a neighboring receiver. In **TABLE II**, facets nos. 1 - 5 are focused on an emitter, and facets nos. 6 - 9 are focused on a neighboring receiver. Three values are listed for each facet; namely, its width, B, its location, x-pos, along the x-axis relative to the center of the central facet for the emitter, and the location, border_pos, of the facet's outer edge. All facet values are specified in millimeters.

| TABLE II: Nine alternating facets | | | |
|---|---|---|---|
| Facet no. | B | x-pos | border pos |
| 1 | 0.66 | 0 | 0.33 |
| 9 | 0.64 | 0.65 | 0.97 |
| 2 | 0.59 | 1.265 | 1.56 |
| 8 | 0.62 | 1.87 | 2.18 |
| 3 | 0.56 | 2.46 | 2.74 |
| 7 | 0.59 | 3.035 | 3.33 |
| 4 | 0.55 | 3.605 | 3.88 |
| 6 | 0.57 | 4.165 | 4.45 |
| 5 | 0.55 | 4.725 | 5 |
| | | 5 | |

### Signals Generated by Element 530

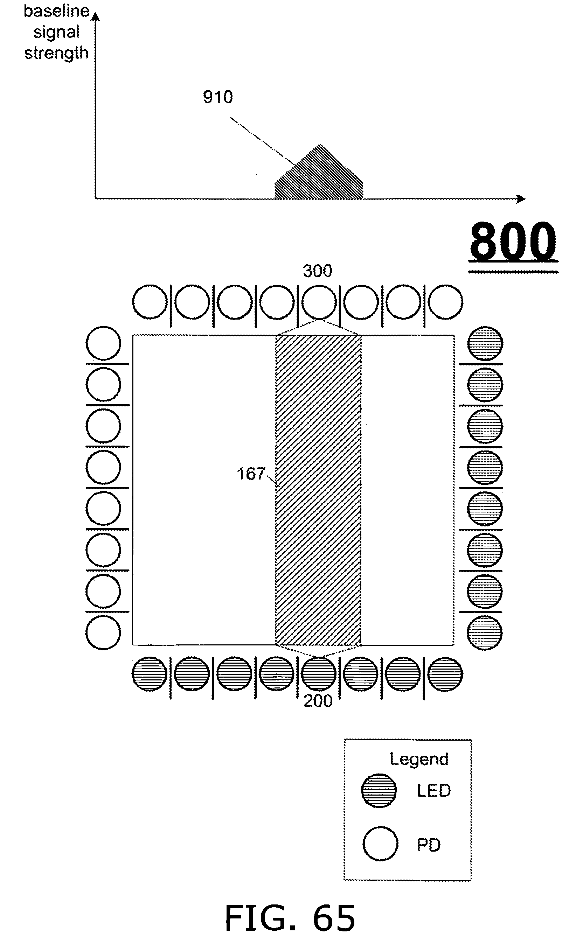

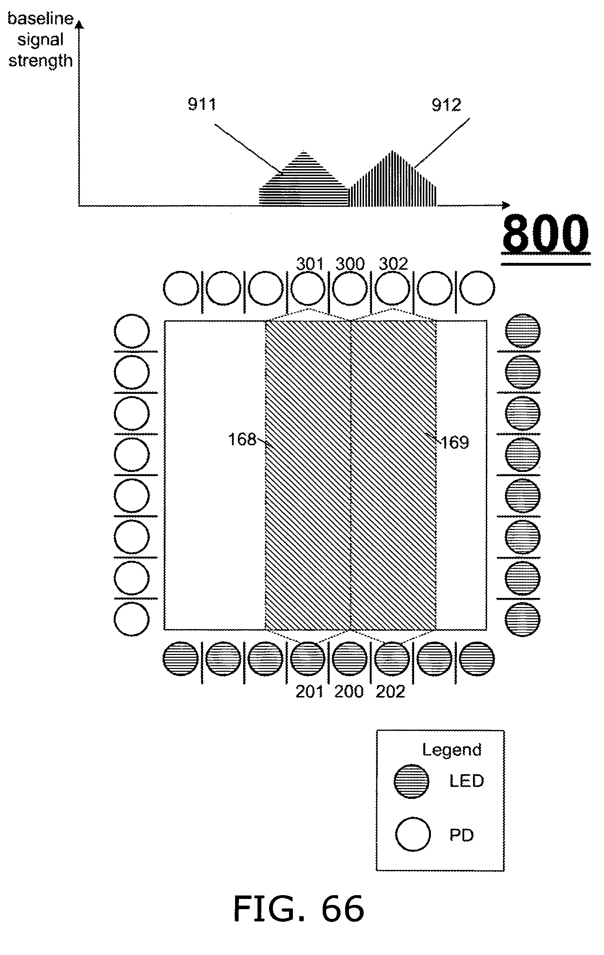

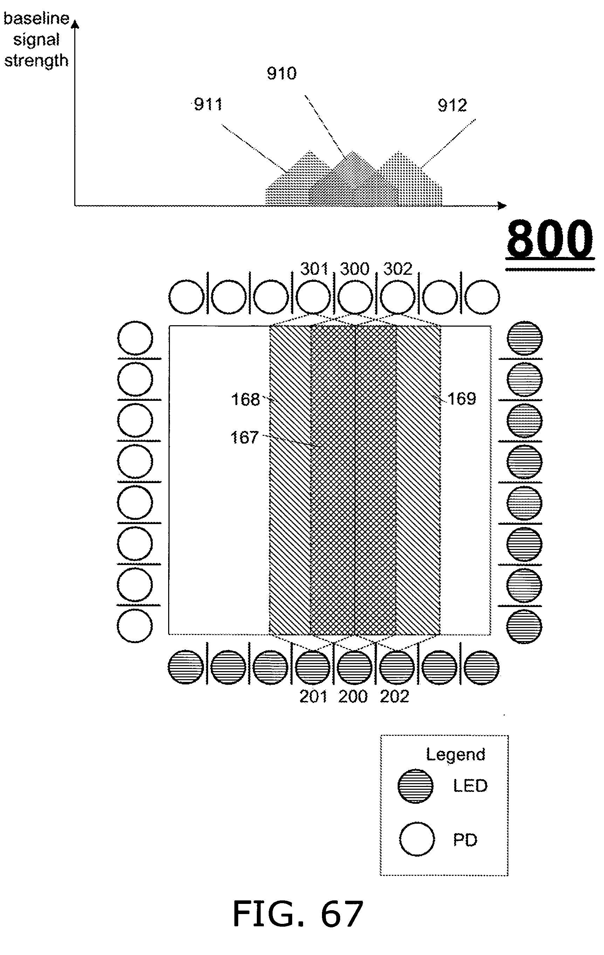

Reference is made to **FIG. 65,** which is a simplified illustration of a touch screen with a wide light beam crossing the screen, in accordance with an embodiment of the present invention. Reference is also made to **FIG. 66,** which is a simplified illustration of a touch screen with two wide light beams crossing the screen, in accordance with an embodiment of the present invention. Reference is also made to **FIG. 67,** which is a simplified illustration of a touch screen with three wide light beams crossing the screen, in accordance with an embodiment of the present invention. As shown in **FIG. 65,** a screen **800** is surrounded with emitters and receivers. A wide beam **167** is shown representing a wide detection area on screen **800,** that is detected by an emitter-receiver pair **200-300.** Wide beam **167** is generated by optical elements, such as element **530** described hereinabove but not shown in **FIGS. 65 - 67.** A first element **530** collimates light from emitter **200,** and a second element **530** focuses wide beam **167** onto receiver **300.** A graph **910** shows the gradient of signal intensities detected across the width of wide beam **167.**

**FIG. 66** shows neighboring wide beams **168** and **169,** representing wide detection areas on screen **800** detected by respective emitter-receiver pairs **201-301** and **202-302.** Respective graphs **911** and **912** illustrate the gradient of signal intensities detected across the widths of wide beams **168** and **169.**

**FIG. 67** shows the three wide beams of **FIG 65** and **66.** As seen in **FIG. 67,** the left half of beam 167 is overlapped by half of beam **168,** and the right half of beam **167** is overlapped by half of beam **169.** The intensity gradients in graphs **910** - **912** indicate that a touch at any location along the width of beam **167** is detected along two gradients of two overlapping wide beams. Similarly, a touch at any location on the screen is detected in both the vertical and the horizontal axis along two gradients of two overlapping wide beams on each axis. A precise touch coordinate is calculated by interpolating touch locations of the two signals based on the detection signal gradients. **FIG. 62** shows the light signal attenuation gradients **920** and **921** across the widths of the two overlapping beams. Light signal attenuation gradient **920** corresponds to the beam emitted from emitter element **200,** and light signal attenuation gradient **921** corresponds to the beam emitted from emitter element **201.** As such, the beam has maximum intensity directly above the element, and tapers off at either side. Having two different sloping gradients for the overlapping beams is of advantage for calculating a precise touch location, as described hereinbelow.

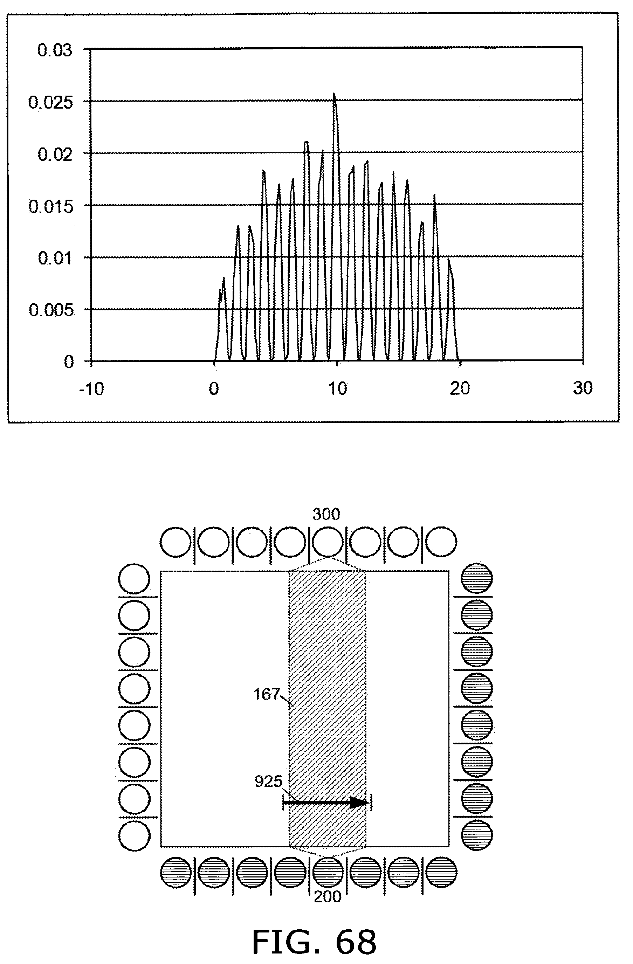

Reference is made to **FIGS. 68,** which is a simplified graph of light distribution of a wide beam in a touch screen, in accordance with an embodiment of the present invention. The lower portion of **FIG. 68** shows a path across wide beam **167,** and the upper portion of **FIG. 68** is a graph depicting signal intensity distribution along this path. The graph's x-axis represents the horizontal screen dimension in units of millimeters. The graph's y-axis represents the baseline signal intensity detected by emitter-receiver pair **200-300** situated at 10 mm along the screen axis. The signal corresponds to a screen with emitter and receiver elements arranged at a pitch of 10 mm. As such, the detected wide beam spans 20 mm. The spikes in the graph are caused by the alternating facets of optical element **530** describe above, which alternately focus rays at neighboring elements. As such, spikes correspond to facets belonging to the measured emitter-receiver pair, and the neighboring troughs correspond to facets belonging to a neighboring emitter-receiver pair. Despite these spikes, detection signals of a finger or another object along the measured screen axis have a relatively smooth gradient along the entire 20 mm span of the beam since the finger is wider than the narrow spike and trough channels. As such, a finger blocks a series of spikes which remain substantially uniform as the finger slides long the screen axis. E.g., a fingertip is approximately 6 mm wide, whereas there are 8 - 9 spikes in 10 mm in the graph of **FIG. 68**.

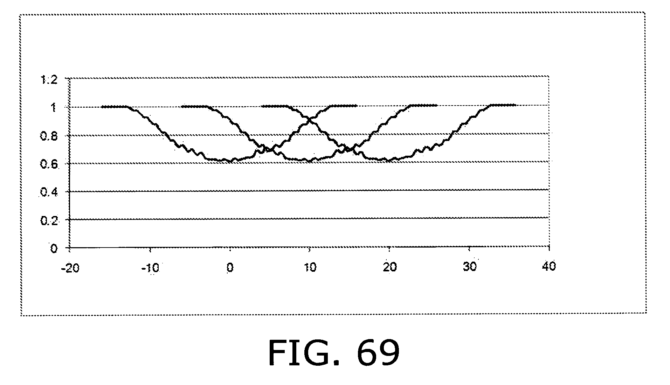

Reference is made to **FIG. 69,** which is a simplified illustration of detection signals from three wide beams as a fingertip moves across a screen, in accordance with an embodiment of the present invention. Shown in **FIG. 69** are three detection signals of a fingertip as it moves across three neighboring wide beams along a screen axis. From each of the signals it is apparent that as the finger enters a wide beam, the finger blocks a small portion of the beam. As the finger moves along the axis toward the center of the beam, it blocks progressively more of the beam until it blocks roughly 40% of the beam intensity, indicated in the graph by a minimum detection of 60% of the expected baseline signal. As the finger moves further along, it blocks progressively less of the beam. The shape of the detection curve is relatively smooth, despite the peaks and troughs in the light beam shown in **FIG. 68**. There are slight fluctuations along the detection curves of **FIG. 69** that are at least partially due to the peaks, but these fluctuations are minimal and do not significantly distort the trend of the signal.

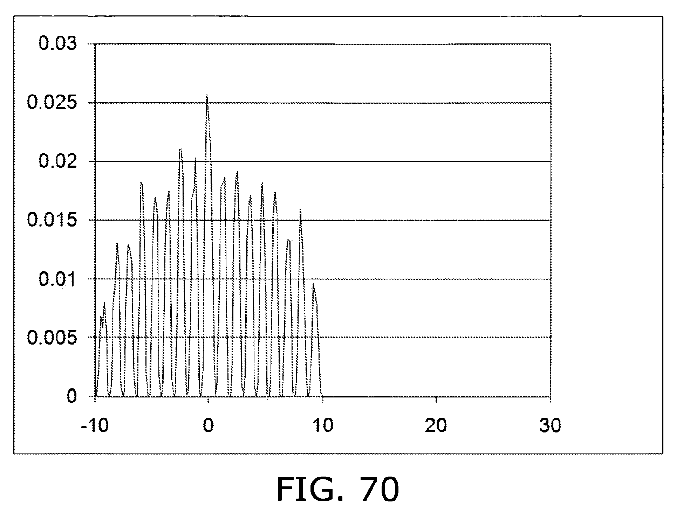

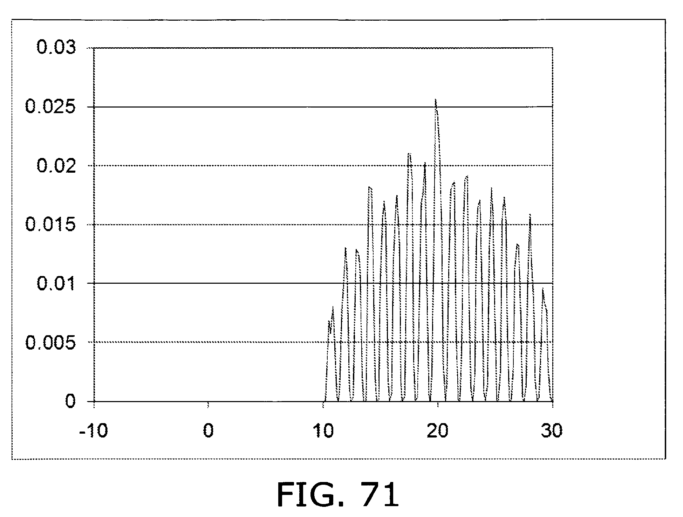

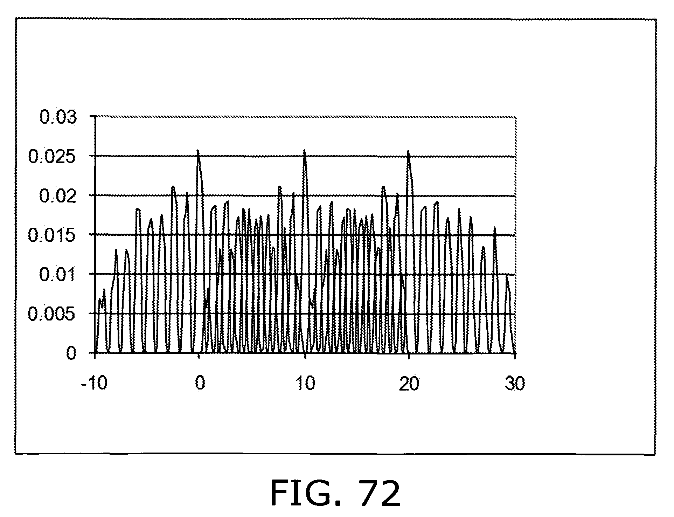

Reference is made to **FIGS. 70 - 72,** which are simplified graphs of light distribution in overlapping wide beams in a touch screen, in accordance with an embodiment of the present invention. Taken together, **FIGS. 68** and **70 - 72** show a light distribution across three neighboring wide light beams on a screen with emitter-receiver pairs spaced 10 mm apart. As seen in these figures, the facets of optical element **530** provide overlapping touch detection by two emitter-receiver pairs. **FIG. 70** shows the light signal from an emitter-receiver pair situated at location 0 along the measured screen axis. **FIG. 71** shows the light signal from an emitter-receiver pair situated at a location 20 mm along the measured screen axis. **FIG. 72** shows the light signals from the three emitter-receiver pairs of **FIGS. 68**, **70** and **71**, and shows how these light beams cover overlapping areas of the screen surface. **FIG. 69** shows three detection signals for the three emitter-receiver pairs of **FIG. 72**, as a fingertip moves along the screen axis.

Touch detection signals are less smooth when using a fine-point stylus than when using a finger. E.g., a 2 mm stylus tip moving across a screen generates more fluctuations in a detection signal than does a 6 mm finger, since the stylus tip covers fewer peaks in the light signal and, therefore, moving in and out of a signal peak changes a larger part of the blocked signal. Nevertheless, embodiments of the present invention overcome this drawback and determine stylus touch locations with a high level of accuracy, by interpolating multiple detection signals.

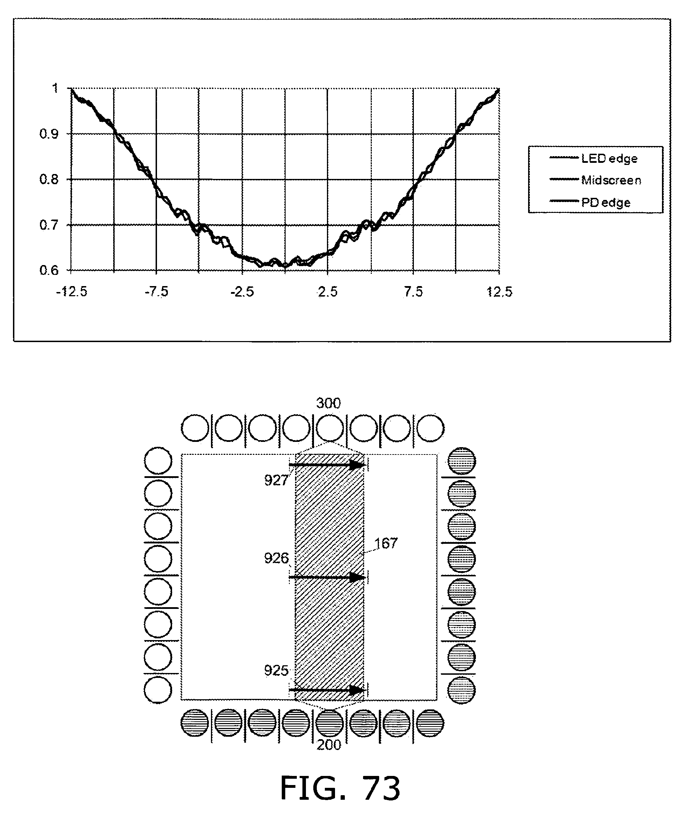

Reference is made to **FIG. 73**, which is a simplified graph of detection signals from a wide beam as a fingertip moves across a screen at three different locations, in accordance with an embodiment of the present invention. Shown at the bottom of **FIG. 73** are three paths **925** - **927** traced by a finger across a wide beam **167.** Path **925** is near LED **200,** path **926** is mid-screen, and path **927** is near a PD **300.** The graph in the upper portion of **FIG. 73** shows three detection signals of a fingertip as it traverses the three paths **925** - **927**, labeled in the graph legend as LED edge, Midscreen and PD edge, respectively. The three detection signals in the graph are substantially overlapping. As such, the signal is uniformly detected along its depth, and the signal varies as a function of the touch along only one axis of the screen. Thus determining a touch location along a first axis is independent of the detection signal along a second axis. Moreover, the intensity of the signal is uniform along the second axis, making the signal robust.

**Supporting Various Screen Sizes**

Some embodiments of configuration no. 6 include optical elements with alternating facets that are focused on two neighboring light emitting or receiving elements. When such an optical element is separate from the light emitters or receivers, the emitters or receivers are generally spaced at a particular pitch. When such an optical element is formed as a rigid module together with an emitter or a receiver, the embedded emitter or receiver is precisely positioned with respect to the reflective facets. The facets aimed at a neighboring module, are aimed in accordance with the embedded emitter or receiver in the neighboring module that is similarly situated in its module. Such positioning potentially restricts the size of a screen to integral multiples of the pitch. E.g., with a pitch of 10 mm between emitters, the screen dimensions must be integral multiples of 10 mm. Embodiments of the present invention are able to overcome this restriction, as described in what follows.

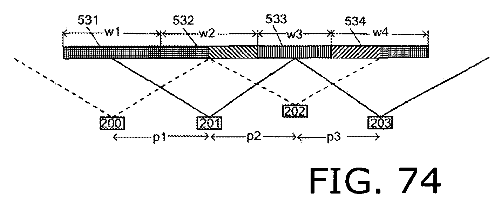

Reference is made to **FIG. 74,** which is a simplified diagram of four optical elements and four neighboring emitters, in accordance with an embodiment of the present invention. Shown in **FIG. 74** are four optical elements **531** - **534** arranged in a row. Each element is positioned opposite a respective one of emitters **200 - 203**. The same configuration is assembled for receivers, or for alternating emitters and receivers. In the case of receivers, emitters **200 - 203** are replaced by receivers; and in the case of alternating emitters and receivers, emitters **200** and **202** are replaced by receivers.

Optical elements **531, 532** and **534** are all of the same width, e.g., 10 mm; i.e., **w1** = **w2** = **w4.** The pitch, **P1,** between emitters **200** and **201** is a standard distance, e.g., 10 mm. The facets of optical element **531** are constructed for emitters that are at a standard pitch of 10 mm. Pitches **P2** and **P3** may be nonstandard. By enabling a device manufacturer to insert a single emitter at a non-standard pitch, the manufacturer can accommodate any screen size. The width, **w3,** of optical element **533** is customized for a non-standard screen size; e.g., for a screen length of 96 mm, **w3** is 6 mm instead of 10 mm, and pitches **P2** and **P3** are each 8 mm. Optical element **532** is a hybrid element - the left half of element **532** has facets aimed at emitters **200** and **201,** which are positioned according to a standard 10 mm pitch, and the right half of element **532** is special having facets aimed at emitters **201** and **202,** where emitter **202** has a non-standard placement. Optical element **534** is also a hybrid element, as its left half has facets aimed at emitters **202** and **203,** whereas its right half is aimed at two standard pitch emitters. Optical element **533** is non-standard throughout -- it is not as wide as the standard elements and has every other of its facets aimed at emitter **202**. In this example, the width of the beam from emitter **202** is roughly 16 mm, as compared to the standard 20 mm width. As such, emitter **202** is placed slightly closer to optical element **533**.

**Diffractive Surfaces**

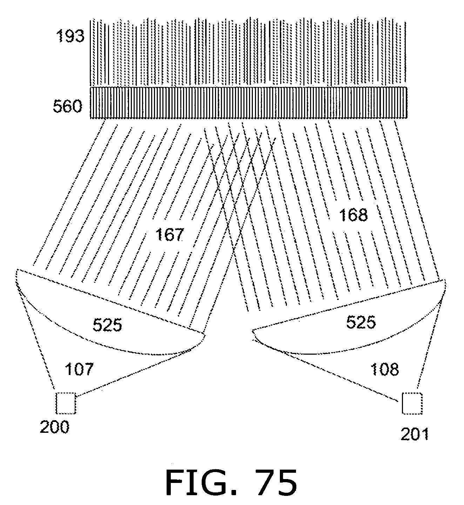

As described hereinabove, diffractive surfaces are used in embodiments of the present invention to direct beams from two emitters along a common path. Reference is made to **FIG. 75**, which is a simplified diagram of a diffractive surface that directs beams from two emitters along a common path, in accordance with an embodiment of the present invention. Shown in **FIG. 75** are emitters **200** and **201** emitting arcs of light **107** and **108** into two collimating lenses **525.** Wide beams **167** and **168** exit lenses **525** and enter refractive surface **560,** which directs both beams **167** and **168** into a wide beam **193** that crosses the screen. A similar optical arrangement splits wide beam **193** onto two receivers at the opposite screen edge. Each emitter is activated separately with a respective opposite receiver. Beams from the two emitters have different signal gradients along the width of beam **193,** as explained hereinabove. The two detection signals are used to calculate a touch location from **EQS. (2)** and **(3)** provided hereinbelow.

**Parallel Overlapping Beams**

As described hereinabove, parallel wide beams projected at slightly different heights over a screen are used in alternative embodiments of the present invention, to provide multiple detection signals for a touch event on the screen.

**Alternating Emitters and Receivers**

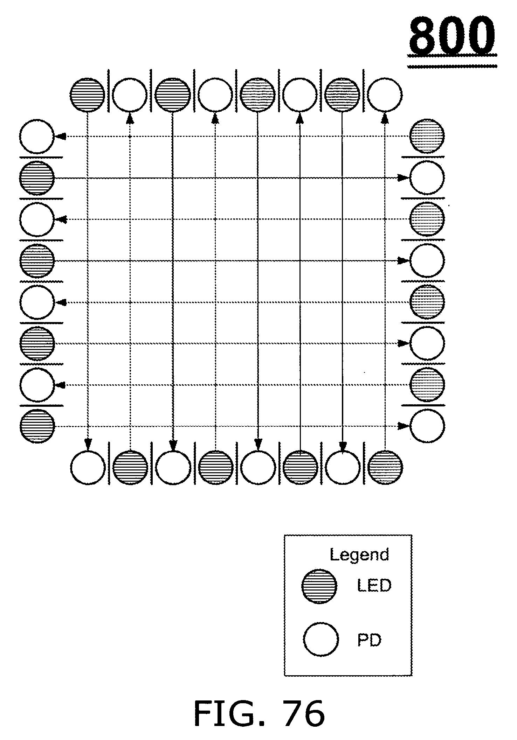

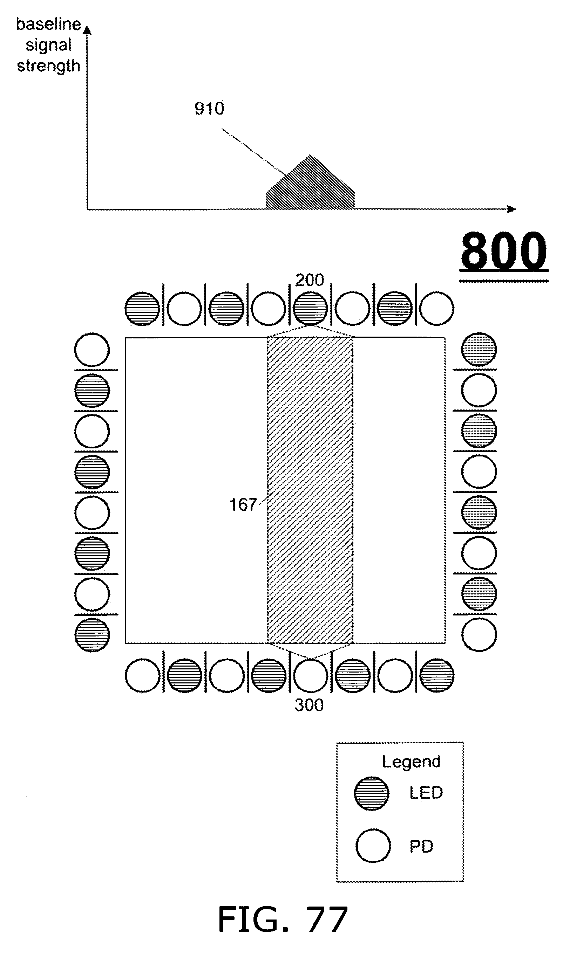

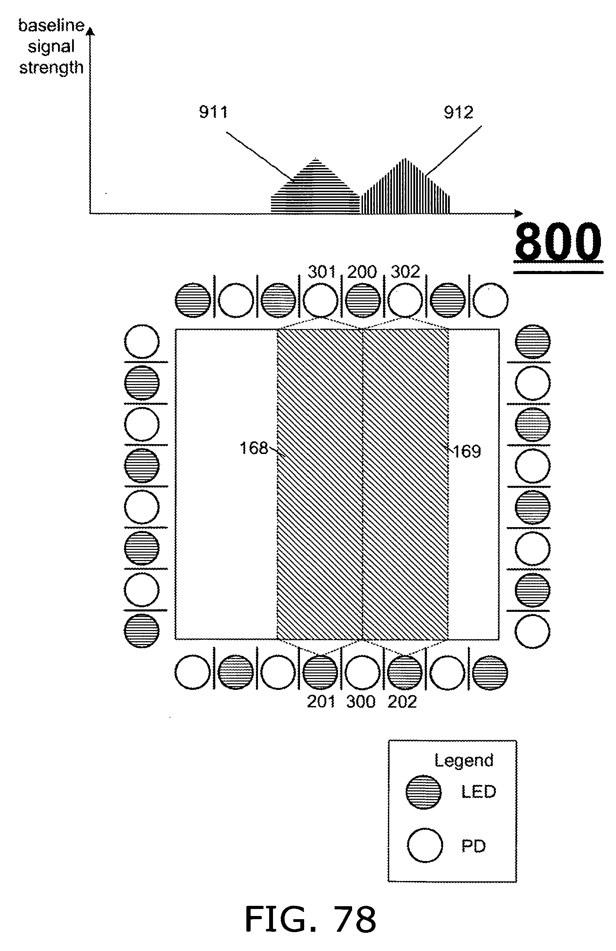

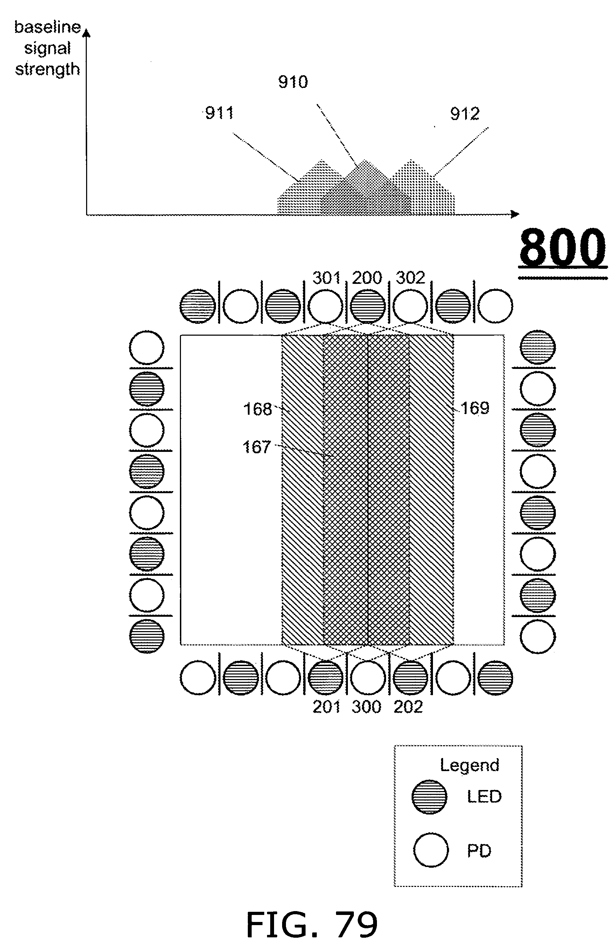

In an alternative embodiment of the present invention, emitters and receivers are positioned alternately along each screen edge. Reference is made to **FIG. 76,** which is a simplified diagram of a touch screen surrounded with alternating emitters and receivers, in accordance with an embodiment of the present invention. Reference is also made to **FIG. 77,** which is a simplified illustration of a touch screen surrounded with alternating emitters and receivers, and a wide beam crossing the screen, in accordance with an embodiment of the present invention. Reference is also made to **FIG. 78**, which is a simplified illustration of a touch screen surrounded with alternating emitters and receivers and two wide beams crossing the screen, in accordance with an embodiment of the present invention. Reference is also made to **FIG. 79,** which is a simplified illustration of a touch screen surrounded with alternating emitters and receivers and three wide beams crossing the screen, in accordance with an embodiment of the present invention. **FIGS. 77 - 79** show overlapping wide beams, similar to those of **FIGS. 65 - 67** described hereinabove.

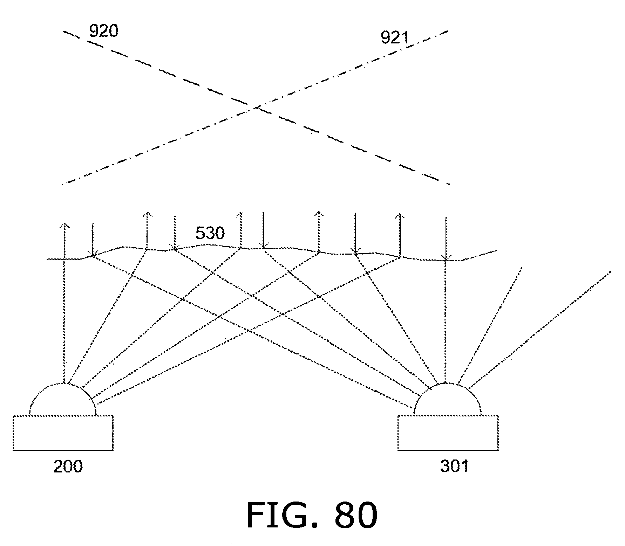

Reference is made to **FIG. 80,** which is a simplified illustration of a collimating optical element reflecting and interleaving light for an emitter and a neighboring receiver, in accordance with an embodiment of the present invention. **FIG. 80** shows optical element **530** interleaving neighboring light beams, wherein a first beam is outgoing from emitter **200** and a second beam is incoming to neighboring receiver **301**. **FIG. 80** also shows signal gradient **920** for the first beam and signal gradient **921** for the second beam. When a touch is detected on both beams, the sloping gradients enable determination of a precise touch location by interpolation, as described hereinbelow.

As indicated hereinabove with reference to **FIG. 73**, the detection signal does not vary with depth of touch location within a wide beam. Therefore, the opposing directions of the adjacent overlapping wide beams do not affect the touch detection signal. In turn, this enables interpolating signals from overlapping beams without regard for direction of each beam.

As explained above with reference to configuration no. 4, when a touch pointer is expected to be wide, such as a finger, the wide beams need not overlap, since it is expected that the finger span at least a portion of two neighboring beams, assuming the beams are slightly less wide than the finger. Moreover, the finger covers each beam beginning at one of the beam's edges. Therefore, even when the beam distributes light evenly across the beam's width, the system is able to determine the blocked portion of each beam. E.g., if 50% of the beam is blocked, the finger is blocking half of the beam; and if 25% of the beam is blocked, the finger is blocking one quarter of the beam. This is different than the attenuated signal gradients **920** and **921** of **FIG. 80.** The location of the finger is then determined by interpolating signals from two or more neighboring beams.

## Multi-Touch Detection

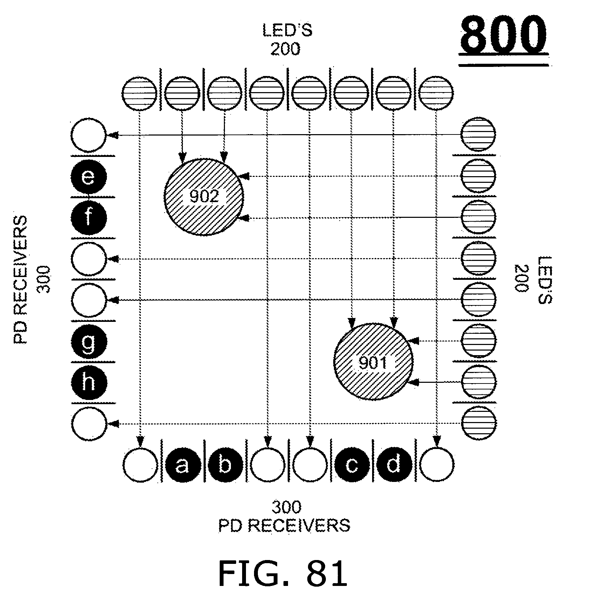

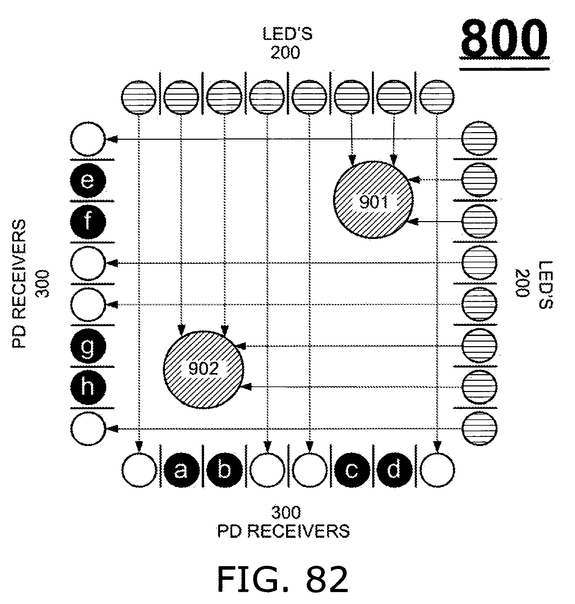

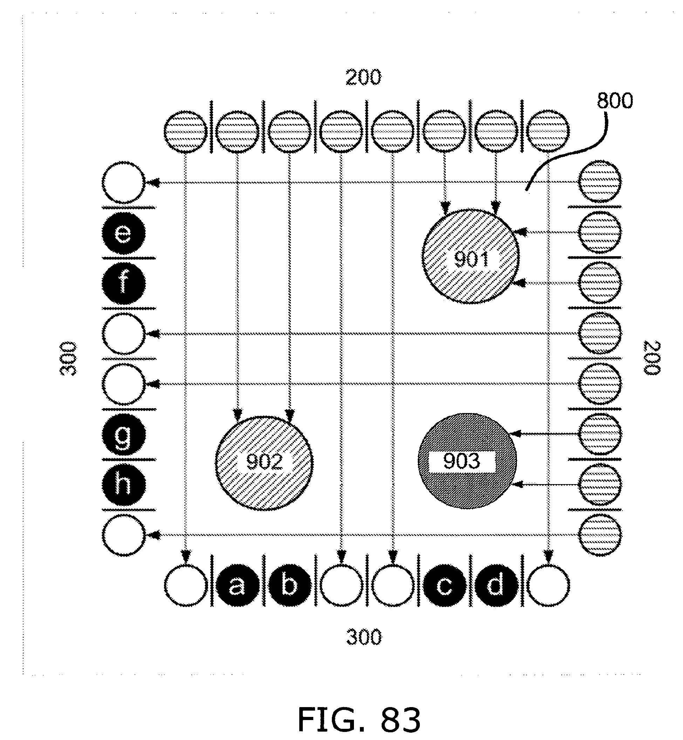

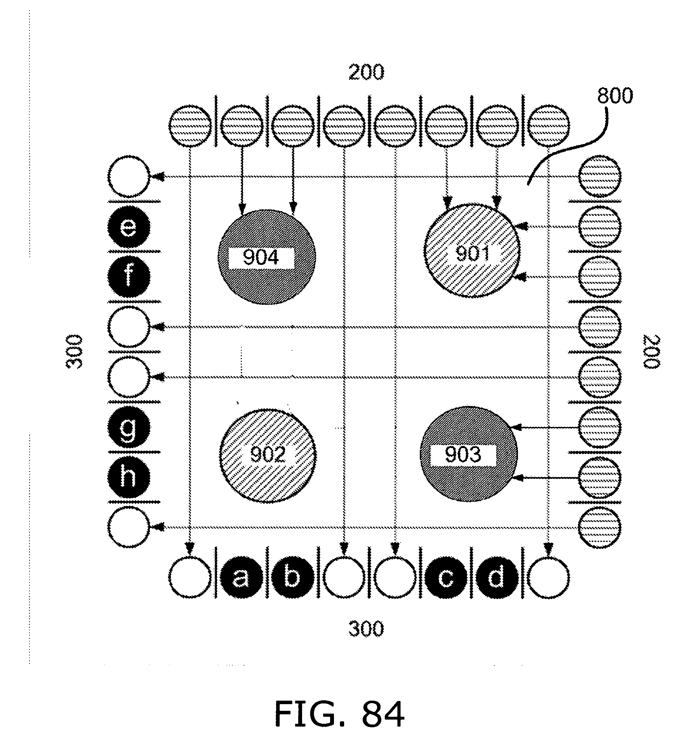

Multi-touch locations are often difficult to identify unambiguously via light emitters that emit light in directions parallel to two axes. Reference is made to **FIGS. 81 - 84,** which are illustrations of multi-touch locations that are ambiguous vis-à-vis a first orientation of light emitters, in accordance with an embodiment of the present invention. As shown in **FIGS. 81** and **82,** there is ambiguity in determining the locations of a diagonally oriented multi-touch. There is further ambiguity if a multi-touch includes more than two pointers. For example, the two-touch cases shown in **FIGS. 81** and **82** are also ambiguous vis-à-vis the three-touch case shown in **FIG. 83** and vis-à-vis the four-touch case shown in **FIG. 84.** In each of these cases, row and column indicators **a - h** show an absence of light in the same locations. Such ambiguity is caused by "ghosting", which refers to an effect where the shadow of one pointer obscures a portion of another pointer.

In accordance with an embodiment of the present invention, ghosting is resolved by use of two sets of grid orientations for touch detection.

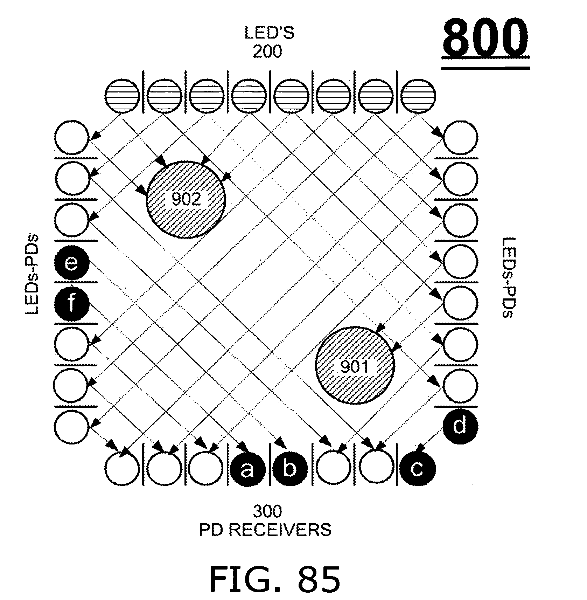

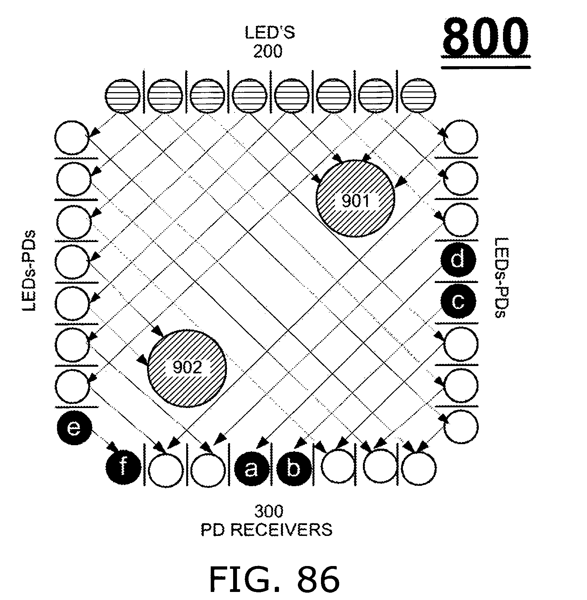

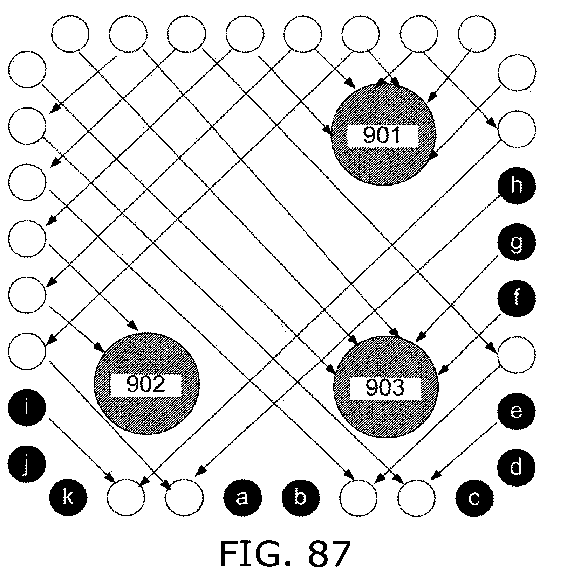

Reference is made to **FIGS. 85 - 87,** which are illustrations of the multi-touch locations of **FIGS. 81 - 83** that are unambiguous vis-à-vis a second orientation of light emitters, in accordance with an example. Use of an arrangement of alternating emitters and receivers, as described hereinabove with reference to **FIGS. 76** and **77**, and use of additional optical elements to generate two sets of detection axes, provide important advantages. One advantage is generating a robust set of overlapping wide beams, whereby multiple detection signals may be interpolated in order to determine touch coordinates with high precision. Another advantage is generating overlapping wide beams on the second axis set, such that touch detection on the second axis set is also precise.

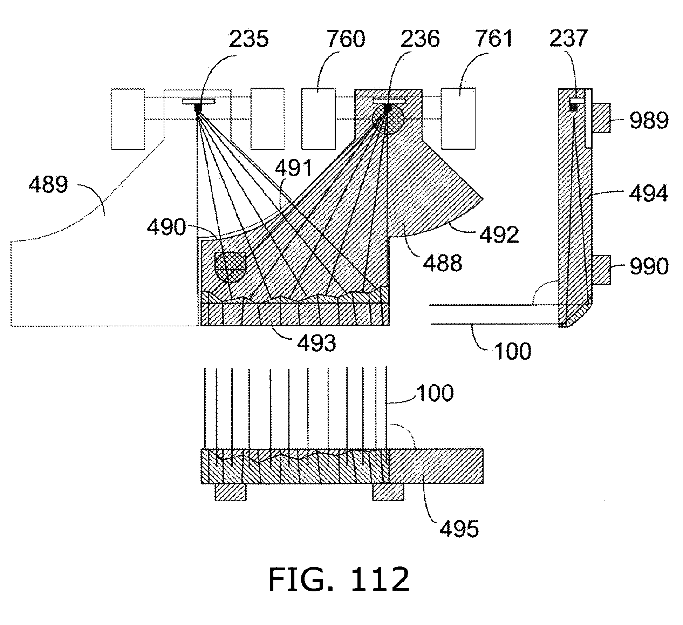

A dual-unit light guide is described hereinabove with reference to **FIGS. 45** and **46.** As described there, the lower portion **464** of the light guide contains reflective facets or lenses that are focused on the emitters and receivers, and the upper portion **463** includes reflective surface and lenses that do not require precision placement vis-à-vis the emitters and receivers. In configuration no. 6, the alternating reflective or refractive facets form part of the lower portion. A three-sided refractive cavity for distributing light beams in three directions is formed as part of the upper portion. In configuration no. 6, use of micro-lenses **467** is not required. Alternatively, the alternating facets are formed in transparent plastic modules that include an emitter or receiver, as described hereinbelow with reference to **FIG. 112.** An arrangement of these modules replaces lower portion **464,** and upper portion **463** remains.

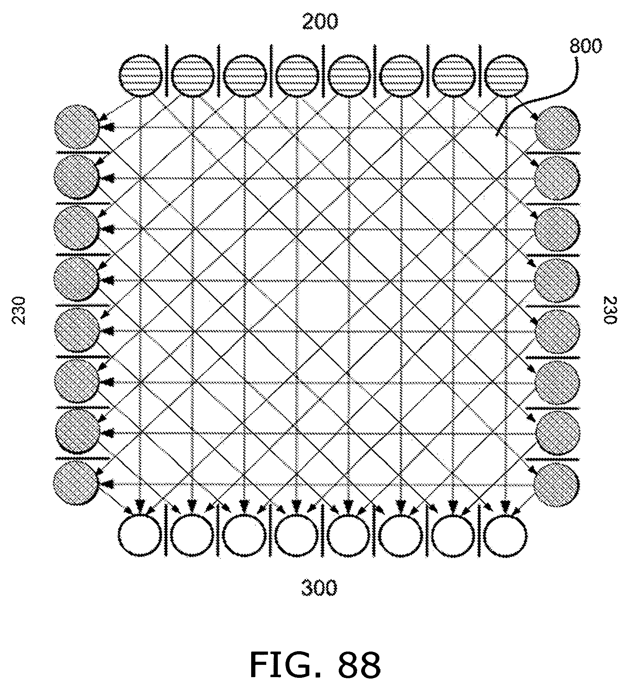

Reference is made to **FIG. 88,** which is a simplified illustration of a touch screen with light beams directed along four axes, in accordance with an example. Shown in **FIG. 88** is a row of light emitters **200** along the top edge of a screen **800,** and a row of light receivers **300** along the bottom edge of screen **800.** The left and right edges of screen **800** include opposing rows of combined emitter-receiver elements **230.** Elements **230** act as emitters and as receivers. In an example, an emitter and a receiver are combined in a single unit, such as the reflective and transmissive sensor manufactured by Vishay Corporation of Malvern, PA. In another example, an LED is used for both light emission and detection. An integrated circuit that both emits and detects light using an LED and a current limiting resistor, is described in Dietz, P.H., Yerazunis, W.S. and Leigh, D.L., "Very low cost sensing and communication using bidirectional LEDs", International conference on Ubiquitous Computing (UbiComp), October, 2003.

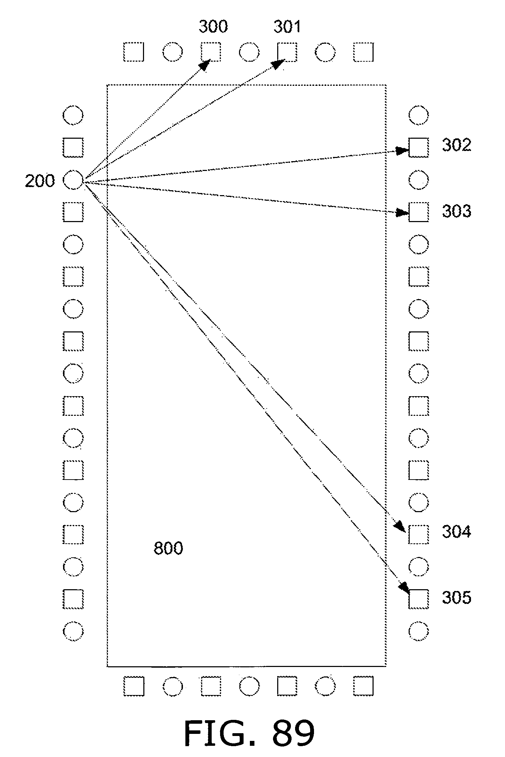

Reference is made to **FIG. 89,** which is a simplified illustration of an alternate configuration of light emitters and light receivers with two grid orientations, in accordance with an example. Shown in **FIG. 89** are light emitters **200** in an alternating pattern with light receivers **300** around a screen perimeter. Light emitted by each emitter is detected by two receivers at an opposite screen edge, the two receivers being separate by an emitter therebetween.

In order that the light from an emitter arrive at the outer edges of two opposite receivers, the wide beams emitted from each emitter must span a distance of three optical lenses. This is in contrast to the configuration described above with shift-aligned emitters and receivers, where the two receivers that detect light from a common emitter are positioned adjacent one another, and thus the wide beams emitted from each emitter need only span a distance of two optical lenses.

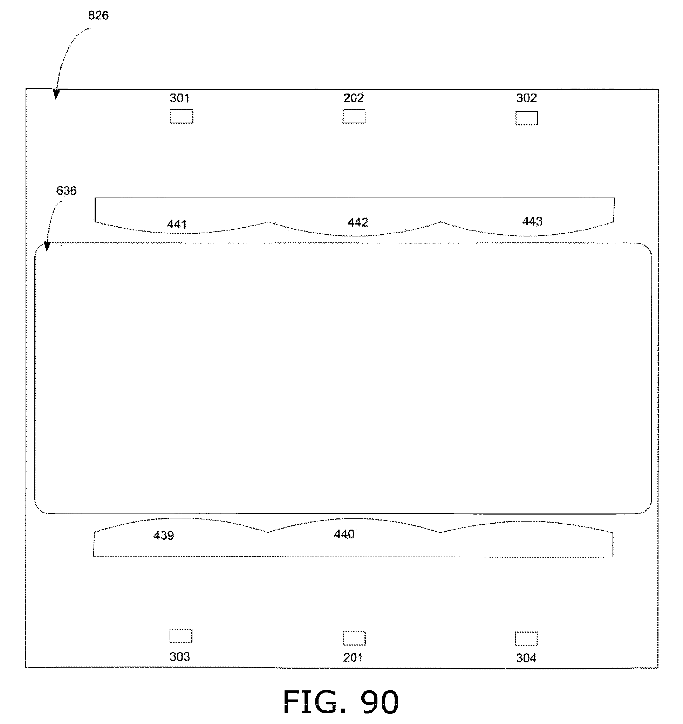

Reference is made to **FIG. 90**, which is a simplified illustration of a configuration of alternating light emitters and light receivers, in accordance with an example. As shown in **FIG. 90**, emitter **201** is situated between receivers **303** and **304** along the bottom screen edge, and emitter **202** is situated between receivers **301** and **302** along the top screen edge. Light from emitter **201** is detected by receivers **301** and **302**, and light from emitter **202** is detected by receivers **303** and **304**.

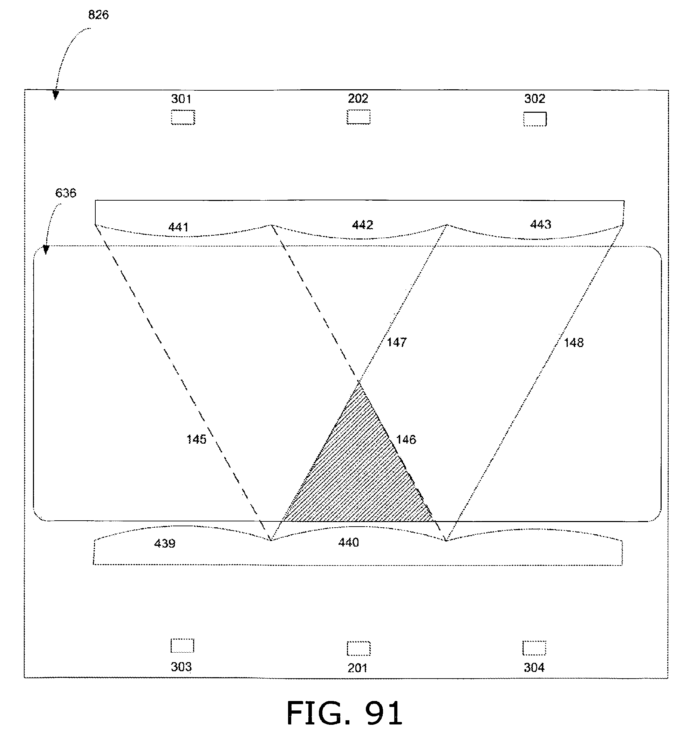

Reference is made to **FIG. 91**, which is a simplified illustration of two wide light beams from an emitter being detected by two receivers, in accordance with an example. Shown in **FIG. 91** are two wide beams from emitter **201** that exit lens **440** and arrive at lenses **441** and **443** for detection by receivers **301** and **302**, respectively. One wide beam is bordered by edges **145** and **146**, and the other wide beam is bordered by edges **147** and **148**. A cross-hatched triangular area indicates an overlap where a touch is detected at receivers **301** and 302.

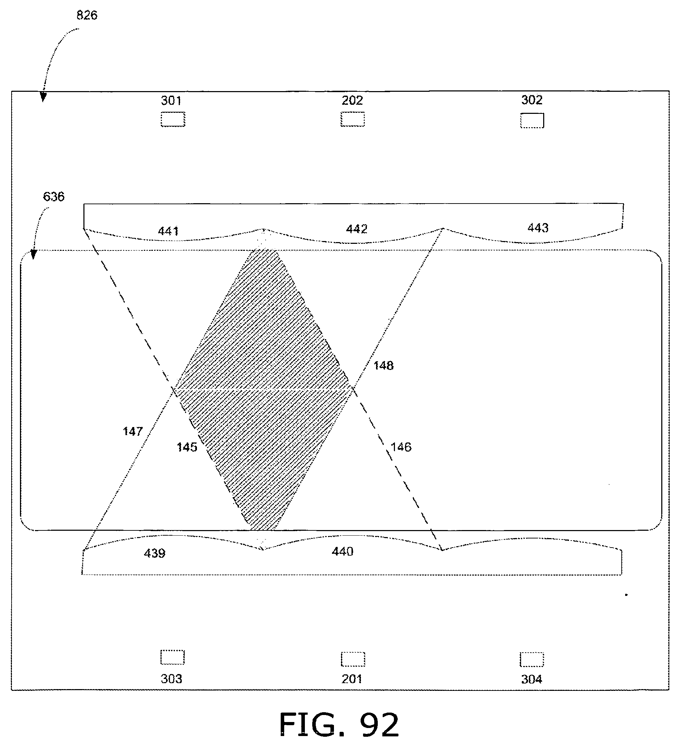

Reference is made to **FIG. 92,** which is a simplified illustration of two wide beams and an area of overlap between them, in accordance with an example. One wide beam, from emitter **201,** exits lens **440** and arrives at lens **441** for detection by receiver **301**. The wide beam is bordered by edges **145** and **146.** Another wide beam, from emitter **202** to receiver **303,** is bordered by edges **147** and **148**. A cross-hatched diamond-shaped area indicates an overlap where a touch is detected at receivers **301** and **303.**

It will thus be appreciated by those skilled in the art that any location on the screen is detected by two emitter-detector pairs, when the emitter-detector pairs are situated at opposite screen edges and, as such, an accurate touch location may be calculated as described hereinabove.

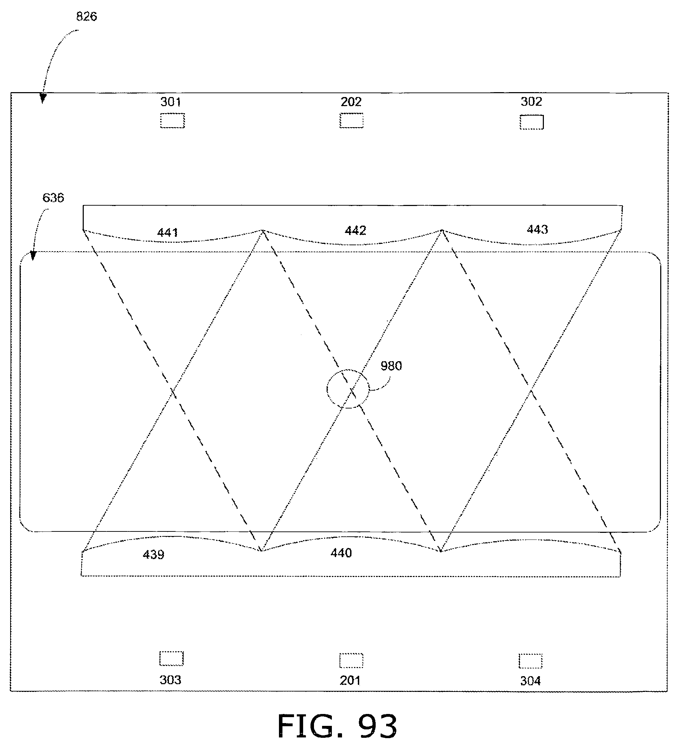

Reference is made to **FIG. 93,** which is a simplified illustration of a touch point **980** situated at the edges of detecting light beams, in accordance with an example. **FIG. 93** shows that it is desirable that the light beams extend to the edges of the emitter and receiver lenses, in order to accurately determine the location of touch point **980.**

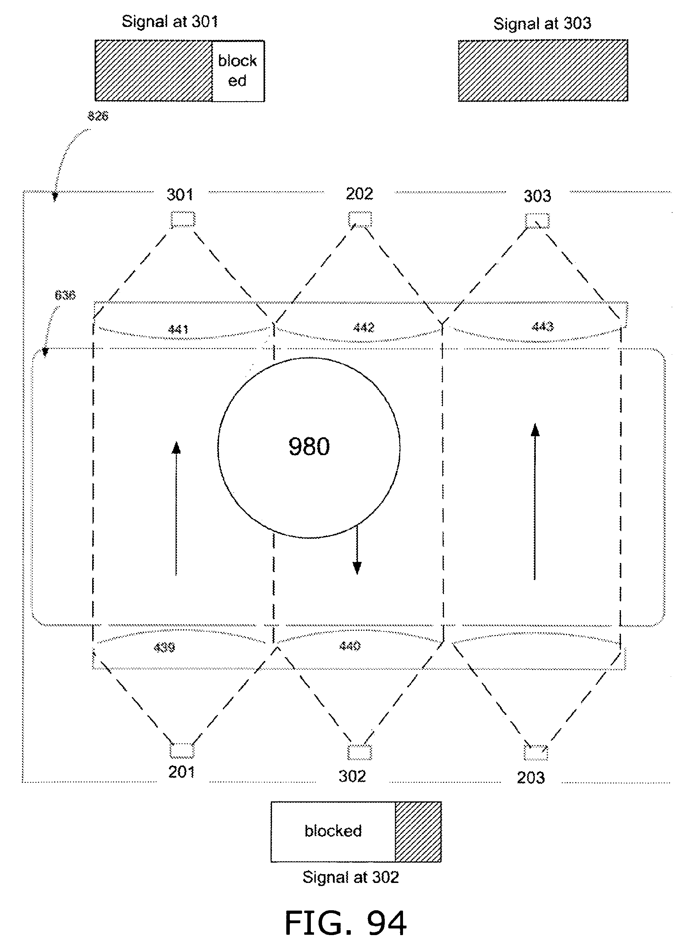

Reference is made to **FIG. 94,** which is a simplified illustration of a finger-sized touch point in a screen designed for finger touch detection, in accordance with an embodiment of the present invention. **FIG. 94** shows a large touch point **980,** such as a finger touch, and alternating beams **201-301, 202-302** and **203-303.** A detection signal is shown next to each detector in the form of a rectangle, indicating a uniform light distribution along the width of the beam. Beams **201-301** and **202-302** have portions blocked by pointer **980.** The location of pointer **980** is determined based on the blocked portions of beams **201-301** and **202-302.** In this case, the beams are neatly collimated and span only one lens, not three.

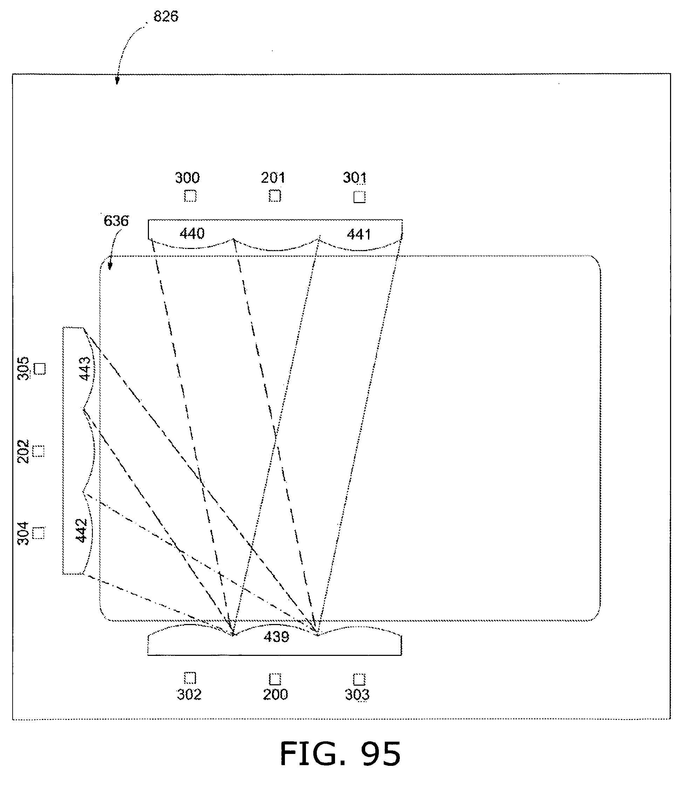

Reference is made to **FIG. 95**, which is a simplified illustration of an emitter along one edge of a display screen that directs light to receivers along two edges of the display screen, in accordance with an example. Shown in **FIG. 95** are a first pair of light beams emitted from an emitter **200** at one edge of a display screen to receivers **300** and **301** along the opposite edge of the display screen, and a second pair of light beams emitted from emitter **200** to receivers **304** and **305** along the adjacent left edge of the display screen. A third pair of light beams (not shown) is emitted from emitter **200** to receivers at the adjacent right edge of the display screen. The second and third pairs of light beams are each oriented at an angle of approximately 45° relative to the first pair of light beams.

Also shown in **FIG. 95** is a lens **439,** used to refract light from emitter **200** to lens **442** and **443**, which are oriented at approximately 45° to the left of lens **439.** In an example, lens **439** is made of a plastic material, which has an index of refraction on the order of 1.4 - 1.6. As such, an angle of incidence of approximately 84° is required in order for the light to be refracted at an angle of 45°. However, for such a large angle of incidence, the amount of light lost due to internal reflection is large. In order to improve throughput, two air/plastic interfaces are used to achieve an angle of refraction of approximately 45°, as described hereinabove.

**Tri-Directional Micro-Lenses**

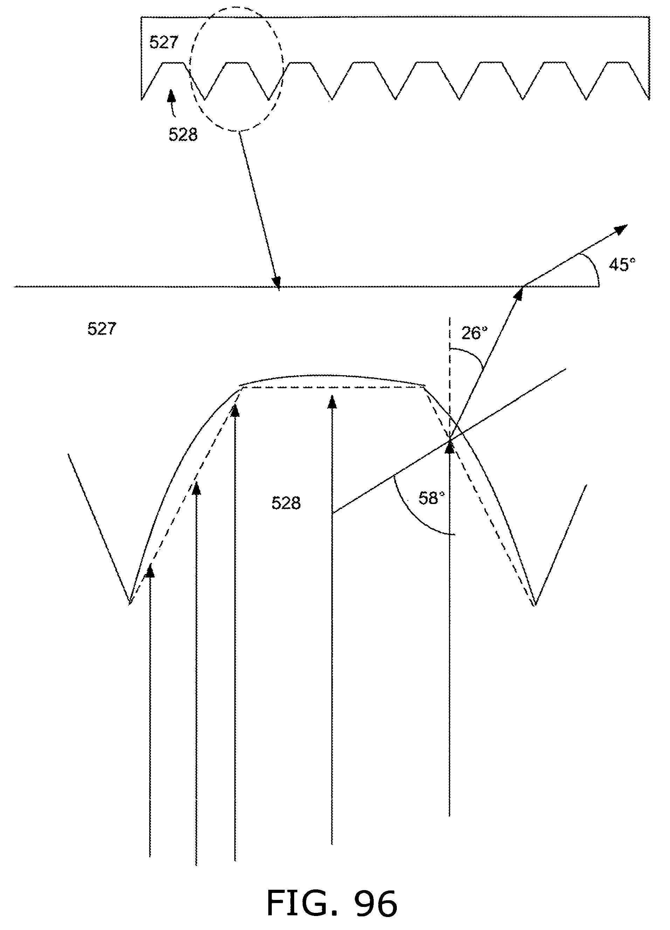

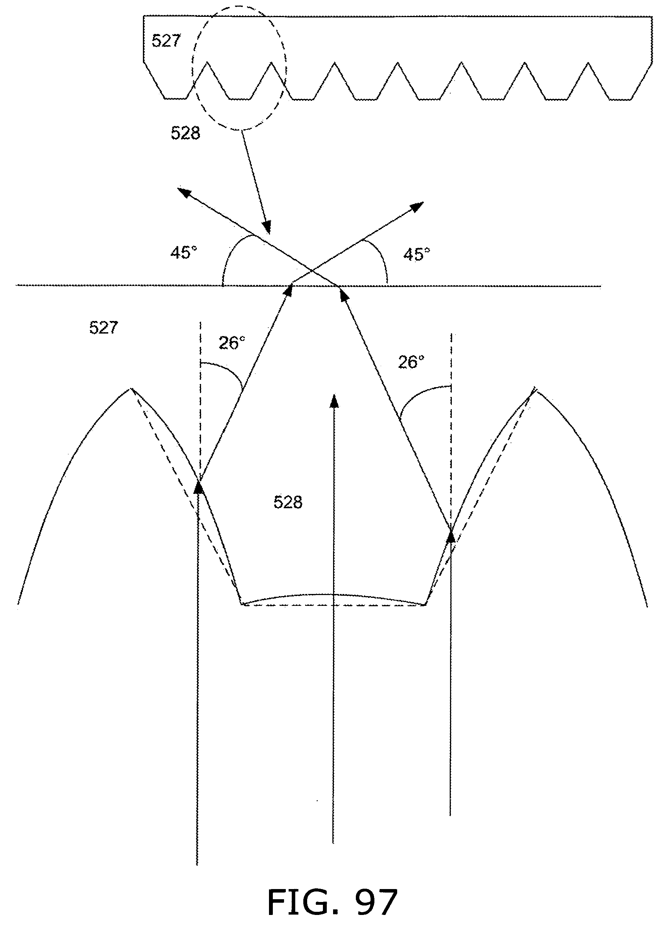

Reference is made to **FIGS. 96** and **97**, which are simplified illustrations of a lens for refracting light in three directions, having a lens surface with a repetitive pattern of substantially planar two-sided and three-sided recessed cavities, respectively, in accordance with examples. The flat surface opposite the emitter or receiver is distal to the emitter or receiver in **FIG. 96** forming a three-sided cavity, and is proximal thereto in **FIG. 97** separating two two-sided cavities.

Such three-sided lenses are used in several examples. In a first example, the lens is used without an additional optical component with alternating facets for interleaving neighboring beams. In this example, wide beams cover the screen but do not necessarily overlap to provide two or more detection signals for interpolation. A typical use case for this example is finger input, but not stylus input. The tri-directional lens enables detection on four different axes, to eliminate ambiguity and ghosting in multi-touch cases. The tri-directional lens also provides additional touch location information; namely, four axes instead of two, and the additional information increases the precision of the touch location, even for a single touch.

In a second example, the lens is used with an additional optical component with alternating facets for interleaving neighboring beams, or with an alternative arrangement providing overlapping detection signals. In this example, overlapping wide beams provide two or more detection signals for interpolation. Typical use cases for this example are finger and stylus input. The tri-directional lenses and the interleaving facets may be formed in two distinct components. The interleaving facets component is positioned closer to its emitter or receiver than the tri-directional component, since the tolerance for imprecise placement of the interleaving facets component is low, whereas the tolerance for imprecise placement of the tri-directional lens component is high. Alternatively, the tri-directional lenses and the interleaving facets may be formed in a single rigid component. For example, a diffractive grating interleaves signals from two sources and also splits the beams in three directions.

Shown in **FIG. 96** is a lens **527** with a pattern of micro-lenses **528** on its bottom surface. The micro-lens pattern shown in **FIG. 96** has three substantially planar sides, each side refracting light in a different direction. The pattern of micro-lenses **528** form a saw-tooth repetitive pattern along the bottom edge of the upper section of the lens. The three walls of each micro-lens **528** are slightly curved, in order to spread the light in a wider arc as it exits the lens toward an intended receiver.

A collimating lens section (not shown) is situated beneath lens **527**, to direct the light in parallel beams into micro-lenses **528**.

In some examples, lens **527** is part of a two-lens arrangement, with lens **527** forming the upper of the two lenses, farther from the emitter or receiver, and nearer to the screen surface. In distinction, the two-section lens shown in **FIG. 45** has a micro-lens pattern on the top of the lower section.

In order to properly interleave collimated beams from the alternating facets component, the pitch of the three-sided cavities needs to be much smaller than the pitch of the alternating facets. Ideally, the pitch of the cavities should be made as small as possible. With alternating facets of about 0.6 mm, the cavities should be 0.2 mm or smaller. The dihedral angle between each pair of adjacent planes is approximately 122°, to achieve a 45° refraction using plastic having a refractive index of 1.6. However, different angles may be desired for a different set of diagonal axes, or plastic having a different refractive index may be desired, in which case the dihedral angle will be different.

As shown in **FIG. 96,** incoming collimated light is refracted through two air/plastic interfaces, to emerge at an angle of refraction that is approximately 45°. The first interface, along an inner plane of the micro-lens, refracts the incoming light to an angle of refraction that is approximately 58°, and the second interface refracts the light to emerge at an angle of refraction that is approximately 45°.

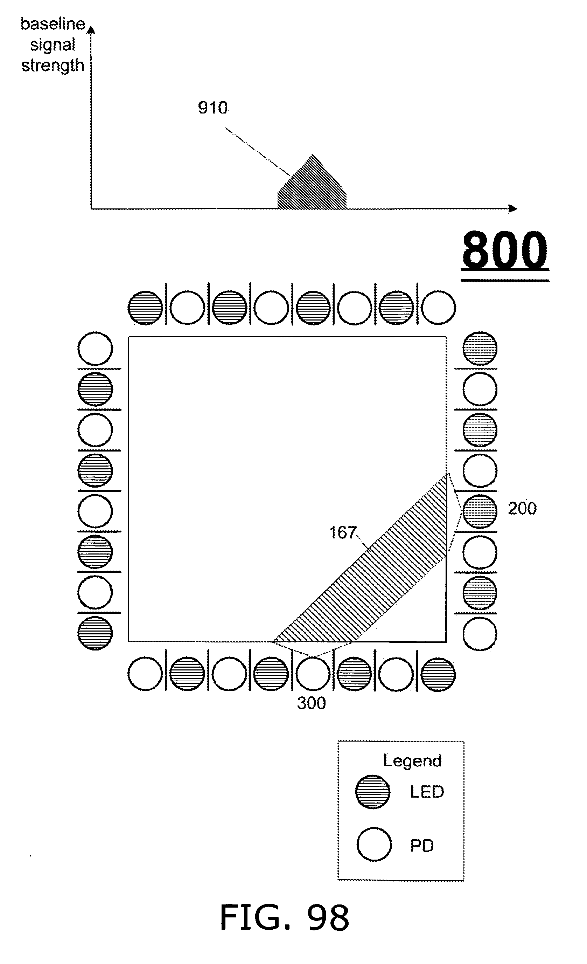

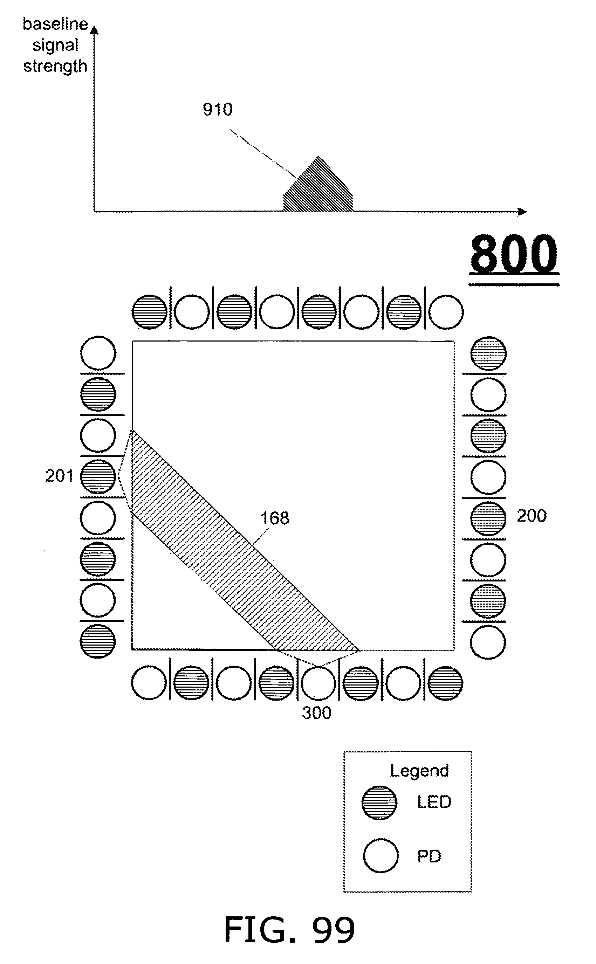

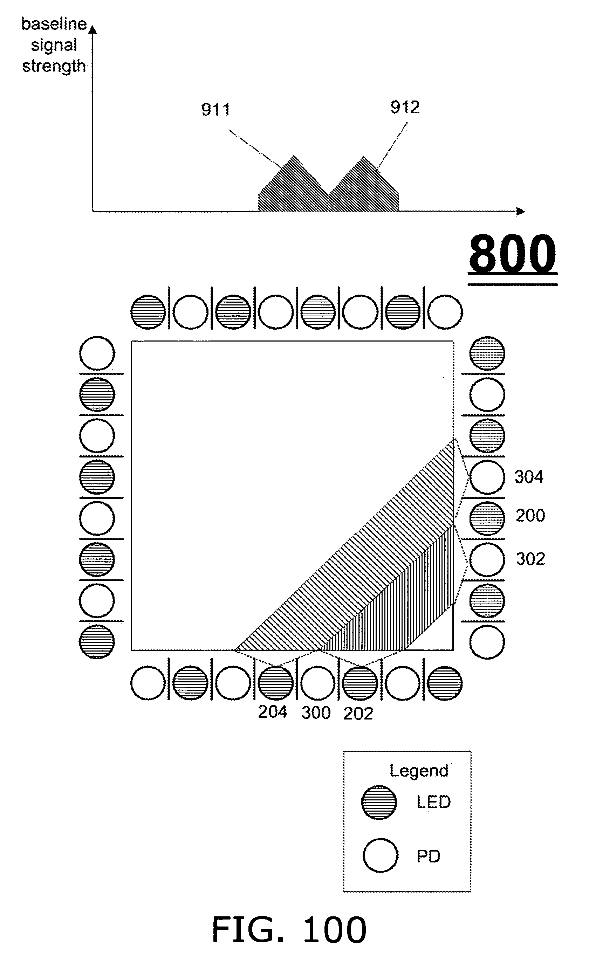

Reference is made to **FIGS. 98 - 100,** which are simplified illustrations of a touch screen surrounded with alternating emitters and receivers and diagonal wide beams crossing the screen, in accordance with an example. **FIGS. 98** and **99** show diagonal wide beams from emitter **200** and **201** to receiver **300,** and a corresponding signal gradient **910. FIG. 100** shows diagonal wide beams from emitters **202** and **204** to receivers **302** and **304,** and corresponding signal gradients **911** and **912.** These wide beams overlap wide beam **167** of **FIG. 98**, thereby providing multiple touch detections for interpolation.

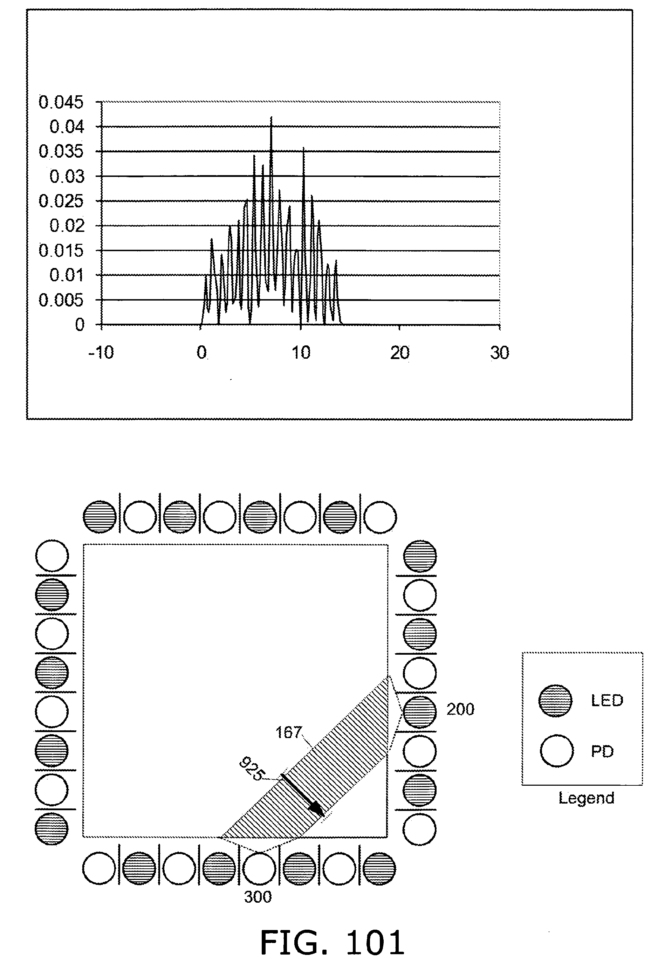

Reference is made to **FIG. 101,** which is a simplified graph of light distribution across a diagonal wide beam in a touch screen, in accordance with an example. The lower portion of **FIG. 101** shows a wide beam **167** and a path **925** crossing this beam according to a second axis system. If the pitch between elements is 1 unit, then the width of this beam is $1/\sqrt{2}$ units. Thus if the pitch between elements is 10 mm, then the beams along the diagonal axes are approximately 7 mm across. The upper portion of **FIG. 101** shows the distribution of light across wide beam **167.** The signal spans across approximately 14 mm of the diagonal beam, as compared with 20 mm of the vertical beam in **FIG. 69.** As described above with reference to **FIG. 68,** the signal gradient across the width of the beam enables interpolating multiple detection signals to determine a precise touch position.

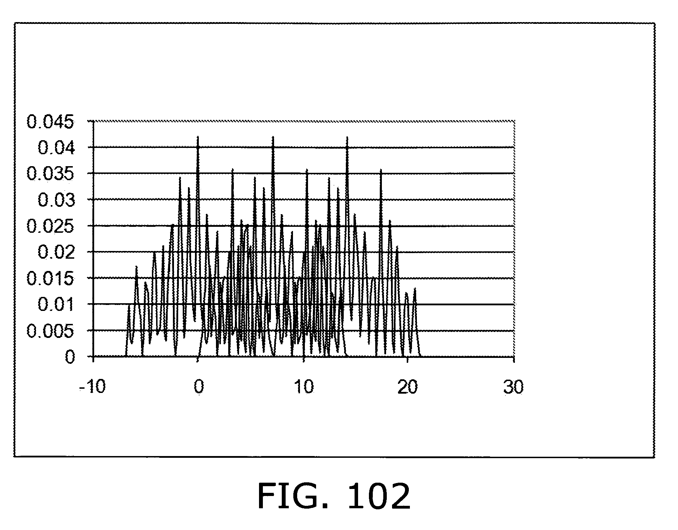

Reference is made to **FIG. 102,** which is a simplified graph of light distribution across three overlapping diagonal wide beams in a touch screen, in accordance with an example. **FIG. 102** shows a signal distribution across three overlapping beams in a second axis system, similar to **FIG. 72.** Different widths are covered by these two sets of beams.

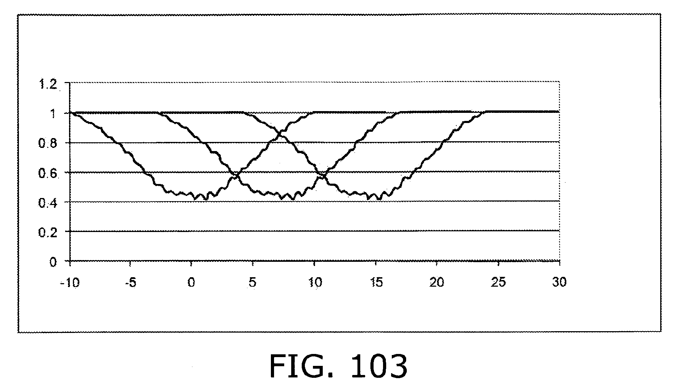

Reference is made to **FIG. 103,** which is a simplified graph of touch detection as a finger glides across three overlapping diagonal wide beams in a touch screen, in accordance with an example. **FIG**. **103** shows how reception of a finger passing across three adjacent overlapping beams is detected by each beam. The maximum detection signal is approximately 40% of the baseline signal intensity, and this occurs when the finger is in the middle of the beam. In this case, the finger blocks approximately 60% of the total light of the beam. This is greater than the amount of light blocked by the same finger in **FIG. 69;** namely, 40%. The difference is due to the diagonal beam being narrower than the vertical beam. Therefore a 6 mm fingertip blocks a greater portion of light in the beam. The detection signals are substantially smooth and robust for determining touch locations.

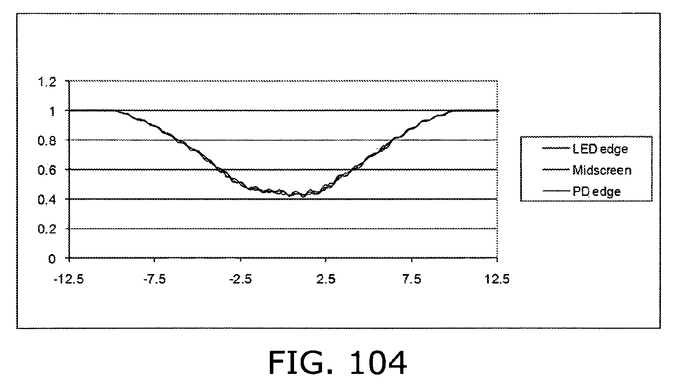

Reference is made to **FIG. 104,** which is a simplified graph of detection signals from a diagonal wide beam as a fingertip moves across the screen at three different locations, in accordance with an example. **FIG. 104** shows that touch detection remains stable along depth of a wide beam, and varies only according to its location across the width of the beam, as described hereinabove with reference to **FIG. 73.**

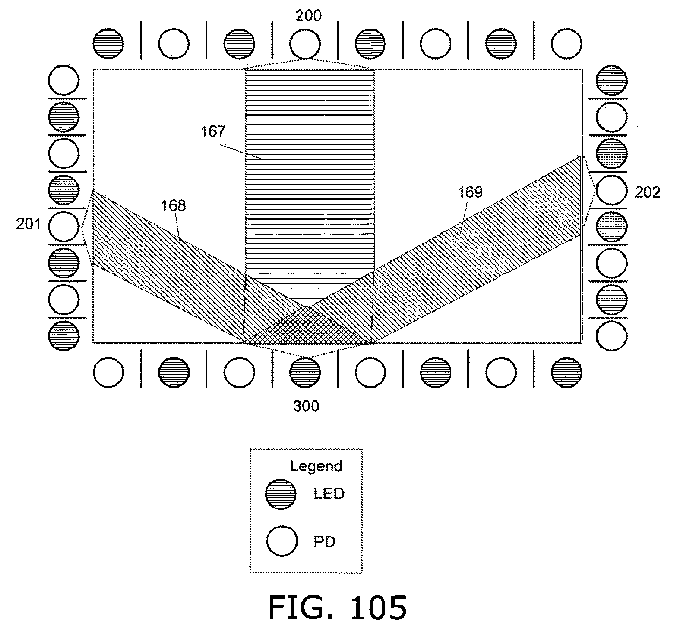

Reference is made to **FIG. 105,** which is a simplified illustration of a first example for a touch screen surrounded with alternating emitters and receivers, whereby diagonal and orthogonal wide beams crossing the screen are detected by one receiver, in accordance with an example. **FIG. 105** shows an example with an equal number of elements positioned along each screen edge. Three beams **167 - 169** are shown for one receiver **300;** namely, one directed to an opposite emitter **200** and the other two directed to emitters **201** and **202** on adjacent screen edges. The diagonal beams generate two axes that are not perpendicular to one another.

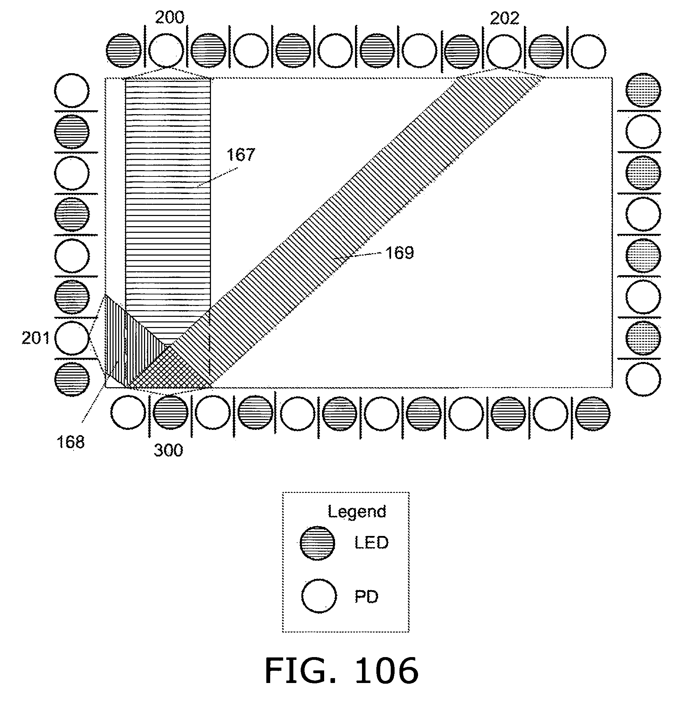

Reference is made to **FIG. 106,** which is a simplified illustration of a second example for a touch screen surrounded with alternating emitters and reciters, whereby diagonal and orthogonal wide beams crossing the screen are detected by one receiver example. **FIG. 106** shows an example with different numbers of elements positioned along adjacent screen edges. Three beams **167 - 169** are shown for one receiver **300;** namely, one directed to an opposite emitter **200,** and the other two directed at substantially 45° angles to emitters **201** and **202,** one of which is on an opposite edge and another of which is positioned on an adjacent edge. These diagonal beams generate two axes that are perpendicular to one another.

## Palm Rejection

When a user rests his hypothenar muscles, located on the side of his palm beneath his little finger, on a touch screen when writing with a stylus, ghosting generally occurs. This part of the palm blocks a large area of the touch screen, and often blocks a series of light beams along the screen's vertical axis, thereby hiding the stylus' touch position along the vertical axis.

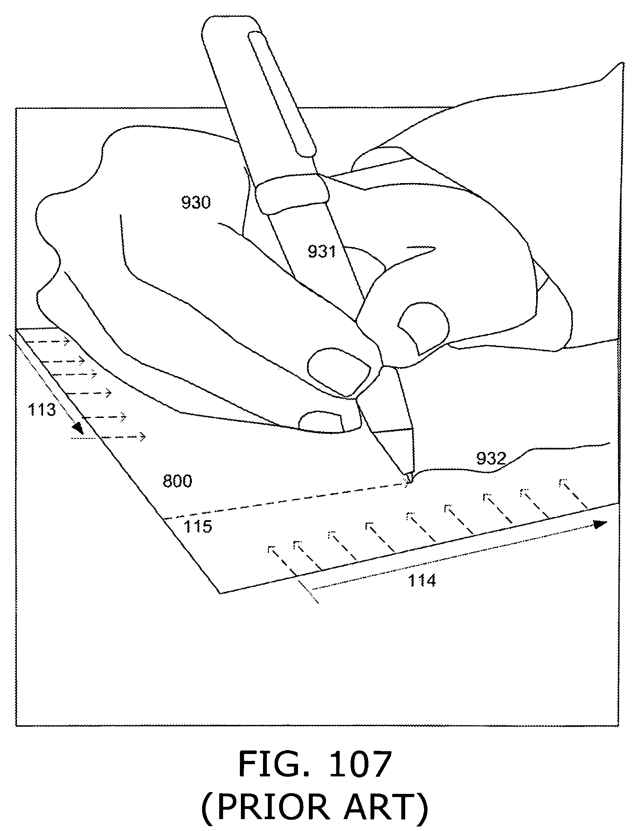

Reference is made to **FIG. 107,** which is a simplified illustration of a user writing on a prior art touch screen with a stylus. Shown in **FIG. 107** is a hand **930** holding a stylus **931,** and drawing a line **932** on a touch screen **800.** The user's palm is resting on screen **800,** blocking two series of light beams depicted as dotted lines; namely, a series **113** along the screen's horizontal axis, and a series **114** along the screen's vertical axis. The location of the stylus tip on the vertical axis is within series **114.** Beam **115** does detect the tip of the stylus, but it only provides a horizontal axis location.

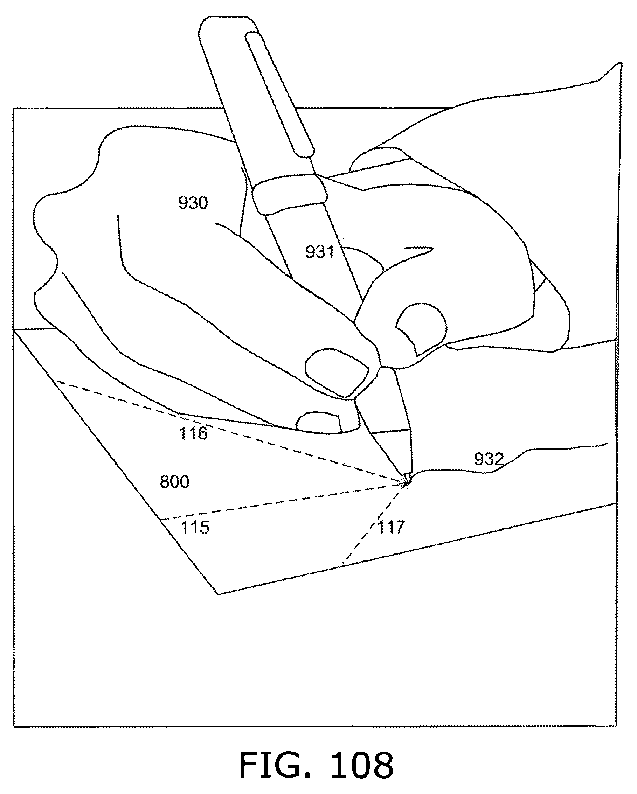

Following examples overcome the drawback illustrated in **FIG. 107.** Reference is made to **FIG. 108,** which is a simplified illustration of light beams detecting location of a stylus when a user's palm rests on a touch screen, in accordance with an example. By providing two sets of detection axes; namely, an orthogonal set and a diagonal set, a two-dimensional location of a stylus is determined. **FIG. 108** shows that beams **115** and **116** uniquely detect a stylus. Since each detection comprises overlapping wide beams whose signals are interpolated, as described hereinabove, the stylus position is determined with high precision, despite beams **115** and **116** not being perpendicular to one another. When the bottom of the user's palm does not block diagonal beam **117,** then beam **117** also detects the stylus location separately from the palm. In such case, beams **116** and **117** are used to detect the stylus location. Alternatively, all three detecting beams **115 - 117** may be used.

Another challenge that arises with touch screens that support both stylus and finger input arises when a user places his palm on the screen in order to write with a stylus, is misinterpretation of the initial contact between palm and screen as being a tap on an icon, in response to which the device launches an unintended application whose icon was tapped. Once the palm is resting on the screen, an area of contact is used to reject the palm touch as a screen tap. Nevertheless, the initial contact may cover a small surface area of the screen and thus be misinterpreted as a screen tap.

According to embodiments of the present invention, light beams above the screen are used to detect a palm as it approaches the screen. In one embodiment this is accomplished by projecting light from each emitter at several heights above the screen, as illustrated in **FIG. 18** showing an approaching finger **900** blocking beam **101** but not beam **102.** In another embodiment, multiple layers of emitters and receivers are arranged around the screen, and used to detect objects at different heights above the screen, as described hereinabove with reference to a user input gesture cavity and, in particular, with the cavity frame folded on top of the screen.

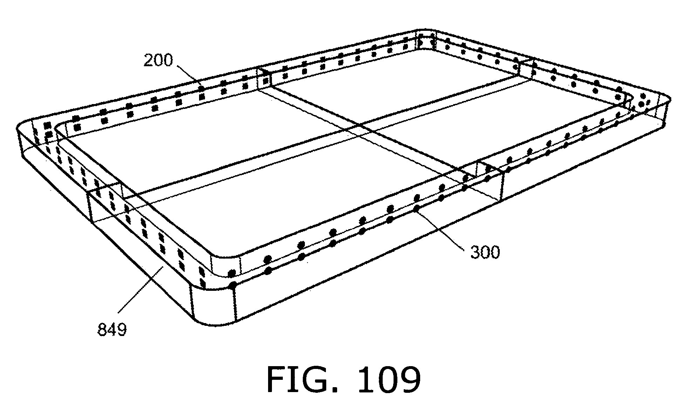

Reference is made to **FIG. 109,** which is a simplified illustration of a frame surrounding a touch screen, in accordance with an embodiment of the present invention. **FIG. 109** shows a frame **849** surrounding a touch screen, similar to frame **849** of **FIG. 55.** Two stacked rows of emitters **200** and receivers **300** are provided in the frame. When assembled together with a display in an electronic device, the stacked rows of emitters and receivers are raised above the display surface and provide object detection at two heights, namely, on the screen by the lower row of emitters and receivers, and above the screen by the upper row of emitters and receivers. When a user's palm begins to touch the screen, a large palm area is detected hovering above the screen. This enables the device to determine that a palm is approaching the screen, and that any screen tap is inadvertent.

In another embodiment of the present invention, only one row of emitters and receivers is provided for detecting a palm hovering above the screen, and touches on the screen are detected by conventional detection systems imposed on the display including inter alia capacitive or resistive touch sensors.

According to an embodiment of the present invention, a user interface disables screen taps for activating functions when a palm is detected. When the palm is detected, the user interface is configured to launch applications in response to a user touching an icon and gliding his finger away from the touched location along the touch screen. I.e., two sets of user interface gestures are provided. When no palm is detected, the first set of gestures is used. With the first set of gestures, a tap on an icon activates an application or function associated with the icon. When a palm is detected hovering above the screen, the second set of gestures is used. With the second set of gestures, the user is required to touch an icon and then glide his finger away from the touch location along the touch screen in order to activate the application or function associated with the icon. In this way, the device does not launch an unintended application when a user places his palm on the screen. The second set of gestures does not disable activation of icons; it enables the user to activate the application or function associated with the icon, if he desires to do so, by a touch and glide gesture.

**Situating Elements around Corners**

Screen corners present several challenges for arranging emitters and receivers. One challenge is that two emitters need to be placed in the same location - one for each screen edge. The challenge is complicated by the layout illustrated in **FIG. 44,** whereby the emitter and receiver elements are positioned under the screen surface, and therefore the rectangle formed by these elements is smaller than the frame of lenses surrounding the screen. One approach to overcoming this challenge is placement of two emitters at approximately the same location on the PCB, with one of the emitters placed on the top surface of the PCB and the other emitter placed on the bottom surface of the PCB. However, this approach introduces complications with connectors and positioning of optical elements.

Another challenge is extending overlapping beams to the edges of the screen. Although the emitters and receivers are underneath the screen, touch detection covers the entire area bordered by the inner edges of the optical elements that surround the screen.

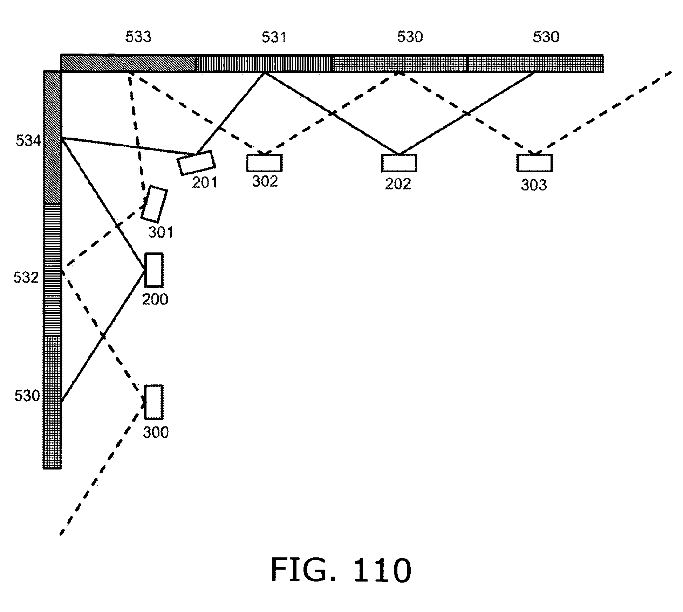

Embodiments of the present invention provide arrangements that are suitable for use with orthogonal and diagonal detection axes, as described hereinabove. Reference is made to **FIG. 110,** which is a simplified illustration of a first embodiment of emitters, receivers and optical elements for a corner of a touch screen, in accordance with an embodiment of the present invention. **FIG. 110** shows a first corner arrangement of emitter or receiver elements and their respective optical elements. Receivers **300 - 303** and emitters **200 - 202** are arranged alternatingly along two adjacent screen edges. Solid lines indicate light beams from the emitters, and dashed lines indicate light beams arriving at the receivers. Emitters and receivers **300, 200, 302, 202** and **303** are positioned according to a standard pitch, and optical elements **530** are configured accordingly. Receiver **301** and emitter **201** are oriented at an angle, and their wide beams are divided such that half of a beam traverses the screen in a first direction, e.g., along the screen's vertical axis, and the other half of the beam traverse the screen in a second direction, e.g., along the screen's horizontal axis. Moreover, in embodiments that include a second lens having three-sided cavities for splitting beams, as described hereinabove, half of the wide beam is split into a first pair of diagonal beams that originate along one screen edge, and the other half of the beam is split into a second pair of diagonal beams that originate along an adjacent screen edge. A hybrid optical element **531** is provided in order to overlap beams for emitter **201** and receiver **302**. Optical element **531** is referred to as a "hybrid optical element" because the right half of the element is the same as the right half of element **530,** but a portion of the reflective or refractive facets on the left half are directed at the non-standard location and orientation of emitter **201.** Similarly, a hybrid optical element **532** is provided in order to overlap beams for emitter **200** and receiver **301.** The lower half of hybrid optical element **532** is similar to the left half of element **530.** Both halves of corner element **533** are uniquely configured; namely, the left half overlaps beams for emitter **201** and receiver **301,** and the right half overlaps beams for emitter **201** and receiver **302.** Both halves of corner optical element **534** are also uniquely configured for emitters **200** and **201** and for receiver **301.**

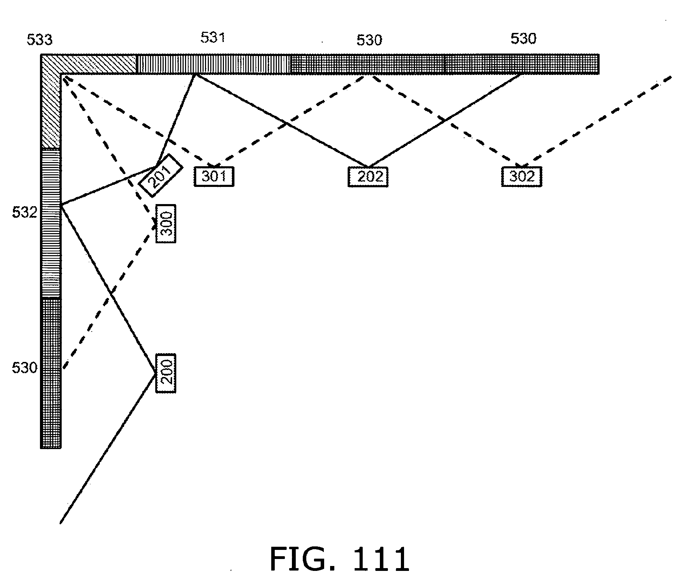

Reference is made to **FIG. 111,** which is a simplified illustration of a second embodiment of emitters, receivers and optical elements for a corner of a touch screen, in accordance with an embodiment of the present invention. **FIG. 111** shows an alternative corner arrangement of emitter or receiver elements and their respective optical elements. In the arrangement shown in **FIG. 111,** only one emitter **201** is placed at a non-standard pitch and orientation. Standard optical elements **530** are used together with hybrid optical elements **531** and **532** and unique corner optical elements **533.** Optical elements **531 - 533** are configured for the emitter-receiver arrangement shown, and are therefore different than elements **531** - **533** of **FIG. 110.**

## Integrated Modules

In general, there is low tolerance for assembly errors for touch systems using alternating reflective or refractive facets aimed at two foci. An offset in placement of an emitter or a receiver causes it to be out of the reflective facet's focus, which can degrade accuracy and performance of such systems. In accordance with an embodiment of the present invention, rigid modular blocks containing reflective or refractive facets and an emitter or a receiver are prepared, in order to ensure the required assembly precision. Such modular blocks are useful for simplifying the process of integrating touch screen components, and for minimizing the tolerance chain for a manufacturer. These modular blocks are formed so as to be easily positioned together in a row along an edge of a display, for fast assembly of a touch screen. The high tolerance requirements of placing an emitter or receiver in exactly the correct position vis-à-vis the reflective or refractive facets, are handled during manufacture of the modular blocks, thus removing the burden of high precision assembly from a device manufacturer.

Simplified manufacturing is achieved by integrating optical elements and electronic components into a single unit. As such, complex surfaces may be gathered into one component, thereby reducing the need for high assembly tolerances.

Reference is made to **FIG. 112,** which is an illustration of optical components made of plastic material that is transparent to infrared light, in accordance with an embodiment of the present invention. Shown in **FIG. 112** is an optical component **488** that includes a forward-facing LED **236,** and electronics to handle the LED signal. Optical component **488** is connected to electrical pads **760** and **761.** Optical component **488** is used to transmit collimated light beams from two emitters; namely, emitter **235** and emitter **236.** Emitter **235** is included in a neighboring optical component **489.** In the alternating emitter-receiver embodiment described hereinabove, optical component **488** is used to transmit collimate light beams for one emitter and one receiver. E.g., neighboring module **489** includes a receiver instead of emitter **235.**

Light beams from emitter **235** exit optical component **489** through a tight-fitting surface **491,** and enter optical component **488** through a tight-fitting surface **490. FIG. 105** shows non-parallel light beams from emitters **235** and **236** hitting alternating facets on a wave-like multi-faceted reflective surface **493.** Components **488** and **489** are substantially identical, and fit together. A device manufacturer can thus use these components as building blocks to create a touch screen, by arranging a series of these building blocks in a row along each edge of the display. Typical arrangements are (a) two adjacent display edges are lined with emitter components, and the other two edges are lined with receiver components, and (b) all four display edges are lined with alternating emitter/receiver components, i.e., each emitter has a neighboring receiver. Indeed, the emitter and receiver components, being of substantially identical shape, can be positioned together in the same row.

An optical component **494** is similar to optical component **488,** except that an LED **237** is side-facing instead of forward-facing. **FIG. 112** shows collimated light beams **100** exiting optical component **494.** Pins **989** and **990** guide optical component **494** on a printed circuit board.

Optical component **495** is optical component **488** as viewed from the front. **FIG. 112** shows collimated light beams **100** exiting optical component **495.**

Similar optical components (not shown) are also provided for receiving light beams that traverse the screen surface. For these components, the emitters are replaced by receivers, and the electrical components handle the receiver signals. Such optical components receive collimated light beams, and direct the beams onto two different receivers.

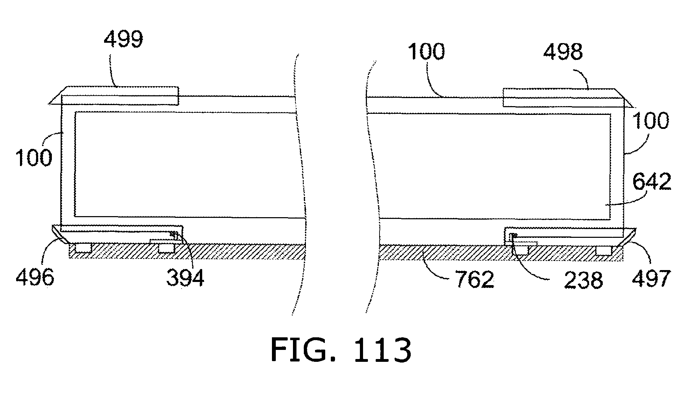

Reference is made to **FIG. 113,** which is a simplified diagram of a side view of a touch screen with light guides, in accordance with an embodiment of the present invention. Shown in **FIG. 113** are a display **642,** an optical element **496,** a photo diode **394** within optical element **496,** an optical element **497,** and an emitter **238** within optical element **497.** Optical elements **496** and **497** are connected to a printed circuit board **762.** Emitter **238** emits non-parallel light beams and, as described hereinabove with reference to **FIG. 112,** the non-parallel beams are converted into collimated beams, or substantially collimated beams, before exiting optical element **497.** Another portion of the non-parallel beams are collimated by a neighboring module, not shown in **FIG. 112.** The beams **100** that exit optical element **497** are directed upwards and are reflected over display **642** by a light guide **498.** In an embodiment of the present invention, three-way refracting cavities are etched, or otherwise formed, on the lower surface of optical element **498** to refract the light beams in three directions in order to provide two coordinate systems for determining a touch location. The light beams **100** enter a light guide **499** on the opposite side of screen **642,** and are reflected below display **642** into optical element **496.** In embodiments supporting the two coordinate systems, the three-way refracting cavities are present on the underside of optical element **499** as well. As described hereinabove, optical element **496** and its neighboring optical element, not shown, focus the incoming light beams on photo diode **394.** In one embodiment of the present invention, the light guides **498** and **499** are constructed as a frame that surrounds display **642.**

In the touch screen of **FIG. 113,** two types of light beam redirection occur. A first redirection requires multiple facets directed at a single focus point. A second redirection uniformly redirects incoming beams at a 90º angle, or folds incoming light beams into a narrow waist or focus, as described hereinabove with reference to configuration no. 5. In some embodiments, the collimated beams are refracted in three directions, in between the first and second redirections, by refracting cavities.

The first type of redirection requires that the emitter or receiver be positioned at a specific location relative to the focal point of many facets. As such, the positioning of the emitter or receiver and its reflective surfaces, is sensitive to variations in placement. Thus the assembly of the emitter or receiver, together with its corresponding surface of reflective facets, has a low tolerance of error. The second type of redirection, involving reflection and, in some cases, uniform refraction in three directions, is robust to variations in position of the reflector and to the pattern of refracting cavities located in the light guide. Thus assembly of this portion of the light guide has a high tolerance for error.

The light guides that reflect light above the screen surface may be manufactured separately and assembled with other touch screen components. Thus in **FIG. 113** light guides **498** and **499** are shown separate from optical elements **496** and **497.**

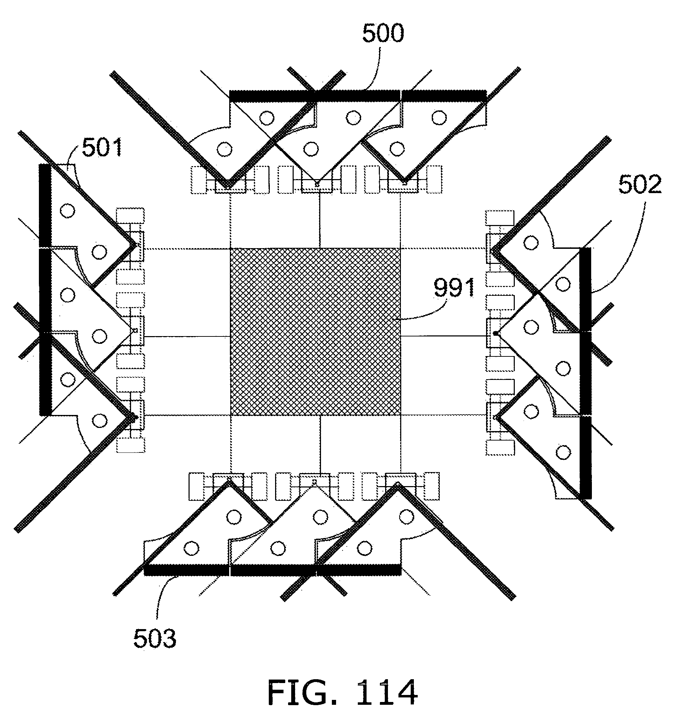

Reference is made to **FIG. 114,** which is an illustration of a touch screen with a block of three optical components on each side, in accordance with an embodiment of the present invention. Blocks **500** and **501** are emitters, and blocks **502** and **503** are receivers. The blocks create an active area **991,** where an x-y touch position of a stylus or finger may be calculated based on detected blocked light. Adding more optical components of the same type to each block serves to enlarge the active area that is created.

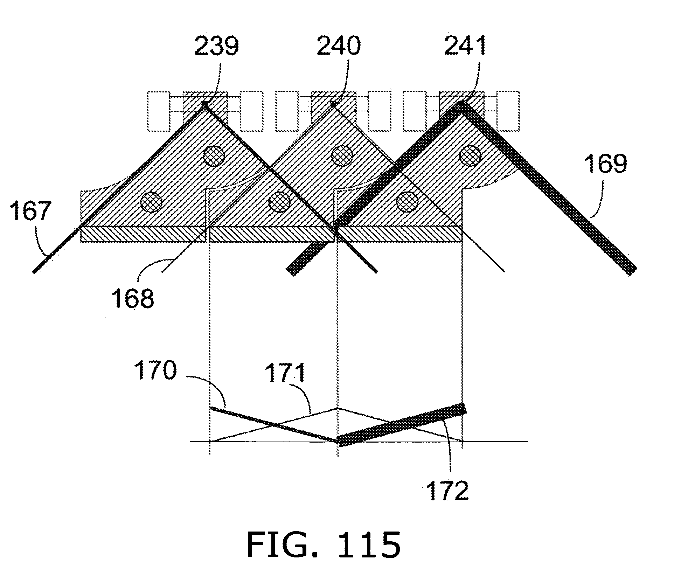

Reference is made to **FIG. 115,** which is a magnified illustration of one of the emitter blocks of **FIG. 114,** in accordance with an embodiment of the present invention. Shown in **FIG. 115** are three emitters **239, 240** and **241,** that emit respective wide beams **167, 168** and **169** from one edge of a screen, which are read as respective signals **170, 171** and **172.** The signal gradients are indicated by their diagonal orientations. At the opposite edge of the screen, signals **170, 171** and **172** are each redirected onto respective receivers by respective optical components. An accurate position of an object, such as a finger or stylus, touching the screen, is then determined based on values of blocked light at the receivers, as described below.

**Touch Screen System Configuration No. 7**

Configuration no. 7 uses total internal reflection in a touch screen. Whereas in configurations 1 - 6 the light beams travel in air above the screen surface, in configuration no. 7 the light beams travel through a sheet of glass or plastic that is transmissive to the wavelengths used in the touch detection system. In other embodiments, the light travels through a liquid or gel layer that is transmissive to the wavelengths used in the touch detection system.

Total internal reflection is an optical phenomenon that occurs when a ray of light strikes a medium boundary at an angle larger than a particular critical angle, with respect to the normal to the surface. If the refractive index is lower on the other side of the boundary and the incident angle is greater than the critical angle, no light passes through the boundary and all of the light is reflected. The critical angle is the angle of incidence above which the total internal reflection occurs.

When a light beam crosses a boundary between materials with different refractive indices, the light beam is partially refracted at the boundary surface, and partially reflected. However, if the angle of incidence is greater (i.e., the ray is closer to being parallel to the boundary) than the critical angle - the angle of incidence at which light is refracted such that it travels along the boundary - then the light stops crossing the boundary altogether and instead is totally reflected back internally. This only occurs where light travels from a medium with a higher refractive index to one with a lower refractive index. For example, it occurs when passing from glass to air.

A touch screen according to configuration no. 7 has a glass or plastic sheet or pane above the display screen referred to as a cover glass. Alternatively, a gel layer or a liquid filled sac is placed over the display. The cover glass, or gel or liquid filled sac material is transparent to light at the wavelength used. Typically optical touch systems use wavelengths in the near infrared range, i.e., wavelengths below 1100 nm, e.g., 940 nm. A narrow air gap is provided between the cover glass and the display such that both the upper and lower surfaces of the cover glass, exposed to air, internally reflect light inside the cover glass. Using any of the collimating lenses described above with reference to configurations 1 - 6, light enters the cover glass from below at an angle larger than the critical angle with respect to the normal to the cover glass surface, and is directed through the cover glass by total internal reflection. A finger touching the cover glass from above absorbs a portion of the light inside the cover glass at the touched location. In addition, the finger also scatters a portion of the light inside the cover glass at the touched location. Both of these actions diminish the amount of light that arrives at a respective detector, and the detector measurement is used as described herein to calculate the location of the touch.

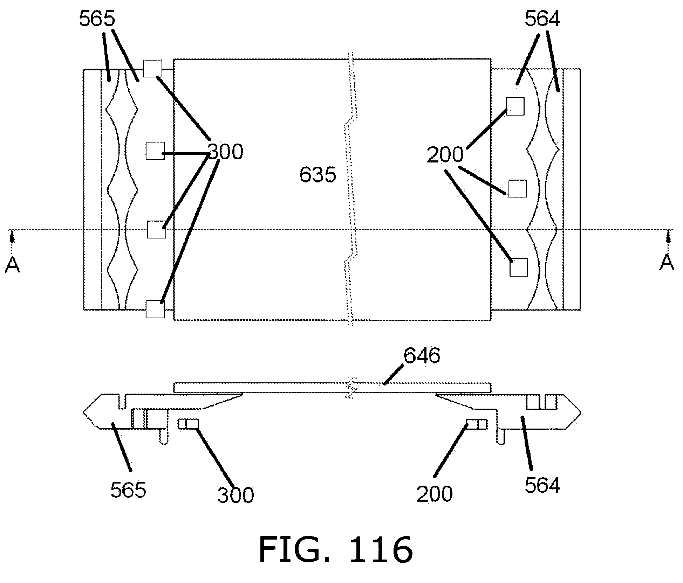

Reference is made to **FIG. 116,** which is a simplified illustration of a touch screen assembly having a cover glass, in accordance with an embodiment of the present invention. **FIG. 116** shows a screen **635,** a cover glass **646,** emitters **200,** emitter lenses **564,** receivers **300** and receiver lenses **565. FIG. 116** shows a view from above, and a cross section along the line **A-A.** The emitters and receivers in **FIG. 116** are shift-aligned, and the lenses ensure that light from each emitter reaches two opposite receivers.

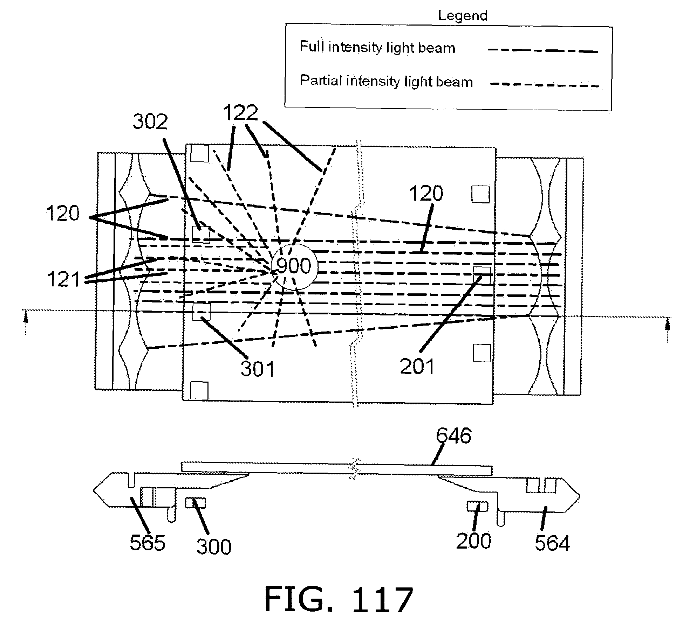

Reference is made to **FIG. 117,** which is a simplified illustration of a touch object scattering internally reflected light in a screen assembly having a cover glass, in accordance with an embodiment of the present invention. **FIG. 117** shows scattering of light by an object touching the screen. Light beams **120** from emitter **201** to receivers **301** and **302** are internally reflected inside cover glass **646** and scattered by a touch object **900. FIG. 117** shows scattered beams **122.** However, a portion of the detection channel beams **121** beneath touch object **900** arrive at receivers **301** and **302.**

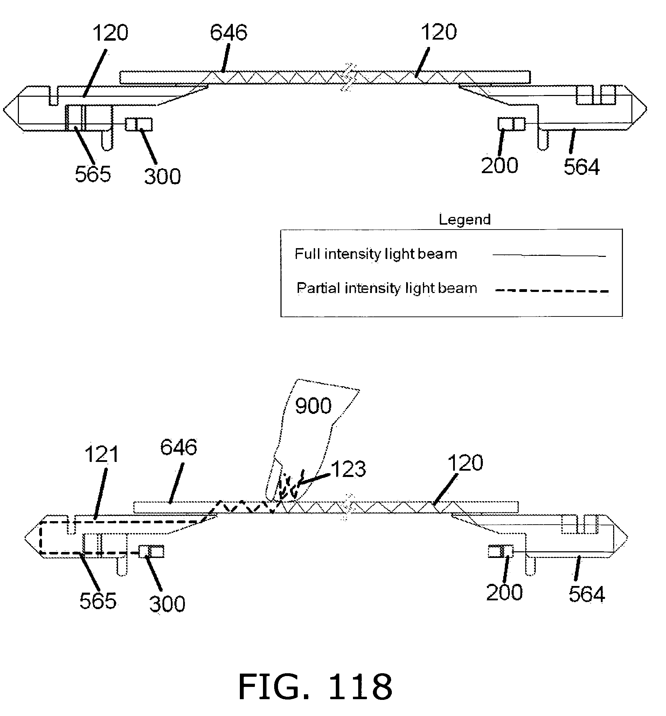

Reference is made to **FIG. 118,** which is a simplified illustration of a touch object absorbing internally reflected light in a screen assembly having a cover glass, in accordance with an embodiment of the present invention. **FIG. 118** shows absorption of light by a finger **900** touching the screen. The light beams from emitter **200** to receiver **300** are internally reflected inside cover glass **646** and are partially absorbed into finger **900.**

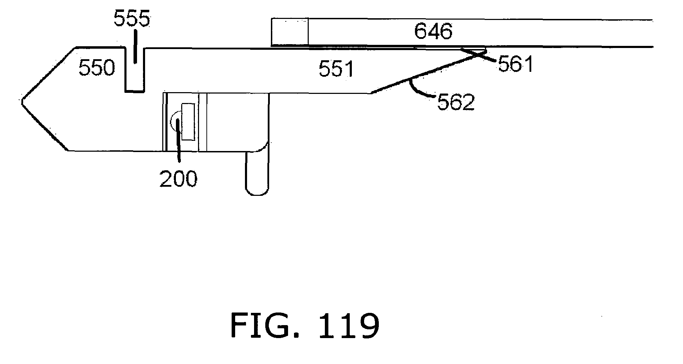

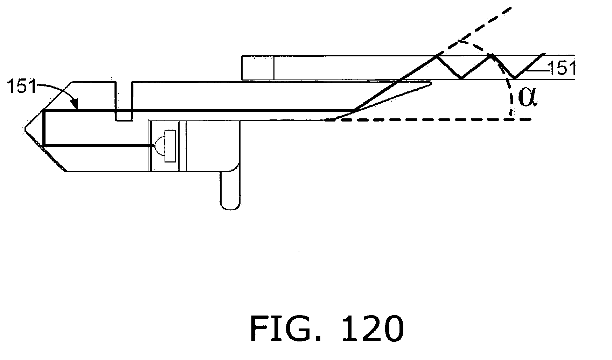

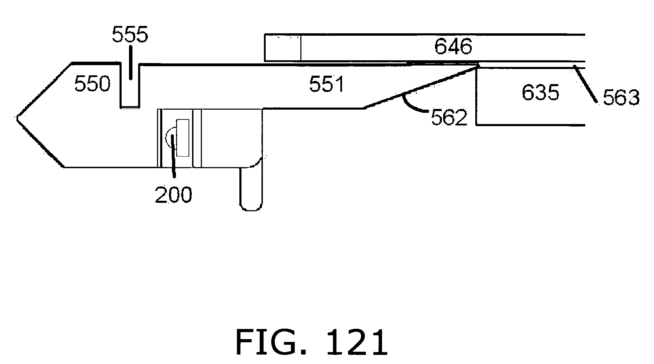

Reference is made to **FIG. 119,** which is a simplified illustration of a touch screen assembly having a cover glass, in accordance with an embodiment of the present invention. **FIG. 119** shows the lens arrangement of **FIGS. 60** and **61** modified for a system according to configuration no. 7. As in **FIG. 60,** an LED **200** is coupled with a pair of lenses **550** and **551,** separated by an air gap **555,** for collimating light. In addition, **FIG. 119** includes cover glass **646** that receives light beams emitted by emitter **200** and transmits the beams through cover glass **646** using total internal reflection. This lens differs from that of **FIG. 60** in that it is entirely below the height of the device. Also, lens **551** includes an additional reflective facet **562** for guiding light into the underside of cover glass **646** at a suitable angle α, i.e., at an angle less than the critical angle with respect to the cover glass surface, as illustrated in **FIG. 120.** For example, the critical angle for a glass-to-air boundary is roughly 46° so a suitabe angle α in this case is 40°. The actual refractive indices of the cover glass material, air, and a low-index adhesive, if such is used to laminate the cover glass to the display, determine the critical angle for each embodiment. Lens **551** is connected to cover glass **646** using an optically clear transfer tape **561,** e.g., TESA 69304 optically clear pure acrylic adhesive manufactured by TESA Corp. of Charlotte, North Carolina, so that this reflected light enters cover glass **646.** A similar arrangement at an opposite edge of the screen guides the light out of cover glass **646** and onto one or more respective photo detectors. In other embodiments light guide **551** is formed as a unitary molded plastic unit together with cover glass **646** and adhesive transfer tape **561** is not used. In an alternative embodiment light enters cover glass **646** from the side instead of from underneath, as illustrated in **FIG. 121.**

Reference is made to **FIG. 120,** which is a simplified illustration of a light beam path in the touch screen assembly of **FIG. 119,** in accordance with an embodiment of the present invention. Reference is also made to **FIG. 121,** which is a simplified illustration of a touch screen assembly having a cover glass, in accordance with an embodiment of the present invention. **FIG. 120** shows the path of light beam **151** from emitter **200** through lenses **550** and **551** and into cover glass **646** at a suitable angle α where it propagates by virtue of total internal reflection. **FIG. 121** shows air gap **563** between cover glass **646** and display **635.** This air gap creates the necessary medium boundary on the underside of the cover glass for total internal reflection inside cover glass **646.** Alternatively, the necessary medium boundary for total internal reflection is provided by laminating the cover glass to the screen using a suitable low-index adhesive. Cover glass **646** is preferably 1 - 2 mm thick.

Configuration 7 differs from configurations 1 - 6 in the amount of light blocked during a touch. In general, a touch in configuration nos. 1 - 6 blocks more of the beam than a comparable touch in configuration no. 7. However principles such as gradations of intensity along the width of the beams described hereinabove, inter alia with reference to **FIGS. 47, 48** and **68 - 76,** are the same in configuration no. 7 as they are in configuration nos. 1 - 6. Therefore the methods for interpolating signals described herein are applicable to configuration no. 7, once the lower amount of light beam blockage in configuration no. 7 is accounted for. The arrangement of divergent beams where three divergent wide beams are directed out of each emitter, as described in detail with reference to **FIGS. 79 - 83, 91 - 92** and **99 - 109,** is also applicable to configuration no. 7 with the divergent beams all being directed into the cover glass at an appropriate angle for total internal reflection.

Configuration no. 7 enables designing a device without a protruding bezel around the screen. This is an advantage over configurations 1 - 6 in terms of design.

Another advantage relates to multi-touch detection. In configurations 1 - 6, when two or more objects are inserted into a light beam path simultaneously, the light beam shadow patterns no longer correspond to unique finger positions, and therefore the signal pattern is ambiguous. Examples of different touch patterns that produce the same shadow signal are shown in **FIGS. 85** - **87.** In systems using total internal reflection, each touch results in a further partial reduction in the signal so that the number of touches between transmitter and receiver may be calculated.

This calculation is simplest if the system assumes that only one type of item may be placed on the screen. Otherwise, a thick finger could be mistaken for two thin fingers, for example. However, in many cases there is a delay between each of the touches in a multi-touch gesture. When the system detects incremental steps in the magnitude of the touch detection signal, it indicates that the signal is generated by multiple touches as opposed to a large touch object. Thus when the system samples the screen at a high frequency, such that new samples are generated as each additional touch is added, the system determines that an additional touch occurred due to the further partial reduction in the signal. In particular, when using the controller described below, the system can sample the screen at rates of up to 1000 Hz, enabling discriminating between touches that occur at almost the same time.

Another advantage provided by configuration no. 7 relates to scattering of light by the touch object. A finger touching the screen scatters a portion of the light inside the cover glass at the touched location. The lenses **550** and **551** collimate the light from the emitter **200** and direct it at one or more respective detectors. The scattering of light by a touch object results in the light reaching other detectors. The collimating lenses associated with the detectors direct light scattered from a point along the collimated path onto the detectors. Therefore, in cases that may indicate multi-touch, the system polls additional detectors and resolves the multi-touch locations based on the detection of scattered light.

An example illustrates this advantage, with reference to **FIG. 122,** which is a simplified illustration of emitters and receivers detecting two diagonal touch points, in accordance with an embodiment of the present invention. **FIG. 122** shows an arrangement of emitters **200** and PD receivers **300** surrounding a touch screen according to configuration no. 7. Two touch points **971** and **972** are drawn. Emitters **200** and PD receivers **300** are both numbered **1 - 16.** A reduction in expected light occurs at PD numbers **2, 7,11** and **15** and, as already explained, this signal pattern is not unique to these two touch points. In this case the system activates emitter number **2** and samples two PDs: PD number **11** and PD number **15.** Each detector has an associated collimating lens not shown in the figure. In the touch pattern drawn, PD number **15** will detect a greater amount of scattered light (by touch point **971**) than PD number **11** because touch point **971** is situated along the path of the collimating lens associated with PD number **15** but not along the path of the collimating lens associated with PD number **11.** Similarly, the system activates emitter number **15** and samples two PDs: PD number **2** and PD number **7.** In the touch pattern drawn, PD number **2** will detect a greater amount of scattered light (by touch point **971**) than PD number **7.** Based on this, the system determines that the touches are at the locations shown and not at the opposite corners of the screen.

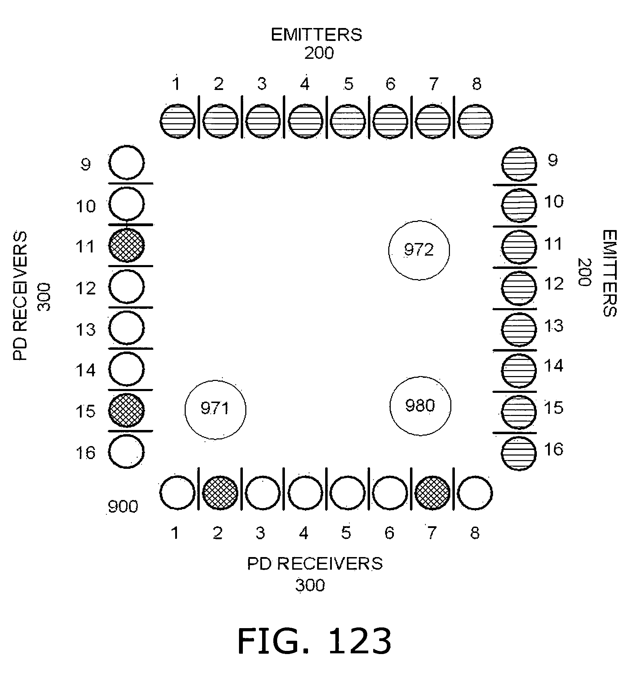

Reference is made to **FIG. 123,** which is a simplified illustration of emitters and receivers detecting three touch points, in accordance with an embodiment of the present invention. Continuing the example of **FIG. 122, FIG. 123** adds a third touch point **980.** In this case, PD number **7** detects a significantly greater reduction in expected light from its respective emitter (number **7**) than PD number **2** detects from its respective emitter (number **2**). This is because two touches (**972, 980**) absorb light from emitter **7,** but only one touch (**971**) absorbs light from emitter **2.** Based on this, the system determines that the touches are at the locations shown.

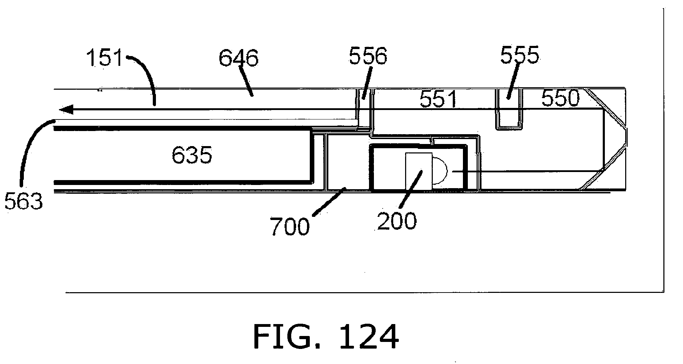

Reference is made to **FIG. 124,** which is a simplified illustration of a touch screen assembly having a cover glass, in accordance with an embodiment of the present invention. With respect to scattered light, in the touch screen of **FIG. 123,** during activation of emitter **15,** detectors **7** and **2** detect scattered light from touch points **971** and **980** respectively; whereas during activation of emitter **2,** detector **15** detects scattered light from touch point **971,** and detector **11** detects much less scattered light. This indicates that touch point **980** is at the bottom right of the screen and not at the upper left corner.

In general, an activation sequence of emitters and detectors aimed at detecting scattered light may be employed selectively. For example, it may be performed only when a potential ghosted gesture is possible. Also, the sequence aimed at detecting scattered light may be limited to activating only those emitter-detector pairs that are likely to resolve the ghosting; e.g., when the detection pattern of **FIGS. 122** and **123** occurs, only activating emitter-detector pairs **15-2, 15-7, 2-11** and **2-15.**

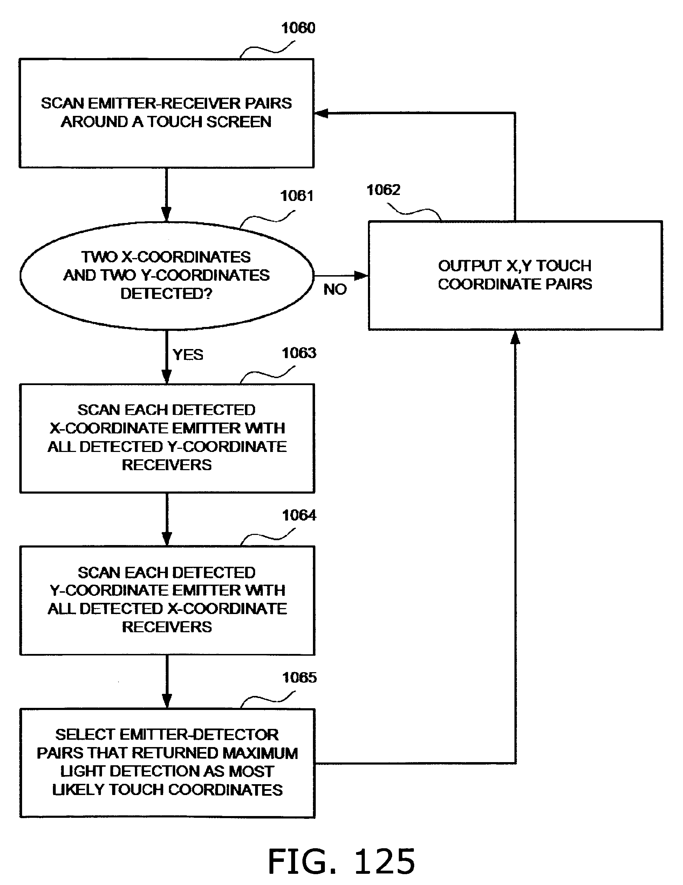

Reference is made to **FIG. 125,** which is a flowchart of a method for disambiguating multiple touch detection signals in accordance with an embodiment of the present invention. At step **1060** emitter-receiver pairs around a touch screen are scanned. A reduction in expected light indicates a touch along the emitter-receiver signal paths. If at least two x-coordinate channels and at least two y-coordinate channels detect a touch, the system proceeds through steps **1063 - 1065** to correctly pair the x, y coordinates. At step **1063** the system pairs each x coordinate emitter with all of the detected y-coordinate receivers to create a second set of touch detection channels. In these channels, a touch is indicated by an increase in detected light that results from light being scattered by the touch object. At step **1064** the system pairs each y-coordinate emitter with all of the detected x-coordinate receivers to create a similar set of touch detection channels. At step **1065** the system determines the most likely touch, based on steps **1063** and **1064,** and outputs the touch coordinates at step **1062.**

If only one x-coordinate or only one y-coordinate is returned at step **1061** the system outputs touch coordinates at step **1062** as follows: if one x-coordinate and one y-coordinate are detected, then output one x,y touch coordinate. If multiple coordinates are detected along one axis, pair each of these one axis coordinates with the single x or y-coordinate on the other axis.

## Touch Screen System Configuration No. 8

Configuration no. 8 combines over-air light beams, as in configurations 1 - 6, with total internal reflection light beams as described in configuration 7. In certain embodiments, each emitter-detector pair activation includes a first portion of light traveling in air above the screen, and a second portion of light traveling through a cover glass. Both portions of light originate at the emitter and arrive at the detector.

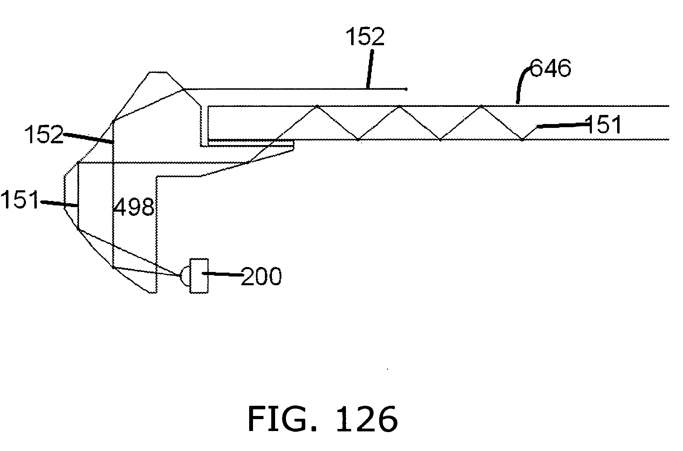

Reference is made to **FIG. 126,** which is a simplified illustration of a touch screen assembly having a cover glass, in accordance with an embodiment of the present invention. **FIG. 126** shows two light beams **151** and **152** in a touch system according to configuration no. 8. Both beams originate at emitter **200** and both beams converge onto an opposite detector not shown in the figure. Beam **151** is directed into cover glass **646** from beneath, and beam **152** is directed over air, above cover glass **646.** Light guide **498** guides both beams from emitter **200.**

Configuration no. 8 has several advantages. This configuration detects a hovering object that blocks a portion of the over-air beam. However, a hovering object does not affect the total internal reflection; actual contact with the cover glass is required to frustrate the total internal reflection. As such, there is a significant drop in the signal when contact occurs. This enables the system to clearly distinguish a hover gesture from a touch gesture.

Another advantage is that configuration no. 8 has two detection systems: the over-air beams and the total internal reflection beams. When one of these systems is impaired, the other system provides touch detection. For example, a narrow stylus point is accurately traced by the over-air beams as described hereinabove, but the narrow stylus point does not absorb or frustrate much of the total internal reflection beams.

Yet another advantage is that the total internal reflection system is available to resolve ghosted gestures, as explained above with reference to configuration no. 7.

**Touch Screen System Configuration No. 9**

Configuration no. 9 uses a reduced number of components by coupling an emitter or a receiver to one end of a long thin light guide situated along an edge of the screen. Such a light guide is described in U.S. Patent No. 7,333,095 entitled ILLUMINATION FOR OPTICAL TOUCH PANEL.

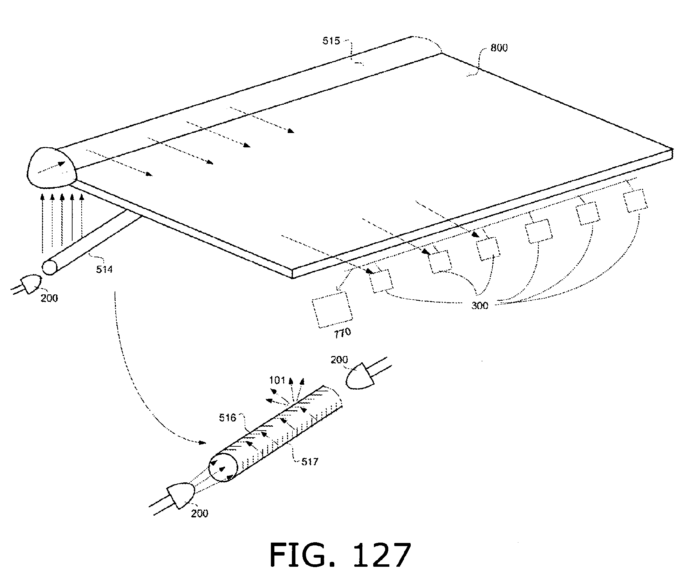

Reference is made to **FIG. 127,** which is an illustration of a touch screen having a long thin light guide **514** along a first edge of the screen, for directing light over the screen, and having an array of light receivers **300** arranged along an opposite edge of the screen for detecting the directed light, and for communicating detected light values to a calculating unit **770,** in accordance with an embodiment of the present invention. Light emitters **200** are coupled to both ends of light guide **514.** Light guide **514** is positioned along one edge of a touch screen **800.** Light is emitted into light guide **514** along a screen edge, and is re-directed across the screen surface by a reflector **515.** A plurality of receivers **300** is situated along the opposite edge of touch screen **800,** to enable multiple receivers to detect a touch, as described hereinabove with reference to configuration nos. 2 and 3.

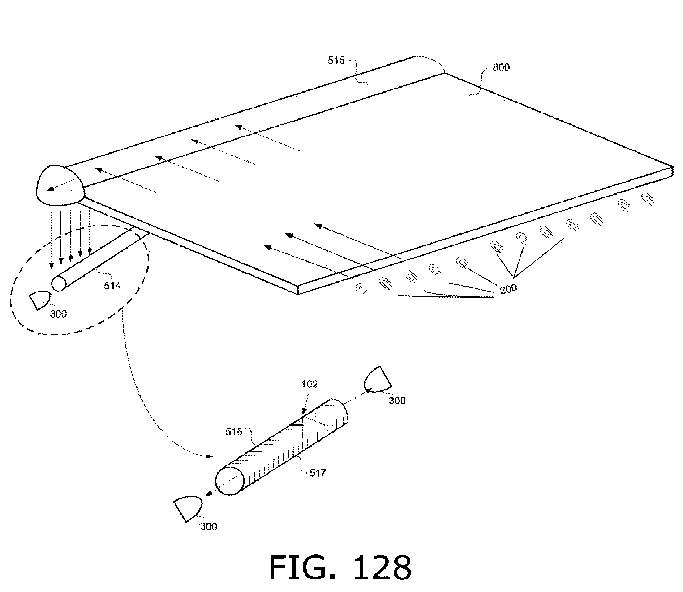

Reference is made to **FIG. 128,** which is an illustration of a touch screen having an array of light emitters **200** along a first edge of the screen for directing light beams over the screen, and having a long thin light guide **514** for receiving the directed light beams and for further directing them to light receivers **300** situated at both ends of light guide **514,** in accordance with an embodiment of the present invention. Detected light values at receiver **300** are communicated to a calculating unit (not shown). According to another embodiment of the present invention, only one light receiver **300** is coupled to one end of light guide **514.** Light guide **514** is positioned along one edge of a touch screen **800.** A plurality of emitters is situated along the opposite edge of the touch screen, to enable receiver(s) **300** to detect a touch based on serial activation of multiple emitters, as described hereinabove with reference to configuration nos. 2 and 3. Light emitted across the screen surface is re-directed by a reflector **515.** Light is received into light guide **514** along the screen edge and is directed through the length of light guide **514** onto a receiver **300.**

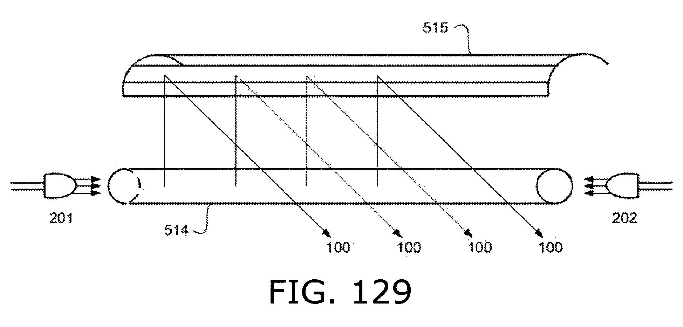

Reference is made to **FIG. 129,** which is an illustration of two light emitters, **201** and **202,** each emitter coupled to an end of a long thin light guide **514,** in accordance with an embodiment of the present invention. Light guide **514** is positioned along one edge of a touch screen. Light **100** is emitted into light guide **514** along a screen edge, and is re-directed across the screen surface by a reflector **515.** A plurality of receivers is situated along the opposite edge of the touch screen, to enable multiple receivers to detect a touch, as described hereinabove with reference to configuration nos. 2 and 3. Each emitter **201** and **202** is activated separately, and the receivers thus detect a touch based on blocked light from each of the two emitters. The amount of light **100** emitted at any given location along the length of the light guide decreases as a function of the distance between the location and the emitter. As such, different amounts of detected light from each emitter **201** and **202** are used to calculate the precise location of a touch, as described hereinabove with reference to configuration nos. 2 and 3.

Embodiments of the present invention improve upon the light guide of U.S. Patent No. 7,333,095, by etching or otherwise forming micro patterns **516** on the outer surface of the light guide, in order to widely refract outgoing light beams **101** of **FIG. 127,** or incoming light beams **102** of **FIG. 106,** as described hereinabove with reference to configuration nos. 2 and 3. Micro patterns **516** are a uniform substantially parallel pattern of grooves along light guide **514,** and are simpler to form than the fan pattern described hereinabove with reference to configuration no. 2. Light guide **514** also includes a light scatterer strip **517** inside of light guide **514.** Micro patterns **516** and light scatterer strip **517** appear in **FIGS. 127** and **128.**

**Touch Screen System Configuration No. 10**

Configuration no. 10 enables detecting pressure on a touch screen, as applied during a touch operation. Detecting pressure enables discrimination between a light touch and a hard press, and is useful for user interfaces that associate separate actions to a touch and a press. E.g., a user may select a button or icon by touching it, and activate the function associated with the button or icon by pressing on it. Such a user interface is described in applicants' co-pending U.S. Application No. 12/486,033, entitled USER INTERFACE FOR MOBILE COMPUTER UNIT.

In some embodiments of the present invention, a touch enabled device includes a base plane, such as a PCB, a light guide frame rigidly mounted on the base plane, and a resilient member attached to the base plane to suspend or "float" a non-rigidly mounted touch screen inside the light guide frame. A press on the touch screen deflects the floating touch screen along a z-axis, exposing more of the light guide frame. A light guide frame reflector, which directs light over the screen as described hereinabove, is formed so that the exposure allows more light to traverse the screen. In this way, when a hard press on the screen occurs, many of the receivers detect a sudden increase in detected light. Moreover, detection of a hard press may be conditioned upon a touch being detected at the same time, thus preventing false detection of a hard press due to a sudden increase in ambient light. When the downward pressure is released, the resilient member returns the screen to its original position within the light guide frame.

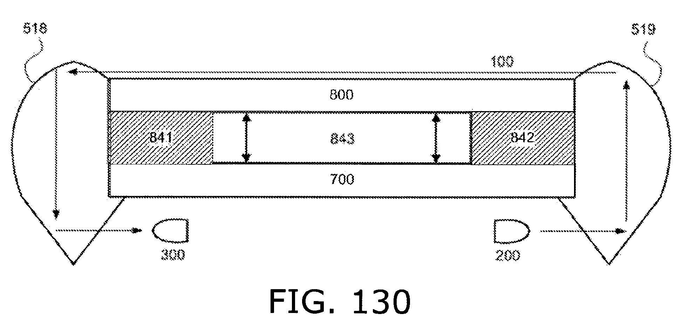

Reference is made to **FIGS. 130 - 133,** which are illustrations of a touch screen **800** that detects occurrence of a hard press, in accordance with an embodiment of the present invention. **FIG. 130** shows touch screen **800** in rest position, screen **800** being supported by resilient supporting members **841** and **842** that create a flex air gap **843,** which are mounted on a printed circuit board **700. FIG. 130** shows two light guides, **518** and **519,** one on either side of screen **800,** for directing light **100** from an emitter **200** over screen **800** to a receiver **300.** Only a small upper portion of each light guide **518** and **519** extends above screen **800.** Receiver **300** communicates detected light intensities to a calculating unit (not shown).

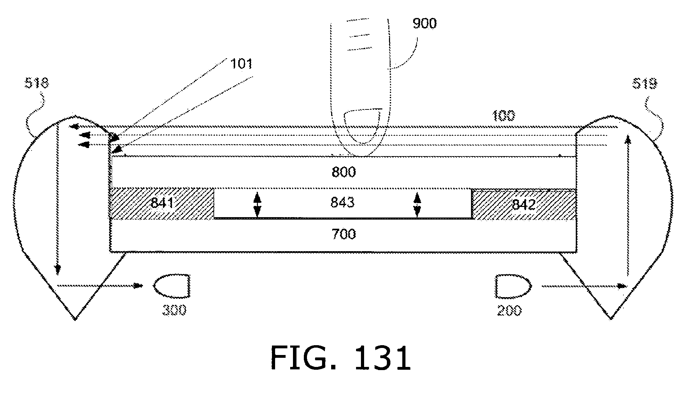

**FIG. 131** shows a finger **900** pressing down on the screen, causing members **841** and **842** to compress and to narrow flex air gap **843.** As a result, a larger portion of light guides **518** and **519** are exposed above screen **800,** thus allowing (a) more light **100** from emitter **200** to traverse screen **800** and be detected by receiver **300,** and (b) more ambient light **101** to reach receiver **300.** In various embodiments, either or both of these increases in detected light are used to indicate a hard press. In other embodiments, the amount of downward pressure applied is determined based on the amount of additional detected light, thus enabling discrimination between more hard and less hard touches.

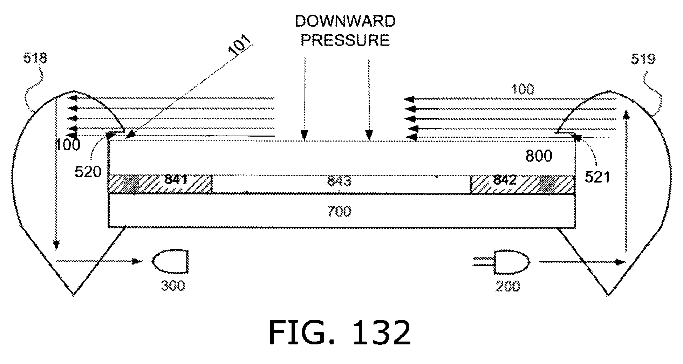

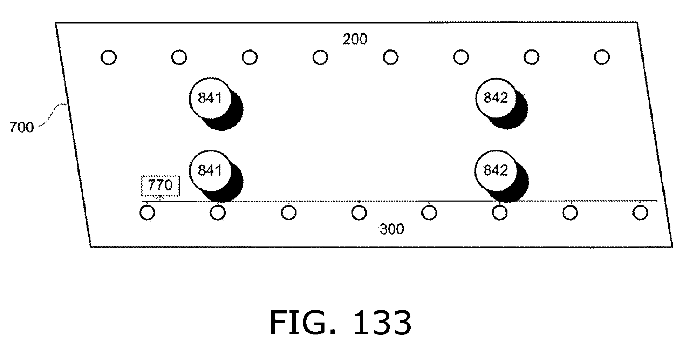

In some embodiments, the light guide frame includes protruding lips **520** and **521,** shown in **FIG. 132,** that extend over the edges of screen **800,** to counter balance the upward force of resilient members **841** and **842** when no downward pressure is applied to screen **800.** Resilient members **841** and **842** may comprise inter alia a flexible mounting material, a torsion spring, an elastic polymer body, or a hydraulic suspension system. **FIG. 133** shows emitters **200,** receivers **300** coupled with calculating unit **770,** and resilient members **841** and **842** arranged on a single PCB **700.**

In other embodiments, the touch screen is not displaceable relative to the frame. However, the screen flexes or bends somewhat in response to a hard press. The bending of the screen causes a sudden increase in detected light in many of the receivers, indicating a hard press on the screen. As indicated hereinabove, detection of a hard press may be conditioned upon a touch also being detected at the same time, thus preventing false detection of a hard press in response to trauma to the device.

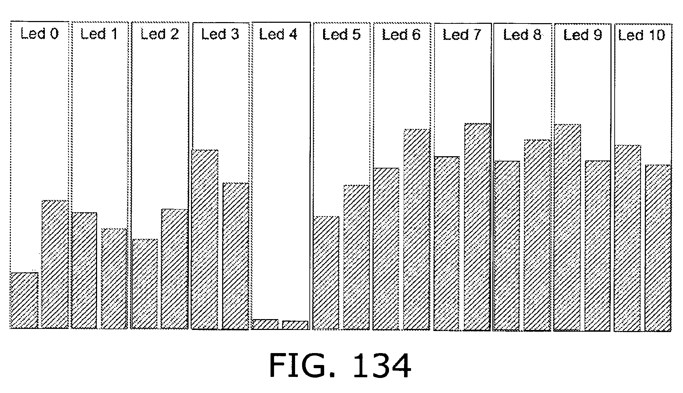

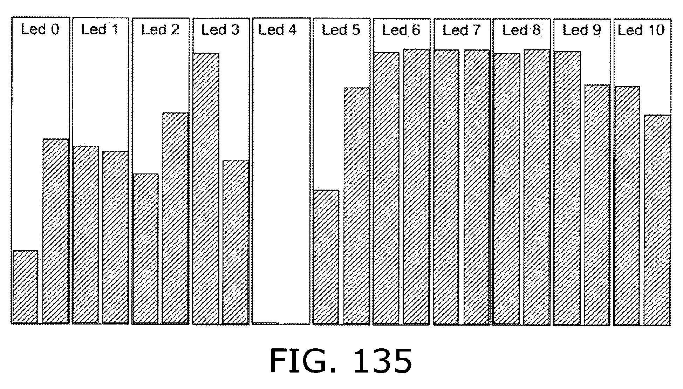

Reference is made to **FIGS. 134** and **135,** which are bar charts showing increase in light detected, when pressure is applied to a rigidly mounted 7-inch LCD screen, in accordance with an embodiment of the present invention. The bar charts show the amount of light detected from each emitter along one edge of the screen when a soft touch occurs (**FIG. 134**), and when a hard touch occurs (**FIG. 135**). The light emitters and light receivers are shift-aligned, so that light from each emitter is detected by two receivers. As such, two bars are shown for each emitter, indicating the light detected by each of the two receivers. Both bars indicate that a touch is detected at receivers opposite LED 4, where no light is detected. The bar charts show that more light is detected from neighboring emitters in the case of a hard touch, than in the case of a soft touch.

**Operation of Configurations Nos. 2 and 3**

The following discussion relates to methods of operation for arrangements of the optical elements shown in configurations nos. 2 and 3, around a touch screen, used in conjunction with the cover glass described above with reference to configurations nos. 6 and 7, to achieve accurate touch detection based on total internal reflection. These methods are of advantage for pen and stylus support, which have fine touch points, and provide highly accurate touch location determination for single-finger and multi-finger touches as well.

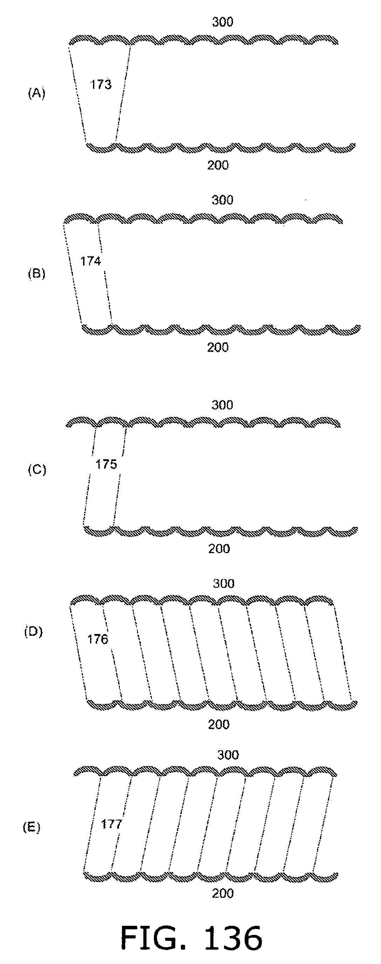

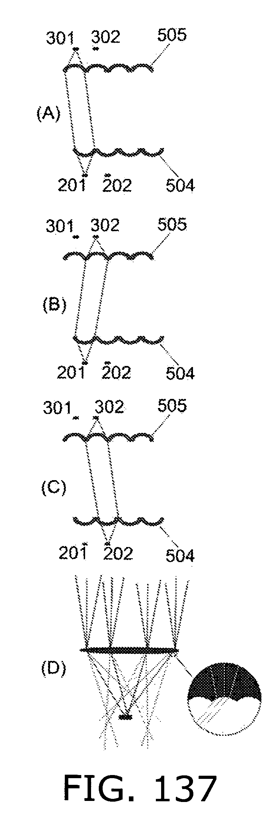

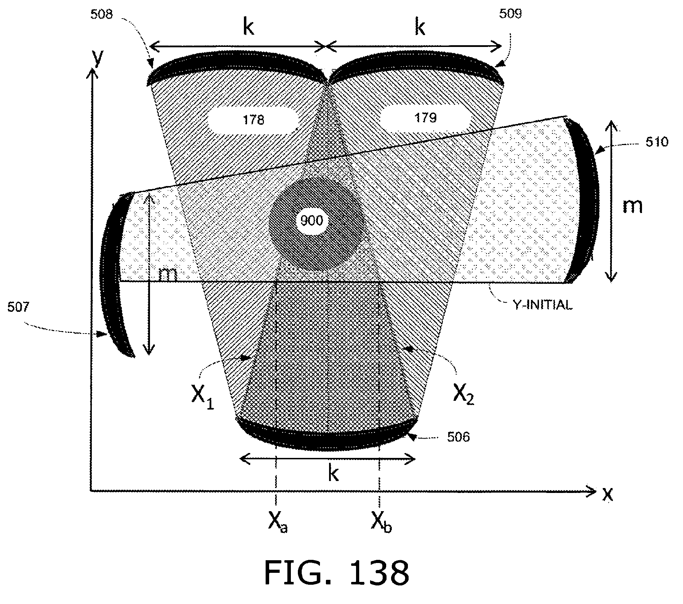

Reference is made to **FIGS. 136** and **137,** which are illustrations of opposing rows of emitter lenses and receiver lenses in a touch screen system, in accordance with an embodiment of the present invention. Positioned behind each emitter and receiver lens is a corresponding respective light emitter **200** or light receiver **300**. As shown in **FIG. 138,** each emitter **200** is positioned opposite two receivers **300** that detect light beams emitted by the emitter. Similarly, each receiver **300** is positioned opposite two emitters **200,** and receives light beams emitted from both emitters.

**FIG. 136** shows **(A)** a single, full beam **173** from an emitter **200** that spans two receivers **300; (B)** the portion of the full beam, designated **174,** detected by the left one of the two receivers **300; (C)** the portion of the full beam, designated **175,** detected by the right one of the two receivers **300; (D)** multiple beams **176,** for multiple emitters **200,** covering the touch screen, and **(E)** multiple beams **177,** for multiple emitters **200,** covering the touch screen. Generally, each emitter **200** is activated alone. Precision touch detection is described hereinbelow, wherein a touch point is detected by multiple beams. It will be appreciated from **(D)** and **(E)** that points on the screen are detected by at least one beam **176** and one beam **177.**

To conserve power, when the touch screen is idle only one set of beams, namely, beams **176** or beams **177,** are scanned in a scanning sweep, and only for the axis with the smallest number of emitters **200**. The scanning toggles between beams **176** and beams **177,** and thus two scanning sweeps along the axis activate every emitter-receiver pair along the axis. The other axis, with the larger number of emitters, is only scanned when either a touch is present, or when a signal differs from its reference value by more than an expected noise level, or when an update of reference values for either axis is being performed. Reference values are described in detail hereinbelow.

**FIG. 137** shows **(A)** an emitter **201** sending light to a receiver **301** at an angle of 15o to the left; **(B)** emitter **201** sending light to a receiver **302** at an angle of 15o to the right; **(C)** emitter **202** sending light to receiver **302** at an angle of 15o to the left; and **(D)** a microstructure refracting incoming light. The emitter lenses and receiver lenses shown in **FIG. 137** are equipped with the microstructure shown in **(D),** in order (i) to emit light in both left and right directions from multiple locations along the emitter lens surface, and (ii) to ensure that light received at any angle of incidence at any location along the receiver lens surface is detected by the receiver.

Reference is made to **FIG. 138,** which is a simplified illustration of a technique for detecting a touch location, by a plurality of emitter-receiver pairs in a touch screen system, in accordance with an embodiment of the present invention. Shown in **FIG. 138** is an optical emitter lens **506** of width **k,** positioned opposite two optical receiver lenses **508** and **509,** each of width **k,** on a touch screen. A pointer, **900,** touching the screen blocks a portion of the light beam emitted from optical emitter lens **506**. Optical emitter lens **506** emits overlapping beams that cover both optical receiver lenses **508** and **509**. The spread angle of the wide beam depends on the screen dimensions, and on the lens width, **k,** along the x-axis. Another optical emitter lens **507** is also shown, shifted by half an element width, **m,** below an optical receiver lens **510**.

In accordance with an embodiment of the present invention, at least one surface of optical emitter lens **506** is textured with a plurality of ridges. Each ridge spreads a beam of light that spans the two opposing receiver lenses **508** and **509**. As such, light from each of many points along the surface of optical emitter lens **506** reaches both opposing receiver lenses **508** and **509,** and the light beams detected by adjacent receivers overlap. In configuration no. 2 these ridges form a feather pattern, and in configuration no. 3 these ridges form a tubular pattern.

In accordance with an embodiment of the present invention, the ridges form microlenses, each having a pitch of roughly 0.2 - 0.5 mm, depending on the touch screen configuration. In the case of a feather pattern, the ridges form a fan, and their pitch narrows as the ridges progress inward and become closer together. In the case of a tubular pattern, the pitch of each micro-lens remains constant along the length of the micro-lens.

At least one surface of each receiver lens **508** and **509** is similarly textured, in order that at least a portion of light arriving at each of many points along the receiver lens surface, arrive at the receiver photo diode.

In accordance with an embodiment of the present invention, the output x and y coordinates are filtered temporally and spatially. The following discussion relates to determination of the x-coordinate, and it will be appreciated by those skilled in the art that the same method applies to determination of the y-coordinate.

Configurations nos. 2 and 3 show that a touch location is detected by at least two emitter-receiver pairs. **FIG. 138** shows two such emitter-receiver pairs, **506-508** and **506-509,** detecting a touch location of object **900** along the x-axis. In **FIG. 138,** beams **506-508** are denoted by beam **178,** and beams **506-509** are denoted by beam **179. FIG. 138** shows three detection areas; namely,(i) the screen area detected by emitter-receiver pair **506-508,** drawn as a wedge filled with right-sloping lines, (ii) the screen area detected by emitter-receiver **506-509,** drawn as a wedge with left-sloping lines, and (iii) the screen area detected by both emitter-receiver pairs **506-508** and **506-509,**drawn as a wedge with a crosshatch pattern. The left and right borders of this third screen area are shown as lines $X_1$ and $X_2$, respectively.

In order to determine the x-coordinate $X_p$ of object **900**'s touch location $(X_p, Y_p)$, an initial y-coordinate, $Y_{initial}$, is determined corresponding to the location along the y-axis of the emitter-receiver pair having the maximum touch detection signal among all emitter-receiver pairs along the y-axis. In **FIG. 138,** this emitter-receive pair is **507-510**. The lines designated $X_1$ and $X_2$ in **FIG. 138** are then traversed until they intersect the line $y = Y_{initial}$ at locations $(X_a, Y_{initial})$ and $(X_b, Y_{initial})$. Coordinates $X_a$ and $X_b$ are shown in **FIG. 138.** The x-coordinate of object **900** is then determined using the weighted average

$$X_P = (W_a X_a + W_b X_b) / (W_a + W_b) , \qquad (2)$$

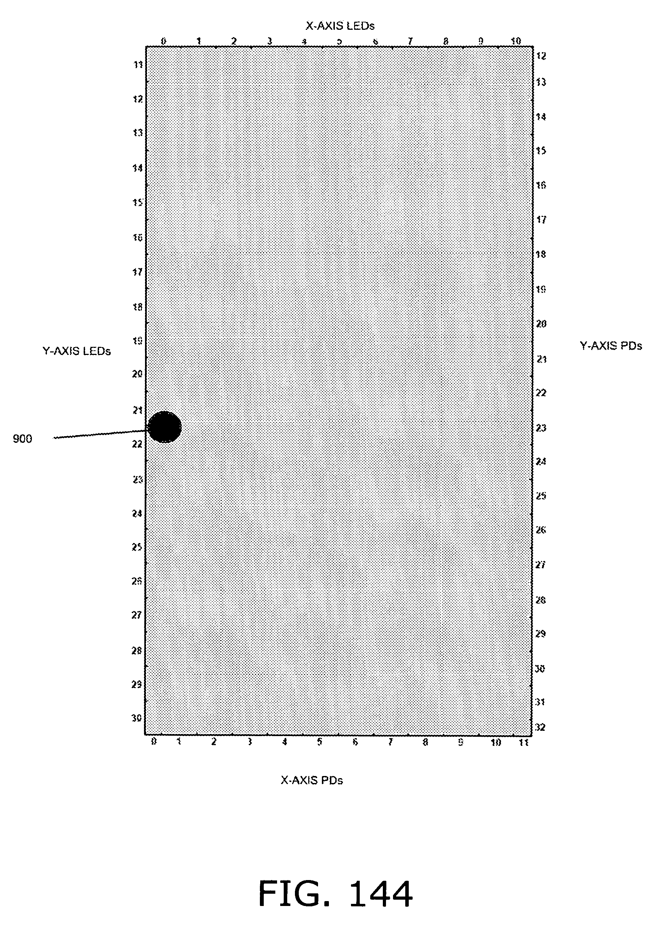

where the weights $W_a$ and $W_b$ are normalized signal differences for beam **178** and beam **179,** respectively. The signal difference used is the difference between a baseline, or expected, light value and the actual detected light value. Such difference indicates that an object is touching the screen, blocking a portion of the expected light. The weights $W_a$ and $W_b$ are normalized because the detection signal of a touch occurring near the row of emitters is different from a touch occurring near the row of receivers, as described hereinbelow with reference to **FIGS. 144 - 151.** A touch screen design is tested to determine different signal strength and attenuation patterns as an object crosses a beam at various portions along the length of the beam. Different scenarios are tested, e.g., a scenario for objects near the beam's emitter, a scenario for objects near the beam's receiver, and a scenario for objects in the middle of the screen. When a touch is detected, the detection pattern of detecting receivers is analyzed to select an appropriate scenario, and the signals are normalized according to the selected scenario. Calibration and further normalization of the weights is described hereinbelow. A similar weighted average is used to determine the y-coordinate $Y_p$.

If the pointer **900** is detected by more than two emitter-receiver pairs, then the above weighted average is generalized to

$$X_P = \Sigma(W_n X_n) / (\Sigma W_n) , \qquad (3)$$

where the weights $W_n$ are normalized signal differences, and the $X_n$ are weight positions.

In one embodiment of the present invention, where the pointer **900** is a small object, the largest signal difference is used in conjunction with the two closest signals to calculate the position. This compensates for the fact that the signal differences for small objects are small, and noise thus becomes a dominant error factor. Use of the two closest signals reduces error due to noise. In another embodiment of the present invention, only the two largest signal differences are used.

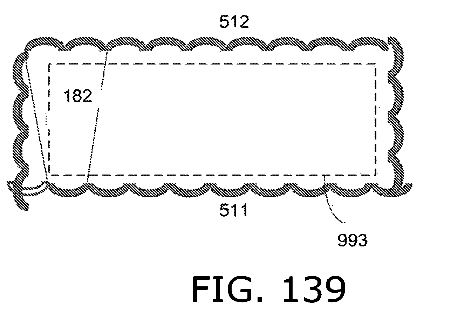

Reference is made to **FIG. 139,** which is an illustration of a light guide frame for the configuration of **FIGS. 136** and **137,** in accordance with an embodiment of the present invention. Shown in **FIG. 139** are four edges of a light guide frame, with optical emitter lenses **511** and optical receiver lenses **512.** It is noted that the inner edges of the frame are not completely covered by beams **182.** As such, in some embodiments of the present invention only an inner touch area **993,** indicated by the dashed rectangle, is used.

To reduce error due to signal noise, the final coordinate is determined as the output of a temporal filter, using the spatially filtered current coordinate value, determined as above, and a previous coordinate value. The higher the filter weight given to the current x-coordinate, the closer the output will be to that value, and the less will be the impact of the filter. Generally, use of substantially equal weights for both coordinate values results in a strong filter. In one embodiment of the present invention, the temporal filter is a low-pass filter, but other filters are also contemplated by the present invention. In accordance with an embodiment of the present invention, different pre-designated filter weight coefficients may be used in different cases. In an alternative embodiment, the filter weight coefficients are calculated as needed.

Choice of appropriate filter coefficients is based on scanning frequency, the speed at which a touch object is moving across the screen, whether the object motion is along a straight line or not, and the size of the touch object.

Generally, the higher the scanning frequency, the nearer the current coordinate value is to the previous coordinate value, and a stronger filter is used. Scanning frequency is used to estimate the speed and direction of movement of an object. Based on the scanning frequency, a threshold distance is assigned to two input values, the threshold indicating fast movement. If the difference between the current and previous coordinate values is greater than the threshold distance, a weaker filter is used so that the output coordinate not lag considerably behind the actual touch location. It has been found by experiment that the filter

$$\text{output\_val} = 1/10 * \text{previous\_val} + 9/10 * \text{current\_val} \qquad (4)$$

provides good results in this case. In addition, the lag value, described hereinbelow, is reset to equal the output value in this case.

If the difference between the current and previous coordinate values is less than the threshold distance, then a lag value is determined. The lag value indicates speed and direction along an axis. In has been found by experiment that the value

$$lag = 5/6 * lag + 1/6 * current\_val \qquad (5)$$

provides good results in this case. The filter weight coefficients are selected based on the difference between the lag value and the current coordinate value. Generally, the greater this difference, which indicates either fast motion or sudden change in direction, the weaker the filter.

For example, if the touch object is stationary, the lag value eventually is approximately equal to the current coordinate value. In such case, signal noise may cause small differences in the spatially calculated touch position, which in turn may cause a disturbing jitter effect; i.e., the touch screen would show the object jittering. Use of a strong temporal filter substantially dampens such jittering.

If the touch object is moving fast or makes a sudden change in direction, a strong temporal filter may create a perceptible lag between the actual touch location and the displayed touch location. In the case of a person writing with a stylus, the written line may lag behind the stylus. In such cases, use of a weak temporal filter reduces such lagging.

When the touch object covers a relatively large screen area, such as a finger or other blunt object touching the screen, the lag between the actual finger motion and the displayed trace of the motion is less perceptible, because the finger covers the area of the lag. In such case, a different temporal filter is used.

The type of object, finger vs. stylus, being used may be inferred by knowing expected user behavior; e.g., a user interface intended for finger touch assumes a finger being used. The type of object may also be inferred by the shadowed area created by the object. The size of the touch area as determined based on shadowed emitter signals, is therefore also a factor used in selecting temporal filter weight coefficients.

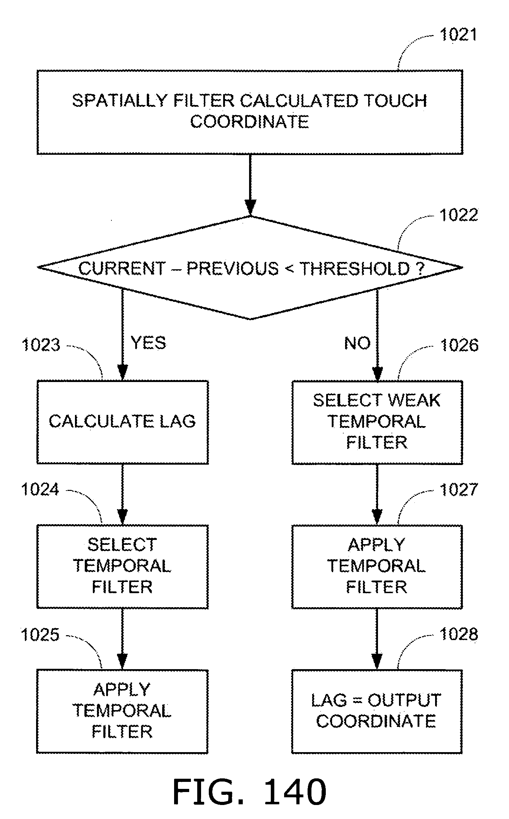

Reference is made to **FIG. 140,** which is a simplified flowchart of a method for touch detection for a light-based touch screen, in accordance with an embodiment of the present invention. At operation **1021,** a current coordinate value is received, based on a spatial filter that processes signals from multiple emitter-receiver pairs. A threshold distance is provided, based on a scan frequency. At operation **1022,** the difference between the current coordinate value and a previous coordinate value is compared to the threshold distance. If the difference is less than or equal to the threshold distance, then at operation **1023** a new lag value is calculated, as in **EQ. (5)**. At operation **1024** temporal filter weight coefficients are determined based on the difference between the current coordinate value and the lag value. At operation **1025,** the temporal filter is applied to calculate an output coordinate value, as in **EQ. (4)**.

If, at operation **1022,** the difference between the current coordinate value and previous coordinate value is greater than the threshold distance, then weak filter weight coefficients are selected at operation **1026.** At operation **1027,** the temporal filter is applied to calculate an output coordinate value, as in **EQ. (4).** At operation **1028** the lag value is set to the output coordinate value.

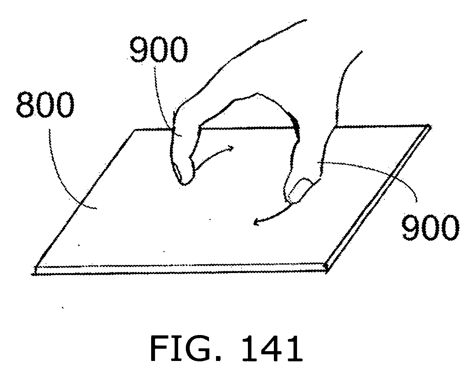

Following examples provide a method and apparatus for detecting a multi-touch operation whereby two touches occur simultaneously at two corners of a touch screen. An example of such a multi-touch is a rotation gesture, shown in **FIGS. 141 - 143,** whereby a user places two fingers **900** on a screen **800** and turns them around an axis. As pointed out hereinabove with reference to **FIGS. 15** and **16,** it is difficult for a light-based system to discriminate between a top-left & bottom-right touch vs. a bottom-left & top-right touch. Use of shift-aligned emitters and receivers enables such discrimination, as described hereinbelow.

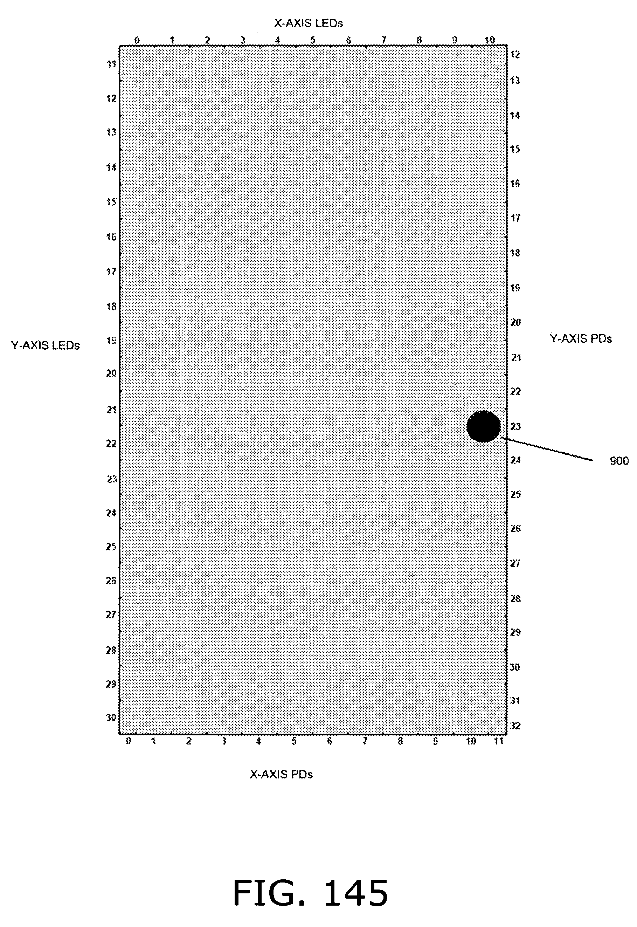

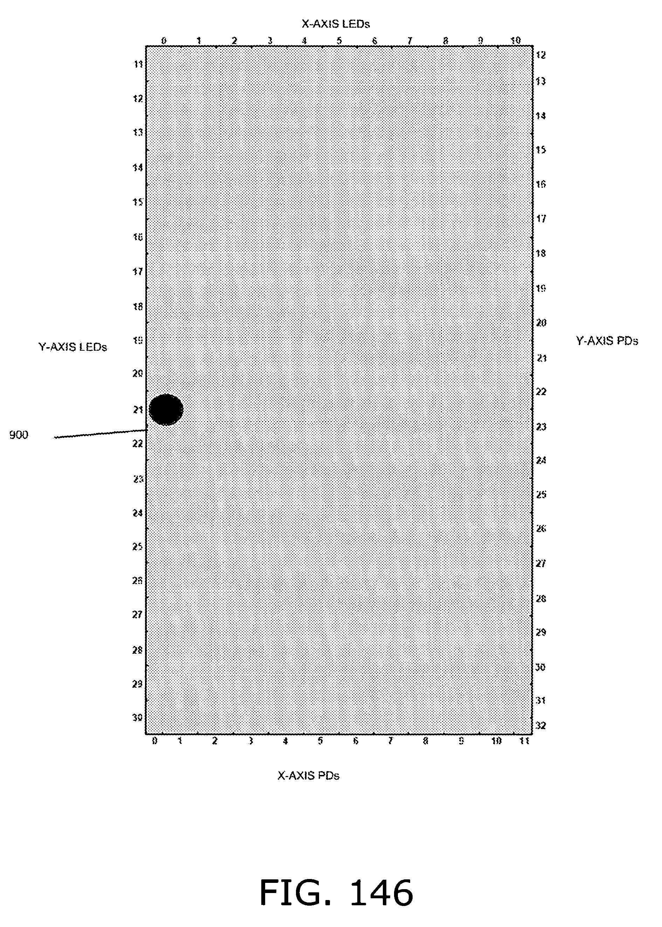

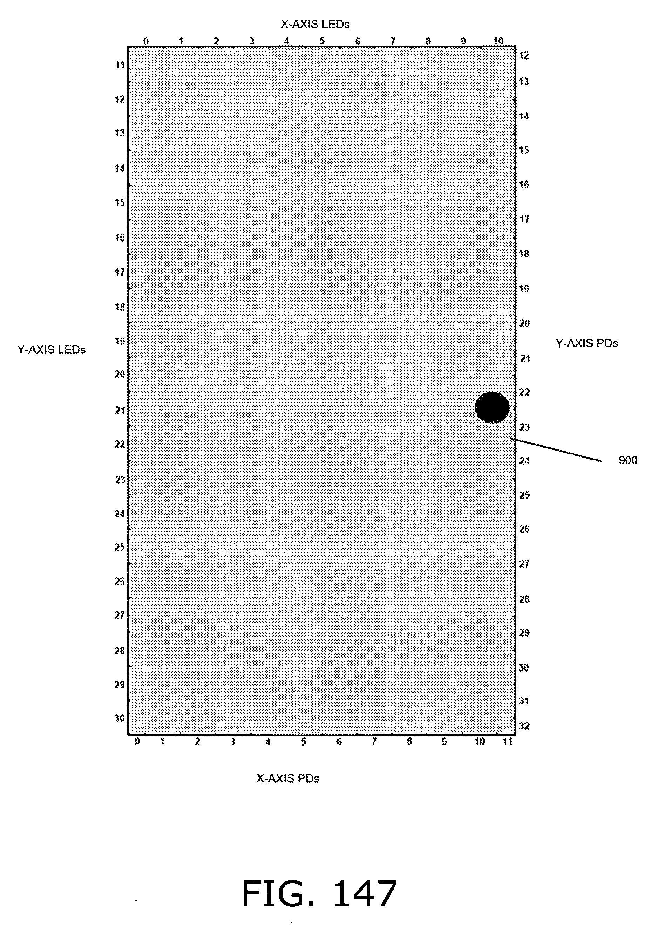

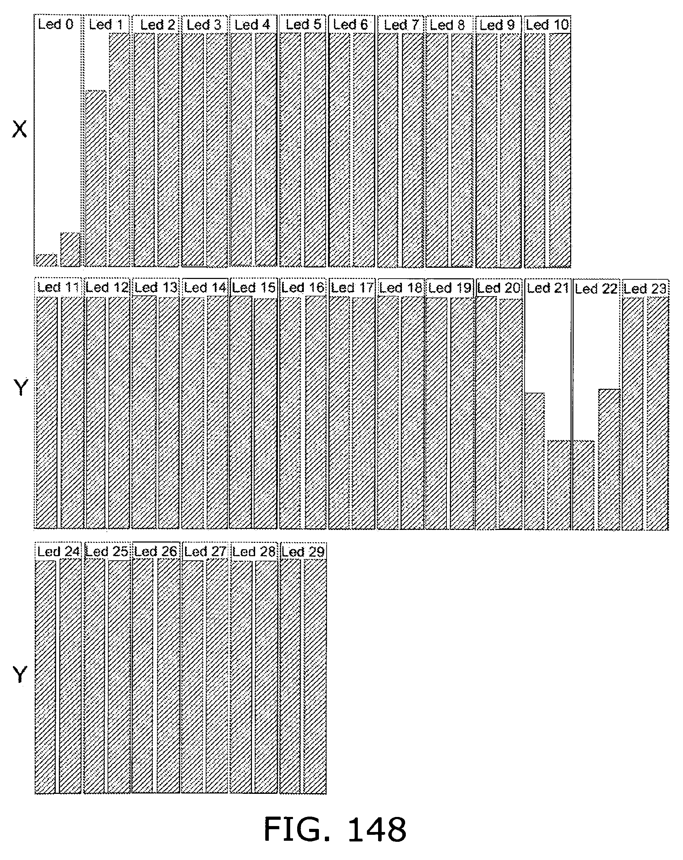

In accordance with an example, data from receivers along a first axis is used to determine a touch location along two axes. Reference is made to **FIGS. 144 - 147** which are illustrations of a finger **900** touch event at various locations on a touch screen, and corresponding **FIGS. 148 - 151,** which are respective bar charts of light saturation during the touch events, in accordance with an example. **FIG. 144** shows a touch located near a row of emitters, between two emitters. **FIG. 145** shows a touch located near a row of receivers, blocking a receiver. **FIG. 146** shows a touch located near a row of emitters, blocking an emitter. **FIG. 147** shows a touch located near a row of receivers, between two receivers.

**FIGS. 148 - 151** each include two bar charts; namely, an upper chart showing light saturation at receivers along an x-axis, and a lower chart showing light saturation at receivers along a y-axis. Each row of receivers is shift-aligned with an opposite row of emitters. As such, each emitter is detected by two receivers. Correspondingly, **FIGS. 148 - 151** show two bars for each emitter, one bar per receiver.

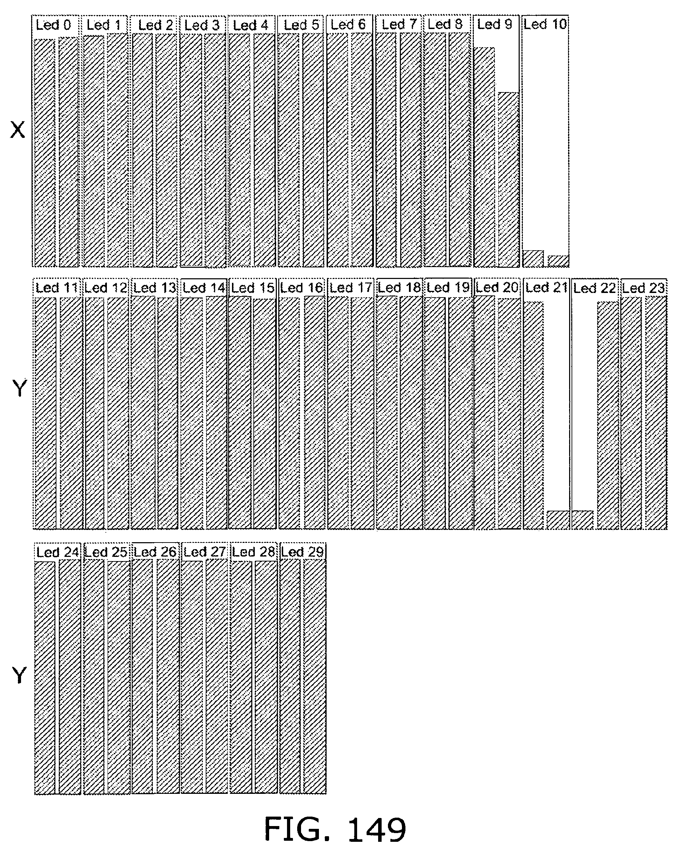

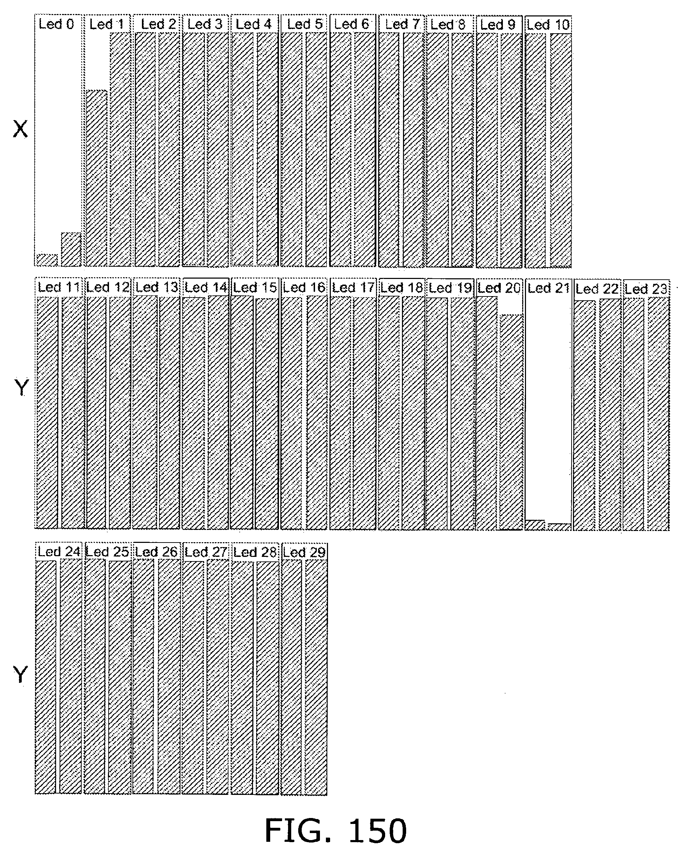

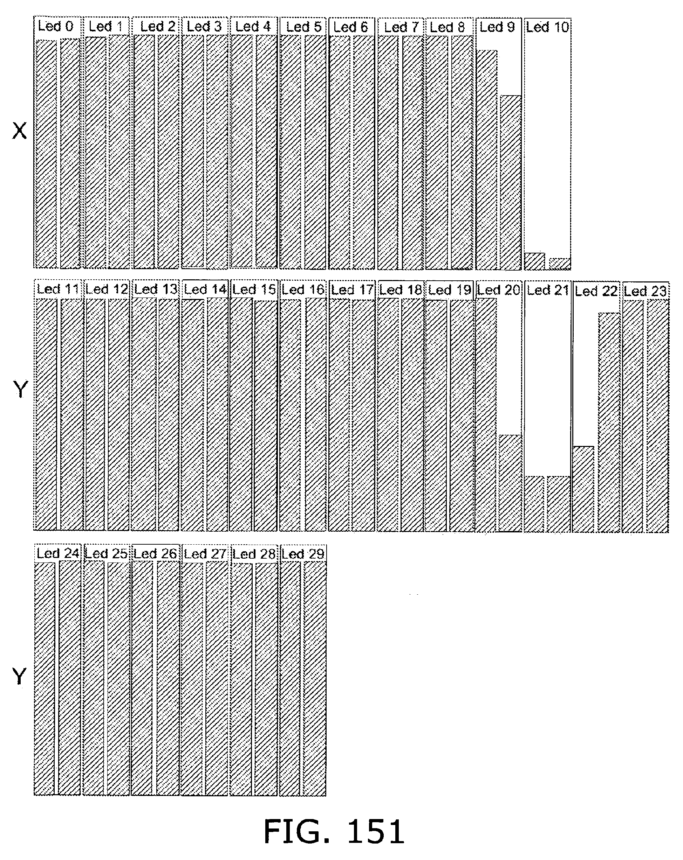

**FIGS. 148 - 151** exhibit four distinct detection patterns. **FIG. 148** shows an absence of light detected primarily by one receiver from its two respective emitters. The absence of light is moderate. **FIG. 149** shows an absence of light detected primarily by one receiver from its two respective emitters. The absence of light is large. **FIG. 150** shows two adjacent receivers detecting a large absence of expected light from the blocked emitter. Both receivers detect some light from neighboring elements. **FIG. 151** shows two adjacent receivers detecting a moderate absence of expected light from the blocked emitter. Both receivers detect some light from neighboring emitters. **TABLE III** summarizes these different patterns.

| Pattern No. FIGS. | Touch Location | No. of Receivers Detecting the Touch | Amount of Expected Light that is Blocked |
|---|---|---|---|
| **TABLE III:** Patterns of touch detection based on proximity to and alignment with emitters and receivers | | | |
| | | | |
| 1<br><br>FIG. 144<br>FIG. 148 | Near a row of emitters, between two emitters | 1 | Moderate |
| 2<br><br>FIG. 145<br>FIG. 149 | Near a row of receivers, blocking a receiver | 1 | Large |
| 3<br><br>FIG. 146<br>FIG. 150 | Near a row of emitters, blocking an emitter | 2 | Large |
| 4<br><br>FIG. 147<br><br>FIG. 151 | Near a row of receivers, between two receivers | 2 | Moderate |

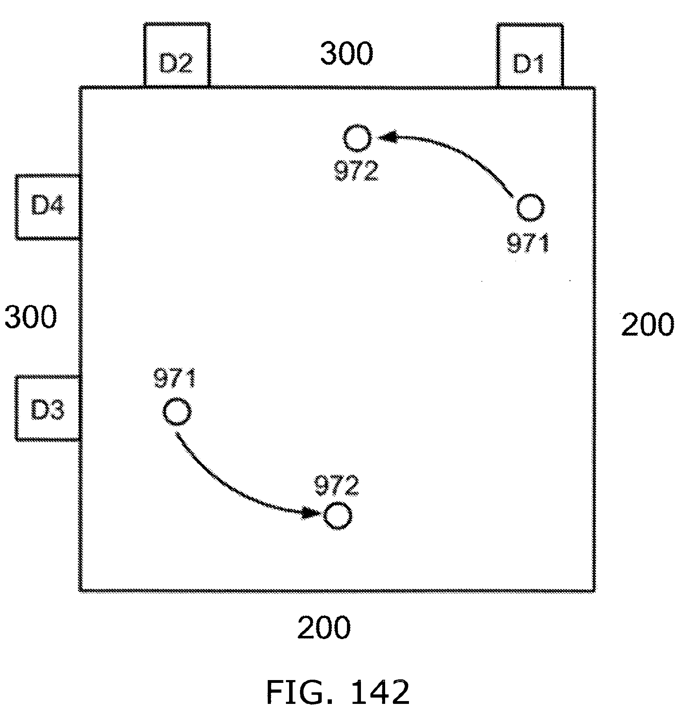

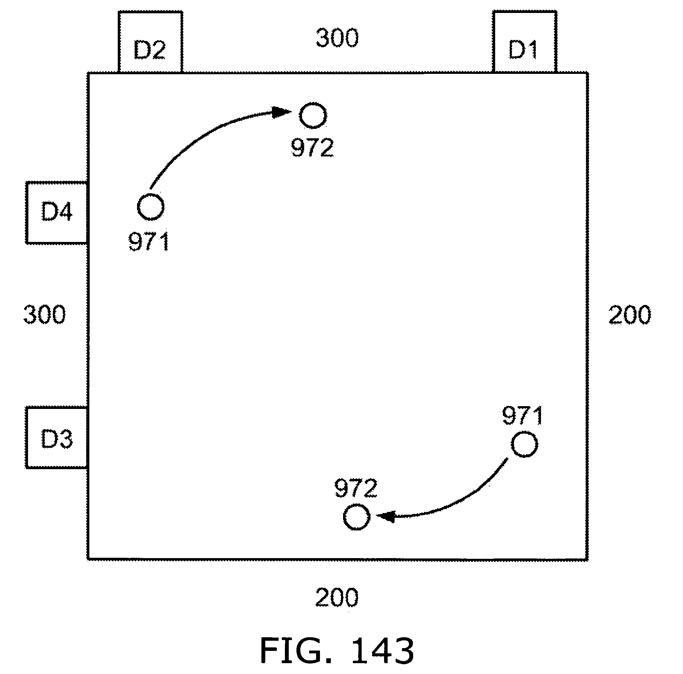

According to an example, determination of location of a multi-touch is based on the patterns indicated in **TABLE III.** Thus, referring back to **FIG. 142,** four detection points are shown along two rows of receivers. Detections **D1 - D4** detect touch points **971** in upper-right & lower-left corners of the screen. Based on whether the detection pattern of each point is of type 1 or 3, or of type 2 or 4, the detection patterns determine whether the corresponding touch is closer to the emitters, or closer to the receivers. Each touch has two independent indicators; namely, the X-axis detectors, and the Y-axis detectors. Thus, for detection points **971** in **FIG. 142,** detections **D1** and **D3** are of types 2 or 4, and detections **D2** and **D4** are of types 1 or 3. In distinction, for detection points **971** in **FIG. 143**, detections **D2** and **D4** are of types 2 or 4, and detections **D1** and **D3** are of types 1 or 3.

In addition to evaluation of detection points independently, the various detection patterns may be ranked, to determine which touch point is closer to the emitters or to the receivers.

Moreover, when a rotate gesture is performed, from touch points **971** to touch points **972,** movement of detections discriminates whether the gesture glides away from the emitters and toward the receivers, or vice versa. In particular, subsequent detections are compared, and discrimination is based on whether each detection pattern is becoming more like type 1 or 3, or more like type 2 or 4.

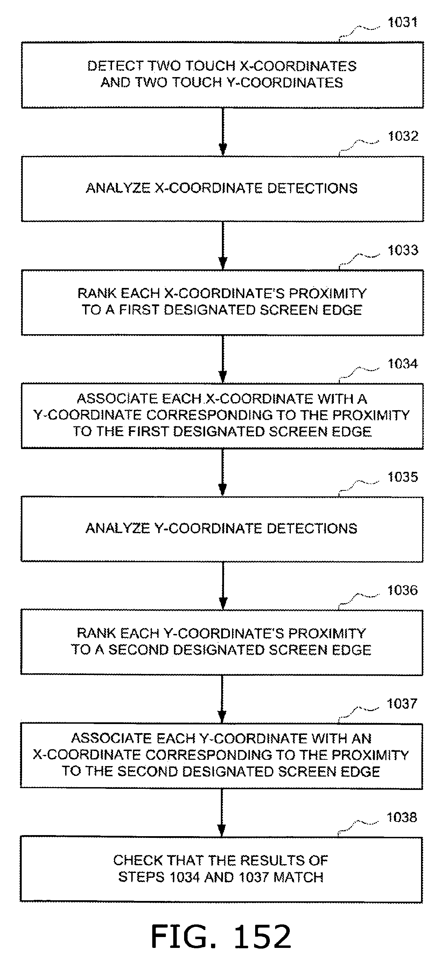

Reference is made to **FIG. 152,** which is a simplified flowchart of a method for determining the locations of simultaneous, diagonally opposed touches, in accordance with an example. At operation **1031,** two x-coordinates and two y-coordinates are detected, such as x-coordinates **D1** and **D2,** and y-coordinates **D3** and **D4,** shown in **FIGS. 142** and **143.** At operation **1032** the detected x-coordinates are analyzed to identify a pattern of detection from among those listed in **TABLE I.** At operation **1033** the detected x-coordinates are ranked according to touches that occurred closer to or farther from a designated screen edge, based on the pattern detected at operation **1032** and based on the "Touch Location" column of TABLE III. The y-coordinates represent distances from the designated edge. At operation **1034,** each ranked x-coordinate is paired with a corresponding y-coordinate. Operations **1035 - 1037** are performed for the y-coordinates, similar to operations **1032 - 1034** performed for the x-coordinates. At operation **1038,** the two sets of results are compared.

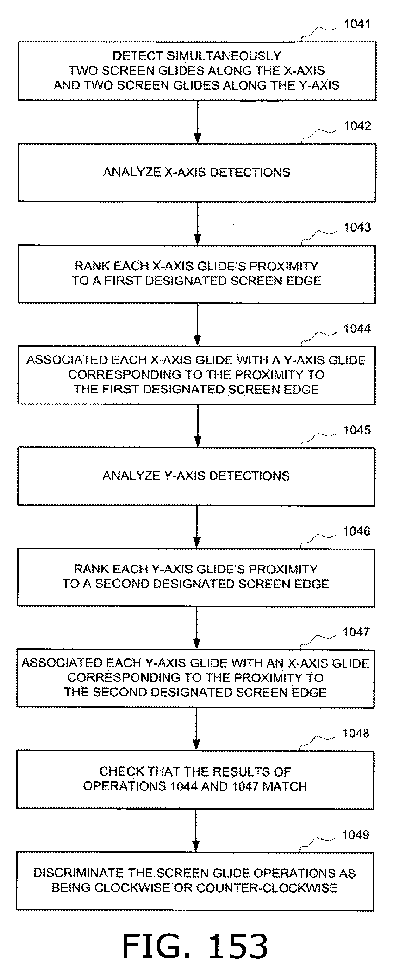

Reference is made to **FIG. 153,** which is a simplified flowchart of a method for discriminating between clockwise and counter-clockwise gestures, in accordance with an example. At operation **1041,** two glide gestures are detected along an x-axis. Each glide gesture is detected as a series of connected touch locations. Thus, with reference to **FIGS. 142** and **143,** a first glide gesture is detected as a connected series of touch locations beginning at x-coordinate **D1,** and a second concurrent glide gesture is detected as a connected series of touch locations beginning at x-coordinate **D2.** At operation **1042,** the x-glide detections are analyzed to determine the types of detections that occurred in each series, from among the patterns listed in **TABLE III.**

At operation **1043,** the x-glide detections are ranked according to touches that occurred closer to or farther from a designated screen edge, based on the patterns of detections determined at operation **1042,** and based on the "Touch Location" column of **TABLE III.** Operation **1043** relates to series of connected touch detections over a time interval. Each series generally includes touch detections of patterns 1 and 3, or of patterns 2 and 4, listed in **TABLE III,** depending on whether the glide was closer to or further away from the designated edge. In addition to analyzing the individual detections that comprise a glide, the series of touch detections is also analyzed to determine if the glide is moving closer to or farther from the designated edge, based on comparison of intensities of detections over time. E.g., in one series of detections having multiple pattern 1 detections, if the amount of blocked light increases over time, then it is inferred that the glide is moving toward the receivers, otherwise the glide is moving toward the emitters.

The y-coordinates represent distances from a designated edge, such as the edge of emitters. At operation **1044** each ranked x-axis glide is paired with a corresponding y-axis glide. Operations **1045 - 1047** are performed for the y-axis glide, similar to operations **1042 - 1044** performed for the x-axis glide. At operation **1048** the two sets of results are compared. At step **1049** a discrimination is made as to whether the rotation gesture is clockwise or counter-clockwise.

**FIGS. 63** and **79** show alignments of emitters and receivers whereby right and left halves of each beam overlap neighboring beams, as shown in **FIGS. 70** and **82.** Three beams are shown in these figures; namely, beams **167, 168** and **169.** The left half of beam **167** overlaps the right half of beam **168,** and the right half of beam **167** overlaps the left half of beam **169.** As such, a touch at any location within beam **167** is detected by two beams. The two detecting beams have different detection gradients along the widths of the beams, as shown by light detection areas **910 - 912** in the figures.

The gradient of light attenuation is substantially linear across the width of the beam. As such, a weighted average of the different detection signals is used to calculate a position along one axis using **EQS. (2)** and **(3)** above. **EQ. (2)** extends to a number, *n*, of samples. E.g., if a finger at the center of beam **a** blocks 40% of the expected signal of beam **a,** and blocks none of the expected signal of beam **b,** then $W_a$ and $W_b$ are 0.4 and 0, respectively, and the location $X_P$ is calculated as

$$X_P = (0.4 \,^* X_a + 0 \,^* X_b) / (0.4 + 0) = X_a .$$

The same value of $X_P$ is obtained for a stylus at the screen position which, due to its being narrower than the finger, blocks only 20% of the expected signal of beam **a.**

Similarly, if a finger between the centers of beams **a** and **b** blocks similar amounts of expected light from both beams, say 30%, then $X_P$ is calculated as

$$X_P = (0.3 \,^* X_a + 0.3 \,^* X_b) / (0.3 + 0.3) = \tfrac{1}{2}(X_a + X_b) ,$$

which is the midpoint between $X_a$ and $X_b$.

Location calculation in a system of aligned emitters and receivers differs in several aspects from location calculation in a system of shift-aligned emitters and receivers. In a system of aligned emitters and receivers, beams are aligned with the coordinate system used for specifying the touch location. In this case, the touch location is calculated along a first axis without regard for the touch location along the second axis. By contrast, in a shift-aligned system the primary beam coordinate, e.g., $X_a$ for beam **a,** is determined based on an assumed touch coordinate on the second axis, $Y_{initial}$.

Further, in a system of aligned emitters and receivers the attenuation and signal strength pattern generated by an object crossing the beam is substantially the same at all locations along the length of the beam. As described hereinabove with reference to **FIGS. 76** and **107,** as an object moves across the width of a beam, it generates substantially similar signal patterns whether it crosses the beam near the beam's emitter, detector or in mid-screen. Therefore, an initial normalizing of weights, $W_a$, $W_b$, ..., $W_n$, based on the detection pattern is required in shift-aligned systems, and is not required in aligned systems.

When a light-blocking object is placed at the center of a beam, such as beam **167** in **FIGS. 70** and **82,** a portion of the neighboring beam is blocked. E.g., 40% of beam **167** is blocked and 5% of beam **168** is blocked. However, the signals include both random noise and also noise caused by the alternating facets that may account for signal fluctuations. A technique is required to determine whether the touch is in fact at the center of beam **167,** or slightly offset from the center.

In accordance with an embodiment of the present invention, multiple samples of each signal are taken, and combined to filter out signal noise. Additionally, the neighboring beams **168** and **169** are configured by their respective optical elements to overlap around the center of beam **167,** as seen in **FIGS. 72** and **106** where all three signals detect touches around the center of the middle signal. In cases where the main detection signal is concentrated in one beam, detection signals from both left and right neighboring beams are used to fine tune the touch location calculation. Specifically, filtered signals of neighboring beams **168** and **169** are used to determine an offset from the center of beam **167.**

In embodiments with optical elements with three-way lenses that create light beams along two sets of axes, similar calculations are performed on the diagonal detection beams to determine locations on the second axis system. As described hereinabove, touch objects typically block a larger portion of the diagonal signals than of the orthogonal signals.

The spatial and temporal filters described hereinabove with reference to shift-aligned emitter-receiver arrangements are applied in aligned emitter-receiver arrangements as well.

**Calibration of Touch Screen Components**

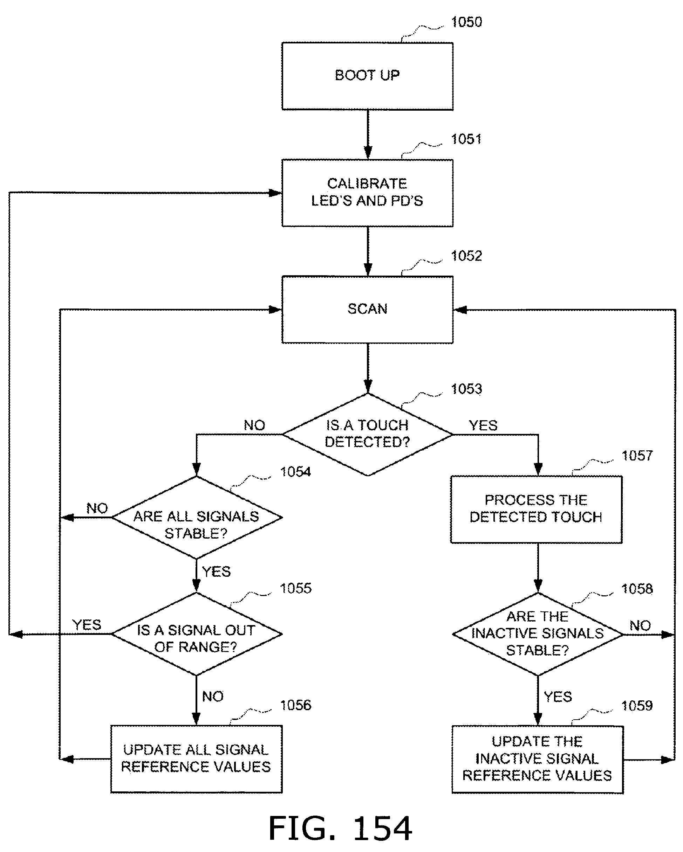

Reference is made to **FIG. 154,** which is a simplified flowchart of a method of calibration and touch detection for a light-based touch screen, in accordance with an embodiment of the present invention. In general, each emitter/receiver pair signal differs significantly from signals of other pairs, due to mechanical and component tolerances. Calibration of individual emitters and receivers is performed to ensure that all signal levels are within a pre-designated range that has an acceptable signal-to-noise ratio.

In accordance with an embodiment of the present invention, calibration is performed by individually setting (i) pulse durations, and (ii) pulse strengths, namely, emitter currents. For reasons of power consumption, a large current and a short pulse duration is preferred. When a signal is below the pre-designated range, pulse duration and/or pulse strength is increased. When a signal is above the pre-designated range, pulse duration and/or pulse strength is decreased.

As shown in **FIG. 154,** calibration (operation **1051**) is performed at boot up (operation 1050), and is performed when a signal is detected outside the pre-designated range (operation **1055**). Calibration is only performed when no touch is detected (operation **1053**), and when all signals on the same axis are stable (operation **1054**); i.e., signal differences are within a noise level over a time duration.

Reference signal values for each emitter/receiver pair are used as a basis of comparison to recognize a touch, and to compute a weighted average of touch coordinates over a neighborhood. The reference signal value for an emitter/receiver pair is a normal signal level. Reference signal values are collected at boot up, and updated when a change, such as a change in ambient light or a mechanical change, is detected. In general, as shown in **FIG. 154,** reference signal values are updated (operation **1056**) when signals are stable (operation **1054**); i.e., when signal variations are within an expected range for some number, N, of samples over time.

A touch inside the touch area of a screen may slightly bend the screen surface, causing reflections that influence detected signal values at photo diodes outside of the touch area. Such bending is more pronounced when the touch object is fine or pointed, such as a stylus. In order to account for such bending, when a touch is detected (operation **1053**), all stable signals (operation **1058**) outside the touch area undergo a reference update (operation **1059**). When no touch is present and all signals are stable (operation **1054**), but a signal along an axis differs from the reference value by more than the expected noise level (operation **1055**), the emitters are calibrated (operation **1051**). Recalibration and updating of reference values require stable signals in order to avoid influence of temporary signal values, such as signal values due to mechanical stress by bending or twisting of the screen frame.

To further avoid error due to noise, if the result of an emitter/receiver pair differs from a previous result by more than an expected noise level, a new measurement is performed, and both results are compared to the previous result, to get a best match. If the final value is within the expected noise level, a counter is incremented. Otherwise, the counter is cleared. The counter is subsequently used to determine if a signal is stable or unstable, when updating reference values and when recalibrating.

After each complete scan, signals are normalized with their respective reference values. If the normalized signals are not below a touch threshold, then a check is made if a recalibration or an update of reference values is necessary. If a normalized signal is below the touch threshold, then a touch is detected (operation **1053**).

To reduce risk of a false alarm touch detection, due to a sudden disturbance, the threshold for detecting an initial point of contact with the screen, such as when a finger first touches the screen, is stricter than the threshold for detecting movement of a point of contact, such as gliding of a finger along the screen while touching the screen. I.e., a higher signal difference is required to detect an initial touch, vis-à-vis the difference required to detect movement of an object along the screen surface. Furthermore, an initial contact is processed as pending until a rescan verifies that the touch is valid and that the location of the touch remains at approximately the same position.

To determine the size of a touch object (operation **1057**), the range of blocked signals and their amplitudes are measured. For large objects, there is a wait for detecting an initial point of contact with the screen, until the touch has settled, since the touch of a large object is generally detected when the object is near the screen before it has actually touched the screen. Additionally, when a large object approaches the screen in a direction not perpendicular to the touch area, the subsequent location moves slightly from a first contact location.

However, objects with small contact areas, such as a pen or a stylus, are typically placed directly at the intended screen location. As such, in some embodiments of the present invention, the wait for detecting an initial contact of a fine object is shortened or skipped entirely.

It has been found advantageous to limit the size of objects that generate a touch, in order to prevent detection of a constant touch when a device with a touch screen is stored in a pouch or in a pocket.

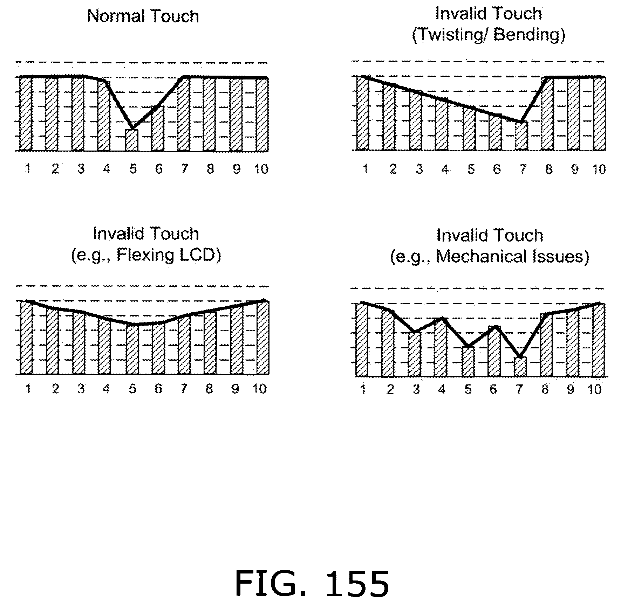

At operation **1053,** it is also necessary to distinguish between signals representing a valid touch, and signals arising from mechanical effects. In this regard, reference is made to **FIG. 155,** which is a picture showing the difference between signals generated by a touch, and signals generated by a mechanical effect, in accordance with an embodiment of the present invention. Each of the four graphs in **FIG. 155** shows detection beams 1 - 10 during a scan along one screen axis. As seen in **FIG. 155,** signal gradients discriminate between a valid touch and a mechanical effect.

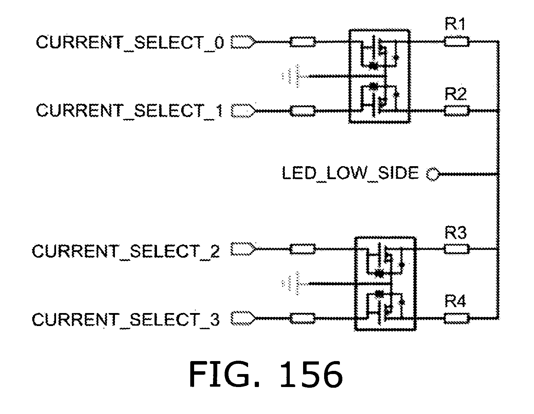

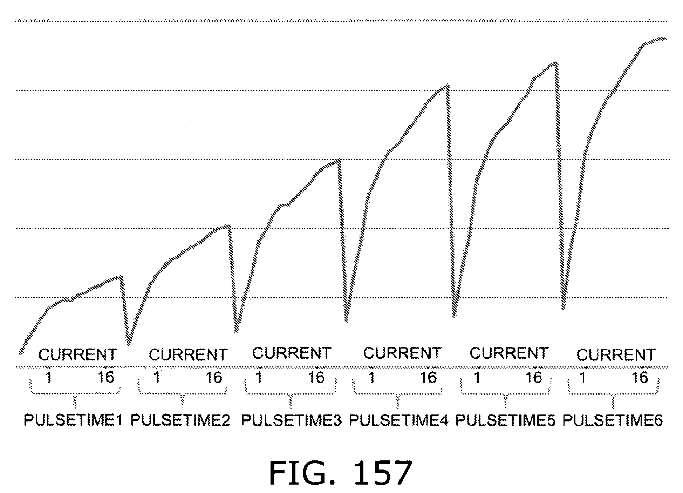

Reference is made to **FIG. 156,** which is a simplified diagram of a control circuit for setting pulse strength when calibrating a light-based touch screen, in accordance with an embodiment of the present invention. Reference is also made to **FIG. 157,** which is a plot of calibration pulses for pulse strengths ranging from a minimum current to a maximum current, for calibrating a light-based touch screen in accordance with an embodiment of the present invention. **FIG. 157** shows plots for six different pulse durations (PULSETIME1 - PULSETIME 6), and sixteen pulse strength levels (1 - 16) for each plot.

The control circuit of **FIG. 156** includes 4 transistors with respective variable resistors **R1, R2, R3** and **R4.** The values of the resistors control the signal levels and the ratio between their values controls gradients of the pulse curves shown in **FIG. 156.**

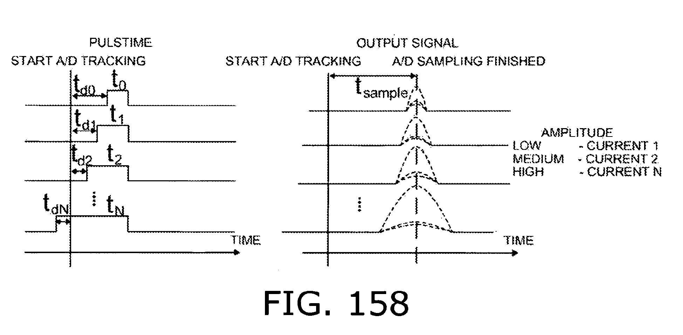

Reference is made to **FIG. 158,** which is a simplified pulse diagram and a corresponding output signal graph, for calibrating a light-based touch screen, in accordance with an embodiment of the present invention. The simplified pulse diagram is at the left in **FIG. 158,** and shows different pulse durations, $t_0$, ..., $t_N$, that are managed by a control circuit when calibrating the touch screen. As shown in **FIG. 158,** multiple gradations are used to control duration of a pulse, and multiple gradations are used to control the pulse current. The corresponding output signal graph is at the right in **FIG. 158.**

As shown in **FIG. 158,** different pulse durations result in different rise times and different amplitudes. Signal peaks occur close to the time when the analog-to-digital (A/D) sampler closes its sample and hold circuit. In order to obtain a maximum output signal, the emitter pulse duration is controlled so as to end at or near the end of the A/D sampling window. Since the A/D sampling time is fixed, the timing, $t_d$, between the start of A/D sampling and the pulse activation time is an important factor.

## Assembly of Touch Screen Components

As described hereinabove, a minimum of tolerances are required when aligning optical guides that focus on respective light emitters and light receivers, in order to achieve accurate precision on a light-based touch screen. A small misalignment can severely degrade accuracy of touch detection by altering the light beam. It is difficult to accurately place a surface mounted receiver and transmitter such that they are properly aligned with respective light guides.

Because of this difficulty, in an embodiment of the present invention, a light guide and transmitter or receiver are combined into a single module or optical element, as described above with reference to **FIGS. 115 - 118.**

In some instances it may be of advantage not to combine an emitter or a receiver into an optical element, e.g., in order to use standard emitter and receiver components. In such instances precision placement of components is critical.

In some embodiments of the present invention, the optical lens that includes the feather pattern is part of a frame that fits over the screen. **FIG. 46** shows a cross-section of such a frame **455,** which is separate from LED **200.**

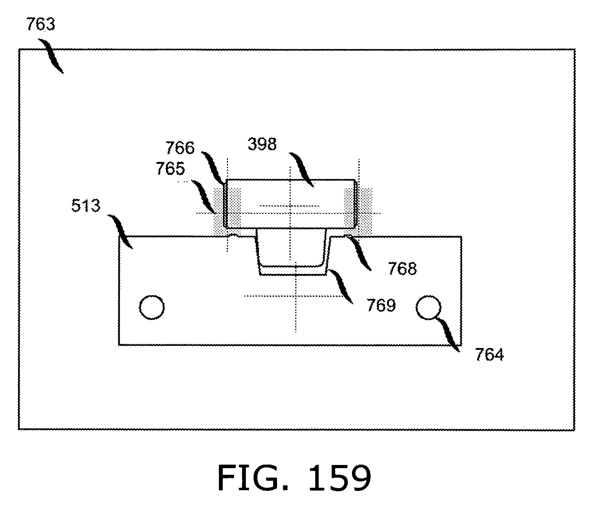

Reference is made to **FIG. 159,** which is an illustration showing how a capillary effect is used to increase accuracy of positioning a component, such as an emitter or a receiver, on a substrate, inter alia a printed circuit board or an optical component, in accordance with an embodiment of the present invention. Shown in **FIG. 159** is an emitter or a receiver **398** that is to be aligned with an optical component or temporary guide **513.** Optical component or temporary guide **513** is fixed to a printed circuit board **763** by guide pins **764.** Solder pads **765** are placed at an offset from component solder pads **766.** Printed circuit board **763** is then inserted into a heat oven for soldering.

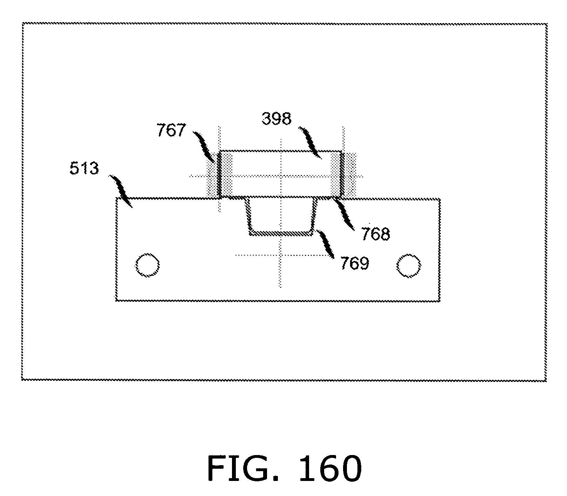

Reference is made to **FIG. 160,** which is an illustration showing the printed circuit board **763** of **FIG. 159,** after having passed through a heat oven, in accordance with an embodiment of the present invention. As shown in **FIG. 160,** component **398** has been sucked into place by the capillary effect of the solder, guided by a notch **768** and a cavity **769** in optical component or temporary guide **513.** When a temporary guide is used, it may be reused for subsequent soldering.

The process described with reference to **FIGS. 159** and **160** is suitable for use in mass production of electronic devices.

## ASIC Controller for Light-Based Touch Screens

Aspects of the present invention relate to design and use of a programmable state machine for novel light-based touch screen ASIC controllers that execute a scanning program on a series of emitters and detectors. The scanning program determines scan sequence, current levels and pulse widths. The controller includes integrated LED drivers for LED current control, integrated receiver drivers for photo detector current measurement, and an integrated A/D convertor to enable communication between the controller and a host processor using a standard bus interface, such as a Serial Peripheral Interface (SPI).

In accordance with the present invention, a program is loaded onto the controller, e.g., over SPI. Thereafter, scanning execution runs independently from the host processor, optimizing overall system power consumption. When the scan data are ready, the controller issues an interrupt to the host processor via an INT pin.

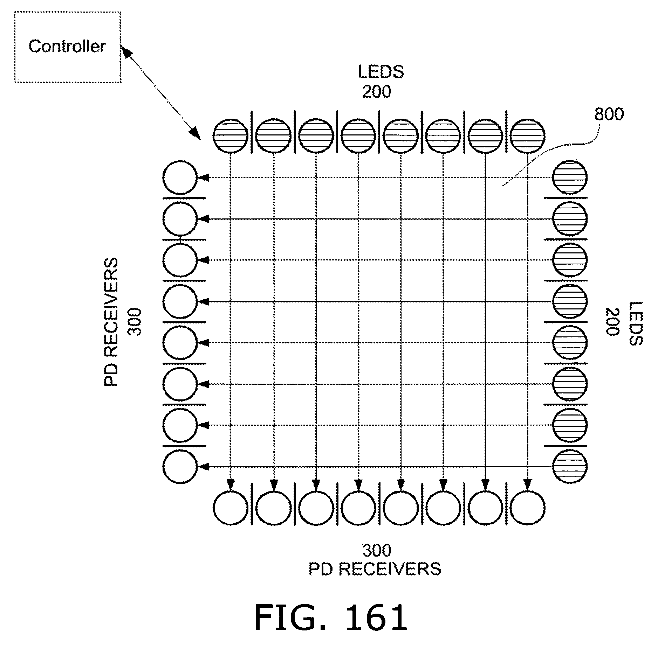

Reference is made to **FIG. 161,** which is a simplified illustration of a light-based touch screen 800 and an ASIC controller therefor, in accordance with an embodiment of the present invention.

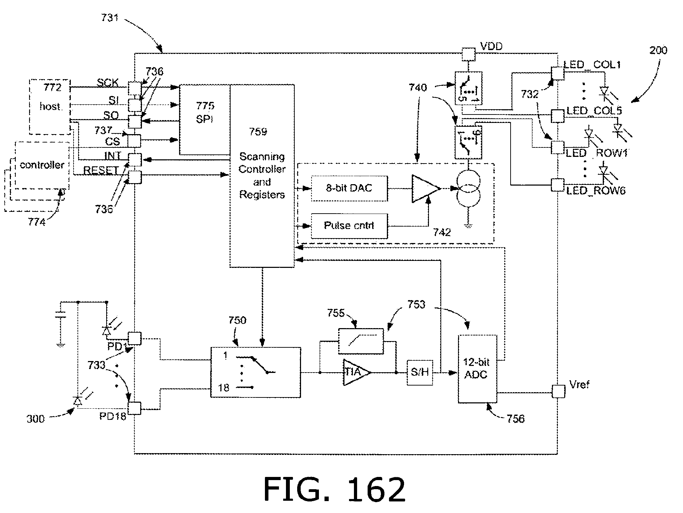

Reference is made to **FIG. 162,** which is a circuit diagram of a chip package **731** for a controller of a light-based touch screen, in accordance with an embodiment of the present invention.

As shown in **FIG. 162,** chip package **731** includes emitter driver circuitry **740** for selectively activating a plurality of photoemitters **200** that are outside of the chip package, and signal conducting pins **732** for connecting photoemitters **200** to emitter driver circuitry **740.** Emitter driver circuitry **740** is described in applicants' co-pending patent application U.S. Serial No. 12/371,609 entitled LIGHT-BASED TOUCH SCREEN filed on February 15, 2009. Inter alia, reference is made to paragraphs [0073], paragraphs [0087] - [0091] and FIG. 11 of this application as published in U.S. Publication No. 2009/0189878 A1 on July 30, 2009.

Emitter driver circuitry **740** includes circuitry **742** for configuring individual photoemitter pulse durations and pulse currents for each emitter-detector pair via a programmable current source. Circuitry **742** is described in applicants' co-pending patent application U.S. Serial No. 13/052,511 entitled LIGHT-BASED TOUCH SCREEN WITH SHIFT-ALIGNED EMITTER AND RECEIVER LENSES filed on March 21, 2011. Inter alia, reference is made to paragraphs [0343] - [0358] and FIGS. 99 - 101 of this application as published in U.S. Publication No. 2011/0163998 on July 7, 2011.

Chip package **731** includes detector driver circuitry **750** for selectively activating a plurality of photo detectors **300** that are outside of the chip package, and signal conducting pins **733** for connecting photo detectors **300** to detector driver circuitry **750.** Detector driver circuitry **750** includes circuitry **755** for filtering current received from photo detectors **300** by performing a continuous feedback bandpass filter, and circuitry **756** for digitizing the bandpass filtered current. Circuitry **755** is described inter alia at paragraphs [0076], paragraphs [107] - [0163] and FIGS. 14-23B of the above-referenced U.S. Publication No. 2009/0189878 A1. Chip package **731** also includes detector signal processing circuitry **753** for generating detection signals representing measured amounts of light detected on photo detectors **300.**

Chip package **731** further includes I/O pins **736** for communicating with a host processor **772.** Chip package **731** further includes controller circuitry **759** for controlling emitter driver circuitry **740** and detector driver circuitry **750.** Controller circuitry **759** communicates with host processor **772** using a bus standard for a Serial Peripheral Interface (SPI) **775.** Chip package **731** further includes a chip select (CS) pin **737** for coordinating operation of controller circuitry **759** with at least one additional controller **774** for the light-based touch screen.

The controller shown in **FIG. 162** packages all of the above mentioned elements within chip package **731,** (i) thereby enabling automatic execution of an entire scan sequence, such as 52 emitter-receiver pairs, and (ii) thereby storing the detection signals in a register array located in controller circuitry **759,** for subsequent analysis by host processor **772.** This register array provides storage for at least 52, 12-bit receiver results. Additional registers in controller circuitry **759** are provided for configuring individual pulse durations and pulse currents for individual emitter-receiver pairs. In order to support 52 unique emitter-receiver pairs, at least 104 registers are provided; namely, 52 registers for configuring individual pulse durations, and 52 registers for configuring individual pulse currents.

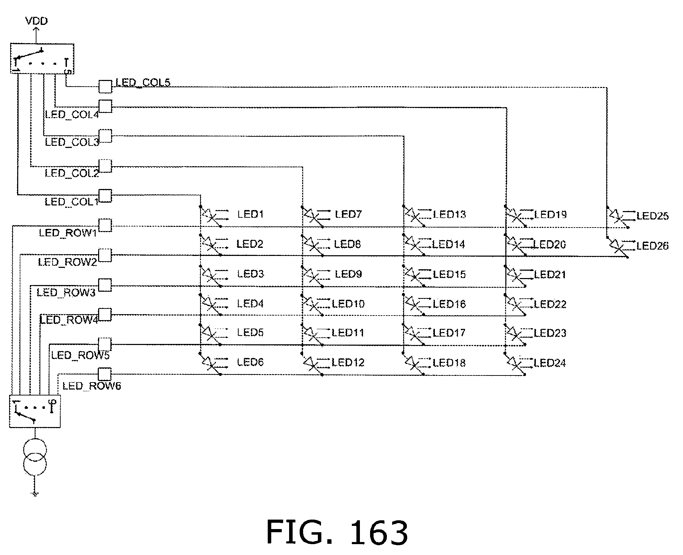

Reference is made to **FIG. 163,** which is a circuit diagram for six rows of photo emitters with 4 or 5 photo emitters in each row, for connection to pins **732** of chip package **731,** in accordance with an embodiment of the present invention. The 11 lines **LED_ROW1,** ..., **LED_ROW6** and **LED_COL1,** ..., **LED_COL5** provide two-dimensional addressing for 26 photo emitters, although the photo emitters are physically arranged around two edges of the touch screen, as shown in **FIG. 150. TABLE IV** shows LED multiplex mapping from photo emitter LEDs to LED_ROW and LED_COL pins. More generally, an LED matrix may include an $m \times n$ array of LEDs supported by $m + n$ I/O pins on the controller.

As such, an LED is accessed by selection of a row and a column I/O pin. The controller includes push-pull drivers for selecting rows and columns. It will be appreciated by those skilled in the art that the row and column coordinates of the LEDs are unrelated to the physical placement of the LEDs and the push-pull drivers. In particular, the LEDs do no need to be physically positioned in a rectangular matrix.

In an alternative embodiment of the controller of the present invention, current source drivers are used instead of push-pull drivers. In another embodiment of the controller of the present invention, some of the push-pull drivers are combined with current source drivers, and others of the push-pull drivers are combined with current sink drivers.

| TABLE IV: LED multiplex mapping to LED_ROW and LED_COL pins | | |
|---|---|---|
| | | |
| LED | LED_ROW pin enabled | LED_COL pin enabled |
| 1 | 1 | 1 |
| 2 | 2 | 1 |
| 3 | 3 | 1 |
| 4 | 4 | 1 |
| 5 | 5 | 1 |
| 6 | 6 | 1 |
| 7 | 1 | 2 |
| 8 | 2 | 2 |
| 9 | 3 | 2 |
| 10 | 4 | 2 |
| 11 | 5 | 2 |
| 12 | 6 | 2 |
| 13 | 1 | 3 |
| 14 | 2 | 3 |
| 15 | 3 | 3 |
| 16 | 4 | 3 |
| 17 | 5 | 3 |
| 18 | 6 | 3 |
| 19 | 1 | 4 |
| 20 | 2 | 4 |
| 21 | 3 | 4 |
| 22 | 4 | 4 |
| 23 | 5 | 4 |
| 24 | 6 | 4 |
| 25 | 1 | 5 |
| 26 | 2 | 5 |

Advantages of having a dedicated controller for emitters and receivers in a light-based touch screen are power savings and performance. In conventional systems, a conventional chip, such as the MSP430 chip manufactured by Texas Instruments of Dallas, TX, controls emitters and receivers. Regarding power savings, conventional chips do not provide access to all of the power consuming chip elements. Moreover, with conventional chips it is not possible to power on and off external elements in sync with the emitters. For example, with a conventional chip the amplifier unit connected to the receivers and the analog-to-digital convertor (ADC) for digitizing receiver light detection current, cannot be turned on and off in sync with activation of the emitters. In conventional systems, these elements are left powered on throughout an entire scan sequence. In distinction, the dedicated controller of the present invention is able to power these elements on and off at a resolution of microseconds, in sync with emitter activation. This and other such selective activation of controller blocks, reduce the total power consumption of the touch system considerably. In fact, power consumption for the amplifier, the ADC and other controller blocks is reduced to the extent that their collective power consumption is negligible as compared to photoemitter activation power. As such, system power consumption is nearly the same as the power consumption for activating the photoemitters.

When the dedicated controller of the present invention scans a series of emitter-receiver pairs, an LED driver supplies an amount of current to an LED in accordance with settings in LED current control registers and LED pulse length control registers. **TABLE V** shows the power consumption of the dedicated controller, for 50 emitter-receiver pairs at 100 Hz with a power source of 2.7V. Pulse durations and pulse currents are set via circuitry **742** using configuration registers. Current consumption is calculated as

$$100 \text{ Hz x 50 activation pairs x pulse duration (µs) x pulse current (A)} =$$

$$= \text{current consumption (µA) from the battery.}$$

Power consumption is calculated as

$$\text{current consumption (µA)} \,^* \text{voltage (V)} = \text{power (mW).}$$

| TABLE V: Photometer power consumption for 50 emitter-receiver pairs at 100 Hz with 2.7V power source | | | |
|---|---|---|---|
| | | | |
| **Pulse duration (µs)** | **Pulse current (A)** | **Current consumption (µA)** | **Power (mW)** |
| 0.125 | 0.05 | 31.25 | 0.084375 |
| 0.25 | 0.05 | 62.5 | 0.16875 |
| 0.5 | 0.05 | 125 | 0.3375 |
| 1 | 0.05 | 250 | 0.675 |
| 2 | 0.05 | 500 | 1.35 |
| 4 | 0.05 | 1000 | 2.7 |
| 0.125 | 0.1 | 62.5 | 0.1685 |
| 0.25 | 0.1 | 125 | 0.3375 |
| 0.5 | 0.1 | 250 | 0.675 |
| 1 | 0.1 | 500 | 1.35 |
| 2 | 0.1 | 1000 | 2.7 |
| 4 | 0.1 | 2000 | 5.4 |
| 0.125 | 0.2 | 125 | 0.3375 |
| 0.25 | 0.2 | 250 | 0.675 |
| 0.5 | 0.2 | 500 | 1.35 |
| 1 | 0.2 | 1000 | 2.7 |
| 2 | 0.2 | 2000 | 5.4 |
| 4 | 0.2 | 4000 | 10.8 |
| 0.125 | 0.4 | 250 | 0.675 |
| 0.25 | 0.4 | 500 | 1.35 |
| 0.5 | 0.4 | 1000 | 2.7 |
| 1 | 0.4 | 2000 | 5.4 |
| 2 | 0.4 | 4000 | 10.8 |
| 4 | 0.4 | 8000 | 21.6 |

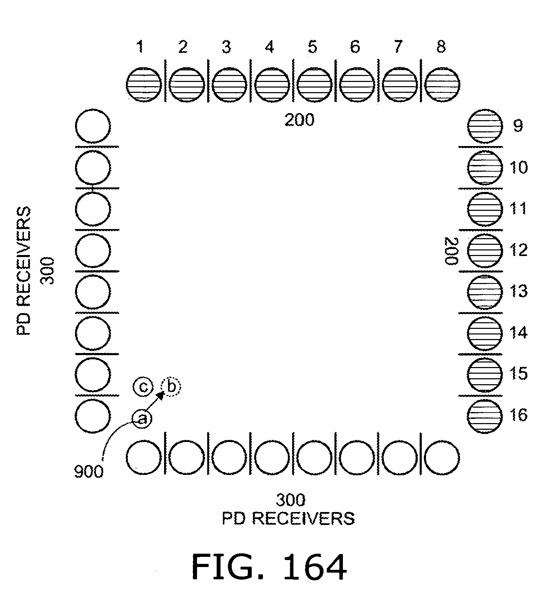

Regarding <u>performance</u>, the time required to complete a scan of all emitter-receiver pairs around the screen is critical, especially for fast stylus tracing. Reference is made to **FIG. 164,** which is a simplified illustration of a touch screen surrounded by emitters **200** and receivers **300,** in accordance with an embodiment of the present invention. Emitters **200** are scanned in a scan sequence; e.g., emitters **200** may be scanned in the numbered order 1 - 16 shown in **FIG. 164.** Touch points **900** correspond to touches made by a person writing his signature in a fast scrawl using a fine-point stylus. Three locations are indicated for touch points **900.** At a time t1, when emitter 1 is activated, the stylus is located at a location **a.** At a time t2, when emitter 16 is activated, the stylus is located at a location **b,** due to the quick movement as the user signs his name. However, the detected location on the screen at time t2 is a location **c,** different than location **b;** because at time t2, when emitter 16 is activated, the stylus has moved from its location at time t1. Such time lag between x-coordinate detection and y-coordinate detection produces errors in detecting touch positions of the stylus on the screen. These errors are most pronounced with fast stylus writing. As such, it is desirable to complete an entire scan sequence as fast as possible.

The dedicated controller of the present invention completes a scan sequence faster than conventional chips. The dedicated controller of the present invention includes register arrays that store necessary parameters to execute an entire scan sequence automatically. The dedicated controller further includes a register array for storing filtered, digital results for a scan sequence. In distinction, with conventional chips not all registers are available, and configuration data in registers is not automatically parsed. Thus, during a scan sequence using conventional chips, some cycles are required for configuring further emitter activations and for reading results.

In accordance with an embodiment of the present invention, for configurations where the number of emitters and receivers is larger than what may be supported by a single dedicated controller, multiple controllers are used. The multiple controllers are each configured prior to executing a scan, and then a scan is executed by each controller in rapid succession. For this embodiment, after configuring registers in all controllers, a host selects a first controller chip, using the chip-select (CS) pin shown in **FIG. 162,** and activates that chip. When the scan sequence on that chip is completed, the chip sends an interrupt to the host. The host then selects a second controller chip using its CS pin, and runs the second chip's scan sequence. After all of the controller chips have completed their respective scans, the host reads the results from each chip and calculates touch locations.

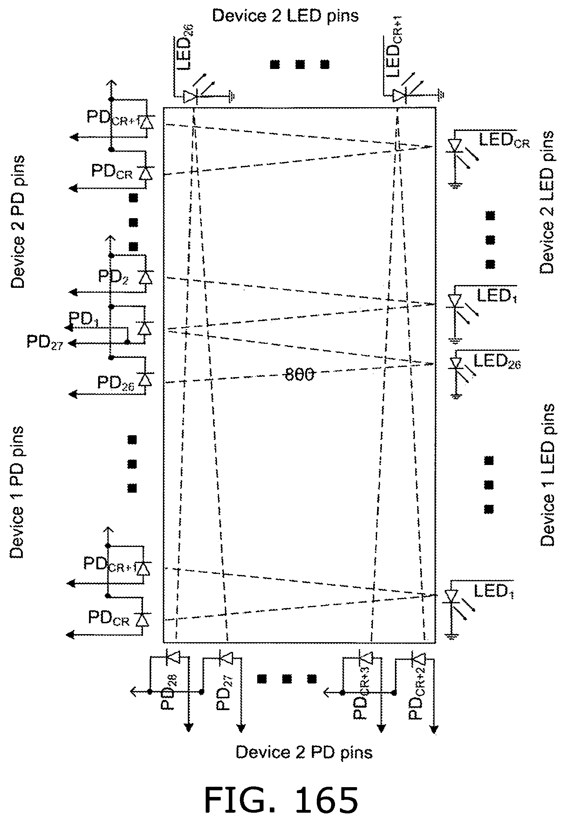

In this regard, reference is made to **FIG. 165,** which is a simplified application diagram illustrating a touch screen configured with two controllers, indicated as **Device 1** and **Device 2,** in accordance with an embodiment of the present invention. Shown in **FIG. 165** is touch screen **800** surrounded with LEDs and shift-aligned PDs. Twenty-six LEDs, $LED_1$ - $LED_{26}$, are connected along a first screen edge to LED pins from **Device 1,** and additional LEDS, $LED_1$ - $LED_{CR}$, along this edge are connected to LED pins from **Device 2.** Along the opposite edge, PDs are shift-aligned with the LEDs. PDs that detect light from the **Device 1** LEDS are connected to **Device 1** PD pins, and PDs that detect light from **Device 2** LEDs are connected to **Device 2** PD pins. The dashed lines connecting each LED to two PDs show how light from each LED is detected by two PDs. Each PD detects light from two LEDs.

As shown in **FIG. 165,** $PD_{27}$ of **Device 1** detects light from $LED_{26}$ of **Device 1** and also from $LED_1$ of **Device 2.** As such, $PD_{27}$ is connected to the $PD_{27}$ pin of **Device 1** and also to the $PD_1$ pin of **Device 2.** When detecting light from $LED_{26}$ of **Device 1,** $PD_{27}$ is sampled over the $PD_{27}$ pin of **Device 1** and its result is stored on **Device 1;** and when detecting light from $LED_1$ of **Device 2,** $PD_{27}$ is sampled over the $PD_1$ pin of **Device 2** and its result is stored on **Device 2.** As such, each controller coordinates LED activation with respective PD activation. The host processor calculates touch locations along the **Device 1 - Device 2** border by interpolating the PD results from the two devices.

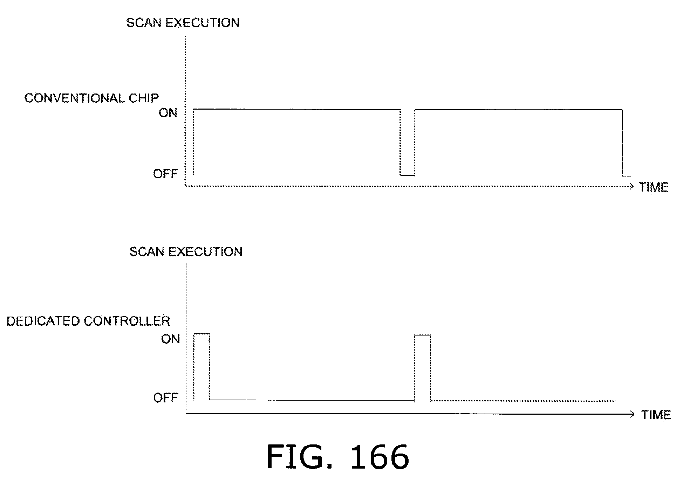

Reference is made to **FIG. 166,** which is a graph showing performance of a scan sequence using a conventional chip vs. performance of a scan using a dedicated controller of the present invention. The duration of each complete screen scan is longer with the conventional chip than with the dedicated controller. The dedicated controller can be powered down between scan sequences, providing further power savings, especially since the stretches of time between scan sequences may be larger with use of the dedicated controller than with use of a conventional chip. To connect touch points of multiple scans, the host processor may use spline interpolation or such other predictive coding algorithms, to generate smooth lines that match the user's pen strokes. Of significance is that each touch point is very accurate, when using a dedicated controller of the present invention.

Moreover, it is apparent from **FIG. 166** that a host using a dedicated controller of the present invention may increase the scan frequency beyond the limits possible when using a conventional chip. E.g., a host can scan 50 emitter receiver pairs at 1000 Hz, using a controller of the present invention. In distinction, touch screens using convention chips typically operate at frequencies of 100 Hz or less. The high sampling rate corresponding to 1000 Hz enables accurate touch location calculation over time. In turn, this enables temporal filtering of touch coordinates that substantially eliminates the jitter effect described above when a stylus remains stationary, while substantially reducing the lag time described above between a stylus location and a line representing the stylus' path along the screen.

Such high sampling rates on the order of 50 emitter-receiver pairs at 1000 Hz cannot be achieved if individual LEDs require configuration prior to activation. The dedicated controller of the present invention achieves such high sampling rates by providing the registers and the circuitry to automatically activate an entire scan sequence.

A further advantage of completing multiple scan sequences in a short time is disambiguation of touch signals. The problem of ambiguous signals is described above with reference to **FIGS. 15** and **16.** As explained above, the same detection pattern of photo detectors is received for two concurrent touches along a screen diagonal, as illustrated in **FIGS. 15** and **16.** When placing two fingers on the screen, there is an inherent delay between the first and second touches. Completing multiple scan sequences in a very short time allows the system to determine the first touch, which is unambiguous. Then, assuming that the first touch is maintained when the second touch is detected, the second touch location is easily resolved. E.g., if it is determined that one touch is in the upper left corner and the touch detection pattern is as shown in **FIGS. 15** and **16,** then the second touch location must be at the lower right corner of the screen.

Thus it will be appreciated by those skilled in the art that a dedicated controller in accordance with the present invention is power-efficient, highly accurate and enables high sampling rates. The host configures the controller for low power, corresponding to 100 Hz or less, or for high frequency scanning, such as 500 Hz - 1000 Hz.

Determination of which configuration is appropriate is based inter alia on the area of the touch screen covered by a touch pointer, since jitter and lag are less prominent for a touch covering a relative large area, such as a finger touch, than for a touch covering a relatively small area, such as a stylus touch. Based on the area covered by the pointer, as determined by the size of the shadowed area of light-based touch screen signals, the host determines whether a finger or a stylus is being used, and configures an appropriate scan rate based on the trade-off between power and accuracy.

In accordance with an embodiment of the present invention, the dedicated controller includes scan range registers for selectively activating LEDs, and current control and pulse duration registers for specifying an amount of current and a duration, for each activation. The scan range registers designate a first LED and a first PD to be activated along each screen edge, the number of LEDs to be activated along each edge, and the step factor between activated LEDs. A step factor of 0 indicates that at each step the next LED is activated, and a step factor of 1 indicates that every other LED is activated. Thus, to activate only odd or only even LEDs, a step factor of 1 is used. Step factors of 2 or more may be used for steps of 2 or more LEDs, respectively. An additional register configures the number of PDs that are activated with each LED. A value of 0 indicates that each LED is activated with a single corresponding PD, and a value of 1 indicates that each LED is activated with two PDs. The number of PDs activated with each LED may be as many PD that are available around the touch screen.

To save power, it is advantageous to have a low resolution scan mode for detecting an initial touch location. The host may run in this mode, for example, when no touch is detected. When a touch is detected, the host switches to a high resolution scan mode, in order to calculate a precise touch location, as described above with reference to **FIG. 136.** In terms of controller scan sequence registers, every emitter is activated, i.e., step = 0, with one receiver. The scan sequence of **FIG. 136(d)** differs from that of **FIG. 136(e)** in the initial PD used in the sequence on each screen edge. Specifically, the first PD, namely, PD0, is used in **FIG. 136(d),** and the second PD, namely, PD1, is used in **FIG. 136(e).** The initial PD to be used along each screen edge is configured by a register.

When each LED is activated with more than one PD, the LED is activated separately for each of the PDs. Each such separate activation has respective current control and pulse duration registers.

The controller of the present invention automatically controls a mux to direct current to desired LEDs. The LED mux control is set by the scan control registers. The controller automatically synchronizes the correct PD receivers when the drivers pulse the LEDS. Twelve-bit ADC receiver information is stored in PD data registers. Upon completion of scanning, the controller issues an interrupt to the host processor, and automatically enters standby mode. The host then reads receiver data for the entire scan sequence over the SPI interface.

In some touch screen configurations, emitters are shift-aligned with receivers, with emitters being detected by more than one receiver and being activated one or more times for each detecting receiver. For example, an emitter may be activated three times in rapid succession, and with each activation a different receiver is activated. Moreover, a receiver is further activated during the interval between emitter activations to determine an ambient light intensity.

In other touch screen configurations, emitters and receivers are aligned, but each emitter is detected by more than one receiver, and each emitter is activated separately for each detecting receiver. Emitter-receiver activation patterns are described in in applicants' co-pending patent application U.S. Serial No. 12/667,692 entitled SCANNING OF A TOUCH SCREEN filed on January 5, 2010. Inter alia, reference is made to paragraphs [0029], [0030], [0033] and [0034] of this application as published in U.S. Publication No. 2011/0043485 on February 24, 2011.

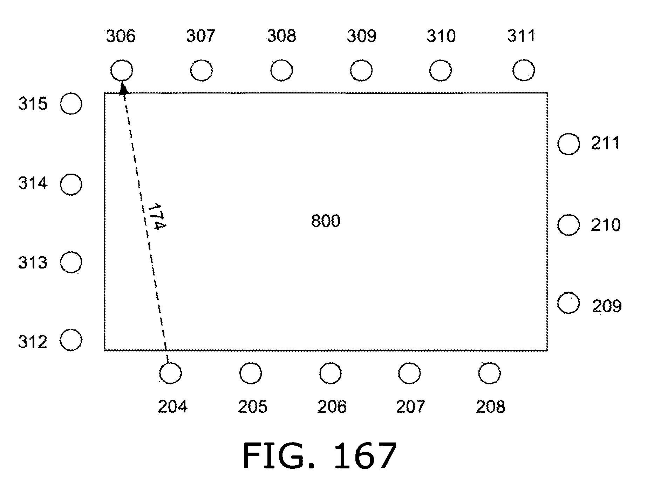

Reference is made to **FIG. 167,** which is a simplified illustration of a touch screen **800** having a shift-aligned arrangement of emitters and receivers, in accordance with an embodiment of the present invention. Shown in **FIG. 167** are emitters **204** - **208** along the south edge of screen **800,** shift-aligned receivers **306** - **311** along the north edge of screen **800,** emitters **209** - **211** along the east edge of screen **800,** and shift-aligned receivers **312** - **315** along the west edge of screen **800.** It is noted that each edge of receivers has one or more receivers than the number of emitters along the opposite edge, in order to detect touches in the corners of screen **800.** A beam **174** depicts activation of emitter **204** and detection by receiver **306. TABLE VI** lists an activation sequence in terms of emitter-receiver pairs.

| TABLE VI: Activation sequence of emitter-receiver pairs | | |
|---|---|---|
| **Activation No.** | **Emitter** | **Receiver** |
| 1 | **204** | **306** |
| 2 | **204** | **307** |
| 3 | **205** | **307** |
| 4 | **205** | **308** |
| 5 | **206** | **308** |
| 6 | **206** | **309** |
| 7 | **207** | **309** |
| 8 | **207** | **310** |
| 9 | **208** | **310** |
| 10 | **208** | **311** |
| 11 | **209** | **312** |
| 12 | **209** | **313** |
| 13 | **210** | **313** |
| 14 | **210** | **314** |
| 15 | **211** | **314** |
| 16 | **211** | **315** |

Activation no. 10, **208-311,** is the last activation along the horizontal dimension of screen 800. Activation no. 11 is the first activation along the vertical dimension of screen **800.** Such turning of a corner alters the activation pattern along screen edges. Specifically, the activation pattern along a screen edge is of the form AA-AB-BB-BC-CC-CD ..., where the first letter of each pair designates an emitter and the second letter designates a receiver. Thus in AA-AB a same emitter is activated with two receivers, and in AB-BB two emitters are activated with a same receiver. When turning a corner, as at activation no. 11, the pattern is reset. The active emitter, **209,** is not detected by the previously activated receiver **311,** since emitter **209** and receiver **311** are not situated along opposite screen edges. Instead, emitter **209** is detected by receiver **312,** thus starting a new AA-AB-BB-BC ... activation pattern along the vertical screen dimension. The controller handles a pattern reset based on the scan sequence registers, which indicate when a scan along a screen edge is complete.

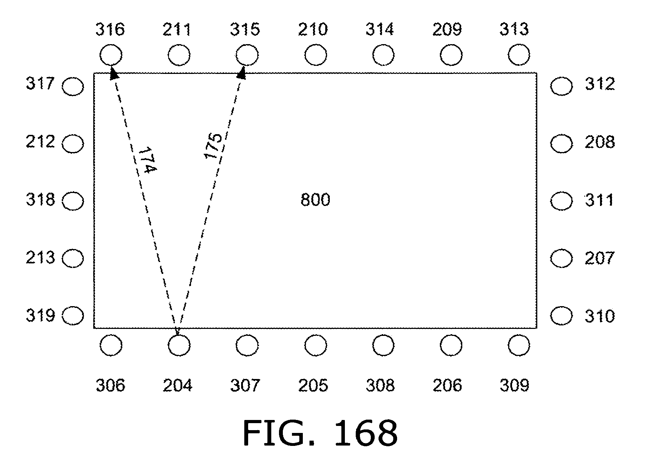

Reference is made to **FIG. 168,** which is a simplified diagram of a touch screen **800** having alternating emitters and receivers along each screen edge, in accordance with an example. As shown in **FIG. 165,** each emitter is situated between two receivers, resulting in *n* emitters and *n+1* receivers along a given edge, for some number *n*. **FIG. 165** shows touch screen **800** surrounded by ten emitters **204** - **213** and fourteen receivers **306-319.** As described above with reference to **FIG. 164,** each emitter is paired with two receivers. The dotted arrows **174** and **175** in **FIG. 168** indicate two activations of emitter **204;** namely, an activation detected by receiver **316,** and another activation detected by receiver **315.**

In accordance with an embodiment of the present invention, when an activation sequence arrives at the end of a sequence of emitters along a screen edge, the activation pattern is restarted when activating emitters along an adjacent edge. In accordance with another embodiment of the present invention, the angle of orientation of each emitter with a detecting receiver is substantially 45° from the normal to the edge alongwhich the emitter is arranged. In such case, a receiver along an adjacent edge is operative to detect light from an emitter near a screen corner. As such, the activation pattern is not restarted, but instead continues as a series of activated emitters turn a corner. Alternatively, the controller may restart the activation pattern when turning a corner by use of registers to store the index of the last LED to be activated by the controller along each screen dimension.

In accordance with an embodiment of the present invention, the controller is a simple state machine and does not include a processor core, such as an ARM core. As such, costs of controllers of the present invention are low. A light-based touch screen using a controller of the present invention costs less than a comparable capacitive touch screen, since a capacitive touch screen requires a processor core in order to integrate a large number of signals and calculate a touch location. In order to achieve a quick response time, a capacitive touch screen uses a dedicated processor core to calculate a touch location, instead of offloading this calculation to a host processor. In turn, this increases the bill of materials for capacitive touch screens. In distinction, light-based touch screens of the present invention use two neighboring receiver values to calculate a touch location along an axis, which enables the host to calculate a touch location and, consequently, enables use of a low-cost controller.

In accordance with an embodiment of the present invention, multiple controllers may be operative to control touch screen **800.** As mentioned above, chip package **731** includes a chip select (CS) pin **737** for coordinating operation of scanning controller circuitry **759** with at least one additional controller **774** for the light-based touch screen.

In accordance with embodiments of the present invention, the controller supports activation sequences for the touch screen of configuration no. 6 described hereinabove. In a first embodiment, emitters are positioned along two screen edges, directly opposite respective receivers along the remaining two screen edges, as shown in **FIG. 63.** Each emitter sends a two-pitch wide light beam to its respective receiver. An optical element, such as element **530** described hereinabove with reference to **FIG. 64,** interleaves this wide beam with neighboring wide beams, to generate two sets of overlapping wide beams that cover the screen; e.g., the set including every second beam covers the screen. **FIG. 69** shows a contiguous area covered by beams **168** and **169** generated by respective emitters **201** and **202,** with emitter **200** between them.

Two activation sequences are provided; namely, an activation sequence for low-resolution detection when no touch is detected, and an activation sequence for high resolution detection for tracing one or more detected touches. In low-resolution detection every second emitter-receiver pair is activated along one screen edge. For a rectangular screen, the shorter edge is used. In order to distribute use of components uniformly, odd and even sets of emitter-receiver pairs are activated alternately. Thus in low-resolution detection each emitter is configured to be activated with one receiver, and the step factor is 1; i.e., every second emitter is activated. In high resolution detection mode each emitter is configured to be activated with one receiver, and the step factor is 0; i.e., every emitter is activated. The scan in this mode activates emitters along both emitter-lined screen edges.

In an alternative embodiment, emitters and receivers are alternated along screen edges, as shown in **FIG. 79.** Each emitter sends a two-pitch wide beam to its respective receiver. An optical element, such as element **530** described hereinabove with reference **to FIG. 64,** interleaves this wide beam with neighboring wide beams, to generate two sets of overlapping wide light beams that cover the screen; e.g., the set including every second beam covers the screen. **FIG. 78** shows a contiguous area covered by beams **168** and **169** generated by respective emitters **201** and **202,** with receiver **300** between them.

In this embodiment three activation sequences are provided; namely, an activation sequence for low-resolution detection using detection on one axis, an activation sequence for high resolution detection using detection on two axes, and an activation sequence for high resolution detection using detection in four axes. In low-resolution detection every second emitter-receiver pair is activated along one screen edge. For a rectangular screen, the shorter edge is used. In order to distribute use of components uniformly, odd and even sets of beams are activated alternately. However, because neighboring beams are aimed in opposite directions, the emitters are connected to the ASIC LED connectors in such a way that the index of emitters is configured to increment along a single screen edge. Thus the step factor is 0; i.e., every second beam is activated, and the activation series ends at the last emitter along the active edge. In an alternative embodiment the emitters are connected to the ASIC LED connectors such that the index of emitters is configured to increment together with the series of beams. In this case the step factor is 1; i.e., every second beam is activated.

In high resolution detection mode using beams along two axes, each emitter is configured to be activated with one respective receiver, the step factor is 0, and the activation series covers all emitters.

In high resolution detection mode using beams along four axes, multiple activations are executed. A first activation activates beams along the horizontal and vertical axes. The initial emitter index matches the initial receiver index, and the emitter index increments together with the receiver index. A second activation series activates a first set of diagonal beams. In this case, the initial emitter and receiver indices define endpoints of one of the diagonal beams from the initial emitter. The emitter index then increments together with the receiver index around the screen. A third activation series activates a second set of diagonal beams. In this case, the initial emitter and receiver indices define endpoints of the second diagonal beam from the initial emitter.

**Resilient Touch Surfaces**

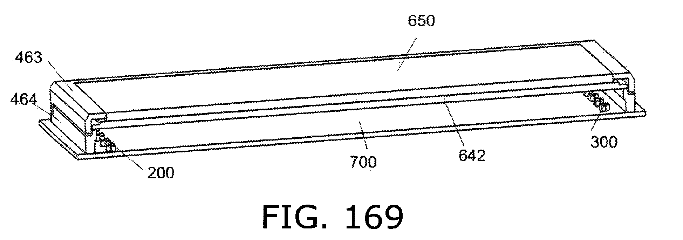

Reference is made to **FIG. 169,** which is a simplified illustration of a touch surface with a flexible compressible layer on top of the surface, in accordance with an embodiment of the present invention. Light beams that cross above the surface to provide touch detection are directed through the compressible layer. **FIG. 169** shows emitters **200** and receivers **300** on a PCB **700,** and a resilient flexible layer **650** situated above a display **642** and bonded to an outer edge of a light guide. The light guide has two units, namely, an upper section **463** and a lower section **464.** Generally layer **650** is transparent, to enable viewing of display **462.**

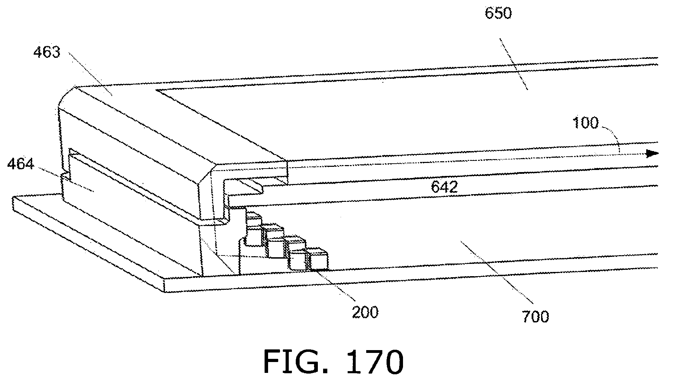

Reference is made to **FIG. 170,** which is a magnified view of the touch surface of **FIG. 169,** in accordance with an embodiment of the present invention. As shown in **FIG. 170,** light beam **100** travels from emitter **200** through light guide units **463** and **464,** and into flexible layer **650.** Light beam **100** is detected at the opposite edge of the surface by a respective receiver **300,** shown in **FIG. 169.**

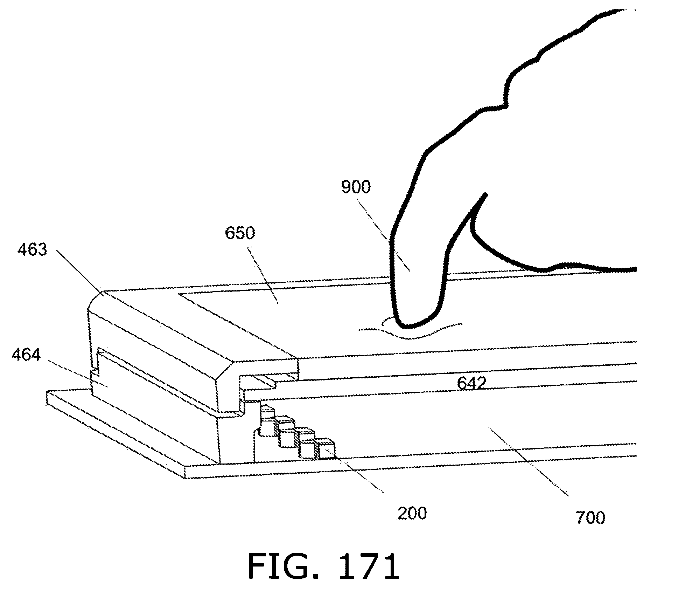

Reference is made to **FIG. 171,** which is a simplified illustration of an object pressing down on layer **650** of the touch surface of **FIG. 169,** and creating an impression thereon, in accordance with an embodiment of the present invention. As shown in **FIG. 171,** a user presses his finger **900** on layer **650** and disrupts or frustrates any beam **100** crossing the location of the impression before the beam can reach receiver **300.** Such disruption or frustration of beam **100** has two measurable effects; namely, (i) a diminished detection signal at a corresponding receiver or receivers **300** at which the beam was directed, and (ii) increased detection signals at others of the receivers that receive the frustrated beams. Moreover, the greater the impression, the greater is the disruption. As such, the amount of missing expected light at some receivers and the pattern of increased detection at other receivers indicates the amount of pressure exerted by finger **900** on layer **650.**

When layer **650** is formed as a single gel-like body, a deep impression, created by a large amount of downward pressure, has a wider radius than a shallow impression. In turn, the amount of light detected at the receivers indicates the width of the radius, which determines the amount of downward force applied by finger **900.** In general, the pattern of blocked and frustrated beams created by an impression into a transmissive body, as in embodiments of the present invention, is more substantial than the frustrated total internal reflection of light transmitted into a rigid body when an object touches the surface of the transmissive body but does not form an impression therein.

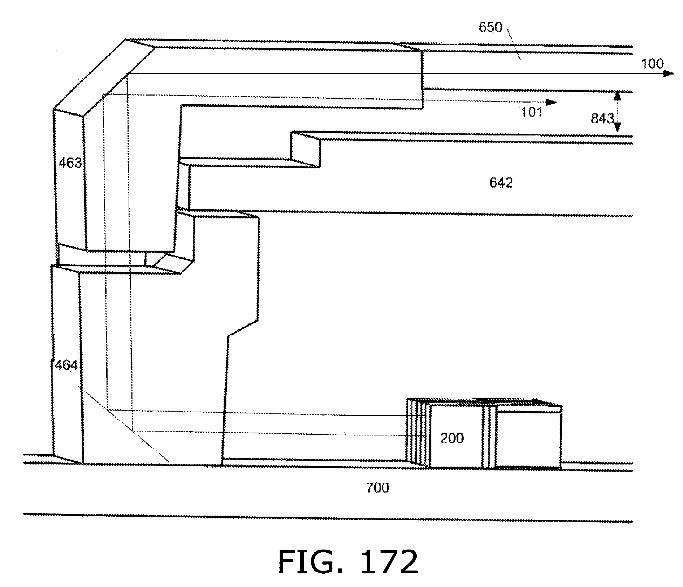

Reference is made to **FIG. 172,** which is a simplified illustration of an alternative touch surface with a flexible compressible layer on top of the surface, in accordance with an embodiment of the present invention. In the touch surface of **FIG. 172,** a flexible layer **650** is flush with an upper edge of light guide unit **463,** and is suspended above the surface of a display **642,** to form an air gap **843. FIG. 172** shows two light beams emitted from an emitter **200.** A first light beam **100** travels through layer **650,** and a second light beam **101** travels across air gap **843.**

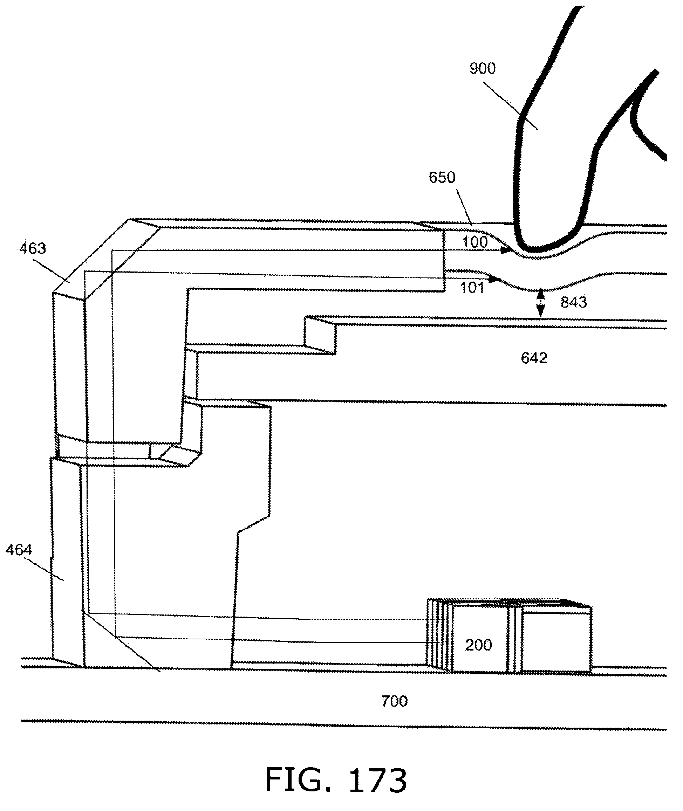

Reference is made to **FIG. 173,** which is a simplified illustration of an object pressing down on layer **650** of the touch surface of **FIG. 172,** and creating an impression thereon, in accordance with an embodiment of the present invention. A user pressing his finger **900** into layer **650** from above bends the layer and disturbs beam **100.** In addition, the bent layer extends into air gap **843** and blocks beam **101.**

In an alternative embodiment of the present invention, layer **650** is a thin elastic membrane, and only beams inside of air gap **843** are used for touch detection. In this alternative embodiment, light is not sent through the membrane, and the membrane may wrap the device.

In some embodiments of the present invention, a thin transparent elastic membrane is placed inside a frame that snaps on to and snaps off of a touch surface. In one embodiment, a handset for a police or fire department includes a light-based touch surface as described above, which is generally used without an elastic upper layer. However, when a policeman or fireman encounters a harsh environment, where water or debris may hit the surface and interfere with touch detections on the surface, the policeman or fireman snaps on the transparent elastic layer. The elastic layer protects the surface and prevents water and debris from reaching the light beams and causing false touch detections. Touches performed through the elastic layer are detected at a coarser resolution than touches performed without the elastic layer, because of the tapering of the elastic layer when it is pressed onto the surface by a pointer object. Moreover, often in harsh environments the policeman or fireman is wearing gloves, which also reduces the resolution of the touch since the surface area of a gloved finger is larger than that of a bare finger. For these reasons, in accordance with an embodiment of the present invention, a handset of this type provides a high-resolution user interface for use without the elastic membrane, and a low-resolution user interface for use with the elastic membrane. One difference between a high-resolution and a low-resolution user interface is the size and density of buttons presented on the display; namely, a low resolution user interface uses larger buttons that are spaced farther apart, and a high resolution user interface uses smaller buttons that are spaced closer together. A low resolution user interface provides an opportunity to reduce the scan rate, and to reduce the number of emitters and receivers used when scanning a surface, vis-à-vis a high resolution user interface, since lower touch precision is required. In some embodiments of the present invention, the snap-on frame includes an RFID chip, or such other identifier, whereby the handset detects when the elastic layer is snapped on or off and automatically toggles the low-resolution / high-resolution user interface accordingly.

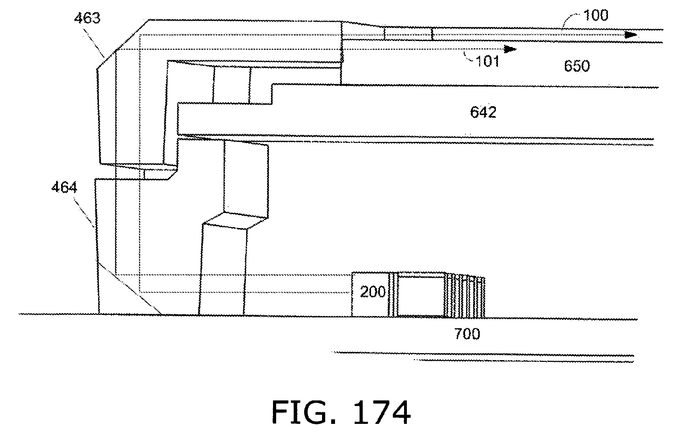

Reference is made to **FIG. 174,** which is a simplified illustration of another alternative touch surface with a flexible compressible layer on top of the surface, in accordance with an embodiment of the present invention. **FIG. 174** shows the edges of a light guide unit **463** extending above a flexible layer **650.** A first light beam **100** travels above layer **650** and is interrupted when an object touches layer **650.** A second light beam **101** travels through layer **650,** and is interrupted or frustrated only when an object exerts downward pressure on layer **650,** forming an impression thereon. As such, the touch surface of **FIG. 174** provides at least two levels of touch detection; namely, detection of an initial touch, and detection of a touch with pressure.

It will thus be appreciated by those skilled in the art that embodiments of the present invention provide several advantages for handset and display manufacturers. A first advantage is having light-based touch surfaces without raised bezels around the screen, as shown in **FIGS. 169 - 172.** This advantage is also achieved using an elastic sheet suspended above the display, as described above. A second advantage is having light-based touch surfaces that operate in environments of water droplets, dust and dirt. The water, dust and dirt settle on top of layer **650,** but do not generate a touch signal, since water, dust and dirt do not create impressions in layer **650.** A third advantage is having light-based touch surfaces that provide tactile sensations to a user pressing a finger or stylus into the surface, by using an upper layer of semi-hard gel that cradles an object pressed upon it. The semi-hard layer transmits haptic feedback from the device to the user's finger or stylus. A semi-hard material transmits more compelling haptic sensations to the user than do the rigid plastic and glass surfaces used in prior art touch surface devices.

Touch surfaces in accordance with the present invention may be manufactured by performing a double infection mold of the light guide, referred to as "overmolding", with a soft material such as inter alia silicone optically clear adhesive, or a bladder filled with a liquid. Overmolding mates the light guide and the soft material in a single process or tool, and reduces cost as compared with manufacturing a light guide and a flexible layer in two separate processes.

Light guides in accordance with the present invention may be made inter alia of polycarbonate or a cyclic olefin copolymer (COC) having a high glass transition temperature. COC has better optical properties than polycarbonate, better chemical resistance, better flow in the mold properties, and a lower shrinkage values, reducing the risk of sink marks. Thus COC provides flexibility in light guide design as well as high yield.

The present invention has broad application to electronic devices with touch sensitive screens, including small-size, mid-size and large-size screens. Such devices include inter alia computers, home entertainment systems, car entertainment systems, security systems, PDAs, cell phones, electronic games and toys, digital photo frames, digital musical instruments, e-book readers, TVs and GPS navigators.

In the foregoing specification, the invention has been described with reference to specific exemplary embodiments thereof. It will, however, be evident that various modifications and changes may be made to the specific exemplary embodiments without departing from the scope of the invention as set forth in the appended claims. Accordingly, the specification and drawings are to be regarded in an illustrative rather than a restrictive sense.

**Claims**

1.  A touch screen (800) for a computing device, comprising:

    a housing;
    a layer (646, 650) of light-transmissive material mounted in said housing, comprising an upper and a lower surface, wherein said upper surface is exposed for touch by one or more objects (971, 972, 980) from outside of said housing;
    a plurality of light emitters (200-211, 235-241) mounted in said housing underneath said upper surface, for emitting light beams (100, 105, 120, 151, 152);
    a first lens assembly (400, 437, 439, 440, 457, 461, 462, 525, 527, 550, 551, 564) mounted in said housing for directing the light beams emitted by said light emitters as *x*- and *y*- oriented light beams into said layer at an angle such that the light beams, when entering said layer, remain confined to said layer by total internal reflection at said upper and lower surfaces of said layer when the light beams are not absorbed by any of the objects touching said upper surface;
    a plurality of light detectors (300-303, 306-315, 394) mounted in said housing underneath said upper surface, for detecting the light beams and for generating outputs indicating the amounts of light detected;
    a second lens assembly (438, 441, 442, 443, 461, 525, 527, 550, 551, 565) mounted in said housing for directing the *x*- and *y*-oriented light beams towards one or more of said light detectors; and
    a calculating unit (770), mounted in said housing and connected to said light detectors, for assigning respective *x*- and *y*- touch coordinates to multiple ones of the objects (971, 972, 980) simultaneously touching said upper surface, based on outputs of said light detectors, wherein some of the light beams in said layer are partially absorbed at said upper surface when they come into contact with any of the objects (971, 972, 980), and others of the light beams in said layer are scattered back into said layer at said upper surface when they come into contact with any of the objects (971, 972, 980), so that said second lens assembly directs the scattered light beams to more of said light detectors than had they not been scattered, the assigning comprising:

        (step 1060) scan pairs of the light emitters and the light detectors around the touch screen; and
        (step 1061) when at least two *x*- coordinates and at least two *y*- coordinates are detected based on outputs of corresponding ones of said light detectors being less than outputs expected when no object touches said upper surface, then:

(step 1063) scan each detected *x-* coordinate light emitter with all detected *y-* coordinate light detectors;

(step 1064) scan each detected *y-* coordinate light emitter with all detected *x-* coordinate light detectors; and

(step 1065) select emitter-detector pairs that returned maximum light detection at steps 1063 and 1064 as most likely *x*, *y* touch coordinate pairs.

2. The touch screen of claim **1** wherein the light-transmissive material comprises glass or plastic that is transparent for infra-red light.

3. The touch screen of claim **1** wherein the light-transmissive material (650) is a liquid-filled sac that is transparent for infra-red light.

4. The touch screen of claim **1** further comprising an optically clear transfer tape (561) to fasten said layer on said first and second lens assemblies.

5. The touch screen of claim **1** wherein said first lens assembly directs portions of the light beams emitted by said light emitters over said layer above said upper surface, and wherein said second lens assembly directs light beams from above said upper surface to one or more of said light detectors.

6. The touch screen of claim **1** wherein said first lens assembly directs the light beams emitted by said light emitters into said layer from one or more sides of said layer, and wherein said second lens assembly directs light beams emerging from one or more sides of said layer to one or more of said light detectors.

7. The touch screen of claim **1** wherein said layer and said first and second lens assemblies comprise a single consolidated unit.

8. The touch screen of claim **1** wherein said light emitters are arranged along two adjacent edges of said layer, wherein said light detectors are arranged along two other adjacent edges of said layer, and wherein said light emitters are shift-aligned with said light detectors.

9. The touch screen of claim **1** wherein said light emitters and said light detectors are arranged in an alternating sequence along edges of said layer.

10. The touch screen of claim **9** wherein said assigning is further based on outputs of said light detectors in streps 1063 and 1064 being greater than outputs expected when no objects touch said upper surface.

11. The touch screen of claim **3** wherein said calculating unit further determines a pressure applied by an object to the surface based on outputs of said light detectors.

**Patentansprüche**

1. Berührungsbildschirm (800) für eine Computervorrichtung, umfassend:

ein Gehäuse;
eine Schicht (646, 650) aus lichtdurchlässigem Material, die im Gehäuse montiert ist und eine obere und eine untere Oberfläche umfasst, wobei die obere Oberfläche zur Berührung durch ein oder mehrere Objekte (971, 972, 980) von außerhalb des Gehäuse exponiert ist;
eine Mehrzahl von Lichtsendern (200 - 211, 235 - 241), die im Gehäuse unterhalb der oberen Oberfläche montiert sind, zum Emittieren von Lichtstrahlen (100, 105, 120, 151, 152);
eine erste Linsenanordnung (400, 437, 439, 440, 457, 461, 462, 525, 527, 550, 551, 564), die im Gehäuse montiert ist, zum Leiten der von den Lichtsendern emittierten Lichtstrahlen als x- und y-orientierte Lichtstrahlen in einem derartigen Winkel in die Schicht, dass die Lichtstrahlen beim Eintritt in die Schicht durch interne Totalreflexion an den oberen und unteren Oberflächen der Schicht in der Schicht eingeschlossen bleiben, wenn die Lichtstrahlen nicht von einem der Objekte absorbiert werden, welche die obere Oberfläche berühren;
eine Mehrzahl von Lichtdetektoren (300 - 303, 306 - 315, 394), die im Gehäuse unterhalb der oberen Oberfläche montiert sind, zum Erfassen von Lichtstrahlen und zum Erzeugen von Ausgaben, welche die Mengen von erfasstem Licht anzeigen;

eine zweite Linsenanordnung (438, 441, 442, 443, 461, 525, 527, 550, 551, 565), die innerhalb des Gehäuses montiert ist, zum Leiten der x- und y-orientierten Lichtstrahlen zu einem oder mehreren der Lichtdetektoren; und eine Berechnungseinheit (770), die im Gehäuse montiert und mit den Lichtdetektoren verbunden ist, zum Zuordnen von jeweiligen x- und y-Berührungskoordinaten zu mehreren der Objekte (971, 972, 980), welche die obere Oberfläche gleichzeitig berühren, basierend auf Ausgaben der Lichtdetektoren, wobei einige der Lichtstrahlen in der Schicht teilweise an der oberen Oberfläche absorbiert werden, wenn sie mit einem der Objekte (971, 972, 980) in Kontakt kommen, und andere der Lichtstrahlen in der Schicht an der oberen Oberfläche in die Schicht zurückgestreut werden, wenn sie mit einem der Objekte (971, 972, 980) in Kontakt kommen, so dass die zweite Linsenanordnung die gestreuten Lichtstrahlen zu mehr der Lichtdetektoren leitet, als nicht zurückgestreut wurden, wobei das Zuordnen umfasst:

(Schritt 1060) Abtasten von Paaren der Lichtsender und der Lichtdetektoren um den Bildschirm; und
(Schritt 1061) wenn mindestens zwei x-Koordinaten und mindestens zwei y-Koordinaten basierend auf Ausgaben von entsprechenden der Lichtdetektoren erfasst werden, die weniger als Ausgaben sind, die erwartet werden, wenn kein Objekt die obere Oberfläche berührt, dann:

(Schritt 1063) Abtasten jedes erfassten x-Koordinaten Lichtsenders mit allen erfassten y-Koordinaten-Lichtdetektoren;
(Schritt 1064) Abtasten jedes erfassten y-Koordinaten Lichtsenders mit allen erfassten x-Koordinaten-Lichtdetektoren; und
(Schritt 1065) Auswählen von Sender-Detektor-Paaren, die bei Schritt 1063 und 1064 maximale Lichterfassung zurücksandten, als wahrscheinlichste x,y-Berührungskoordinatenpaare.

2. Berührungsbildschirm nach Anspruch 1, wobei das lichtdurchlässige Material Glas oder Kunststoff umfasst, das für Infrarotlicht durchlässig ist.

3. Berührungsbildschirm nach Anspruch 1, wobei das lichtdurchlässige Material (650) ein flüssigkeitsgefüllter Beutel ist, der für Infrarotlicht durchlässig ist.

4. Berührungsbildschirm nach Anspruch 1, ferner umfassend ein optisch klares Transferband (561) zum Befestigen der Schicht auf den ersten und zweiten Linsenanordnungen.

5. Berührungsbildschirm nach Anspruch 1, wobei die Linsenanordnung Teile der von den Lichtsendern emittierten Lichtstrahlen oberhalb der oberen Oberfläche über die Schicht leitet, und wobei die zweite Linsenanordnung Lichtstrahlen von oberhalb der oberen Oberfläche zu einem oder mehreren der Lichtdetektoren leitet.

6. Berührungsbildschirm nach Anspruch 1, wobei die Linsenanordnung die von den Lichtsendern emittierten Lichtstrahlen von einer oder mehreren Seiten der Schicht in die Schicht leitet, und wobei die zweite Linsenanordnung Lichtstrahlen, die aus einer oder mehreren Seiten der Schicht hervortreten, zu einem oder mehreren der Lichtdetektoren leitet.

7. Berührungsbildschirm nach Anspruch 1, wobei die Schicht und die ersten und zweiten Linsenanordnungen eine einzige gemeinsame Einheit umfassen.

8. Berührungsbildschirm nach Anspruch 1, wobei die Lichtsender entlang zweier benachbarter Kanten der Schicht angeordnet sind, wobei die Lichtdetektoren entlang zweier anderer benachbarter Kanten der Schicht angeordnet sind, und wobei die Lichtsender mit den Lichtdetektoren durch Verschiebung ausgerichtet werden.

9. Berührungsbildschirm nach Anspruch 1, wobei die Lichtsender und die Lichtdetektoren entlang Kanten der Schicht in einer abwechselnden Folge angeordnet sind.

10. Berührungsbildschirm nach Anspruch 9, wobei das Zuordnen ferner auf Ausgaben der Lichtdetektoren in Schritt 1063 und 1064 basiert, die größer als Ausgaben sind, die erwartet werden, wenn keine Objekte die obere Oberfläche berühren.

11. Berührungsbildschirm nach Anspruch 3, wobei die Berechnungseinheit basierend auf Ausgaben der Lichtdetektoren ferner einen Druck bestimmt, der durch ein Objekt auf die Oberfläche ausgeübt wird.

**Revendications**

1. Écran tactile (800) destiné à un dispositif informatique, comprenant :

   un boîtier ;
   une couche (646, 650) de matériau transmettant la lumière montée dans ledit boîtier, comprenant une surface supérieure et une surface inférieure, où ladite surface supérieure est exposée pour contact avec un ou plusieurs objets (971, 972, 980) depuis l'extérieur dudit boîtier ;
   une pluralité d'émetteurs de lumière (200-211, 235-241) montés dans ledit boîtier au-dessous de ladite surface supérieure, pour émettre des faisceaux de lumière (100, 105, 120, 151, 152) ;
   un premier ensemble de lentilles (400, 437, 439, 440, 457, 461, 462, 525, 527, 550, 551, 564) monté dans ledit boîtier pour diriger les faisceaux de lumière émis par lesdits émetteurs de lumière sous la forme de faisceaux de lumière orientés suivant l'axe x et suivant l'axe y dans ladite couche à un angle tel que les faisceaux de lumière, lors de leur entrée dans ladite couche, restent confinés à ladite couche par réflexion interne totale au niveau desdites surfaces supérieure et inférieure de ladite couche lorsque les faisceaux de lumière ne sont pas absorbés par l'un quelconque des objets touchant ladite surface supérieure ;
   une pluralité de détecteurs de lumière (300-303, 306-315, 394) montés dans ledit boîtier au-dessous de ladite surface supérieure, pour détecter les faisceaux de lumière et pour générer des sorties indiquant les quantités de lumière détectées ;
   un second ensemble de lentilles (438, 441, 442, 443, 461, 525, 527, 550, 551, 565) montées dans ledit boîtier pour diriger les faisceaux de lumière orientés suivant l'axe x et suivant l'axe y vers un ou plusieurs desdits détecteurs de lumière ; et
   une unité de calcul (770), montée dans ledit boîtier et connectée auxdits détecteurs de lumière pour assigner des coordonnées de contact suivant les axes x et y à plusieurs des objets (971, 972, 980) touchant simultanément ladite surface supérieure, sur la base de sorties desdits détecteurs de lumière, où certains des faisceaux de lumière dans ladite couche sont partiellement absorbés au niveau de ladite surface supérieure lorsqu'ils entrent en contact avec des objets quelconques (971, 972, 980), et d'autres faisceaux parmi les faisceaux de lumière dans ladite couche sont rediffusés dans ladite couche au niveau de ladite surface supérieure lorsqu'ils entrent en contact avec des objets quelconques (971, 972, 980), de sorte que ledit second ensemble de lentilles dirige les faisceaux de lumière diffusés vers davantage desdits détecteurs de lumière que s'ils n'avaient pas été diffusés, l'affectation comprenant les étapes suivantes :

      (étape 1060) balayer des paires des émetteurs de lumière et des détecteurs de lumières autour de l'écran tactile ; et
      (étape 1061) lorsqu'au moins deux coordonnées x et au moins deux coordonnées y sont détectées sur la base de sorties de détecteurs correspondants desdits détecteurs de lumière étant inférieures à des sorties attendues lorsqu'aucun objet ne touche ladite surface supérieure, puis :

         (étape 1063) balayer chaque émetteur de lumière de coordonnée x détecté avec tous les détecteurs de lumière de coordonnée y détectés ;
         (étape 1064) balayer chaque émetteur de lumière de coordonnée y détecté avec tous les détecteurs de lumière de coordonnée x détectés ;
         (étape 1065) sélectionner des paires émetteur-détecteur qui ont retourné des détections de lumière maximum aux étapes 1063 et 1064 comme paires de coordonnées de contact x, y les plus probables.

2. Écran tactile de la revendication 1, dans lequel le matériau transmettant la lumière comprend du verre ou du plastique qui est transparent pour la lumière infrarouge.

3. Écran tactile de la revendication 1, dans lequel le matériau transmettant la lumière (650) est un sac rempli de liquide qui est transparent pour la lumière infrarouge.

4. Écran tactile de la revendication 1 comprenant en outre une bande de transfert optiquement transparente (561) pour fixer ladite couche sur lesdits premier et second ensembles de lentilles.

5. Écran tactile de la revendication 1, dans lequel ledit premier ensemble de lentilles dirige des parties des faisceaux de lumière émis par lesdits émetteurs de lumière sur ladite couche au-dessus de ladite surface supérieure, et dans lequel ledit second ensemble de lentilles dirige les faisceaux de lumière provenant d'au-dessus de ladite surface supérieure vers un ou plusieurs desdits détecteurs de lumière.

6. Écran tactile de la revendication 1, dans lequel ledit premier ensemble de lentilles dirige les faisceaux de lumière émis par lesdits émetteurs de lumière dans ladite couche depuis un ou plusieurs côtés de ladite couche, et dans lequel ledit second ensemble de lentilles dirige les faisceaux de lumière sortant d'un ou de plusieurs côtés de ladite couche vers un ou plusieurs desdits détecteurs de lumière.

7. Écran tactile de la revendication 1, dans lequel ladite couche et lesdits premier et second ensembles de lentilles comprennent une unique unité consolidée.

8. Écran tactile de la revendication 1, dans lequel lesdits émetteurs de lumière sont disposés le long de deux bords adjacents de ladite couche, où lesdits détecteurs de lumière sont disposés le long de deux autres bords adjacents de ladite couche, et où lesdits émetteurs de lumière sont alignés de manière décalée avec lesdits détecteurs de lumière.

9. Écran tactile selon la revendication 1, dans lequel lesdits émetteurs de lumière et lesdits détecteurs de lumière sont disposés selon une séquence alternée le long des bords de ladite couche.

10. Écran tactile selon la revendication 9, dans lequel ladite affectation est en outre basée sur des sorties desdits détecteurs de lumière dans les étapes 1063 et 1064 étant supérieures aux sorties attendues lorsqu'aucun objet ne touche ladite surface supérieure.

11. Écran tactile selon la revendication 3, dans lequel ladite unité de calcul détermine en outre une pression appliquée par un objet à la surface sur la base de sorties desdits détecteurs de lumière.

801

606

701

# FIG. 1
# (PRIOR ART)

803
804
806
900
802
808
807
805
607

701

# FIG. 2
# (PRIOR ART)

# FIG. 3
# (PRIOR ART)

FIG. 4
(PRIOR ART)

# FIG. 5

FIG. 6

FIG. 7

(a)

(b)

FIG. 8

FIG. 9

FIG. 10

FIG. 11

FIG. 12

FIG. 13

FIG. 14

FIG. 15

SHIFT REGISTER FOR LED ROW SELECTOR

720

VROW

VCOL

PDCOL

LED07 LED06 LED05 LED04 LED03 LED02 LED01 LED00

SHIFT REGISTER FOR PD COLUMN SELECTOR

PD15 PD14 PD13 PD12 PD11 PD10 PD09 PD08

LED15 LED14 LED13 LED12 LED11 LED10 LED09 LED08

SHIFT REGISTER FOR LED COLUMN SELECTOR

**800**

730

PD07 PD06 PD05 PD04 PD03 PD02 PD01 PD00

PDROW

720

730

SHIFT REGISTER FOR PD ROW SELECTOR

# FIG. 16

FIG. 17

FIG. 18

FIG. 19

FIG. 20

TOP VIEW

SIDE VIEW

FIG. 21

(A)

(B)

(C)

FIG. 22

(A)

524

300

(B)

525

300

(C)

525

300

FIG. 23

FIG. 24

FIG. 25

FIG. 26

FIG. 27

FIG. 28

FIG. 29

BASELINE
SIGNAL
STRENGTH

LIGHT DETECTION
ACROSS LENSES
441 AND 442

301

302

303

636

441

442

443

439

440

201

202

FIG. 30

FIG. 31

FIG. 32

FIG. 33

FIG. 34

FIG. 35

FIG. 36

FIG. 37

FIG. 38

FIG. 39

FIG. 40

455

456

459

105

457

458

101

200

455

456

459

457

458

# FIG. 41

FIG. 42

101

462

102

FIG. 43

FIG. 44

FIG. 45

FIG. 46

baseline signal strength

Light Detection Across
Lenses 441 and 442

301    302    303

636

441    442    443

439    440

201    202

# FIG. 47

FIG. 48

FIG. 49

FIG. 50

FIG. 51

FIG. 52

832

637

483

484

200

FIG. 53

832    485

637

487

486

200

FIG. 54

FIG. 55

TOP VIEW

SIDE VIEW

# FIG. 56

FIG. 57

FIG. 58

FIG. 59

**800**

Legend

⬤ LED

◯ PD

FIG. 60

(a)

200

Pitch

107

Pitch

530

201

542

108

202

541

109

(b)

542

541

(c)

200

107

108

201

202

541

109

542

# FIG. 61

FIG. 62

FIG. 63

FIG. 64

baseline
signal
strength

910

**800**

300

167

200

Legend

LED

PD

# FIG. 65

FIG. 66

FIG. 67

FIG. 68

FIG. 69

FIG. 70

FIG. 71

FIG. 72

FIG. 73

FIG. 74

FIG. 75

**800**

Legend

LED

PD

FIG. 76

FIG. 77

FIG. 78

FIG. 79

FIG. 80

FIG. 81

FIG. 82

FIG. 83

FIG. 84

FIG. 85

**800**

LED'S
200

LEDs-PDs

LEDs-PDs

901

902

a

b

c

d

e

f

300
PD RECEIVERS

FIG. 86

FIG. 87

FIG. 88

FIG. 89

826

301　　　　202　　　　302

636

441　　　　442　　　　443

439　　　　440

303　　　　201　　　　304

# FIG. 90

FIG. 91

FIG. 92

FIG. 93

FIG. 94

FIG. 95

527

528

527

528

45°

26°

58°

# FIG. 96

# FIG. 97

FIG. 98

FIG. 99

FIG. 100

FIG. 101

FIG. 102

FIG. 103

FIG. 104

FIG. 105

FIG. 106

FIG. 107
(PRIOR ART)

FIG. 108

FIG. 109

FIG. 110

FIG. 111

FIG. 112

FIG. 113

FIG. 114

FIG. 115

FIG. 116

FIG. 117

Legend

| Full intensity light beam | ——————— |
| Partial intensity light beam | – – – – – – – |

FIG. 118

FIG. 119

FIG. 120

# FIG. 121

FIG. 122

FIG. 123

FIG. 124

1060

SCAN EMITTER-RECEIVER PAIRS
AROUND A TOUCH SCREEN

1061

TWO X-COORDINATES
AND TWO Y-COORDINATES
DETECTED?

1062

NO → OUTPUT X,Y TOUCH
COORDINATE PAIRS

YES    1063

SCAN EACH DETECTED
X-COORDINATE EMITTER WITH
ALL DETECTED Y-COORDINATE
RECEIVERS

1064

SCAN EACH DETECTED
Y-COORDINATE EMITTER WITH
ALL DETECTED X-COORDINATE
RECEIVERS

1065

SELECT EMITTER-DETECTOR
PAIRS THAT RETURNED MAXIMUM
LIGHT DETECTION AS MOST
LIKELY TOUCH COORDINATES

FIG. 125

FIG. 126

FIG. 127

FIG. 128

FIG. 129

FIG. 130

FIG. 131

FIG. 132

# FIG. 133

FIG. 134

FIG. 135

FIG. 136

FIG. 137

FIG. 138

FIG. 139

1021

SPATIALLY FILTER CALCULATED TOUCH
COORDINATE

1022

CURRENT – PREVIOUS < THRESHOLD ?

1023 — YES

NO — 1026

CALCULATE LAG

SELECT WEAK
TEMPORAL
FILTER

1024

1027

SELECT
TEMPORAL
FILTER

APPLY
TEMPORAL
FILTER

1025

1028

APPLY
TEMPORAL
FILTER

LAG = OUTPUT
COORDINATE

FIG. 140

FIG. 141

FIG. 142

FIG. 143

FIG. 144

EP 2 689 320 B1

FIG. 145

204

FIG. 146

FIG. 147

FIG. 148

FIG. 149

FIG. 150

FIG. 151

1031

DETECT TWO TOUCH X-COORDINATES
AND TWO TOUCH Y-COORDINATES

1032

ANALYZE X-COORDINATE DETECTIONS

1033

RANK EACH X-COORDINATE'S PROXIMITY
TO A FIRST DESIGNATED SCREEN EDGE

1034

ASSOCIATE EACH X-COORDINATE WITH A
Y-COORDINATE CORRESPONDING TO THE PROXIMITY
TO THE FIRST DESIGNATED SCREEN EDGE

1035

ANALYZE Y-COORDINATE DETECTIONS

1036

RANK EACH Y-COORDINATE'S PROXIMITY
TO A SECOND DESIGNATED SCREEN EDGE

1037

ASSOCIATE EACH Y-COORDINATE WITH AN
X-COORDINATE CORRESPONDING TO THE PROXIMITY
TO THE SECOND DESIGNATED SCREEN EDGE

1038

CHECK THAT THE RESULTS OF
STEPS 1034 AND 1037 MATCH

FIG. 152

1041

DETECT SIMULTANEOUSLY
TWO SCREEN GLIDES ALONG THE X-AXIS
AND TWO SCREEN GLIDES ALONG THE Y-AXIS

1042

ANALYZE X-AXIS DETECTIONS

1043

RANK EACH X-AXIS GLIDE'S PROXIMITY
TO A FIRST DESIGNATED SCREEN EDGE

1044

ASSOCIATED EACH X-AXIS GLIDE WITH A Y-AXIS GLIDE
CORRESPONDING TO THE PROXIMITY TO
THE FIRST DESIGNATED SCREEN EDGE

1045

ANALYZE Y-AXIS DETECTIONS

1046

RANK EACH Y-AXIS GLIDE'S PROXIMITY
TO A SECOND DESIGNATED SCREEN EDGE

1047

ASSOCIATED EACH Y-AXIS GLIDE WITH AN X-AXIS GLIDE
CORRESPONDING TO THE PROXIMITY TO
THE SECOND DESIGNATED SCREEN EDGE

1048

CHECK THAT THE RESULTS OF
OPERATIONS 1044 AND 1047 MATCH

1049

DISCRIMINATE THE SCREEN GLIDE OPERATIONS AS
BEING CLOCKWISE OR COUNTER-CLOCKWISE

FIG. 153

212

FIG. 154

Normal Touch

Invalid Touch
(Twisting/ Bending)

Invalid Touch
(e.g., Flexing LCD)

Invalid Touch
(e.g., Mechanical Issues)

# FIG. 155

FIG. 156

CURRENT  CURRENT  CURRENT  CURRENT  CURRENT  CURRENT

1    16    1    16    1    16    1    16    1    16    1    16

PULSETIME1 PULSETIME2 PULSETIME3 PULSETIME4 PULSETIME5 PULSETIME6

FIG. 157

FIG. 158

FIG. 159

FIG. 160

FIG. 161

FIG. 162

# FIG. 163

FIG. 164

FIG. 165

FIG. 166

306  307  308  309  310  311

315

314

313  800

312

211

210

209

204  205  206  207  208

174

FIG. 167

FIG. 168

FIG. 169

FIG. 170

FIG. 171

FIG. 172

FIG. 173

FIG. 174

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011227874 A1
- WO 2010134865 A1
- US 3673327 A
- US 2011175852 A1
- US 37160909 A
- US 8339379 B
- US 371609 A
- US 61317255 A

- US 7333095 B
- US 12371609 B
- US 20090189878 A1
- US 13052511 B
- US 20110163998 A
- US 12667692 B
- US 20110043485 A